(19) Europäisches Patentamt
European Patent Office
Office européen des brevets

(11) **EP 4 443 801 A1**

(12) **EUROPEAN PATENT APPLICATION**

(43) Date of publication:
**09.10.2024 Bulletin 2024/41**

(21) Application number: **24165628.9**

(22) Date of filing: **22.03.2024**

(51) International Patent Classification (IPC):
***H04L 5/00*** (2006.01)

(52) Cooperative Patent Classification (CPC):
**H04L 5/001; H04L 5/0023; H04L 5/0051;
H04L 5/0091**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2023 US 202363453823 P**

(71) Applicant: **Comcast Cable Communications LLC
Philadelphia, Pennsylvania 19103 (US)**

(72) Inventors:
• **CIRIK, Ali Cagatay**
  **Philadelphia, 19103 (US)**
• **ZHOU, Hua**
  **Philadelphia, 19103 (US)**
• **DINAN, Esmael Hejazi**
  **Philadelphia, 19103 (US)**
• **PRASAD, Gautham**
  **Philadelphia, 19103 (US)**

(74) Representative: **V.O.
P.O. Box 87930
2508 DH Den Haag (NL)**

(54) **DYNAMIC BEAM MANAGEMENT IN CELL SCHEDULING**

(57) A wireless device may be configured to communicate via a set of cells. A communication via a cell, of the plurality of cells, may be scheduled. A single communication point operation/mode may be indicated for the cell. The wireless device may receive information for selecting from multiple resource sets and/or multiple transmission configuration indicator states for communicating via the cell. A default resource set and/or transmission configuration indicator state may be used in the scheduled communication based on the single communication point operation/mode.

**EP 4 443 801 A1**

**Description**

CROSS-REFERENCE TO RELATED APPLICATIONS

This application claims the benefit of U.S. Provisional Application No. 63/453,823 filed on March 22, 2023. The above-referenced application is hereby incorporated by reference in its entirety.

BACKGROUND

A wireless device communicates with a base station. The wireless device receives a plurality of configuration parameters for communicating via a plurality of cells.

SUMMARY

The following summary presents a simplified summary of certain features. The summary is not an extensive overview and is not intended to identify key or critical elements.

A set of configuration parameters may configure a wireless device to communicate via a plurality of cells. The set of configuration parameters may indicate multiple resource sets and/or multiple transmission configuration indicator states configured for a cell of the plurality of cells. The cell may be configured to operate via a single communication point (e.g., a single transmission/reception point). Information scheduling a communication via the cell may include information for selecting one or more of the multiple resource sets and/or multiple transmission configuration indicator states. However, the information for selecting may be incompatible with communicating via the single-communication point. A default resource set and/or transmission configuration indicator state may be used in the scheduled communication, and/or the communication may be skipped. One or more of the multiple transmission configuration indicators may be modified and/or activated to be consistent with those activated for the cell. Using the default resource set and/or transmission configuration indicator state, and/or ensuring the multiple transmission configuration indicator states are activated for the cell, may provide advantages such as reduced interference, reduced error rates, increased data rates, reduced retransmissions, reduced battery consumption, and/or reduce latency.

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of transmission configuration indicator (TCI) state activation.

FIG. 18 shows an example of TCI state activation.

FIG. 19 shows an example of beam management in multi-cell scheduling.

FIG. 20A and FIG. 20B show examples of a control command (e.g., TCI update command) in multi-cell scheduling.

FIG. 21 shows an example of a control command (e.g., TCI update command) in multi-cell scheduling.

FIG. 22 shows an example of a control command (e.g., TCI update command) in multi-cell scheduling.

FIG. 23 shows an example of beam management in multi-cell scheduling.

FIG. 24A and FIG. 24B show example methods of beam management in multi-cell scheduling.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

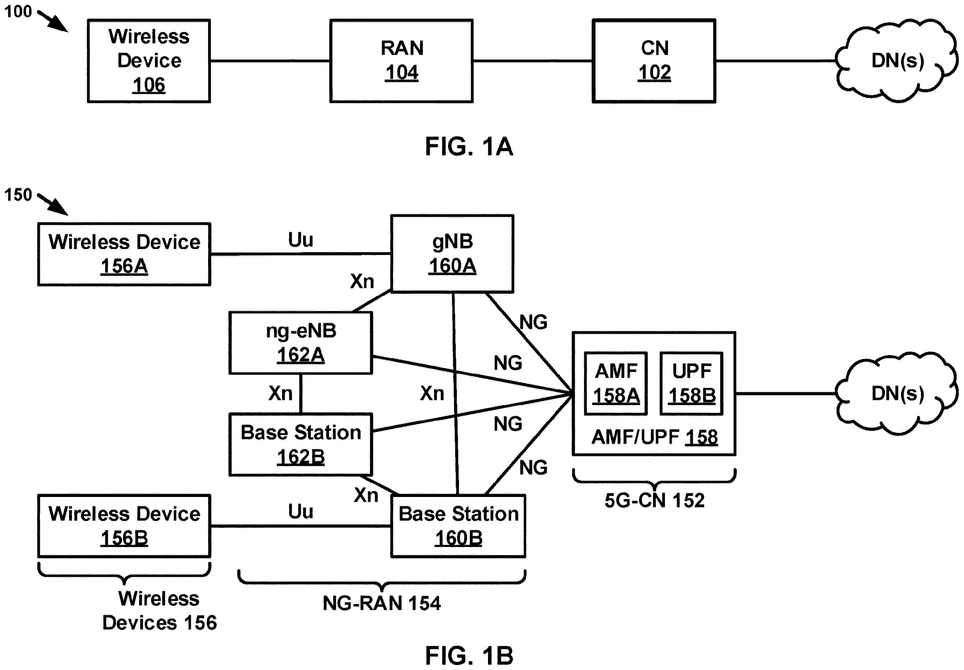

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

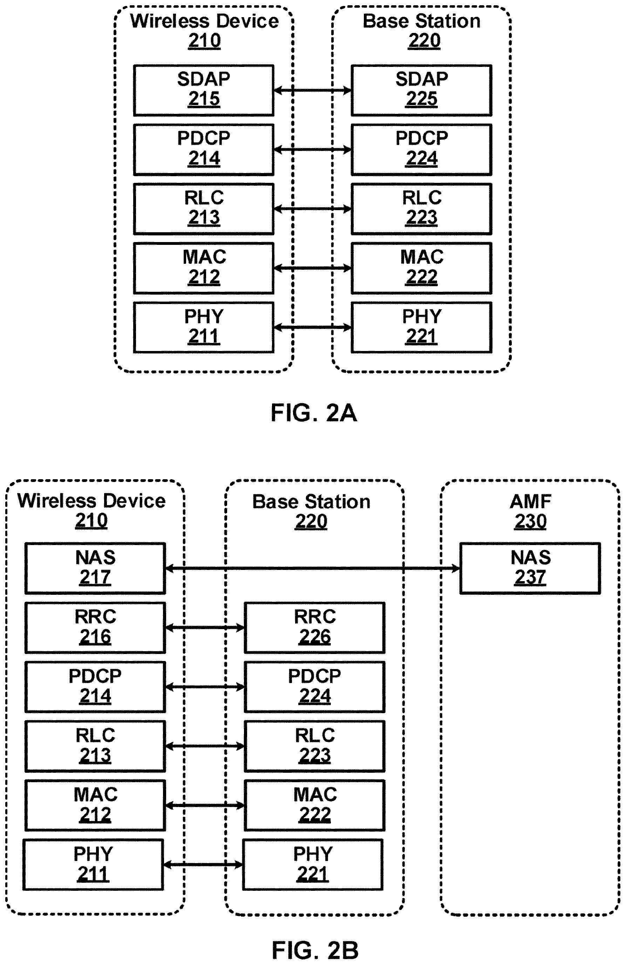

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

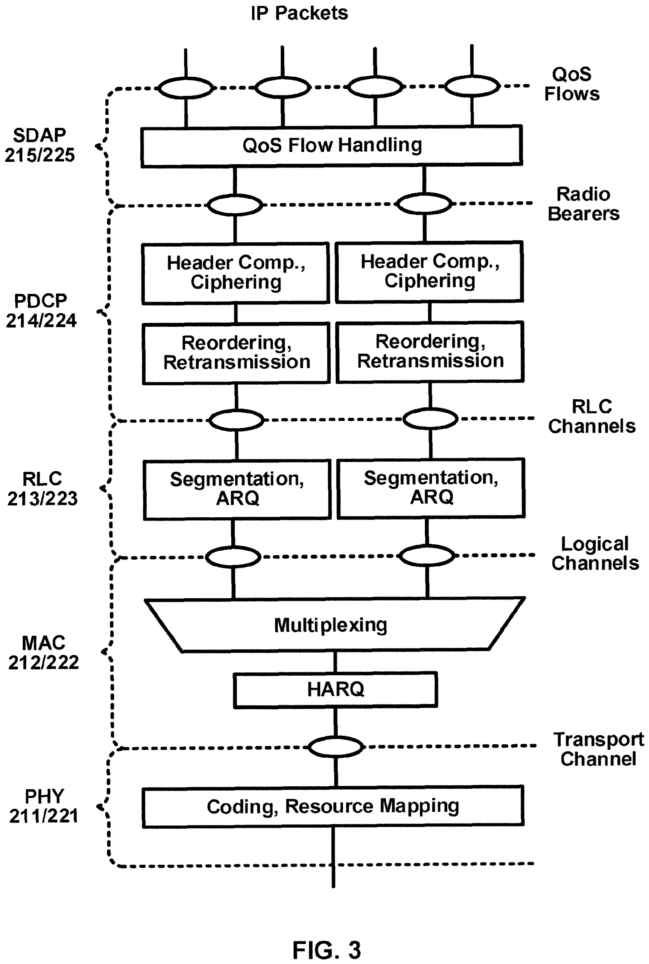

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)).The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

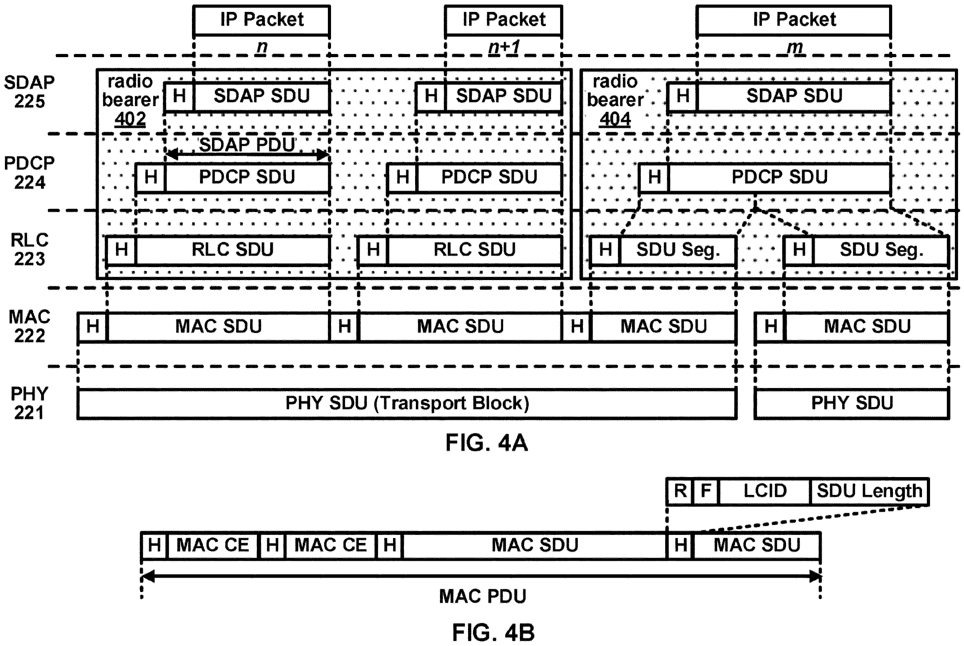

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

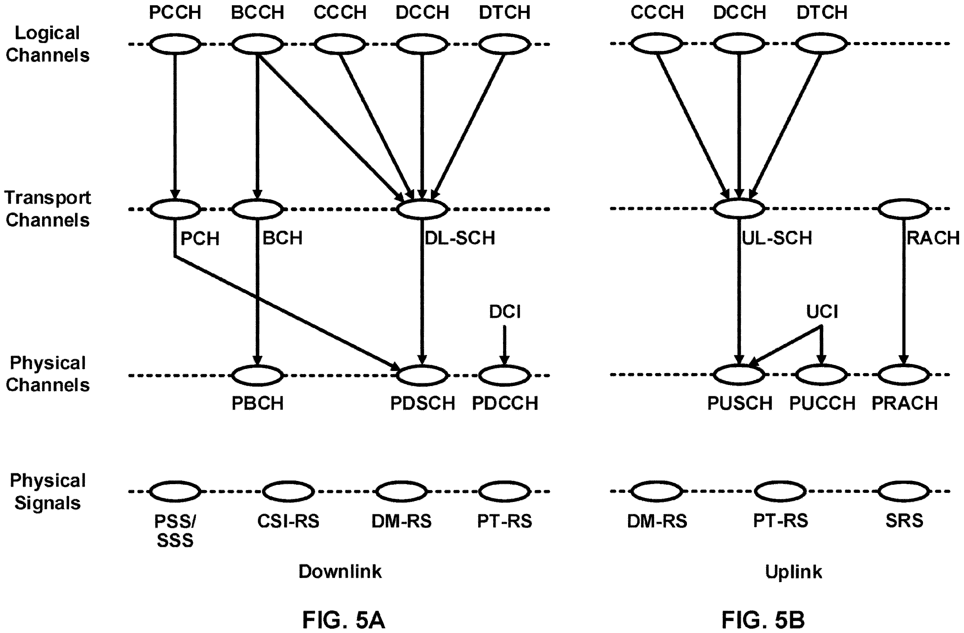

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

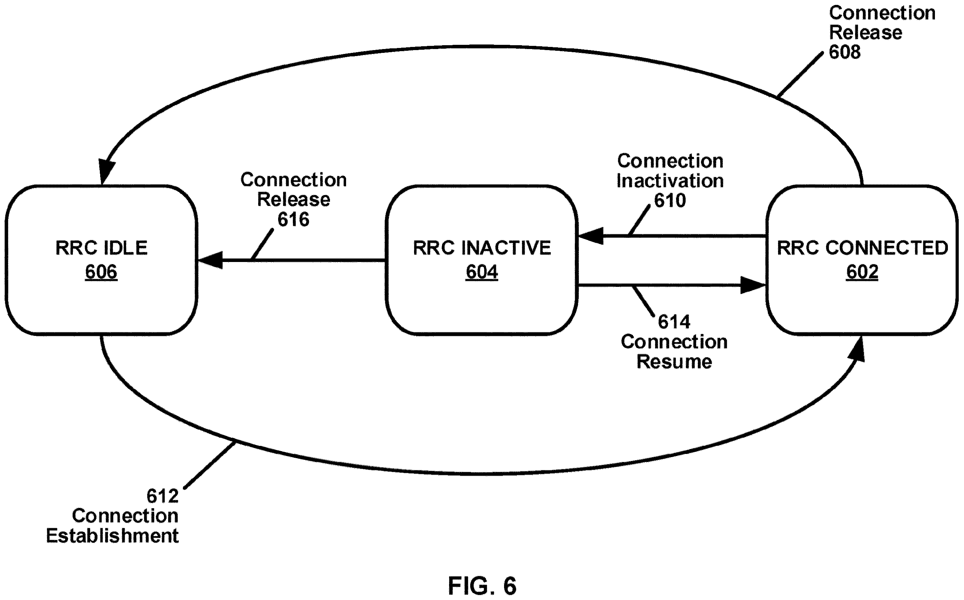

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

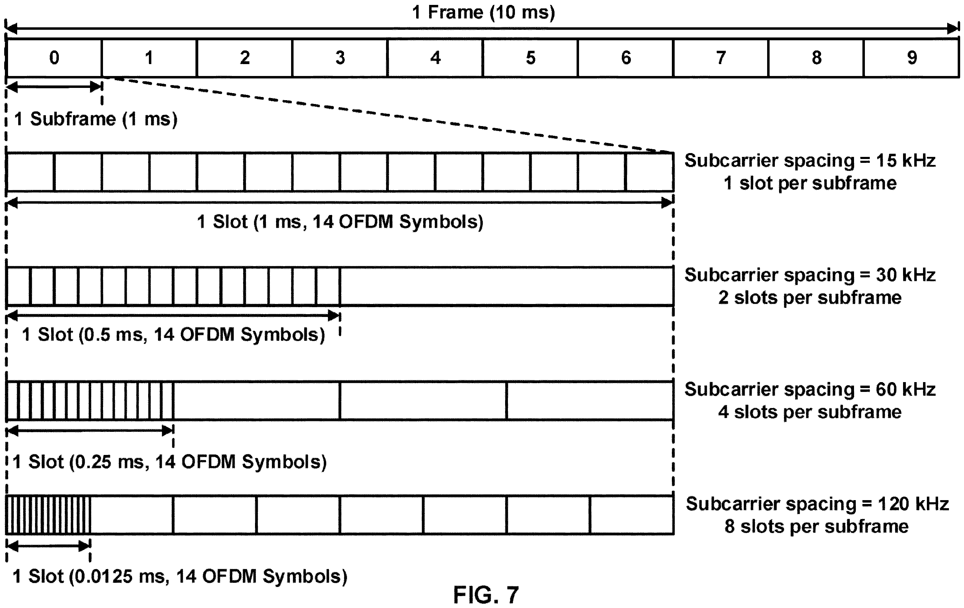

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

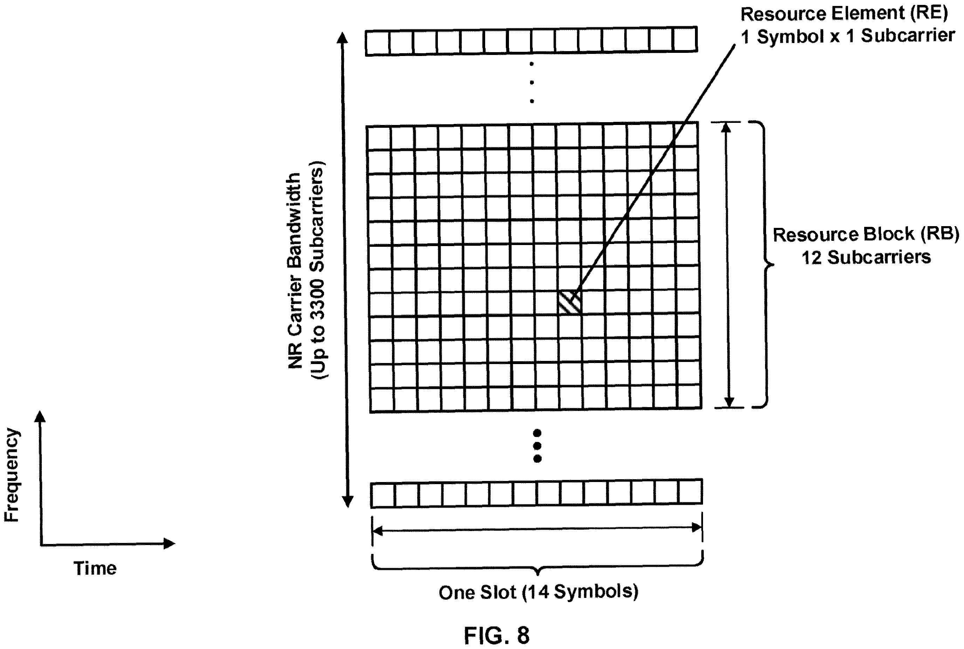

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275$\times$12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

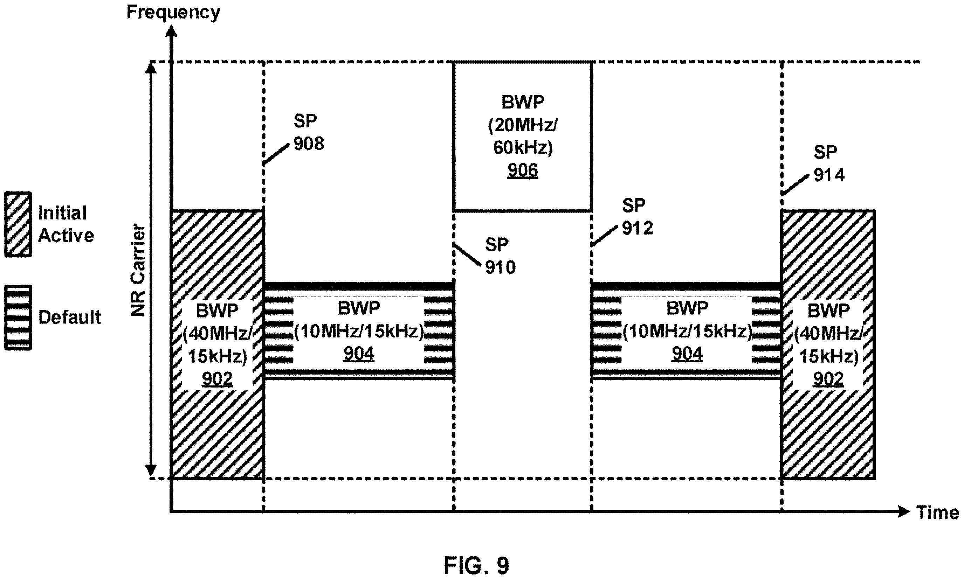

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

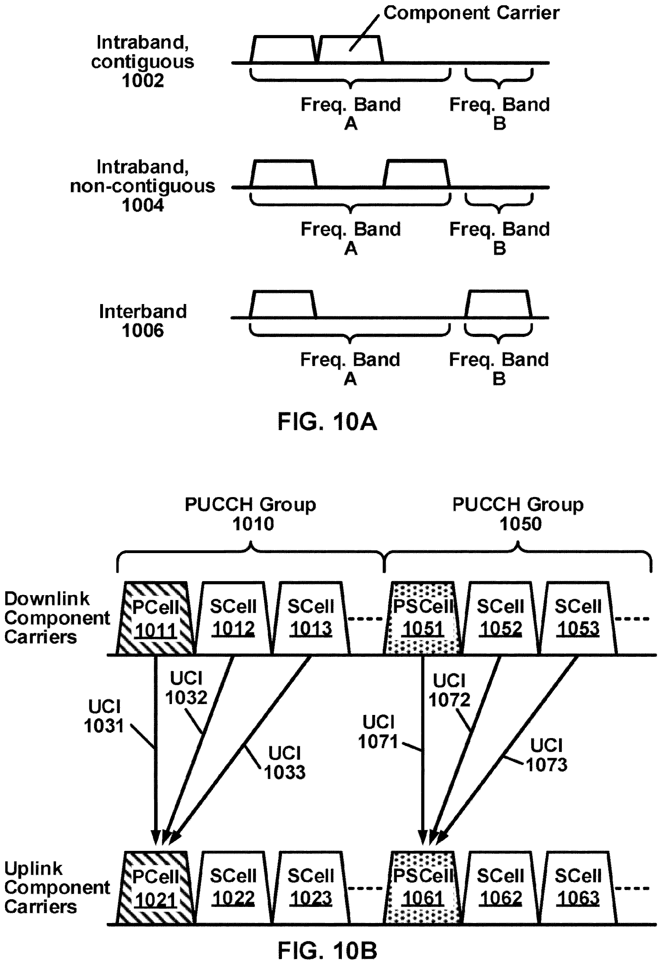

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

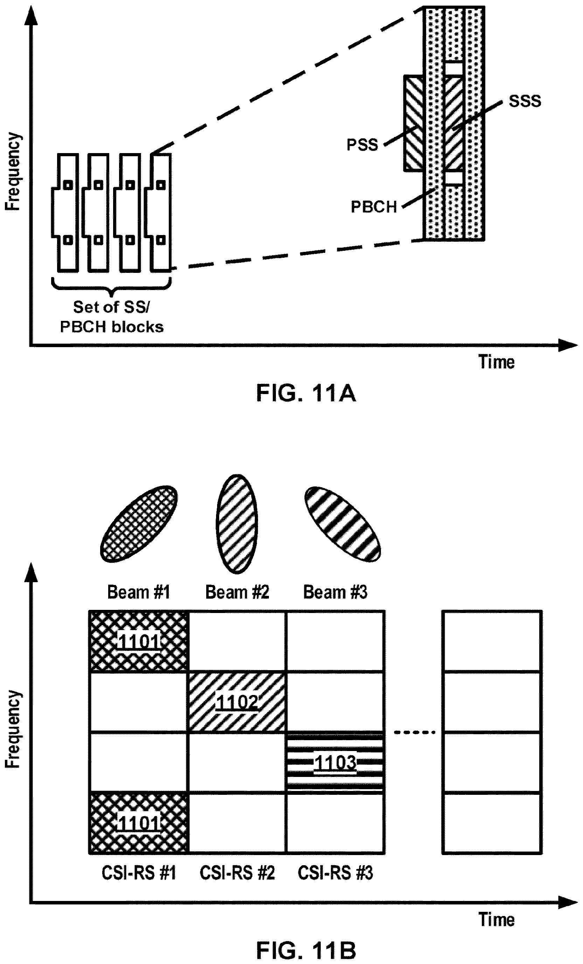

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the S S/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

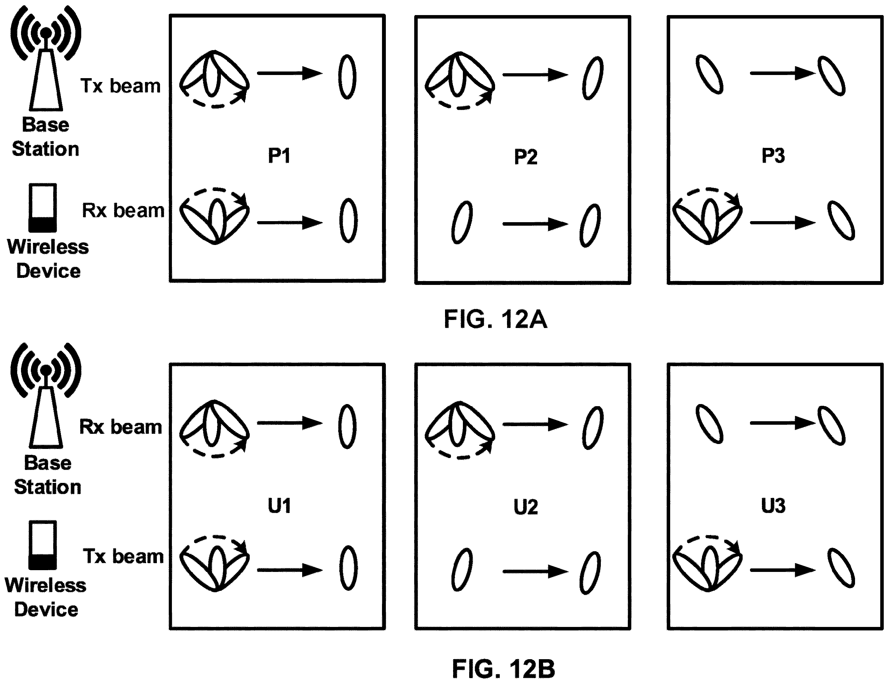

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

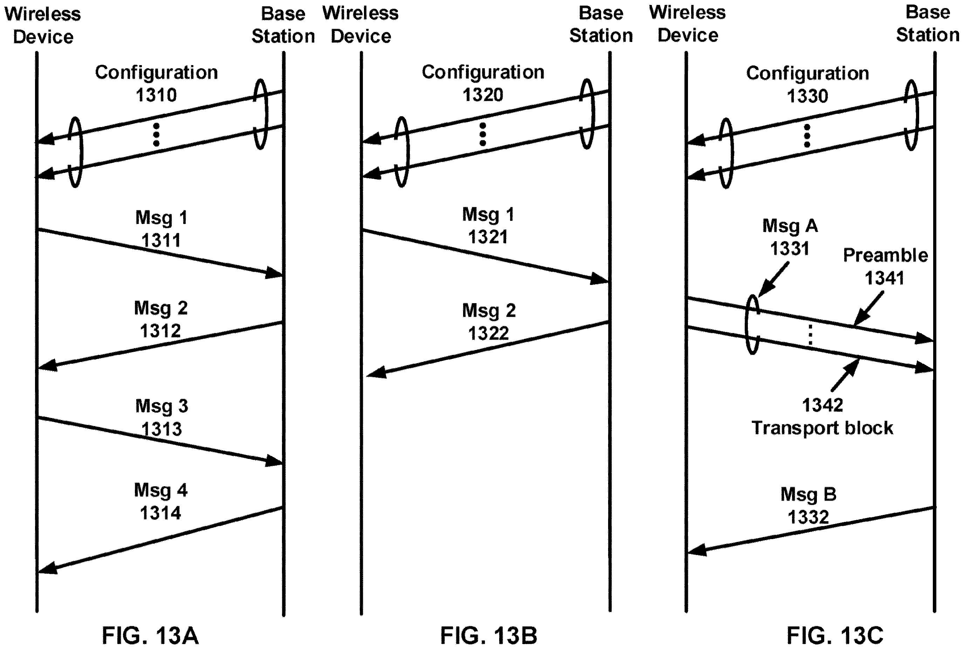

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC CONNECTED) state and/or in an RRC inactive (e.g., an RRC INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

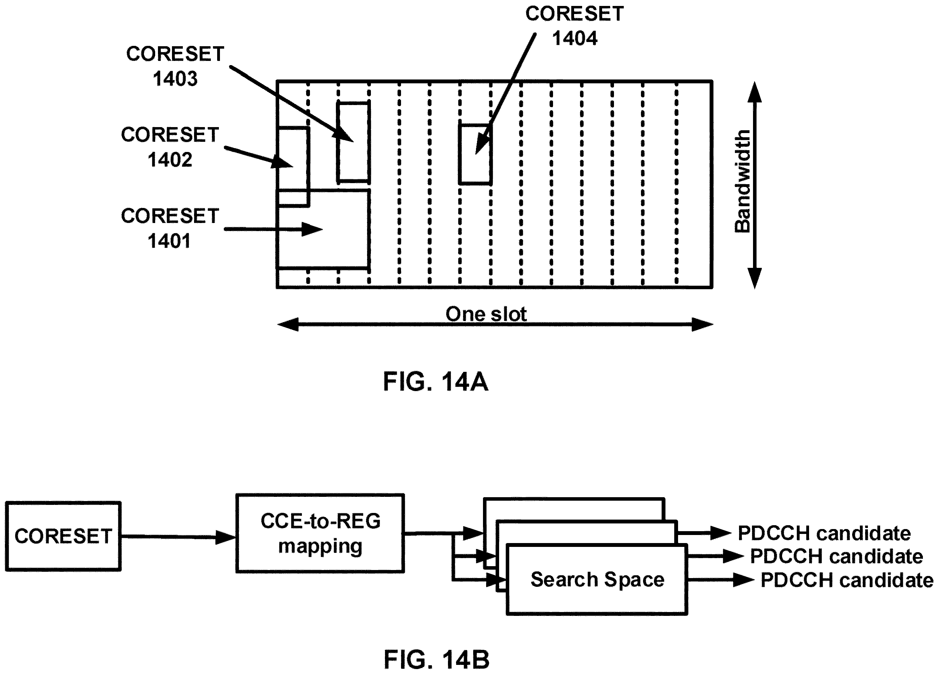

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to abase station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

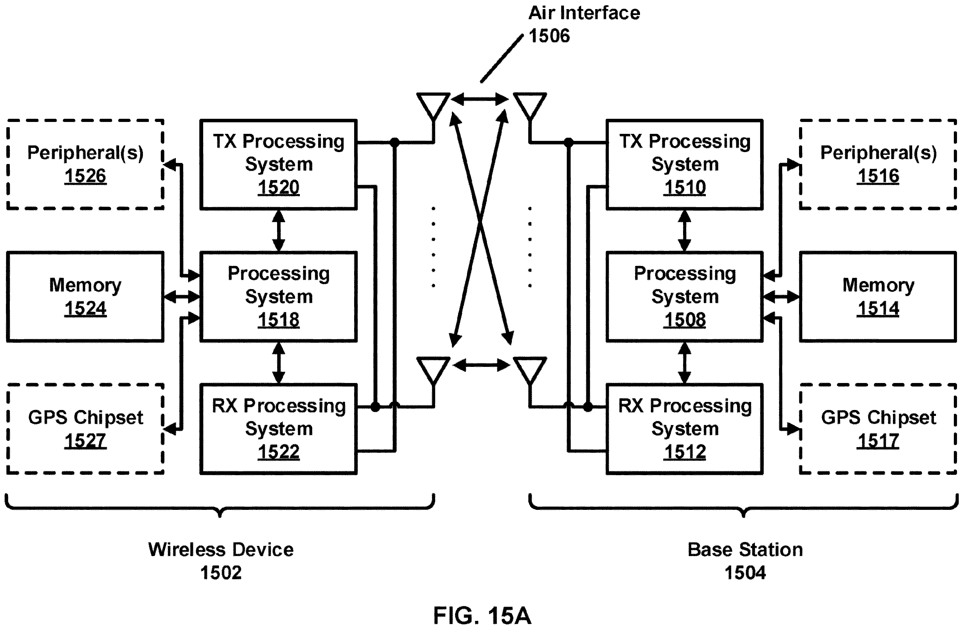

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

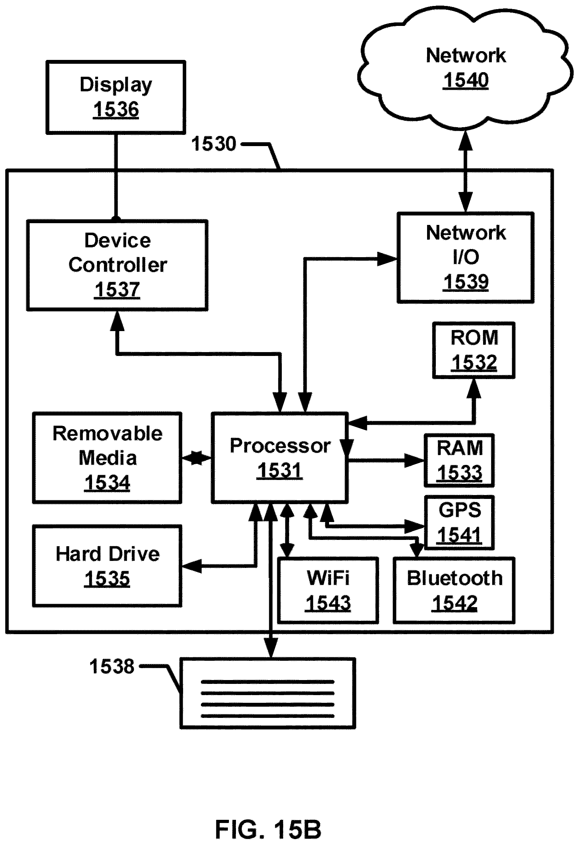

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

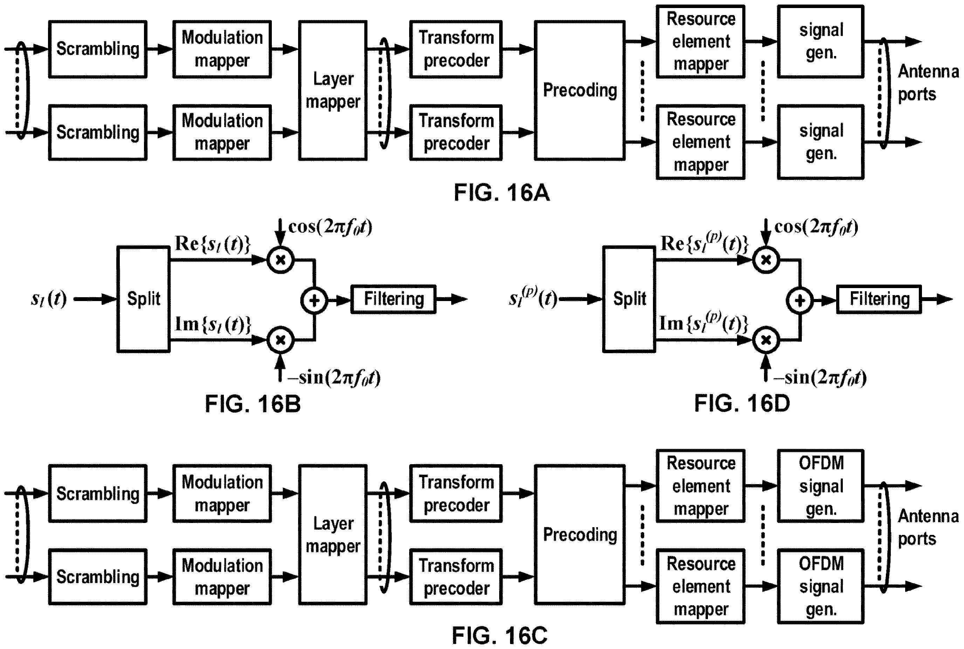

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may receive, from a base station, one or more messages (e.g., RRC messages, or RRC reconfiguration messages). The one or more messages may comprise one or more configuration parameters for a set of cells (e.g., a plurality of cells). The one or more configuration parameters may indicate a plurality of TCI states for the set of cells, wherein the plurality of TCI states comprises one or more TCI states for the cell.

The wireless device may receive an activation command (e.g., DCI, MAC-CE) indicating activation of a subset of TCI states of the plurality of TCI states. The wireless device may map the subset of TCI states to one or more TCI codepoints of the cell. The base station may change/update (e.g., dynamically) a number (e.g., quantity) of the one or more TCI codepoints via the activation command and/or one or more other activation commands (e.g., via/by each activation command). For example, if the wireless device is close to a base station and/or a TRP, the number of the one or more TCI codepoints may be (e.g., may be set as) low (e.g., 1 TCI codepoint, 2 TCI codepoints, etc.). If the wireless device is close to a cell edge (e.g., far from a corresponding base station and/or a corresponding TRP), the number of the one or more TCI codepoints may be (e.g., may be set as) high (e.g., 6 TCI codepoints, 7 TCI codepoints, 8 TCI codepoints, etc.).

The one or more configuration parameters may indicate, for the set of cells, a TCI state table and/or a TCI codepoint table. The TCI state table and/or TCI codepoint table may indicate one or more combinations of TCI codepoints and/or combinations of TCI states for the set of cells. For example, a (e.g., each) row of the TCI state table may indicate/comprise TCI codepoints for the set of cells. Different (e.g., each of the) columns of the TCI state table may indicate/comprise TCI codepoints for a respective cell of the set of cells. The TCI state table may indicate/comprise at least one TCI codepoint for each cell. A column of the TCI state table may indicate/comprise the at least one TCI codepoint for the cell.

The wireless device may receive a DCI scheduling downlink reception(s) and/or uplink transmission(s) via one or more cells (e.g., one or more co-scheduled cells) comprising a cell corresponding to a column of the TCI state table. The DCI may indicate a row in the TCI state table. The row may comprise/indicate a TCI codepoint for the cell.

In at least some wireless communication technologies, one or more TCI codepoints, indicated/updated/activated (e.g., dynamically) based on (e.g., via, by) an activation command (e.g., DCI, MAC-CE) for the cell, may not comprise the first TCI codepoint, for the cell in the TCI state table indicated (e.g., semistatically) by the one or more configuration parameters (e.g., RRC configuration parameters). For example, the one or more TCI codepoints may not comprise the first TCI codepoint if the maximum TCI codepoint of the one or more TCI codepoints is less than the first TCI codepoint, of the cell and in the TCI state table, indicated by the one or more configuration parameters. As discussed herein, the terms "dynamically" and "semistatically" may refer to relative time periods over which the respective actions/commands apply. For example, semistatically indicated data/information/command(s)/setting(s) may be indicated less frequently and/or to apply for longer term than dynamically indicated data/information/command(s)/setting(s). The wireless device may not (e.g., be able to) determine an accurate transmission power for an uplink transmission via the cell, for example, based on the one or more TCI codepoints not comprising the first TCI codepoint (e.g., if/because of the one or more TCI codepoints not comprising the first TCI codepoint). This may increase interference for other wireless devices and/or other cells. The wireless device may not (e.g., accurately) determine a spatial domain transmission/transmit filter/beam for an uplink transmission via the cell, for example, based on the one or more TCI codepoints not comprising the first TCI codepoint. The DCI may schedule, for example, the uplink transmission via the cell. The wireless device may not determine and/or may not accurately determine a spatial domain reception/receive filter/beam for a downlink reception via the cell, for example, based on the one or more TCI codepoints not comprising the first TCI codepoint (e.g., if/because of the one or more TCI codepoints not comprising the first TCI codepoint). The DCI may schedule, for example, the downlink reception via the cell. This may increase error rates, which may lead to reduced data rates, and/or increase retransmissions, which may lead to increased battery consumption and/or latency.

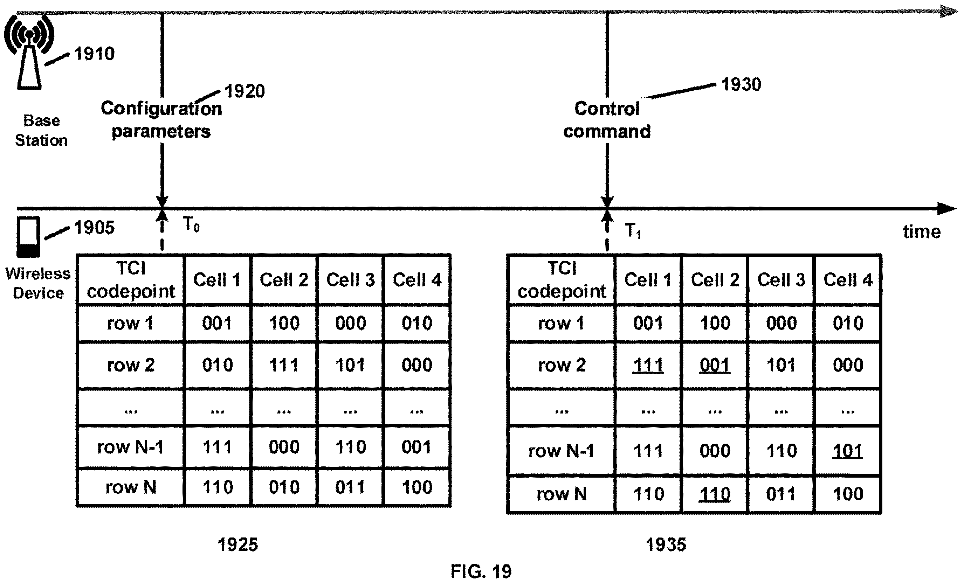

As described herein, uplink transmission and/or downlink reception via the cell may be enhanced if (e.g., for/in an example where) the one or more TCI codepoints of the cell do not comprise the first TCI codepoint, of the cell, in the TCI state table. A base station may transmit a control command (e.g., discussed with respect to FIG. 19). The control command may (e.g., be configured to) update the TCI state table. The control command may change/modify/update/activate (e.g., dynamically) at least one TCI codepoint (and/or at least one TCI state and/or at least one TCI entry) in the TCI state table. The control command may change/modify/replace/override/overwrite the first TCI codepoint for/of the cell with a second TCI codepoint of the one or more TCI codepoints of the cell. This may ensure that the one or more TCI codepoints indicated/updated/activated dynamically by the activation command (e.g., DCI, MAC-CE) may comprise the second TCI codepoint (e.g., a TCI codepoint of the one or more TCI codepoints of the cell).

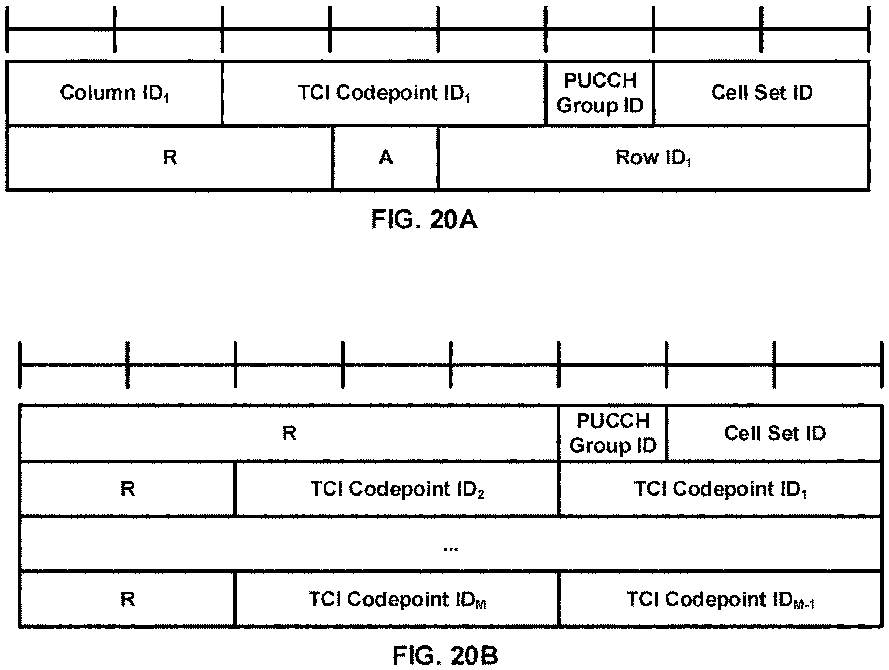

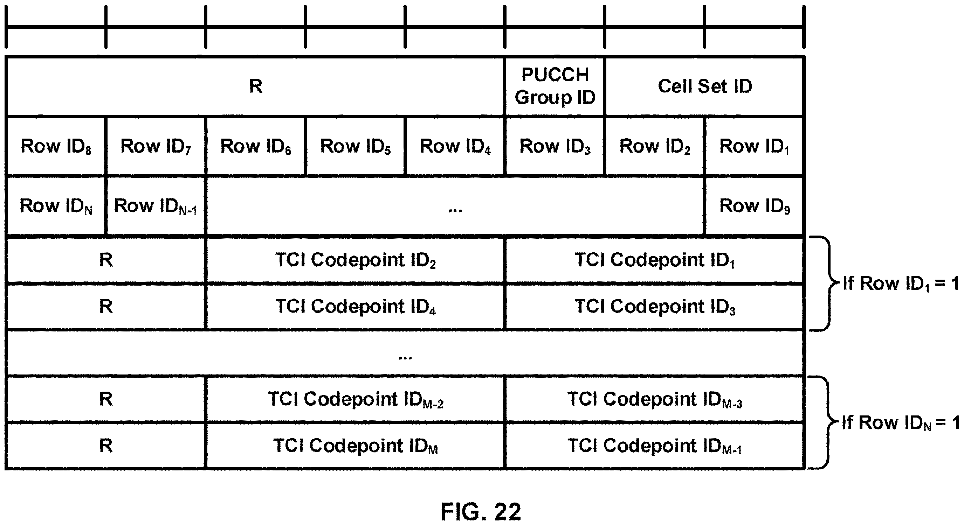

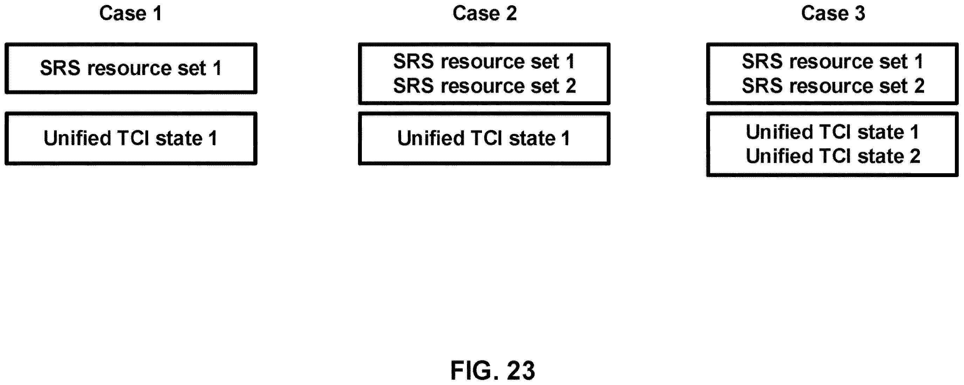

The control command may have/be in many formats, such as discussed with respect to FIG. 20A, FIG. 20B, FIG. 21, and FIG. 22. A given format of the formats may have advantages and/or disadvantages. For example, some of the formats may have a fixed size (e.g., as in FIG. 20B, which may result in simpler signaling but may be wasteful or limiting in the amount of data sent) and some may have a variable size (e.g., as in FIG. 22 and FIG. 23; which may be more complex and/or allow for larger commands to be sent and/or without wasted data resources). Some of the formats may indicate (e.g., new) TCI codepoint(s) for more than one cell (e.g., which may be relatively complex signaling and require greater data per command, but may be more efficient/quicker signaling for the more than one cells) and some may indicate a (e.g., new) TCI codepoint for a single cell (e.g., which may be simpler signaling, but less efficient/requiring greater overhead to indicate individual codepoints for individual cells). Ensuring that the one or more TCI codepoints (e.g., indicated/updated/activated dynamically by the activation command) comprises the second TCI codepoint (e.g., for the cell in the TCI state table), as described herein, may reduce interference to other wireless devices and/or other cells, reduce error rates, increase data rates, reduce retransmissions, reduced battery consumption and reduce latency.

The DCI may schedule a first uplink transmission (e.g., a first PUSCH transmission) for/via an uplink BWP of the cell. The one or more configuration parameters may indicate, for the uplink BWP of the cell, at least two SRS resource sets. The at least two SRS resource sets may comprise a first SRS resource set and a second SRS resource set. The wireless device may receive a control command (e.g., MAC-CE, DCI) indicating a single TCI state (e.g., a single unified TCI state, a single joint TCI state, a single downlink TCI state, a single uplink TCI state) for the cell. The one or more TCI codepoints may comprise a TCI codepoint indicating/comprising the single TCI state. The single TCI state indicated for the cell may indicate single-TRP operation/mode for the cell.

The wireless device may perform/send (e.g., transmit), via the uplink BWP of the cell, the first uplink transmission based on the single TCI state. The wireless device may perform/send (e.g., transmit), via the uplink BWP of the cell, the first uplink transmission with a first transmission power determined/calculated based on the single TCI state. The wireless device may perform/send (e.g., transmit), via the uplink BWP of the cell, the first uplink transmission with a first spatial domain transmit/transmission filter/beam determined/calculated based on the single TCI state.

The DCI may comprise an SRS resource set indicator field. A first value (e.g., 00) of the SRS resource set indicator field may indicate, for the first uplink transmission via the uplink BWP of the cell, the first SRS resource set. The wireless device may perform/send (e.g., transmit) the first uplink transmission based on the first SRS resource set. The first value of the SRS resource set indicator field may indicate a single transmission-reception point (TRP) operation/mode. The wireless device may send (e.g., transmit) the first uplink transmission, for example, to/towards a single TRP.

A second value (e.g., 01) of the SRS resource set indicator field may indicate, for the first uplink transmission via the uplink BWP of the cell, the second SRS resource set. The wireless device may perform/send (e.g., transmit) the first uplink transmission based on the second SRS resource set. The second value of the SRS resource set indicator field may indicate a single transmission-reception point (TRP) operation/mode. The wireless device may send (e.g., transmit) the first uplink transmission, for example, to/towards a single TRP. A third value (e.g., 10) of the SRS resource set indicator field may indicate a multiple-TRP operation/mode. A fourth value (e.g., 11) of the SRS resource set indicator field may indicate a multiple-TRP operation/mode.

The wireless device may send (e.g., transmit) the first uplink transmission, for example, to/towards at least two TRPs in the multiple-TRP mode. The wireless device may not transmit the first uplink transmission, for example, to/towards the at least two TRPs based on an indication of a single TCI state for the cell (e.g., an indication of a single-TRP mode). The wireless may not transmit the first uplink transmission, based on the indication of the single TCI state, even if the SRS resource set indicator field is set/equal to the third value or the fourth value (e.g., a multiple-TRP operation/mode). The wireless device may perform/send (e.g., transmit) the first uplink transmission based on an SRS resource set among the first SRS resource set and the second SRS resource set. In at least some wireless communication technologies, the base station may not know/determine/be able to determine the SRS resource set used/selected/determined by the wireless device to perform/send (e.g., transmit) the first uplink transmission. The base station may not decode/receive the first uplink transmission successfully, for example, based on not knowing the SRS resource set used/selected/determined by the wireless device to perform/transmit the first uplink transmission. For example, the wireless device may perform/transmit the first uplink transmission based on the first SRS resource set. The base station may decode (or attempt to decode) the first uplink transmission based on the second SRS resource set that is different from the first SRS resource set used by the wireless device. This SRS resource set misalignment may result in increased error rates and reduced data rate.

Wireless communication technologies described herein may enhance SRS resource set selection for a first uplink transmission via a cell if an SRS resource set indicator field in a DCI indicates a multiple-TRP operation/mode (e.g., is sebequal to the third value (e.g., 10) or the fourth value (e.g., 11)) and a single TCI state is indicated for the cell. An SRS resource set may be determined for the first uplink transmission via the cell. The SRS resource set may be determined as a default SRS resource set based on the DCI indicating a multiple-TRP operation/mode and/or the single TCI state being indicated for the cell. The SRS resource set (e.g., the default SRS resource set) may be determined (e.g., selected) from (e.g., to be one of) the first SRS resource set or the second SRS resource set. The SRS resource set may be determined from the first SRS resource set and the second SRS resource set, for example, based on one or more criteria (e.g., as discussed with respect to FIG. 23). The SRS resource set may be determined to be the SRS resource with a lower SRS resource set index among the first SRS resource set and the second SRS resource set.

The SRS resource set may be an SRS resource set, of the first SRS resource set or the second SRS resource set, used before/prior to (e.g., in a most recent uplink transmission before/prior to) the first uplink transmission. The SRS resource set may be determined based on a least significant bit (LSB) of the SRS resource set indicator field. The SRS resource set may be the first SRS resource set if the SRS resource set indicator field in the DCI is set/equal to the third value (e.g., 10) (e.g., based on the SRS resource set indicator field being set/equal to the third value). The SRS resource set may be the second SRS resource set if the SRS resource set indicator field in the DCI is set/equal to the fourth value (e.g., 11) (e.g., based on the SRS resource set indicator field being set/equal to the fourth value). The wireless communication technologies described herein may result in reduced error rates and/or increased data rates.

The DCI may schedule a first downlink reception (e.g., a first PDSCH transmission) for/via a downlink BWP of the cell. The DCI may comprise a TCI state selection field (e.g., TCI state indicator field). The wireless device may receive a control command (e.g., MAC-CE, DCI) indicating at least two TCI states (e.g., at least two unified TCI states, at least two joint TCI states, at least two downlink TCI states, at least two uplink TCI states) for the cell. The one or more TCI codepoints may comprise a TCI codepoint indicating/comprising the at least two TCI states. The at least two TCI states indicated for the cell may indicate multi-TRP operation/mode for the cell. The at least two TCI states may comprise a first TCI state and a second TCI state.

A first value (e.g., 00) of the TCI state selection field may indicate, for the first downlink reception via the downlink BWP of the cell, the first TCI state of the at least two TCI states. The wireless device may perform/receive the first downlink reception based on the first TCI state. The first value of the TCI state selection field may indicate a single transmission-reception point (TRP) operation/mode. The wireless device may receive the first downlink reception, for example, from a single TRP.

A second value (e.g., 01) of the TCI state selection field may indicate, for the first downlink reception via the downlink BWP of the cell, the second TCI state of the at least two TCI states. The wireless device may perform/receive the first downlink reception based on the second TCI state. The second value of the TCI state selection field may indicate a single transmission-reception point (TRP) operation/mode. The wireless device may receive the first downlink reception, for example, from a single TRP.

A third value (e.g., 10) of the TCI state selection field may indicate a multiple-TRP operation/mode. A fourth value (e.g., 11) of the TCI state selection field may indicate a multiple-TRP operation/mode. The wireless device may receive the first downlink reception, for example, from/via at least two TRPs in the multiple-TRP mode (e.g., based on being in the multiple-TRP mode).

The wireless device may receive a second control command (e.g., MAC-CE, DCI) indicating a single TCI state (e.g., a single unified TCI state, a single joint TCI state, a single downlink TCI state, a single uplink TCI state) for the cell. The one or more TCI codepoints may comprise a TCI codepoint indicating/comprising the single TCI state. The single TCI state indicated for the cell may indicate single-TRP operation/mode for the cell.

The wireless device may not receive the first downlink reception, for example, from the at least two TRPs if the TCI state selection field is set/equal to the third value or the fourth value (e.g., indicating a multiple-TRP operation/mode). The wireless device may not receive the first downlink reception from the at least two TRPs if the TCI state selection field is set/equal to the third value or the fourth value (e.g., indicating a multiple-TRP operation/mode) and, for example, based on the wireless device being indicated with a single TCI state for the cell (e.g., the single TCI indicating a single-TRP mode). The wireless device may not receive the first downlink reception from the at least two TRPs even though/if the TCI state selection field is set/equal to the third value or the fourth value.

In at least some wireless communication technologies, the wireless device may not know how to read/interpret the TCI state selection field and/or which receive/receiving/reception beam(s) to use for the first downlink reception if the single TCI state is indicated for the cell (e.g., the single TCI state indicating a single-TRP mode), and the TCI state selection field is set/equal to the third value or the fourth value (indicating multi-TRP mode). This may result in increased error rates and reduced data rate.

As disclosed herein, an TCI state selection field for a cell indicated/activated with/based on a single TCI state may be enhanced. A wireless device may ignore/discard a TCI state selection field in a DCI scheduling a downlink reception via/for a cell (and/or ignore a value in/of the TCI state selection field) if a single TCI state is indicated for the cell. The wireless device may not apply the TCI state selection field (and/or the value in/of the TCI state selection field) to the first downlink reception if the single TCI state is indicated for the cell.

Also, or alternatively, as disclosed herein, the base station may ensure that the TCI state selection field is not set/equal to a value indicating multiple-TRP operation/mode (e.g., the third value (e.g., 10) or the fourth value (e.g., 11)). The wireless device may not expect the TCI state selection field in the DCI to be set/equal to a value indicating multiple-TRP operation/mode (e.g., the third value (e.g., 10) or the fourth value (e.g., 11)). The base station may ensure that the TCI state selection field is not set/equal to the second value (e.g., 01), the third value (e.g., 10) or the fourth value (e.g., 11). The wireless device may not expect the TCI state selection field in the DCI to be set/equal to the second value (e.g., 01), the third value (e.g., 10) or the fourth value (e.g., 11).

As disclosed herein, a size of the DCI may be reduced if the single TCI state is indicated for the cell (e.g., based on the single TCI state being indicated for the cell). The reduced DCI size may increase coverage. The DCI may not comprise the TCI state selection field if the single TCI state is indicated for the cell (e.g., based on the single TCI state being indicated for the cell). The DCI may not comprise the SRS resource set indicator field if the single TCI state is indicated for the cell (e.g., based on the single TCI state being indicated for the cell). A size of the SRS resource set indicator field may be reduced from 2 bits to 1 bit, for example, if the single TCI state is indicated for the cell (e.g., based on the single TCI state being indicated for the cell). The wireless communication technologies disclosed herein may result in reduced error rates and increased data rate.

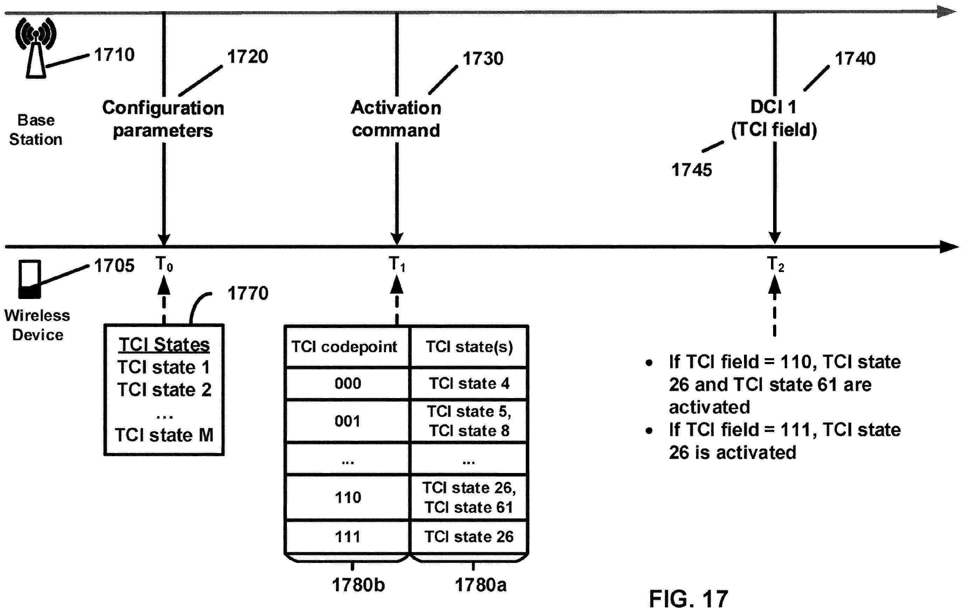

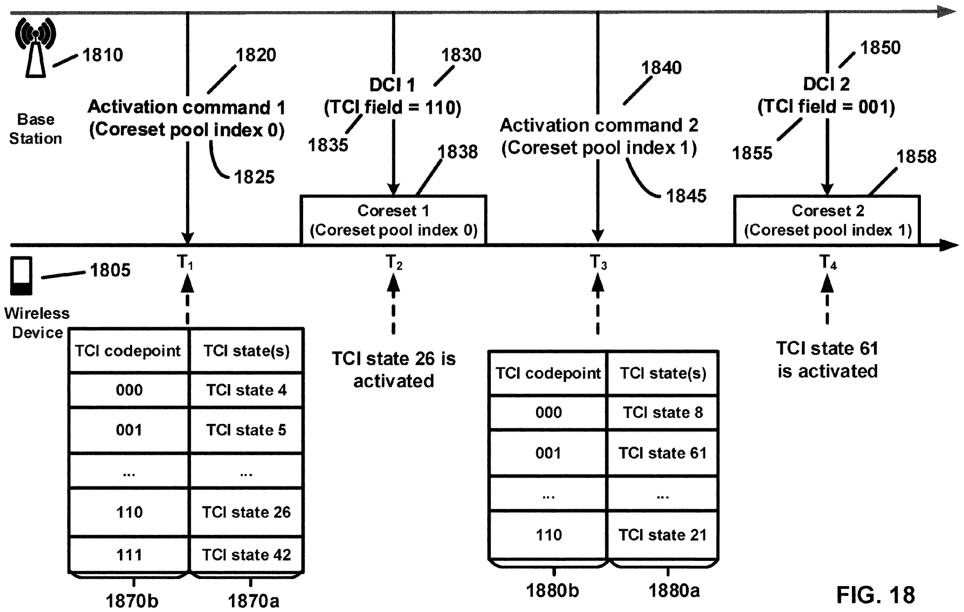

FIG. 17 and FIG. 18 show examples of TCI state activation. A wireless device may receive one or more messages. FIG. 17 shows an example of TCI state activation. The wireless device 1705 may receive the one or more messages from a base station 1710. The wireless device 1705 may receive the one or more messages from a relay node. The wireless device 1705 may receive the one or more messages from another wireless device (e.g., TRP, vehicle, remote radio head, etc.). The one or more messages may comprise one or more configuration parameters 1720 (e.g., Configuration parameters at time $T_0$ as described herein in FIG. 17).

The one or more configuration parameters 1720 may be RRC configuration parameters. The one or more configuration parameters may be one or more RRC reconfiguration parameters (e.g., *RRCReconfiguration, reconfigurationWithSync).* The one or more messages may be one or more RRC messages. The one or more messages may be one or more RRC reconfiguration messages (e.g., *RRCReconfiguration, reconfigurationWithSync*).

The one or more configuration parameters 1720 may be RRC reconfiguration parameters. The one or more configuration parameters 1720 may be for a set of cells. The set of cells may comprise a cell. The cell may be, for example, a serving cell. At least one configuration parameter of the one or more configuration parameters 1720 may be for the cell. The cell may be a primary cell (PCell). The cell may be a primary secondary cell (PSCell). The cell may be a secondary cell (SCell). The cell may be a secondary cell configured with PUCCH (e.g., PUCCH SCell). The set of cells may be (and/or may be interchangeably used with) a plurality of cells. The cell may be a special Cell (SpCell). For dual connectivity (DC) operation, the SpCell may refer to (or indicate) the PCell of the MCG or the PSCell of the SCG. The SpCell may refer to (or indicate) the PCell. The cell may be a primary SCG cell (PSCell). For dual connectivity operation, the wireless device may, for example, perform a random-access procedure via the PSCell if performing the Reconfiguration with Sync procedure.

The cell may be an unlicensed cell (e.g., operating in an unlicensed band). The cell may be a licensed cell (e.g., operating in a licensed band). The cell may operate in a first frequency range (FR1). The FR1 may, for example, comprise frequency bands below 6 GHz. The cell may operate in a second frequency range (FR2). The FR2 may, for example, comprise frequency bands from 24 GHz to 52.6 GHz. The cell may operate in a third frequency range (FR3). The FR3 may, for example, comprise frequency bands from 52.6 GHz to 71 GHz. The FR3 may, for example, comprise frequency bands starting from 52.6 GHz.

A wireless device 1705 may perform uplink transmissions (e.g., PUSCH, PUCCH, PUCCH) via and/or of the cell in a first time and/or in a first frequency. The wireless device 1705 may perform downlink receptions (e.g., PDCCH, PDSCH) via and/or of the cell in a second time and/or in a second frequency. The cell may operate in a time-division duplex (TDD) mode. In the TDD mode, the first frequency and the second frequency may be the same. In the TDD mode, the first time and the second time may be different. The cell may operate in a frequency-division duplex (FDD) mode. In the FDD mode, the first frequency and the second frequency may be different. In the FDD mode, the first time and the second time may be the same. The wireless device 1705 may be in an RRC connected mode. The wireless device 1705 may be in an RRC idle mode. The wireless device 1705 may be in an RRC inactive mode.

A cell may comprise a plurality of BWPs. The plurality of BWPs may comprise one or more uplink BWPs comprising an uplink BWP (UL BWP) of the cell. The plurality of BWPs may comprise one or more downlink BWPs comprising a downlink BWP of the cell. The BWP of the plurality of BWPs may be in one of an active state and an inactive state (or a deactivated state). In the active state of a downlink BWP of the one or more downlink BWPs, for example, a wireless device 1705 may monitor a downlink channel and/or signal (e.g., PDCCH, DCI, CSI-RS, PDSCH) on, for, and/or via the downlink BWP. in the active state of a downlink BWP of the one or more downlink BWPs, the wireless device 1705 may receive a PDSCH on, for, and/or via the downlink BWP. In the inactive state of a downlink BWP of the one or more downlink BWPs, the wireless device 1705 may not monitor a downlink channel and/or signal (e.g., PDCCH, DCI, CSI-RS, PDSCH) on, for, and/or via the downlink BWP. In the inactive state of a downlink BWP of the one or more downlink BWPs, the wireless device may stop monitoring and/or receiving a downlink channel and/or signal (e.g., PDCCH, DCI, CSI-RS, PDSCH) on, for, and/or via the downlink BWP. In the inactive state of a downlink BWP of the one or more downlink BWPs, the wireless device 1705 may not receive a PDSCH on, for, and/or via the downlink BWP. In the inactive state of a downlink BWP of the one or more downlink BWPs, the wireless device 1705 may stop receiving a PDSCH on, for, and/or via the downlink BWP.

In an active state of an uplink BWP of one or more uplink BWPs, a wireless device 1705 may send (e.g., transmit) an uplink channel and/or signal (e.g., PUCCH, preamble, PUSCH, PRACH, PUCCH, etc.) on and/or via the uplink BWP. in the inactive state of an uplink BWP of the one or more uplink BWPs, the wireless device may not send (e.g., transmit) an uplink channel and/or signal (e.g., PUCCH, preamble, PUSCH, PRACH, PUCCH, etc.) on and/or via the uplink BWP.

A wireless device 1705 may activate a downlink BWP of one or more downlink BWPs of a cell. The activating the downlink BWP may comprise setting and/or switching to the downlink BWP as an active downlink BWP of the cell. The activating the downlink BWP may comprise setting the downlink BWP in the active state. The activating the downlink BWP may comprise switching the downlink BWP from the inactive state to the active state.

A wireless device 1705 may activate an uplink BWP of one or more uplink BWPs of a cell. The activating the uplink BWP may comprise the wireless device 1705 setting and/or switching to the uplink BWP as an active uplink BWP of the cell. The activating the uplink BWP may comprise setting the uplink BWP in the active state. The activating the uplink BWP may comprise switching the uplink BWP from the inactive state to the active state.

One or more configuration parameters may be for a downlink BWP (e.g., an active downlink BWP) of the cell. At least one configuration parameter of the one or more configuration parameters may be for the downlink BWP of the cell. The one or more configuration parameters may indicate a subcarrier spacing and/or a numerology for the downlink BWP.

One or more configuration parameters may be for a uplink BWP (e.g., an active uplink BWP) of a cell. At least one configuration parameter of the one or more configuration parameters may be for the uplink BWP of the cell. The one or more configuration parameters may indicate a subcarrier spacing and/or a numerology for the uplink BWP.

A value of the subcarrier spacing, of the downlink BWP and/or the uplink BWP, may be and/or indicate, for example, 15 kHz (mu = 0). A value of the subcarrier spacing may be and/or indicate, for example, 30 kHz (mu = 1). A value of the subcarrier spacing may be and/or indicate, for example, 60 kHz (mu = 2). A value of the subcarrier spacing may be and/or indicate, for example, 120 kHz (mu = 3). A value of the subcarrier spacing may be and/or indicate, for example, 240 kHz (mu = 4). A value of the subcarrier spacing may be and/or indicate, for example, 480 kHz (mu = 5). A value of the subcarrier spacing may be and/or indicate, for example, 960 kHz (mu = 6). 480 kHz may be valid and/or applicable in FR3. 960 kHz may be valid and/or applicable in FR3. 240 kHz may be valid and/or applicable in FR3. 120 kHz may be valid and/or applicable in FR3.

One or more configuration parameters may indicate a plurality of control resource sets (coresets). The one or more configuration parameters may indicate the plurality of coresets for a downlink BWP (e.g., an active downlink BWP) of a cell. The downlink BWP (e.g., the active downlink BWP) may comprise the plurality of coresets. The one or more configuration parameters may indicate a plurality of coreset indexes, identifiers, and/or indicators (e.g., provided by a higher layer parameter ControlResourceSetId) for the plurality of coresets. Each coreset of the plurality of coresets may be identified and/or indicated by a respective coreset index of the plurality of coreset indexes. A first coreset of the plurality of coresets may be identified by a first coreset index of the plurality of coreset indexes. A second coreset 1858 of the plurality of coresets may be identified by a second coreset index of the plurality of coreset indexes.

One or more configuration parameters 1720 may indicate one or more coreset pool indexes (e.g., provided by a higher layer parameter CoresetPoolIndex) for a plurality of coresets. Each coreset of the plurality of coresets may be configured by, be indicated by, and/or comprise the one or more configuration parameters by a respective coreset pool index of the one or more coreset pool indexes (e.g., 0, 1, etc.). The one or more configuration parameters 1720 may indicate, for each coreset of the plurality of coresets, a respective coreset pool index of the one or more coreset pool indexes. The one or more configuration parameters 1720 may indicate, for a first coreset of the plurality of coresets, for example, a first coreset pool index 1825 (CoresetPoolIndex = 0). The one or more configuration parameters may indicate, for a second coreset of the plurality of coresets, a second coreset pool index 1845 (CoresetPoolIndex = 1). The one or more coreset pool indexes may comprise the first coreset pool index 1825 and the second coreset pool index 1845.

Also, or alternatively, one or more configuration parameters 1720 may not indicate, for a coreset of the plurality of coresets, a coreset pool index. A higher layer parameter CoresetPoolIndex may be absent in configuration parameters of the coreset. A 1805 wireless device may determine a value (e.g., a default value) of a coreset pool index of the coreset as a first coreset pool index 1825 (CoresetPoolIndex = 0). The first coreset pool index 1825 (CoresetPoolIndex = 0) may be the coreset pool index of the coreset, for example, based on the one or more configuration parameters not indicating, for the coreset, a coreset pool index. The wireless device 1805 may determine the value (e.g., the default value) of the coreset pool index of the coreset as the first coreset pool index 1825, for example, based on the one or more configuration parameters not indicating, for the coreset, a coreset pool index.

A first coreset pool (e.g., Coreset pool 0) may comprise one or more first coresets with a coreset pool index that may be equal to a first coreset pool index 1825 (e.g., CoresetPoolIndex = 0). One or more configuration parameters 1720 may indicate the first coreset pool index 1825 for each coreset of the one or more first coresets in the first coreset pool. The plurality of coresets may comprise the one or more first coresets.

A second coreset pool (e.g., Coreset pool 1) may comprise one or more second coresets with a coreset pool index that is equal to a second coreset pool index 1845 (e.g., CoresetPoolIndex = 1). One or more configuration parameters 1720 may indicate the second coreset pool index 1845 for each coreset of the one or more second coresets in the second coreset pool. The plurality of coresets may comprise the one or more second coresets.

One or more configuration parameters 1820 may not indicate a coreset pool index for a coreset of the plurality of coresets. A wireless device 1805 may determine a default value for the coreset pool index of the coreset, for example, based on the one or more configuration 1820 parameters not indicating the coreset pool index for the coreset. The default value may be equal to zero (e.g., CoresetPoolIndex = 0). The default value may be equal to the first coreset pool index 1825 (e.g., zero). The first coreset pool may comprise the coreset, for example, based on the one or more configuration parameters not indicating, for the coreset, the coreset pool index. The first coreset pool may comprise the coreset based on the default value of the coreset pool index of the coreset being equal to the first coreset pool index 1825.

A first coreset pool index 1825 of a first coreset and a second coreset pool index 1845 of a second coreset 1858 may be the same. One more configuration parameters may indicate the same coreset pool index for the first coreset and the second coreset 1858. A plurality of coresets may comprise the first coreset and the second coreset 1858. One or more coreset pool indexes may comprise the first coreset pool index 1825 and the second coreset pool index 1845. A wireless device 1805 may group the first coreset and the second coreset 1858 in a same coreset pool (e.g., Coreset-PoolIndex = 0 or CoresetPoolIndex = 1), for example, based on the first coreset pool index 1825 of the first coreset and the second coreset pool index 1840 of the second coreset 1858 being the same. A first coreset pool comprising the first coreset and a second coreset pool comprising the second coreset 1858 may be the same, for example, based on the first coreset pool index 1825 of the first coreset and the second coreset pool index 1840 of the second coreset 1858 being the same.

A first coreset pool index 1825 of a first coreset and a second coreset pool index 1840 of a second coreset 1858 may be different. A plurality of coresets may comprise the first coreset and the second coreset 1858. One or more coreset pool indexes may comprise the first coreset pool index 1825 and the second coreset pool index 1840. A wireless device 1805 may group the first coreset and the second coreset 1858 in different coreset pools, for example, based on the first coreset pool index 1825 of the first coreset and the second coreset pool index 1840 of the second coreset 1858 being different. The wireless device 1805 may group the first coreset in a first coreset pool (e.g., CoresetPoolIndex = 0). The wireless device 1805 may group the second coreset 1858 in a second coreset pool (e.g., CoresetPoolIndex = 1) that is different from the first coreset pool, for example, based on the first coreset pool index 1825 and the second coreset pool index 1840 being different. The first coreset pool and the second coreset pool may be different, for example, based on the first coreset pool index 1825 of the first coreset and the second coreset pool index 1840 of the second coreset 1858 being different.

One or more configuration parameters 1820 may indicate at least two coreset pool indexes (e.g., 0 and 1) for a higher layer parameter CORESETPoolIndex. The one or more configuration parameters 1820 may comprise the higher layer parameter CORESETPoolIndex with and/or set to the at least two coreset pool indexes. The at least two coreset pool indexes may comprise a first coreset pool index 1825 (e.g., 0) for one or more first coresets of a plurality of coresets. The at least two coreset pool indexes may comprise a second coreset pool index 1840 (e.g., 1), different from the first coreset pool index 1825 for one or more second coresets of the plurality of coresets. The one or more first coresets may comprise one or more third coresets, of the plurality of coresets, without a value for a higher layer parameter CORESETPoolIndex. The one or more configuration parameters 1820 may not comprise the higher layer parameter CORESETPoolIndex for the one or more third coresets.

A cell may comprise a plurality of transmission and reception points (TRPs). The plurality of TRPs may serve the cell and/or a wireless device 1805 in, via, and/or of the cell. At least one TRP of the plurality of TRPs may serve the cell and/or the wireless device in, via, and/or of the cell. The plurality of TRPs may comprise a first TRP and a second TRP. The first TRP may send (e.g., transmit) a downlink transmission and/or signal (e.g., PDSCH, PDCCH, DCI) via a first coreset pool. Sending/transmitting the downlink transmission and/or signal (e.g., PDCCH, DCI) via the first coreset pool may comprise the first TRP sending/transmitting the downlink transmission and/or signal via a first coreset having and/or being associated with the first coreset pool index. The first TRP may not send (e.g., transmit) a downlink transmission and/or signal (e.g., PDSCH, PDCCH, DCI) via a second coreset pool. Not transmitting the downlink transmission and/or signal (e.g., PDSCH, PDCCH, DCI) via the second coreset pool may comprise the first TRP does not sending (e.g., transmitting) the downlink transmission and/or signal via a second coreset 1858 having and/or being associated with the second coreset pool index.

A second TRP may send (e.g., transmit) a downlink transmission and/or signal (e.g., PDSCH, PDCCH, DCI) via a second coreset pool. Transmitting the downlink transmission and/or signal (e.g., PDCCH, DCI) via the second coreset pool may comprise the second TRP sending (e.g., transmitting) the downlink transmission and/or signal via a second coreset 1858 having and/or being associated with the second coreset pool index. The second TRP may not send (e.g., transmit) a downlink transmission and/or signal (e.g., PDCCH, DCI) via the first coreset pool. Not transmitting the downlink transmission and/or signal (e.g., PDCCH, DCI) via the first coreset pool may comprise the second TRP does not sending (e.g., transmitting) the downlink transmission and/or signal via a first coreset having and/or being associated with the first coreset pool index.

One or more configuration parameters may indicate a plurality of uplink resources (e.g., PUCCH-Resource, SRS-Resource, etc.). The one or more configuration parameters may indicate the plurality of uplink resources for the uplink BWP (e.g., an active uplink BWP) of a cell. The uplink BWP (e.g., an active uplink BWP) may comprise the plurality of uplink resources. The uplink BWP (e.g., an active uplink BWP) of an uplink carrier (e.g., NUL, SUL) of the cell may comprise the plurality of uplink resources. A plurality of uplink resources may comprise, for example, a plurality of PUCCH resources. The plurality of uplink resources may comprise, for example, a plurality of SRS resources. The plurality of uplink resources may comprise, for example, a plurality of PUSCH resources.

One or more configuration parameters may indicate one or more uplink resource sets and/or groups (e.g., PUCCH-ResourceGroup, SRS-ResourceSet). The one or more uplink resource sets and/or groups may comprise a plurality of uplink resources. Each uplink resource set and/or group of the one or more uplink resource sets and/or groups may comprise respective uplink resources of the plurality of uplink resources. a first uplink resource set and/or group of the one or more uplink resource sets and/or groups may comprise one or more first uplink resources of the plurality of uplink resources. A second uplink resource set and/or group of the one or more uplink resource sets and/or groups may comprise one or more second uplink resources of the plurality of uplink resources. The first uplink resource set and/or group and the second uplink resource set and/or group may not comprise (e.g., share) a common (e.g., shared, same, etc.) uplink resource of the plurality of uplink resources. A first uplink resource that may be in the first uplink resource set and/or group may not be in the second uplink resource set and/or group.

One or more configuration parameters may indicate a plurality of uplink resource indexes, identifiers, and/or indicators (e.g., provided by a higher layer parameter PUCCH-ResourceId, SRS-ResourceId) for a plurality of uplink resources. Each uplink resource of the plurality of uplink resources may be identified and/or indicated by a respective uplink resource index of the plurality of uplink resource indexes. A first uplink resource of the plurality of uplink resources may be identified by a first uplink resource index of the plurality of uplink resource indexes. A second uplink resource of the plurality of uplink resources may be identified by a second uplink resource index of the plurality of uplink resource indexes.

One or more configuration parameters may indicate one or more uplink resource set and/or group indexes, identifiers, and/or indicators (e.g., provided by a higher layer parameter PUCCH-ResourceGroupId, SRS-ResourceSetId) for one or more uplink resource sets and/or groups. Each uplink resource set and/or group of the one or more uplink resource sets and/or groups may be identified and/or indicated by a respective uplink resource set and/or group index of the one or more uplink resource set and/or group indexes. A first uplink resource set and/or group of the one or more uplink resource sets and/or groups may be identified by a first uplink resource set and/or group index of the one or more uplink resource set and/or group indexes. A second uplink resource set and/or group of the one or more uplink resource sets and/or groups may be identified by a second uplink resource set and/or group index of the one or more uplink resource set and/or group indexes.

One or more configuration parameters may indicate one or more coreset pool indexes (e.g., provided by a higher layer parameter CoresetPoolIndex) for a plurality of uplink resources. Each uplink resource of the plurality of uplink resources may comprise, be configured by, and/or be indicated by the one or more configuration parameters by a respective coreset pool index of the one or more coreset pool indexes (e.g., 0, 1). The one or more configuration parameters may indicate, for each uplink resource of the plurality of uplink resources, a respective coreset pool index of the one or more coreset pool indexes. The one or more configuration parameters may indicate, for a first uplink resource of the plurality of uplink resources, for example, a first coreset pool index (CoresetPoolIndex = 0). The one or more configuration parameters may indicate, for a second uplink resource of the plurality of uplink resources, for example, a second coreset pool index (CoresetPoolIndex = 1). The one or more coreset pool indexes may comprise the first coreset pool index and the second coreset pool index.

One or more configuration parameters may not indicate, for an uplink resource of the plurality of uplink resources, a coreset pool index. A higher layer parameter CoresetPoolIndex may be absent in configuration parameters of the uplink resource. A wireless device 1805 may determine a value (e.g., a default value) of a coreset pool index of the uplink resource as the first coreset pool index (CoresetPoolIndex = 0). The wireless device may determine the value (e.g., the default value) of the coreset pool index of the uplink resource as the first coreset pool index, for example, based on the one or more configuration parameters not indicating, for the uplink resource, a coreset pool index. The first coreset pool index (CoresetPoolIndex = 0) may be the coreset pool index of the uplink resource, for example, based on the one or more configuration parameters not indicating, for the uplink resource, a coreset pool index.

One or more configuration parameters may indicate at least two coreset pool indexes (e.g., 0 and 1) for a higher layer parameter CORESETPoolIndex. The one or more configuration parameters may comprise the higher layer parameter CORESETPoolIndex with and/or set to the at least two coreset pool indexes. The at least two coreset pool indexes may comprise a first coreset pool index (e.g., 0) for one or more first uplink resources of the plurality of uplink resources. The at least two coreset pool indexes may comprise a second coreset pool index (e.g., 1), different from the first coreset pool index, for one or more second uplink resources of the plurality of uplink resources. The one or more first uplink resources may comprise one or more third uplink resources, of the plurality of uplink resources, without a value for a higher layer parameter CORESETPoolIndex. The one or more configuration parameters may not comprise the higher layer parameter CORESETPoolIndex for the one or more third uplink resources.

A cell may comprise a plurality of transmission and reception points (TRPs). The plurality of TRPs may serve the cell and/or the wireless device in, via, and/or of the cell. At least one TRP of the plurality of TRPs may serve the cell and/or the wireless device in, via, and/or of the cell. The plurality of TRPs may comprise a first TRP and a second TRP.

A first TRP may receive an uplink transmission and/or signal (e.g., PUSCH, PUCCH, SRS, UCI, PRACH) via a first uplink resource, of the plurality of uplink resources, having and/or being associated with the first coreset pool index. The first TRP may not receive an uplink transmission and/or signal (e.g., PUSCH, PUCCH, SRS, UCI, PRACH) via a second uplink resource, of the plurality of uplink resources, having and/or being associated with the second coreset pool index.

A second TRP may receive an uplink transmission and/or signal (e.g., PUSCH, PUCCH, SRS, UCI, PRACH) via a second uplink resource, of the plurality of uplink resources, having and/or being associated with the second coreset pool index. The second TRP may not receive an uplink transmission and/or signal (e.g., PUSCH, PUCCH, SRS, UCI, PRACH) via a first uplink resource, of the plurality of uplink resources, having and/or being associated with the first coreset pool index.

One or more configuration parameters may indicate one or more coreset pool indexes (e.g., provided by a higher layer parameter CoresetPoolIndex) for one or more uplink resource sets and/or groups. Each uplink resource set and/or group of the one or more uplink resource sets and/or groups may comprise, be configured by, and/or be indicated by the one or more configuration parameters by a respective coreset pool index of the one or more coreset pool indexes (e.g., 0, 1). The one or more configuration parameters may indicate, for each uplink resource set and/or group of the one or more uplink resource sets and/or groups, a respective coreset pool index of the one or more coreset pool indexes. One or more configuration parameters may indicate, for a first uplink resource set and/or group of the one or more uplink resource sets and/or groups, for example, a first coreset pool index 1825 (CoresetPoolIndex = 0). The one or more configuration parameters may indicate, for a second uplink resource set and/or group of the one or more uplink resource sets and/or groups, for example, a second coreset pool index 1845 (CoresetPoolIndex = 1). The one or more coreset pool indexes may comprise the first coreset pool index and the second coreset pool index.

One or more configuration parameters may not indicate, for an uplink resource set and/or group of the one or more uplink resource sets and/or groups, a coreset pool index. A higher layer parameter CoresetPoolIndex may be absent in configuration parameters of the uplink resource set and/or group. A wireless device 1805 may determine a value (e.g., a default value) of a coreset pool index of the uplink resource set and/or group as the first coreset pool index 1825 (CoresetPoolIndex = 0). The wireless device may determine the value (e.g., the default value) of the coreset pool index of the uplink resource set and/or group as the first coreset pool index, for example, based on the one or more configuration parameters not indicating, for the uplink resource set and/or group, a coreset pool index. The first coreset pool index 1825 (CoresetPoolIndex = 0) may be the coreset pool index of the uplink resource set and/or group, for example, based on the one or more configuration parameters not indicating, for the uplink resource set and/or group, a coreset pool index.

One or more configuration parameters may indicate at least two coreset pool indexes (e.g., 0 and 1) for a higher layer parameter CORESETPoolIndex. The one or more configuration parameters may comprise the higher layer parameter CORESETPoolIndex with and/or set to the at least two coreset pool indexes. The at least two coreset pool indexes may comprise a first coreset pool index (e.g., 0) for one or more first uplink resource sets and/or groups of the one or more uplink resource sets and/or groups. The at least two coreset pool indexes may comprise a second coreset pool index (e.g., 1), different from the first coreset pool index, for one or more second uplink resource sets and/or groups of the one or more uplink resource sets and/or groups. The one or more first uplink resource sets and/or groups may comprise one or more third uplink resource sets and/or groups, of the one or more uplink resource sets and/or groups, without a value for a higher layer parameter CORESETPoolIndex. The one or more configuration parameters may not comprise the higher layer parameter CORESETPoolIndex for one or more third uplink resource sets and/or groups.

A cell may comprise a plurality of transmission and reception points (TRPs). The plurality of TRPs may serve the cell and/or a wireless device in/via/of the cell. At least one TRP of the plurality of TRPs may serve the cell and/or the wireless device in, via, and/or of the cell. The plurality of TRPs may comprise a first TRP and a second TRP.

A first TRP may receive an uplink transmission and/or signal (e.g., PUSCH, PUCCH, SRS, UCI, PRACH) via an uplink resource of a first uplink resource set and/or group, of the one or more uplink resource sets and/or groups, having and/or being associated with the first coreset pool index. The first TRP may not receive an uplink transmission and/or signal (e.g., PUSCH, PUCCH, SRS, UCI, PRACH) via an uplink resource in a second uplink resource set and/or group, of the one or more uplink resource sets and/or groups, having and/or being associated with the second coreset pool index.

A second TRP may receive an uplink transmission and/or signal (e.g., PUSCH, PUCCH, SRS, UCI, PRACH) via an uplink resource in a second uplink resource set and/or group, of the one or more uplink resource sets and/or groups, having and/or being associated with the second coreset pool index. The second TRP may not receive an uplink transmission and/or signal (e.g., PUSCH, PUCCH, SRS, UCI, PRACH) via an uplink resource in a first uplink resource set and/or group, of the one or more uplink resource sets and/or groups, having and/or being associated with the first coreset pool index.

A wireless device may send (e.g., transmit), via an uplink resource, an uplink transmission and/or signal (e.g., PUSCH/PUCCH/SRS transmission). A plurality of uplink resources may comprise the uplink resource. An uplink resource set and/or group of the one or more uplink resource sets and/or groups may comprise the uplink resource.

A wireless device 1805 may receive, via a coreset of the plurality of coresets, downlink control information (DCI) 1830 scheduling, triggering, and/or indicating transmission of the uplink transmission and/or signal. The DCI 1830 may schedule, trigger, and/or indicate transmission of the uplink transmission and/or signal via the uplink resource. The DCI may indicate the uplink resource. The DCI may comprise a field indicating the uplink resource.

An uplink transmission and/or signal may be a PUSCH transmission (e.g., transport block). An uplink resource may be a PUSCH resource. DCI 1830 may schedule transmission of the PUSCH transmission. An uplink transmission and/or signal may be a PUCCH transmission (e.g., HARQ-ACK information feedback). The uplink resource may be a PUCCH resource. The DCI 1830 may schedule reception of a transport block (e.g., a PDSCH reception). The uplink transmission and/or signal may be a HARQ-ACK information feedback of the transport block. An uplink transmission and/or signal may be an SRS. The uplink resource may be an SRS resource. The DCI 1830 may schedule transmission of the SRS. The SRS may be, for example, an aperiodic SRS.

A coreset that a wireless device 1805 receives the DCI from may be associated with a coreset pool index. One or more coreset pool indexes may comprise the coreset pool index. The one or more configuration parameters may indicate, for the coreset, the coreset pool index. The one or more configuration parameters may not indicate, for the coreset, the coreset pool index (CoresetPoolIndex = 0 or CoresetPoolIndex = 1). A value (e.g., a default value) of the coreset pool index of the coreset may be equal to the first coreset pool index (CoresetPoolIndex = 0), for example, based on the one or more configuration parameters not indicating, for the coreset, a coreset pool index.

An uplink resource may be associated with the coreset pool index. The uplink resource may be associated with the coreset pool index, for example, based on receiving, via the coreset associated with the coreset pool index, the DCI scheduling, triggering, and/or indicating transmission of the uplink transmission and/or signal via the uplink resource.

An uplink resource set and/or group comprising an uplink resource may be associated with a coreset pool index. The uplink resource set and/or group may be associated with the coreset pool index, for example, based on receiving, via the coreset associated with the coreset pool index, DCI scheduling, triggering, and/or indicating transmission of the uplink transmission and/or signal via the uplink resource in (that belongs to) the uplink resource set and/or group. The uplink resource set and/or group may comprise one or more uplink resources that comprise the uplink resource. The one or more uplink resources may be associated with the coreset pool index, for example, based on the uplink resource set and/or group comprising the one or more uplink resources being associated with the coreset pool index. Each uplink resource of the one or more uplink resources may be associated with the coreset pool index, for example, based on the uplink resource set and/or group being associated with the coreset pool index.

An uplink transmission and/or signal may be associated with a coreset pool index. The uplink transmission and/or signal may be associated with the coreset pool index, for example, based on receiving, via the coreset associated with the coreset pool index, DCI 1830 scheduling, triggering, and/or indicating transmission of the uplink transmission and/or signal.

One or more configuration parameters may indicate a plurality of TCI states 1770. The one or more configuration parameters may indicate a TCI state list (e.g., provided by a higher layer (e.g., RRC) parameter *dl-OrJoint-TCIStateList*) comprising the plurality of TCI states. The one or more configuration parameters 1720 may comprise one or more PDSCH configuration parameters, for example, indicating the plurality of TCI states 1770 (e.g., a plurality of TCI states that are TCI state 1, TCI state 2, ..., and TCI state M, as described herein in FIG. 17). The one or more configuration parameters may indicate, for the plurality of TCI states, a plurality of TCI state indexes/identifiers/identities (e.g., *TCI-StateId*). The one or more configuration parameters may indicate, for each TCI state of the plurality of TCI states, a respective TCI state index of the plurality of TCI state indexes. Each TCI state of the plurality of TCI states 1770 may be indicated/identified by a respective TCI state index of the plurality of TCI state indexes. For example, the one or more configuration parameters may indicate, for a first TCI state of the plurality of TCI states, a first TCI state index of the plurality of TCI state indexes. The one or more configuration parameters may indicate, for a second TCI state of the plurality of TCI states, a second TCI state index of the plurality of TCI state indexes.

One or more configuration parameters 1720 may indicate a plurality of TCI states 1770 that indicate a unified TCI state for a cell. The one or more configuration parameters 1720 may comprise the one or more PDSCH configuration parameters, for example, for the downlink BWP of the cell. The one or more configuration parameters 1720 may indicate the plurality of TCI states 1770 for a downlink BWP of the cell.

One or more configuration parameters 1720 may comprise one or more PDSCH configuration parameters, for example, for a second downlink BWP of a second cell. The one or more configuration 1720 parameters may indicate a plurality of TCI states 1770 for the second downlink BWP of the second cell. The set of cells may comprise the second cell. The one or more configuration parameters may comprise, for the downlink BWP of the cell, a reference unified TCI state list parameter (e.g., *unifiedTCI-StateRef*) indicating the second downlink BWP of the second cell. The reference unified TCI state list parameter may comprise a BWP index (e.g., BWP-Id) identifying (e.g., indicating) the second downlink BWP. The reference unified TCI state list parameter may comprise a cell index (e.g., *ServCellIndex*) identifying (e.g., indicating) the second cell. The second downlink BWP of the second cell may be a reference BWP of a reference cell for the downlink BWP of the cell. The downlink BWP of the cell may be a target BWP of a target cell. The one or more PDSCH configuration parameters of the downlink BWP of the cell may not comprise a higher layer (e.g., RRC) parameter *dl-OrJoint-TCIStateList,* for example, based on the one or more configuration parameters comprising, for the downlink BWP of the cell, the reference unified TCI state list parameter.

One or more configuration parameters 1720 may comprise a unified-TCI-state-type parameter (e.g., unifiedTCI-StateType as described herein in FIG. 17). The one or more configuration parameters may comprise one or more serving cell parameters (e.g., ServingCellConfig) comprising the unified-TCI-state-type parameter. The unified-TCI-state-type parameter may indicate the unified TCI state type of the cell.

A unified-TCI-state-type parameter may be set to "Joint." A wireless device 1805 may use (e.g., apply) the plurality of TCI states 1770 (e.g., provided and/or indicated by *dl-orJoint-TCIStateList*) for both uplink transmissions (e.g., PUSCH/PUCCH/SRS transmissions) of the cell and downlink receptions (e.g., PDCCH/PDSCH/CSI-RS receptions) of the cell, for example, based on the one or more configuration parameters comprising the unified-TCI-state-type parameter set to "Joint."

A unified-TCI-state-type parameter may be set to "Separate." A wireless device 1805 may use (e.g., apply) the plurality of TCI states (e.g., provided and/or indicated by a higher layer parameter *dl-orJoint-TCIStateList)* for downlink receptions (e.g., PDCCH/PDSCH/CSI-RS receptions) of the cell, for example, based on the one or more configuration parameters comprising the unified-TCI-state-type parameter set to "Separate." The wireless device may not use (e.g., apply) the plurality of TCI states for uplink transmissions (e.g., PUSCH/PUCCH/SRS transmissions) of the cell, for example, based on the one or more configuration parameters comprising the unified-TCI-state-type parameter set to "Separate."

One or more configuration parameters 1720 may indicate a second plurality of TCI states 1770. The one or more configuration parameters may indicate an uplink TCI state list (e.g., provided and/or indicated by a higher layer parameter *ul-TCIStateList*) comprising the second plurality of TCI states. The one or more configuration parameters 1720 may comprise one or more uplink BWP configuration parameters, for example, indicating the second plurality of TCI states 1770 (e.g., a second plurality of TCI states may be TCI state 1, TCI state 2,..., and TCI state M as described herein in FIG. 17).

One or more configuration parameters 1720 may comprise one or more uplink BWP configuration parameters, for example, for an uplink BWP of a cell. The one or more configuration parameters 1720 may indicate a second plurality of TCI states 1770 for the uplink BWP of the cell.

One or more configuration parameters 1720 may comprise one or more uplink BWP configuration parameters, for example, for a second uplink BWP of a second cell. The one or more configuration parameters 1720 may indicate a second plurality of TCI states 1770 for the second uplink BWP of the second cell. The set of cells may comprise the second cell. The one or more configuration parameters 1720 may comprise, for the uplink BWP of the cell, a reference unified TCI state list parameter (e.g., unifiedtci-StateType) indicating the second uplink BWP of the second cell. The reference unified TCI state list parameter may comprise a BWP index (e.g., BWP-Id) identifying (e.g., indicating) the second uplink BWP. The reference unified TCI state list parameter may comprise a cell index (e.g., ServCellIndex) identifying (e.g., indicating) the second cell. The second uplink BWP of the second cell may be a reference BWP of a reference cell for the uplink BWP of the cell. The uplink BWP of the cell may be a target BWP of a target cell. The one or more uplink BWP configuration parameters for the uplink BWP of the cell may not comprise a higher layer (e.g., RRC) parameter, such as a ul-TCIStateList, for example, based on the one or more configuration parameters comprising, for the uplink BWP of the cell, the reference unified TCI state list parameter.

A wireless device 1705 may use (e.g., apply) a second plurality of TCI states 1770 for uplink transmissions (e.g., PUSCH/PUCCH/SRS transmissions) of a cell, for example, based on one or more configuration parameters comprising a unified-TCI-state-type parameter set to "Separate." The wireless device 1705 may not use (e.g., apply) the second plurality of TCI states 1770 for downlink receptions (e.g., PDCCH/PDSCH/CSI-RS receptions) of the cell, for example, based on the one or more configuration parameters comprising the unified-TCI-state-type parameter set to "Separate."

A wireless device 1705 may use, for downlink receptions via a downlink BWP of the cell, a plurality of TCI states 1770, for example, based on one or more configuration parameters 1720 indicating the plurality of TCI states 1770 for the downlink BWP of the cell.

A wireless device 1705 may use, for uplink transmissions receptions via an uplink BWP of a cell, a plurality of TCI states 1770, for example, based on one or more configuration parameters 1720 indicating the plurality of TCI states 1770 for the downlink BWP of the cell.

A wireless device 1705 may use, for downlink receptions via a downlink BWP of the cell, a plurality of TCI states 1770 of a second downlink BWP of a second cell, for example, based on a reference unified TCI state list parameter indicating, for the downlink BWP of the cell, the second downlink BWP of the second cell. The wireless device 1705 may use, for uplink transmissions receptions via an uplink BWP of the cell, the plurality of TCI states 1770 of the second downlink BWP of the second cell, for example, based on the reference unified TCI state list parameter indicating, for the downlink BWP of the cell, the second downlink BWP of the second cell.

A wireless device 1705 may use, for uplink transmissions receptions via an uplink BWP of the cell, a second plurality of TCI states 1770, for example based on one or more configuration parameters 1720 indicating the second plurality of TCI states 1770 for the uplink BWP of the cell. The wireless device 1705 may use, for uplink transmissions receptions via the uplink BWP of the cell, the second plurality 1770 of TCI states of the second uplink BWP of the second cell, for example, based on the reference unified TCI state list parameter indicating, for the uplink BWP of the cell, the second uplink BWP of the second cell.

One or more configuration parameters 1720 may indicate, for a cell, a physical cell identifier (PCI). The one or more configuration parameters 1720 may indicate, for a set of cells, one or more PCIs. The one or more PCIs may comprise the PCI of the cell. The one or more configuration parameters 1720 may comprise a higher layer (e.g., RRC) parameter physCellId indicating the one or more PCIs for the set of cells. The one or more configuration parameters may indicate, for each cell of the set of cells, a respective PCI of the one or more PCIs. The one or more configuration parameters may comprise the higher layer (e.g., RRC) parameter physCellId indicating a respective PCI of the one or more PCIs for each cell of the set of cells. The one or more configuration parameters may indicate, for a first cell of the set of cells, a first PCI of the one or more PCIs. The first PCI may identify a physical cell identity of the first cell. The one or more configuration parameters may indicate, for a second cell of the set of cells, a second PCI of the one or more PCIs. The second PCI may identify a physical cell identity of the second cell.

One or more configuration parameters may indicate a list of PCI sets (e.g., indicated by a RRC parameter additionalPCI-ToAddModList as described herein in FIG. 17). The one or more configuration parameters may comprise one or more serving cell parameters (e.g., ServingCellConfig as described herein in FIG. 17) indicating the list of PCI sets. The one or more serving cell parameters may comprise MIMO parameters (e.g., MIMOParam as described herein in FIG. 17) comprising and/or indicating the list of PCI sets. The list of PCI sets may comprise at least one PCI set (e.g., provided and/or indicated by a higher layer parameter SSB-MTC-AdditionalPCI in FIG. 17). The list of PCI sets may be associated with SSBs with different PCI than PCI of the cell.

A list of PCI sets may comprise and/or indicate at least one PCI (e.g., additionalPCI or PhysCellId as described herein in FIG. 17) of one or more PCIs. Each PCI set (e.g., SSB-MTC-AdditionalPCI) of the list of PCI sets may comprise and/or indicate a respective PCI of the at least one PCI. One or more configuration parameters may indicate, for each PCI set of the list of PCI sets, a respective PCI of the at least one PCI. The at least one PCI may not comprise the PCI of the cell. Each PCI of the at least one PCI may be different from the PCI of the cell. The one or more PCIs may comprise the at least one PCI and the PCI of the cell. The at least one PCI may indicate (e.g., identify, etc.) at least one cell of the set of cells. Each PCI of the at least one PCI may indicate (e.g., identify, etc.) a respective cell of the at least one cell. A first PCI set of the list of PCI sets may comprise a first PCI of the at least one PCI. The first PCI may indicate (e.g., identify, etc.) a first cell of the at least one cell. A second PCI set of the list of PCI sets may comprise a second PCI of the at least one PCI. The second PCI may indicate (e.g., identify, etc.) a second cell of the at least one cell. The at least one cell may not comprise the cell. Each cell of the at least one cell may be different from the cell. The set of cells may comprise the at least one cell and the cell.

At least one cell may comprise, for example, at least one non-serving cell. The at least one cell may comprise, for example, at least one neighboring cell. The at least one cell may comprise, for example, at least one candidate and/or assisting cell.

A maximum size and/or length (e.g., maxNrofAdditionalPCI) of a list of PCI sets may be equal to a value (e.g., 7). A maximum quantity of PCI sets in the list of PCI sets may be equal to a value (e.g., 7).

A list of at least one PCI set may comprise and/or indicate at least one additional PCI index (e.g., additionalPCIIndex in FIG. 17). Each PCI set (e.g., SSB-MTC-AdditionalPCI) of the list of PCI sets may comprise and/or indicate a respective additional PCI index of the at least one additional PCI index. One or more configuration parameters may indicate the at least one additional PCI index for the list of PCI sets. The one or more configuration parameters may indicate, for each PCI set of the list of PCI sets, a respective additional PCI index of the at least one additional PCI index. Each PCI set of the list of PCI sets may be identified and/or indicated by a respective additional PCI index of the at least one additional PCI index. a first PCI set of the list of PCI sets may be identified and/or indicated by a first additional PCI index of the at least one additional PCI index. A second PCI set of the list of PCI sets may be identified and/or indicated by a second additional PCI index of the at least one additional PCI index.

One or more configuration parameters may indicate a list of PCI sets, for example, for inter-cell beam management. The one or more configuration parameters may indicate the list of PCI sets, for example, for inter-cell multi-TRP operation/mode.

A list of PCI sets, for example, may be equal to [{1, PCI 5}, {2, PCI 2}, {3, PCI 4}, {4, PCI 10}, {5, PCI 21}]. The PCI of a cell may be different from PCI 5, PCI 2, PCI 4, PCI 10, and PCI 21. The following conditions may apply:

- {1, PCI 5) may be a first PCI set of a list of PCI sets. '1' may be a first additional PCI index of a first PCI set. PCI 5 may be a first PCI indicating, identifying, and/or of a first cell.

- {2, PCI 2) may be a second PCI set of a list of PCI sets. '2' may be a second additional PCI index of a second PCI set. PCI 2 indicating, identifying, and/or of a second PCI indicating, identifying, and/or of a second cell.

- {3, PCI 4) may be a third PCI set of a list of PCI sets. '3' may be a third additional PCI index of a third PCI set. PCI 4 may be a third PCI indicating, identifying, and/or of a third cell.

- {4, PCI 10) may be a fourth PCI set of a list of PCI sets. '4' may be a fourth additional PCI index of a fourth PCI set. PCI 10 may be a fourth PCI indicating, identifying, and/or of a fourth cell.

- {5, PCI 21) may be a fifth PCI set of a list of PCI sets. '5' may be a fifth additional PCI index of the fifth PCI set. PCI 21 may be a fifth PCI indicating, identifying, and/or of a fifth cell.

  ○ At least one additional PCI index may comprise a first additional PCI index (1), a second additional PCI index (2), a third additional PCI index (3), a fourth additional PCI index (4), a fifth additional PCI index (5).

  ○ At least one PCI may comprise PCI 5, PCI 2, PCI 4, PCI 10, and/or PCI 21.

  ○ At least one cell may comprise a first cell, a second cell, a third cell, a fourth cell and/or a fifth cell.

  ○ One or more cells may comprise the at least one cell and the cell.

At least one additional PCI index may comprise a first additional PCI index (1), a second additional PCI index (2), a third additional PCI index (3), a fourth additional PCI index (4), a fifth additional PCI index (5). At least one PCI may comprise PCI 5, PCI 2, PCI 4, PCI 10, and/or PCI 21. At least one cell may comprise a first cell, a second cell, a third cell, a fourth cell and/or a fifth cell. One or more cells may comprise the at least one cell and the cell.

One or more configuration parameters may indicate, for one or more TCI states of a plurality of TCI states and/or a second plurality of TCI states, at least one additional PCI index. The one or more configuration parameters may indicate, for each TCI state of the one or more TCI states, a respective additional PCI index (e.g., additionalPCI, AdditionalPCIIndex) of the at least one additional PCI index. The one or more configuration parameters may indicate, for a first TCI state of the one or more TCI states, a first additional PCI index (e.g., 1) of the at least one additional PCI index. The first additional PCI index may indicate (e.g., identify, etc.) a first PCI set of the list of PCI sets. The one or more configuration parameters may indicate, for a second TCI state of the one or more TCI states, a second additional PCI index (e.g., 2) of the at least one additional PCI index. The second additional PCI index may indicate (e.g., identify, etc.) a second PCI set of the list of PCI sets. The one or more configuration parameters may indicate, for a third TCI state of the one or more TCI states, a third additional PCI index (e.g., 3) of the at least one additional PCI index, and so on. The third additional PCI index may indicate (e.g., identify, etc.) a third PCI set of the list of PCI sets.

A TCI state of the one or more TCI states may be associated with an additional PCI index of at least one additional PCI index, for example, based on one or more configuration parameters indicating, for a TCI state, the additional PCI index. The TCI state may comprise the additional PCI index. The additional PCI index may indicate (e.g., identify, etc.) a PCI set of a list of at least one PCI set. The PCI set may comprise and/or indicate a second PCI of the at least one PCI. The second PCI may indicate (e.g., identify, etc.) a second cell of the at least one cell. The TCI state may be associated with the second PCI and/or the second cell, for example, based on the one or more configuration parameters indicating, for the TCI state, the additional PCI index indicating the second PCI and/or the second cell. The second PCI of the second cell may be, for example, different from the PCI of the cell.

One or more configuration parameters 1720 may not indicate, for one or more TCI states of a plurality of TCI states 1770, an additional PCI index of at least one additional PCI index. An additional PCI index may be absent (e.g., not present) in configuration parameters of the one or more TCI states. The one or more configuration parameters 1720 may comprise the configuration parameters of the one or more TCI states. The one or more TCI states of the plurality of TCI states may not be associated with an additional PCI index. The one or more TCI states may not comprise an additional PCI index. Each TCI state of the one or more TCI states may not comprise an additional PCI index. The one or more TCI states may be associated with the cell and/or the PCI of the cell, for example, based on the one or more configuration parameters not indicating, for the one or more TCI states of the plurality of TCI states, an additional PCI index. The one or more TCI states may be associated with the cell and/or the PCI of the cell, for example, based on the one or more configuration parameters not indicating, for each TCI state of the one or more TCI states, an additional PCI index. The one or more TCI states may be associated with the cell and/or the PCI of the cell, for example, based on the one or more configuration parameters not indicating, for each TCI state of the one or more TCI states, an additional PCI index of the at least one additional PCI index.

A wireless device 1705 may receive an activation command 1730 (e.g., MAC-CE, DCI, RRC, downlink control command/message, control command/message, Unified TCI States Activation/Deactivation MAC CE, Activation command 1730 at time $T_1$ as described herein in FIG. 17, etc.). The activation command 1730 may indicate activation of a subset of TCI states 1780a of a plurality of TCI states (e.g., *DLorJoint-TCIStateList*). The activation command may indicate activation of a subset of TCI states 1780 of a second plurality of TCI states (e.g., *ul-TCI-StateLisf*).

A wireless device may map a subset of TCI states 1780a to one or more TCI codepoints 1780b. The activation command may indicate mapping of the subset of TCI states to the one or more TCI codepoints. The wireless device may map respective TCI states of the subset of TCI states 1780a to a respective TCI codepoint of the one or more TCI codepoints 1780b. The one or more TCI codepoints 1780b may indicate and/or comprise the subset of TCI states 1780a. Each TCI codepoint of the one or more TCI codepoints 1780b may indicate and/or be mapped to respective TCI states of the subset of TCI states 1780a. Each TCI codepoint of the one or more TCI codepoints 1780b may indicate, comprise, and/or be mapped to one or more TCI states.

In FIG. 17, for example, a subset of TCI states 1780a may be TCI state 4, TCI state 5, TCI state 8, TCI state 26, and TCI state 61. One or more TCI codepoints 1780b may comprise a first TCI codepoint (e.g., TCI codepoint 000), a second TCI codepoint (e.g., TCI codepoint 001), a third TCI codepoint (e.g., TCI codepoint 110), and a fourth TCI codepoint (e.g., TCI codepoint 111). The first TCI codepoint (e.g., TCI codepoint 000) may comprise and/or indicate the TCI state 4. The second TCI codepoint (e.g., TCI codepoint 001) may comprise and/or indicate the TCI state 5 and the TCI state 8. The third TCI codepoint (e.g., TCI codepoint 110) may comprise and/or indicate the TCI state 26 and TCI state 61. The fourth TCI codepoint (e.g., TCI codepoint 111) may comprise and/or indicate the TCI state 26. The first TCI codepoint (e.g., TCI codepoint 000) and the fourth TCI codepoint (e.g., TCI codepoint 111) indicate a single TCI state. The second TCI codepoint (e.g., TCI codepoint 001) and the third TCI codepoint (e.g., TCI codepoint 110) indicate two TCI states (e.g., two joint TCI states, two uplink TCI states, two downlink TCI states, etc.).

A quantity of the one or more TCI codepoints 1780b may be equal to one. The one or more TCI codepoints 1780b may be a single TCI codepoint. The wireless device may not receive a DCI indicating activation of one or more TCI states among the subset of TCI states, for example, based on the number of the one or more TCI codepoints being equal to one. The single TCI codepoint may indicate, comprise, and/or be mapped to at least two TCI states of the plurality of TCI states 1770. The subset of TCI states 1780a may be the at least two TCI states. The wireless device 1705 may not receive DCI 1740 indicating activation of one or more TCI states among the subset of TCI states 1780a, for example, based on the activation command indicating activation of the at least two TCI states. The at least two TCI states may comprise a first TCI state and a second TCI state.

The single TCI codepoint may indicate/comprise (and/or may be mapped to) a first TCI state of the plurality of TCI states. The first TCI state may be a single TCI state. The subset of TCI states may be the first TCI state. The wireless device may not receive a DCI indicating activation of one or more TCI states among the subset of TCI states, for example, based on the activation command indicating activation of the first TCI state.

A quantity of one or more TCI codepoints 1780b may be greater than one. A wireless device 1705 may receive DCI 1740 (e.g., DCI 1 1740 at time $T_2$ as described herein in FIG. 17). The DCI 1740 may comprise a TCI field 1745. The TCI field 1745 may indicate a TCI codepoint of the one or more TCI codepoints 1780b. A value of the TCI field 1745 (e.g., TCI field = 110 as described herein in FIG. 17) may indicate and/or be equal to the TCI codepoint.

A TCI codepoint (e.g., TCI codepoint 110 in FIG. 17) may comprise, indicate, and/or be mapped to at least two TCI states (e.g., TCI state 26 and TCI state 61 in FIG. 17). The subset of TCI states 1780a may comprise the at least two TCI states of the TCI codepoint. The DCI 1740 may indicate activation of the at least two TCI states. The at least two TCI states may comprise a first TCI state (e.g., TCI state 26 in FIG. 17) and a second TCI state (e.g., TCI state 61 in FIG. 17).

The TCI codepoint (e.g., TCI codepoint 111 in FIG. 17) may comprise/indicate, and/or may be mapped to, a first TCI state (e.g., TCI state 26 in FIG. 17). The subset of TCI states may comprise the first TCI state of and/or in the TCI codepoint. The DCI may indicate activation of the first TCI state.

The first TCI state may be (and/or may be interchangeably used with) a first unified TCI state. The first TCI state may be (and/or may be interchangeably used with) a first joint TCI state. The first TCI state may be (and/or may be interchangeably used with) a first downlink TCI state. The first TCI state may be (and/or may be interchangeably used with) a first joint/downlink TCI state. The first TCI state may be (and/or may be interchangeably used with) a first uplink TCI state.

The second TCI state may be (and/or may be interchangeably used with) a second unified TCI state. The second TCI state may be (and/or may be interchangeably used with) a second joint TCI state. The second TCI state may be (and/or may be interchangeably used with) a second downlink TCI state. The second TCI state may be (and/or may be interchangeably used with) a second joint/downlink TCI state. The second TCI state may be (and/or may be interchangeably used with) a second uplink TCI state.

FIG. 18 shows an example of TCI state activation. A wireless device 1805 may receive a first activation command 1820 (e.g., MAC-CE, DCI, downlink control command/message, RRC, control command/message, Unified TCI States Activation/Deactivation MAC CE, Activation command 1 1820 at time T1 as described herein in FIG. 18, etc.). The first activation command 1820 may activate, select, indicate, update and/or indicate activation of a first subset of TCI states 1870a of the plurality of TCI states 1770 (e.g., *DLorJoint-TCIStateList).* The first activation command 1820 may activate, select, indicate, update and/or indicate activation of a first subset of TCI states 1870a of the second plurality of TCI states 1770 (e.g., *UL-TCIStateList*).

A first activation command 1820 may comprise a field (e.g., CoresetPoolID) with a first coreset pool index 1825 (e.g., Coreset pool index 0). A value in the field may be equal to the first coreset pool index 1825. The first coreset pool index 1825 may be, for example, equal to zero. The first subset of TCI states 1870a may be associated with the first coreset pool index 1825. The first subset of TCI states 1870a may be associated with the first coreset pool index 1825, for example, based on the first activation command 1820, indicating activation of the first subset of TCI states 1870a, comprising the field with the first coreset pool index 1825. The wireless device may activate the first subset of TCI states 1870a for the first coreset pool index 1825.

A wireless device 1805 may map a first subset of TCI states 1870a to one or more first TCI codepoints 1870b. The first activation command may indicate mapping of the first subset of TCI states to the one or more first TCI codepoints. The wireless device 1805 may map respective TCI states of the first subset of TCI states 1870a to a respective TCI codepoint of the one or more first TCI codepoints 1870b. The one or more first TCI codepoints 1870b may indicate and/or comprise the first subset of TCI states 1870a. Each TCI codepoint of the one or more first TCI codepoints 1870b may comprise, indicate, and/or be mapped to respective TCI states of the first subset of TCI states 1870a. Each TCI codepoint of the one or more first TCI codepoints 1870b may comprise, indicate, and/or be mapped to one or more TCI states. The one or more first TCI codepoints 1870b may be associated with the first coreset pool index 1825.

In FIG. 18, for example, a first subset of TCI states 1870a may comprise TCI state 4, TCI state 5, TCI state 26, and/or TCI state 42. One or more first TCI codepoints 1870b may comprise a first TCI codepoint (e.g., TCI codepoint 000), a second TCI codepoint (e.g., TCI codepoint 001), a third TCI codepoint (e.g., TCI codepoint 110), and a fourth TCI codepoint (e.g., TCI codepoint 111). The first TCI codepoint (e.g., TCI codepoint 000) may comprise and/or indicate the TCI state 4. The second TCI codepoint (e.g., TCI codepoint 001) may comprise and/or indicate the TCI state 5. The third TCI codepoint (e.g., TCI codepoint 110) may comprise and/or indicate the TCI state 26. The fourth TCI codepoint (e.g., TCI codepoint 111) may comprise and/or indicate the TCI state 42. The first TCI codepoint (e.g., TCI codepoint 000), the second TCI codepoint (e.g., TCI codepoint 001), the third TCI codepoint (e.g., TCI codepoint 110) and the fourth TCI codepoint (e.g., TCI codepoint 111) indicate a single TCI state (e.g., a single joint TCI state, a single uplink TCI state, a single downlink TCI state, etc.).

A quantity of one or more first TCI codepoints 1870b may be equal to one. The one or more first TCI codepoints 1870b may be a single TCI codepoint. The single TCI codepoint may indicate a first TCI state of a plurality of TCI states. The first subset of TCI states 1870a may be the first TCI state. The wireless device may not receive DCI indicating activation of one or more TCI states among the first subset of TCI states 1870a, for example, based on the quantity of the one or more first TCI codepoints 1870b being equal to one. The wireless device 1805 may not receive DCI indicating activation of one or more TCI states among the first subset of TCI states 1870a, for example, based on the first activation command 1820 indicating activation of the first TCI state.

A quantity of one or more first TCI codepoints 1870b may be greater than one. A wireless 1805 device may receive a first DCI (e.g., DCI 1 1830 at time T2 in FIG. 18. The wireless device may receive, via a first coreset 1838 (e.g., Coreset 1 in FIG. 18) with the first coreset 1838 pool index 1825 (e.g., Coreset pool index 0), the first DCI 1830. The plurality of coresets may comprise the first coreset 1838. The one or more configuration parameters may indicate, for the first coreset 1838, the first coreset pool index 1825. The one or more configuration parameters may not indicate, for the first coreset 1838, a coreset pool index. The first coreset 1838 may be associated with the first coreset pool index 1825 (e.g., Coreset pool index 0), for example, based on the one or more configuration parameters not indicating, for the first coreset 1838, a coreset pool index. A default value for coreset pool index of the first coreset 1838 may be equal to the first coreset pool index 1825 (e.g., Coreset pool index 0), for example, based on the one or more configuration parameters not indicating, for the first coreset 1838, a coreset pool index.

First DCI 1830 (e.g., DCI 1 as described herein in FIG. 18) may be, for example, DCI format 1_1. The first DCI 1830 may be, for example, DCI format 1_2. The first DCI 1830 may be, for example, DCI format 1_x, if x = 0, 1, 2 ... The first DCI 1830 may be, for example, DCI format 0_x, if x = 0, 1, 2 ....

First DCI 1830 may comprise a first TCI field 1835. The first TCI field 1835 may indicate a first TCI codepoint in the one or more first TCI codepoints 1870b. The first TCI field 1835 may indicate the first TCI codepoint of the one or more first TCI codepoints 1870b associated with the first coreset pool index 1825, for example, based on the receiving the first DCI 1830 via the first coreset 1838 with the first coreset pool index 1825. A value of the first TCI field 1835 (e.g., 110 in FIG. 18) may be, for example, equal to the first TCI codepoint. The value of the first TCI field 1835 may be, for example, indicate the first TCI codepoint. The first TCI codepoint (e.g., 110) may indicate, comprise, and/or be mapped to a first TCI state (e.g., TCI state 26 in FIG. 18). The first subset of TCI states 1870a may comprise the first TCI state. The first DCI 1830 may activate and/or indicate activation of the first TCI state. The first DCI 1830 may indicate activation of the first TCI state. The first TCI field 1835 in the first DCI 1830 may indicate the first TCI state in the first subset of TCI states 1870a, for example, based on the receiving the first DCI 1830 via the first coreset 1838 with the first coreset pool index 1825. The first TCI field 1835 in the first DCI 1830 may indicate the first TCI state in the first subset of TCI states 1870a, for example, based on the first activation command 1820, indicating activation of the first subset of TCI states 1870a, comprising the field with the first coreset pool index 1825 that may be the same as that of the first coreset 1838.

The first TCI state may be (or may be interchangeably used with) a first unified TCI state. The first TCI state may be (or may be interchangeably used with) a first joint TCI state. The first TCI state may be (or may be interchangeably used with) a first downlink TCI state. The first TCI state may be (or may be interchangeably used with) a first joint/downlink TCI state. The first TCI state may be (or may be interchangeably used with) a first uplink TCI state.

A first TCI state may be associated with and/or activated for a first coreset pool index 1825. The first TCI state may be associated with downlink and/or uplink receptions and/or transmissions associated with the first coreset pool index 1825. The first TCI state may be associated with the downlink and/or uplink receptions and/or transmissions associated with the first coreset pool index 1825, for example, based on receiving, via the first coreset 1838 with the first coreset pool index 1825, the first DCI 1830 indicating activation of the first TCI state.

The wireless device may apply the first TCI state to downlink receptions (e.g., PDSCH receptions, transport block, PDCCH receptions, CSI-RS, DM-RS, etc.) associated with the first coreset pool index 1825. The one or more configuration parameters may indicate, for a coreset of the plurality of coresets, the first coreset pool index 1825. The wireless device may monitor downlink control channels in the coreset based on the first TCI state, for example, based on (e.g., in response to) the one or more configuration parameters indicating, for the coreset, the first coreset pool index 1825. The wireless device may receive, via a coreset with the first coreset pool index 1825, DCI scheduling a downlink signal (e.g., PDSCH transmission, transport block, DM-RS, CSI-RS, aperiodic CSI-RS). The plurality of coresets may comprise the coreset. The downlink signal may be associated with the first coreset pool index 1825, for example, based on the receiving the DCI via the coreset with the first coreset pool index 1825. The wireless device may receive the downlink signal based on the first TCI state, for example, based on (e.g., in response to) the downlink signal being associated with the first coreset pool index 1825. The wireless device may receive a downlink signal (e.g., PDSCH transmission, transport block, DM-RS, CSI-RS, aperiodic CSI-RS) based on the first TCI state, for example, based on (e.g., in response to) the one or more configuration parameters indicating, for the downlink signal and/or a resource set comprising the downlink signal, the first coreset pool index 1825.

A wireless device may apply the first TCI state to uplink transmissions (e.g., PUSCH transmissions, transport block, PUCCH transmissions, SRS, etc.) associated with the first coreset pool index 1825.

One or more configuration parameters may indicate, for an uplink resource and/or an uplink resource set and/or group comprising an uplink resource, a first coreset pool index 1825. A wireless device 1805 may send (e.g., transmit), via the uplink resource, an uplink signal (e.g., UCI, HARQ-ACK, SR, CSI report, SRS) based on a first TCI state, for example, based on (e.g., in response to) the one or more configuration parameters indicating, for the uplink resource and/or the uplink resource set and/or group comprising the uplink resource, the first coreset pool index 1825. The uplink BWP (e.g., active uplink BWP) of a cell may comprise the uplink resource. The uplink resource may be, for example, a PUCCH resource. The uplink signal may be a UCI (e.g., UCI, HARQ-ACK, SR, CSI report). The uplink resource may be, for example, an SRS resource. The uplink signal may be an SRS. The uplink resource may be, for example, a PUSCH resource. The uplink signal may be a PUSCH transmission (e.g., transport block) of a configured uplink grant (e.g., Type 1 configured uplink grant). Transmission of the uplink signal via the uplink resource may be associated with the first coreset pool index 1825, for example, based on the one or more configuration parameters indicating, for the uplink resource and/or the uplink resource set and/or group comprising the uplink resource, the first coreset pool index 1825.

A wireless device 1805 may receive, via a coreset 1838 with a first coreset pool index 1825, DCI 1830 triggering and/or scheduling transmission of an uplink signal (e.g., PUSCH transmission, transport block, SRS, HARQ-ACK). A plurality of coresets may comprise the coreset. The uplink signal may be associated with the first coreset pool index 1825, for example, based on the receiving the DCI 1830 via the coreset 1838 with the first coreset pool index 1825. The wireless device may send (e.g., transmit) the uplink signal based on the first TCI state, for example, based on (e.g., in response to) the uplink signal being associated with the first coreset pool index 1825.

A wireless device 1805 may receive a second activation command 1840 (e.g., MAC-CE, DCI, downlink control command/message, RRC, control command/message, Unified TCI States Activation/Deactivation MAC CE, Activation command 2 at time $T_3$ as described herein in FIG. 18 etc.). The second activation command 1840 may activate, select, indicate, update and/or indicate activation of a second subset of TCI states 1880a of the plurality of TCI states (e.g., *DLorJoint-TCIStateList*). The second activation command 1840 may activate, select, indicate, update and/or indicate activation of a second subset of TCI states 1880a of the second plurality of TCI states (e.g., *UL-TCIStateList*).

A second activation command 1840 may comprise a field (e.g., CoresetPoolID) with a second coreset pool index 1845 (e.g., Coreset pool index 1 in FIG. 18). A value in the field may be equal to the second coreset pool index 1845. The second coreset pool index 1845 may be, for example, equal to one. A second subset of TCI states 1880a may be associated with the second coreset pool index 1845. The second subset of TCI states 1880a may be associated with the second coreset pool index 1845, for example, based on the second activation command 1840, indicating activation of the second subset of TCI states 1880a, comprising the field with the second coreset pool index 1845. The wireless device may activate the second subset of TCI states 1880a for the second coreset pool index 1845.

A wireless device 1805 may map the second subset of TCI states 1880a to one or more second TCI codepoints 1880b. The second activation command may indicate mapping of the second subset of TCI states to the one or more second TCI codepoints. The wireless device 1805 may map respective TCI states of the second subset of TCI states 1880a to a respective TCI codepoint of the one or more second TCI codepoints 1880b. The one or more second TCI codepoints 1880b may indicate, comprise, and/or be mapped to the second subset of TCI states 1880a. Each TCI codepoint of the one or more second TCI codepoints 1880b may comprise, indicate, and/or be mapped to respective TCI states of the second subset of TCI states 1880a. Each TCI codepoint of the one or more second TCI codepoints 1880b may comprise, indicate, and/or be mapped to one or more TCI states. The one or more second TCI codepoints 1880b may be associated with the second coreset pool index 1845.

In FIG. 18, for example, a second subset of TCI states 1880a may be TCI state 8, TCI state 61, and TCI state 21. One or more second TCI codepoints 1880b may comprise a first TCI codepoint (e.g., TCI codepoint 000), a second TCI codepoint (e.g., TCI codepoint 001), and a third TCI codepoint (e.g., TCI codepoint 110). The first TCI codepoint (e.g., TCI codepoint 000) may comprise and/or indicate the TCI state 8. The second TCI codepoint (e.g., TCI codepoint 001) may comprise and/or indicate the TCI state 61. The third TCI codepoint (e.g., TCI codepoint 110) may comprise and/or indicate the TCI state 21. The first TCI codepoint (e.g., TCI codepoint 000), the second TCI codepoint (e.g., TCI codepoint 001), and the third TCI codepoint (e.g., TCI codepoint 110) may comprise and/or indicate a single TCI state (e.g., a single joint TCI state, a single uplink TCI state, a single downlink TCI state, etc.).

A quantity of one or more second TCI codepoints 1880b may be equal to one. One or more second TCI codepoints 1880b may be a single TCI codepoint. The single TCI codepoint may indicate a second TCI state of a plurality of TCI states. The second subset of TCI states 1880a may be the second TCI state. A wireless device 1805 may not receive DCI 1850 indicating activation of one or more TCI states among the second subset of TCI states 1880a, for example, based on the quantity of the one or more second TCI codepoints 1880b being equal to one. The wireless device 1805 may not receive DCI 1850 indicating activation of one or more TCI states among the second subset of TCI states 1880a, for example, based on the second activation command 1840 indicating activation of the second TCI state.

A quantity of one or more second TCI codepoints 1880b may be greater than one. A wireless device 1805 may receive, via a second coreset 1858 (e.g., Coreset 2 in FIG. 18) with a second coreset 1858 pool index 1845 (e.g., Coreset pool index 1), second DCI 1850 (e.g., DCI 2 at time $T_4$ in FIG. 18). One or more configuration parameters may indicate, for the second coreset 1858, the second coreset pool index 1845. The plurality of coresets may comprise the second coreset 1858.

Second DCI 1850 may be, for example, DCI format 1_1. The second DCI 1850 may be, for example, DCI format 1_2. The second DCI 1850 may be, for example, DCI format 1_x, if x = 0, 1, 2 ... The second DCI 1850 may be, for example, DCI format 0_x, if x = 0, 1, 2 ....

The second DCI 1850 may comprise a second TCI field 1855. The second TCI field 1855 may indicate a second TCI codepoint in the one or more second TCI codepoints 1880b. The second TCI field 1855 may indicate the second TCI codepoint of the one or more second TCI codepoints 1880b associated with the second coreset pool index 1845, for example, based on the receiving the second DCI 1850 via the second coreset 1858 with the second coreset pool index 1845. A value of the second TCI field 1855 (e.g., 001 in FIG. 18) may be, for example, equal to the second TCI codepoint. The value of the second TCI field 1855 may be, for example, indicate the second TCI codepoint. The second TCI codepoint (e.g., 001) may indicate, comprise, and/or be mapped to a second TCI state (e.g., TCI state 61 in FIG. 18). The second subset of TCI states 1880a may comprise the second TCI state. The second DCI 1850 may activate and/or indicate activation of the second TCI state. The second DCI 1850 may indicate activation of the second TCI state. The second TCI field 1855 in the second DCI 1850 may indicate the second TCI state in the second subset of TCI states 1880a, for example, based on the receiving the second DCI 1850 via the second coreset 1858 with the second coreset pool index 1845. The second TCI field 1855 in the second DCI 1850 may indicate the second TCI state in the second subset of TCI states 1880a, for example, based on the second activation command 1840, that indicates activation of the second subset of TCI states 1880a, comprising the field with the second coreset pool index 1845 that may be the same as that of the second coreset 1858.

The second TCI state may be (and/or may be interchangeably used with) a second unified TCI state. The second TCI state may be (and/or may be interchangeably used with) a second joint TCI state. The second TCI state may be (and/or may be interchangeably used with) a second downlink TCI state. The second TCI state may be (and/or may be interchangeably used with) a second joint/downlink TCI state. The second TCI state may be (and/or may be interchangeably used with) a second uplink TCI state.

A second TCI state may be associated with and/or activated for a second coreset pool index 1845. The second TCI state may be associated with downlink and/or uplink receptions and/or transmissions associated with the second coreset pool index 1845. The second TCI state may be associated with the downlink and/or uplink receptions and/or transmissions associated with the second coreset pool index 1845, for example, based on the receiving, via the second coreset 1858 with the second coreset pool index 1845, second DCI 1850 indicating activation of the second TCI state.

A wireless device 1805 may apply a second TCI state to downlink receptions (e.g., PDSCH receptions, transport block, PDCCH receptions, CSI-RS, DM-RS, etc.) associated with a second coreset pool index 1845. One or more configuration parameters may indicate, for a coreset of a plurality of coresets, the second coreset pool index 1845. The wireless device 1805 may monitor downlink control channels in the coreset based on the second TCI state, for example, based on (e.g., in response to) the one or more configuration parameters indicating, for the coreset, the second coreset pool index 1845. The wireless device 1805 may receive, via a coreset with the second coreset pool index 1845, DCI scheduling a downlink signal (e.g., PDSCH transmission, transport block, DM-RS, CSI-RS, aperiodic CSI-RS). The plurality of coresets may comprise the coreset. The downlink signal may be associated with the second coreset pool index 1845, for example, based on the receiving the DCI via the coreset with the second coreset pool index 1845. The wireless device 1805 may receive the downlink signal based on the second TCI state, for example, based on (e.g., in response to) the downlink signal being associated with the second coreset pool index 1845. The wireless device 1805 may receive a downlink signal (e.g., PDSCH transmission, transport block, DM-RS, CSI-RS, aperiodic CSI-RS) based on the second TCI state, for example, based on (e.g., in response to) the one or more configuration parameters indicating, for the downlink signal and/or a resource set comprising the downlink signal, the second coreset pool index 1845.

A wireless device 1805 may apply a second TCI state to uplink transmissions (e.g., PUSCH transmissions, transport block, PUCCH transmissions, SRS, etc.) associated with a second coreset pool index 1845. One or more configuration parameters may indicate, for an uplink resource and/or an uplink resource set and/or group comprising an uplink resource, the second coreset pool index 1845.

The wireless device 1805 may send (e.g., transmit), via the uplink resource, an uplink signal (e.g., UCI, HARQ-ACK, SR, CSI report, SRS) based on the second TCI state, for example, based on (e.g., in response to) the one or more configuration parameters indicating, for the uplink resource and/or the uplink resource set and/or group comprising the uplink resource, the second coreset pool index 1845. An uplink BWP (e.g., an active uplink BWP) of a cell may comprise the uplink resource. The uplink resource may be, for example, a PUCCH resource. The uplink signal may be a UCI (e.g., UCI, HARQ-ACK, SR, CSI report). The uplink resource may be, for example, an SRS resource. The uplink signal may be an SRS. The uplink resource may be, for example, a PUSCH resource. The uplink signal may be a PUSCH transmission (e.g., transport block) of a configured uplink grant (e.g., Type 1 configured uplink grant). Sending (e.g., transmitting) the uplink signal via the uplink resource may be associated with the second coreset pool index 1845, for example, based on the one or more configuration parameters indicating, for the uplink resource and/or the uplink resource set and/or group comprising the uplink resource, the second coreset pool index 1845.

A wireless device 1805 may receive, via a coreset with the second coreset pool index 1845, DCI triggering and/or scheduling transmission of an uplink signal (e.g., PUSCH transmission, transport block, SRS, HARQ-ACK). A plurality of coresets may comprise the coreset. The uplink signal may be associated with the second coreset pool index 1845, for example, based on receiving the DCI via the coreset with the second coreset pool index 1845. The wireless device may send (e.g., transmit) the uplink signal based on the second TCI state, for example, based on (e.g., in response to) the uplink signal being associated with the second coreset pool index 1845.

A first TCI state may comprise and/or indicate a first reference signal (e.g., CSI-RS, SSB/PBCH block, DM-RS, SRS, etc.). The first TCI state may comprise and/or indicate a first quasi co-location type (e.g., QCL TypeA, QCL TypeB, QCL TypeC, QCL TypeD).

A first TCI state may be associated with a PCI of a cell. The first TCI state may not comprise an additional PCI index of at least one additional PCI index. An additional PCI index may be absent in configuration parameters of the first TCI state. One or more configuration parameters may comprise a configuration parameters of the first TCI state. The first TCI state may be associated with the PCI of the cell, for example, based on the first TCI state not comprising an additional PCI index of the at least one additional PCI index. A first reference signal may be quasi co-located with a first SS/PBCH block. The first reference signal may be a first SS/PBCH block. The first reference signal may be quasi co-located with a first CSI-RS that may be quasi co-located with a first SS/PBCH block. The first SS/PBCH block may be associated with the cell. The first SS/PBCH block may be associated with the PCI of the cell. The one or more configuration parameters may indicate, for the cell, the first SS/PBCH block.

A first TCI state may be associated with a second PCI of a second cell. At least one cell of set of cells may comprise the second cell. At least one PCI in and/or indicated by the list of PCI sets may comprise the second PCI. The second PCI may indicate (e.g., identify, etc.) the second cell. The first TCI state may comprise an additional PCI index of the at least one additional PCI index. The one or more configuration parameters may indicate, for the first TCI state, an additional PCI index. The additional PCI index may indicate a PCI set of the list of PCI sets. The PCI set may comprise and/or indicate the second PCI of the second cell. The first TCI state may be associated with the second PCI of the second cell, for example, based on the first TCI state comprising the additional PCI index indicating the second PCI of the second cell. The first TCI state may be associated with the second PCI of the second cell, for example, based on the one or more configuration parameters indicating, for the first TCI state, the additional PCI index that indicates the second PCI of the second cell. The first reference signal may be quasi co-located with a first SS/PBCH block. A first reference signal may be a first SS/PBCH block. The first reference signal may be quasi co-located with a first CSI-RS that may be quasi co-located with a first SS/PBCH block. The first SS/PBCH block may be associated with the second cell. The first SS/PBCH block may be associated with the second PCI of the second cell. The one or more configuration parameters may indicate, for the second cell, the first SS/PBCH block.

A second TCI state may comprise and/or indicate a second reference signal (e.g., CSI-RS, SSB/PBCH block, DM-RS, SRS, etc.). The second TCI state may comprise and/or indicate a second quasi co-location type (e.g., QCL TypeA, QCL TypeB, QCL TypeC, QCL TypeD). The second TCI state may be associated with a PCI of the cell. The second TCI state may not comprise an additional PCI index of the at least one additional PCI index. An additional PCI index may be absent in configuration parameters of the second TCI state. One or more configuration parameters may comprise a configuration parameters of the second TCI state. The second TCI state may be associated with the PCI of the cell, for example, based on the second TCI state not comprising an additional PCI index of the at least one additional PCI index. The second reference signal may be quasi co-located with a second SS/PBCH block. The second reference signal may be a second SS/PBCH block. The second reference signal may be quasi co-located with a second CSI-RS that may be quasi co-located with a second SS/PBCH block. The second SS/PBCH block may be associated with the cell. The second SS/PBCH block may be associated with the PCI of the cell. The one or more configuration parameters may indicate, for the cell, the second SS/PBCH block.

A second TCI state may be associated with a second PCI of a second cell. At least one cell of a set of cells may comprise the second cell. At least one PCI in and/or indicated by a list of PCI sets may comprise the second PCI. The second PCI may indicate (e.g., identify, etc.) the second cell. The second TCI state may comprise an additional PCI index of at least one additional PCI index. One or more configuration parameters may indicate, for the second TCI state, the additional PCI index. The additional PCI index may indicate a PCI set of the list of PCI sets. The PCI set may comprise and/or indicate the second PCI of the second cell. The second TCI state may be associated with the second PCI of the second cell, for example, based on the second TCI state comprising the additional PCI index indicating the second PCI of the second cell. The second TCI state may be associated with the second PCI of the second cell, for example, based on the one or more configuration parameters indicating, for the second TCI state, the additional PCI index that may indicate the second PCI of the second cell. A second reference signal may be quasi co-located with a second SS/PBCH block. The second reference signal may be a second SS/PBCH block. The second reference signal may be quasi co-located with a second CSI-RS that may be quasi co-located with a second SS/PBCH block. The second SS/PBCH block may be associated with the second cell. The second SS/PBCH block may be associated with the second PCI of the second cell. The one or more configuration parameters may indicate, for the second cell, the second SS/PBCH block.

A second cell identified and/or indicated by a second PCI may be a non-serving cell. The second cell identified and/or indicated by the second PCI may be a neighboring cell. The second cell identified and/or indicated by the second PCI may be a candidate and/or assisting cell.

One or more configuration parameters may indicate, for a first TCI state, a first TCI state index (e.g., tci-StateId). The one or more configuration parameters may indicate, for the second TCI state, a second TCI state index. The first TCI state index may be lower (e.g., less, smaller) than the second TCI state index. The plurality of TCI state indexes may comprise the first TCI state index and the second TCI state index.

A activation command indicating activation of a subset of TCI states may comprise a plurality of fields. A first field of the plurality of fields may indicate a first TCI state. The first field may comprise the first TCI state index identifying and/or indicating the first TCI state. The first field may be located in a first octet of the activation command. A second field of the plurality of fields may indicate the second TCI state. The second field may comprise the second TCI state index identifying and/or indicating the second TCI state. The second field may be located in a second octet of the activation command. The first octet may be lower (e.g., less) than the second octet. The first octet may be Octet 5, and the second octet may be Octet 6. The first octet may be Octet 1, and the second octet may be Octet 2. The first octet may be Octet 9, and the second octet may be Octet 10. A base station may order the first TCI state index and the second TCI state index based on an ordinal position in the activation command. Octet n of the activation command may comprise the first TCI state index identifying (e.g., indicating) the first TCI state, and Octet m of the activation command may comprise the second TCI state index identifying (e.g., indicating) the second TCI state, for example, if n < m.

A activation command may indicate, map, and/or activate a set, list, and/or vector of at least two TCI states to a TCI codepoint. The activation command may indicate a mapping, an association, and/or an activation of the set, list, and/or vector of the at least two TCI states to the TCI codepoint. The at least two TCI states may comprise a first TCI state and a second TCI state. The first TCI state may occur first in the set, list, and/or vector of the at least two TCI states. The first TCI state may be a first (e.g., starting, earliest, initial etc.) TCI state in the set, list, and/or vector of the at least two TCI states. The second TCI state may occur second in the set, list, and/or vector of the at least two TCI states. The second TCI state may be a last (e.g., latest, ending, etc.) TCI state in the set, list, and/or vector of the at least two TCI states. The first TCI state may be TCI state 5 and the second TCI state may be TCI state 8, for example, if the set, list, and/or vector of the at least two TCI states = [TCI state 5, TCI state 8]. The first TCI state may be TCI state 26 and the second TCI state may be TCI state 61, for example, if the set, list, and/or vector of the at least two TCI states = [TCI state 26, TCI state 61].

A wireless device may apply a first TCI state to one or more first uplink channels and/or resources of the cell. Applying the first TCI state to the one or more first uplink channels/resources may comprise sending (e.g., transmitting), via the one or more first uplink channels/resources, uplink signals based on the first TCI state. The wireless device may send (e.g., transmit), via the one or more first uplink channels and/or resources, uplink signals based on the first TCI state. The wireless device may send (e.g., transmit), via each uplink channel and/or resource of the one or more first uplink channels and/or resources, a respective uplink signal of the uplink signals based on the first TCI state.

A wireless device may send (e.g., transmit), via one or more first uplink channels and/or resources, uplink signals with transmission powers determined based on a first TCI state. The wireless device may send (e.g., transmit), via each uplink channel and/or resource of the one or more first uplink channels and/or resources, an uplink signal with a respective transmission power determined based on the first TCI state. The wireless device may send (e.g., transmit), via a first uplink channel and/or resource of the one or more first uplink channels and/or resources, a first uplink signal with a first transmission power determined based on the first TCI state. The wireless device may determine the first transmission power based on one or more first power control parameters (e.g., target received power, pathloss compensation factor, closed-loop index, pathloss reference signal, etc.) associated with, mapped to, indicated by, and/or included in the first TCI state. The wireless device may send (e.g., transmit), via a second uplink channel and/or resource of the one or more first uplink channels and/or resources, a second uplink signal with a second transmission power determined based on the first TCI state. The wireless device may determine the second transmission power based on one or more first power control parameters (e.g., target received power, pathloss compensation factor, closed-loop index, pathloss reference signal) associated with, mapped to, indicated by, and/or included in the first TCI state.

A wireless device may send (e.g., transmit), via one or more first uplink channels and/or resources, uplink signals with a first spatial domain transmission filter and/or beam determined based on a first TCI state. The wireless device may send (e.g., transmit), via each uplink channel and/or resource of the one or more first uplink channels and/or resources, a respective uplink signal with the first spatial domain transmission filter and/or beam determined based on the first TCI state. The wireless device may send (e.g., transmit), via a first uplink channel and/or resource of the one or more first uplink channels and/or resources, a first uplink signal with the first spatial domain transmission filter and/or beam determined based on the first TCI state. At least one DM-RS antenna port of the first uplink signal may be quasi co-located with the first reference signal indicated by the first TCI state. The wireless device may send (e.g., transmit), via a second uplink channel and/or resource of the one or more first uplink channels and/or resources, a second uplink signal with the first spatial domain transmission filter and/or beam determined based on the first TCI state. At least one DM-RS antenna port of the second uplink signal may be quasi co-located with the first reference signal indicated by the first TCI state

One or more first uplink channels and/or resources may comprise PUSCH. The one or more first uplink channels and/or resources may comprise one or more first PUSCH resources. The one or more first uplink channels and/or resources may comprise one or more first PUSCH transmissions.

A wireless device 1805 may receive, via a first coreset 1838, first DCI 1830 scheduling a first PUSCH transmission. A plurality of coresets may comprise the first coreset 1838. The first DCI 1830 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. The wireless device may send (e.g., transmit), based on the first TCI state, the first PUSCH transmission based on (e.g., in response to) the first DCI 1830 comprising a field with a first value indicating the first TCI state. One or more first uplink channels and/or resources may comprise PUSCH transmissions scheduled by DCIs comprising the field with the first value. Each DCI of the DCIs may schedule one or more PUSCH transmissions of the PUSCH transmissions.

A first coreset 1838 may be associated with a first coreset pool index 1825 (e.g., CoresetPoolIndex = 0). One or more configuration parameters may indicate, for the first coreset 1838, the first coreset pool index 1825. The one or more configuration parameters may not indicate, for the first coreset 1838, a coreset pool index. A wireless device may send (e.g., transmit), based on a first TCI state, a first PUSCH transmission, for example, based on (e.g., in response to) receiving first DCI 1830 scheduling the first PUSCH transmission via the first coreset 1838 with the first coreset pool index 1825. One or more first uplink channels and/or resources may comprise the first PUSCH transmission. The one or more first uplink channels and/or resources may comprise PUSCH transmissions scheduled by DCIs received via one or more first coresets with the first coreset pool index 1825. The plurality of coresets may comprise the one or more first coresets. The wireless device 1805 may send (e.g., transmit) the first PUSCH transmission with a first transmission power determined based on the first TCI state. The wireless device 1805 may send (e.g., transmit) the first PUSCH transmission with a first spatial domain transmission filter/beam determined based on the first TCI state.

One or more configuration parameters may indicate, for a configured uplink grant, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. A wireless device may send (e.g., transmit), based on the first TCI state, PUSCH transmissions of a configured uplink grant, for example, based on (e.g., in response to) the one or more configuration parameters indicating, for the configured uplink grant, the field with the first value that indicates the first TCI state. The configured uplink grant may be, for example, a Type 1 configured uplink grant. The one or more first uplink channels and/or resources may comprise the PUSCH transmissions of the configured uplink grant.

The wireless device 1805 may send (e.g., transmit) the PUSCH transmissions of the configured uplink grant

EP 4 443 801 A1

with a first transmission power determined based on the first TCI state. The wireless device 1805 may send (e.g., transmit) the PUSCH transmissions of the configured uplink grant with a first spatial domain transmission filter/beam determined based on the first TCI state.

One or more first uplink channels and/or resources may comprise PUCCH. The one or more first uplink channels and/or resources may comprise one or more first PUCCH resources. The one or more first uplink channels and/or resources may comprise one or more first PUCCH resource sets and/or groups. The one or more first uplink channels and/or resources may comprise one or more first PUCCH transmissions.

One or more configuration parameters may indicate, for a first PUCCH resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. A wireless device may send (e.g., transmit), based on the first TCI state, an uplink signal (e.g., SR, HARQ-ACK, CSI report, uplink control information, PUCCH transmission) via a first PUCCH resource, for example, based on (e.g., in response to) the one or more configuration parameters indicating, for the first PUCCH resource, a field with a first value that indicates the first TCI state. The one or more first uplink channels and/or resources may comprise PUCCH transmissions via the first PUCCH resource.

The wireless device may send (e.g., transmit), via the first PUCCH resource, the uplink signal with a first transmission power determined based on the first TCI state. The wireless device may send (e.g., transmit), via the first PUCCH resource, the uplink signal with a first spatial domain transmission filter/beam determined based on the first TCI state.

One or more configuration parameters may indicate, for a first PUCCH resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating the first TCI state. The wireless device may send (e.g., transmit), based on the first TCI state, an uplink signal (e.g., SR, HARQ-ACK, CSI report, uplink control information) via a PUCCH resource in the first PUCCH resource set and/or group, for example, based on (e.g., in response to) the one or more configuration parameters indicating, for the first PUCCH resource set and/or group, the field with the first value that indicates the first TCI state. The wireless device may send (e.g., transmit), based on the first TCI state, a respective uplink signal (e.g., SR, HARQ-ACK, CSI report, uplink control information) via each PUCCH resource in the first PUCCH resource set and/or group, for example, based on (e.g., in response to) the one or more configuration parameters indicating, for the first PUCCH resource set and/or group, the field with the first value that indicates the first TCI state. The one or more first uplink channels and/or resources may comprise PUCCH transmissions via each PUCCH resource in the first PUCCH resource set and/or group.

The wireless device may send (e.g., transmit), via the PUCCH resource, the uplink signal with a first transmission power determined based on the first TCI state. The wireless device may send (e.g., transmit), via the PUCCH resource, the uplink signal with a first spatial domain transmission filter/beam determined based on the first TCI state.

A wireless device may receive, via a first coreset 1838, first DCI 1830 triggering and/or scheduling transmission of a first PUCCH transmission (e.g., HARQ-ACK feedback transmission). The first DCI 1830 may, for example, schedule a PDSCH reception. The first DCI 1830 may, for example, indicate SCell dormancy. The first DCI 1830 may, for example, indicate SPS PDSCH release. The first DCI 1830 may, for example, indicate activation of a unified TCI state. The plurality of coresets may comprise the first coreset 1838. The first DCI 1830 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating the first TCI state. The wireless device may send (e.g., transmit), based on the first TCI state, the first PUCCH transmission, for example, based on (e.g., in response to) the first DCI 1830 comprising a field with a first value indicating the first TCI state. The one or more first uplink channels and/or resources may comprise PUCCH transmissions triggered and/or scheduled by DCIs comprising the field with the first value.

A first coreset 1838 may be associated with a first coreset pool index 1825 (e.g., CoresetPoolIndex = 0). One or more configuration parameters may indicate, for the first coreset 1838, the first coreset pool index 1825. The one or more configuration parameters may not indicate, for the first coreset 1838, a coreset pool index. The wireless device may send (e.g., transmit), based on the first TCI state, a first PUCCH transmission, for example, based on (e.g., in response to) receiving first DCI 1830 triggering and/or scheduling the first PUCCH transmission via the first coreset 1838 with the first coreset pool index 1825. The one or more first uplink channels and/or resources may comprise PUCCH transmissions triggered and/or scheduled by DCIs received via one or more first coresets with the first coreset pool index 1825. A plurality of coresets may comprise one or more first coresets.

The wireless device 1805 may send (e.g., transmit) the first PUCCH transmission with a first transmission power determined based on the first TCI state. The wireless device 1805 may send (e.g., transmit) the first PUCCH transmission with a first spatial domain transmission filter/beam determined based on the first TCI state.

One or more first uplink channels and/or resources may comprise SRS. The one or more first uplink channels and/or resources may comprise one or more first SRS resources. The one or more first uplink channels and/or resources may comprise one or more first SRS resource sets and/or groups. The one or more first uplink channels and/or resources may comprise one or more first SRS transmissions.

One or more configuration parameters may indicate, for a first SRS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0) indicating a first TCI state. A wireless device may send (e.g., transmit), based on the first TCI state, an SRS via the first SRS resource, for example, based on (e.g., in response to) the one or more configuration parameters indicating, for the first SRS resource, a field with a first value that may indicate the first TCI state. One or more first uplink channels and/or resources may comprise SRS transmissions via the first SRS resource.

The wireless device 1805 may send (e.g., transmit), via the first SRS resource, the SRS with a first transmission power determined based on the first TCI state. The wireless device 1805 may send (e.g., transmit), via the first SRS resource, the SRS with a first spatial domain transmission filter/beam determined based on the first TCI state.

One or more configuration parameters may indicate, for a first SRS resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. A wireless device may send (e.g., transmit), based on the first TCI state, an SRS via an SRS resource in the first SRS resource set and/or group, for example, based on (e.g., in response to) the one or more configuration parameters indicating, for the first SRS resource set and/or group, a field with a first value that may indicate the first TCI state. The wireless device may send (e.g., transmit), based on the first TCI state, a respective SRS via each SRS resource in the first SRS resource set and/or group, for example, based on (e.g., in response to) the one or more configuration parameters indicating, for the first SRS resource set and/or group, the field with the first value that may indicate the first TCI state. One or more first uplink channels and/or resources may comprise SRS transmissions via each SRS resource in the first SRS resource set and/or group.

The wireless device 1805 may send (e.g., transmit), via the SRS resource, the SRS with a first transmission power determined based on the first TCI state. The wireless device 1805 may send (e.g., transmit), via the SRS resource, the SRS with a first spatial domain transmission filter/beam determined based on the first TCI state.

A wireless device 1805 may receive, via a first coreset 1838, first DCI 1830 triggering and/or scheduling transmission of an SRS. The SRS may be, for example, an aperiodic SRS. The SRS may be, for example, a semi-persistent SRS. The plurality of coresets may comprise a first coreset 1838. The first DCI 1830 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a first value (e.g., 0, 00, 10, 11) indicating a first TCI state. The wireless device 1805 may send (e.g., transmit), based on the first TCI state, the SRS, for example, based on (e.g., in response to) the first DCI 1830 comprising the field with the first value indicating the first TCI state. One or more first uplink channels and/or resources may comprise SRS transmissions triggered and/or scheduled by DCIs comprising the field with the first value.

A first coreset 1838 may be associated with a first coreset pool index 1825 (e.g., CoresetPoolIndex = 0). One or more configuration parameters may indicate, for the first coreset 1838, the first coreset pool index 1825. The one or more configuration parameters may not indicate, for the first coreset 1838, a coreset pool index. The wireless device may send (e.g., transmit), based on the first TCI state, the SRS, for example, based on (e.g., in response to) receiving the first DCI 1830 triggering and/or scheduling the transmission of the SRS via the first coreset 1838 with the first coreset pool index 1825. One or more first uplink channels and/or resources may comprise SRS transmissions triggered and/or scheduled by DCIs received via one or more first coresets with the first coreset pool index 1825. A plurality of coresets may comprise one or more first coresets.

The wireless device 1805 may send (e.g., transmit) the SRS with a first transmission power determined based on the first TCI state. The wireless device 1805 may send (e.g., transmit) the SRS with a first spatial domain transmission filter/beam determined based on the first TCI state.

The wireless device may apply the first TCI state to (e.g., use the first TCI state on) one or more first downlink channels/resources of the cell. Applying the first TCI state to the one or more first downlink channels/resources may comprise receiving, via the one or more first downlink channels/resources, downlink signals based on the first TCI state. The wireless device may receive, via the one or more first downlink channels/resources, downlink signals based on the first TCI state. The wireless device may receive, via each downlink channel/resource of the one or more first downlink channels/resources, a respective downlink signal of the downlink signals based on the first TCI state

The wireless device may receive, via the one or more first downlink channels/resources, the downlink signals with a first spatial domain reception/receiving filter/beam determined based on the first TCI state. The wireless device may receive, via each downlink channel/resource of the one or more first downlink channels/resources, a respective downlink signal with the first spatial domain reception/receiving filter/beam determined based on the first TCI state. For example, the wireless device may receive, via a first downlink channel/resource of the one or more first downlink channels/resources, a first downlink signal with the first spatial domain reception/receiving filter/beam determined based on the first TCI state. At least one DM-RS antenna port of the first downlink signal may be (e.g., quasi) co-located with the first reference signal indicated by the first TCI state. The wireless device may receive, via a second downlink channel/resource of the one or more first downlink channels/resources, a second downlink signal with the first spatial domain reception/receiving filter/beam determined based on the first TCI state. At least one DM-RS antenna port of the second downlink signal may be (e.g., quasi) co-located with the first reference signal indicated by the first TCI state.

The one or more first downlink channels/resources may be/comprise a PDSCH. The one or more first downlink channels/resources may be/comprise one or more first PDSCH resources. The one or more first downlink channels/resources may be/comprise one or more first PDSCH transmissions.

The wireless device may receive, via a first coreset, first DCI scheduling a first PDSCH reception. The plurality of coresets may comprise the first coreset. The first DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive/perform, based on the first TCI state, the first PDSCH reception based on (e.g., in response to) the first DCI comprising the field with the first value indicating the first TCI state. The one or more first downlink channels/resources may be/comprise PDSCH receptions scheduled by DCI messages comprising the field with the first value. Each DCI message of the DCI messages may schedule one or more PDSCH receptions of the PDSCH receptions.

The first coreset may be associated with the first coreset pool index (e.g., CoresetPoolIndex = 0). For example, the one or more configuration parameters may indicate, for the first coreset, the first coreset pool index. For example, the one or more configuration parameters may not indicate, for the first coreset, a coreset pool index. The wireless device may receive/perform, based on the first TCI state, the first PDSCH reception. The wireless device may receive/perform the first PDSCH reception, for example, based on (e.g., in response to) receiving the first DCI scheduling the first PDSCH reception via the first coreset (e.g. ,having the first coreset pool index). The one or more first downlink channels/resources may be/comprise the first PDSCH reception. The one or more first downlink channels/resources may be/comprise PDSCH receptions scheduled by DCI (e.g., DCI messages) received via one or more first coresets with the first coreset pool index. The plurality of coresets may comprise the one or more first coresets.

The wireless device may receive the first PDSCH reception with a first spatial domain reception/receiving filter/beam determined based on the first TCI state. At least one first DM-RS antenna port of the first PDSCH reception may be (e.g., quasi) co-located with the first reference signal indicated by the first TCI state.

The one or more configuration parameters may indicate, for an SPS PDSCH configuration, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive/perform, based on the first TCI state, PDSCH receptions of/for the SPS PDSCH configuration. The wireless device may receive/perform PDSCH receptions of/for the SPS PDSCH configuration, for example, based on (e.g., in response to) the one or more configuration parameters indicating, for the SPS PDSCH configuration, the field with the first value that indicates the first TCI state. The one or more first downlink channels/resources may be/comprise the PDSCH transmissions of/for the SPS PDSCH configuration.

The wireless device may receive the PDSCH receptions with a first spatial domain reception/receiving filter/beam determined based on the first TCI state. At least one first DM-RS antenna port of the PDSCH receptions (and/or each PDSCH reception of the PDSCH receptions) may be (e.g., quasi) co-located with the first reference signal indicated by the first TCI state.

The one or more first downlink channels/resources may be/comprise PDCCH. The one or more first downlink channels/resources may be/comprise one or more first PDCCH resources. The one or more first downlink channels/resources may be/comprise one or more first PDCCH resource sets/groups. The one or more first downlink channels/resources may be/comprise one or more first PDCCH receptions. The one or more first downlink channels/resources may be/comprise one or more first coresets. The plurality of coresets may comprise the one or more first coresets.

The one or more configuration parameters may indicate, for a first coreset, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive/perform, based on the first TCI state, a downlink signal (e.g., DCI, PDCCH reception, PDCCH reception with/carrying DCI) via the first coreset. The wireless device may receive/perform the downlink signal via the first coreset, for example, based on (e.g., in response to) the one or more configuration parameters indicating, for the first coreset, the field with the first value that indicates the first TCI state. The one or more first downlink channels/resources may be/comprise PDCCH receptions via the first coreset. The one or more first coresets may comprise the first coreset.

The one or more configuration parameters may indicate, for a first coreset group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The first coreset group may comprise one or more first coresets of the plurality of coresets. The wireless device may receive/perform, based on the first TCI state, a downlink signal (e.g., DCI, PDCCH reception) via a first coreset in the first coreset group. The wireless device may receive/perform, the downlink signal via the first coreset, for example, based on (e.g., in response to) the one or more configuration parameters indicating, for the first coreset group, the field with the first value that indicates the first TCI state. The wireless device may receive/perform, based on the first TCI state, a respective downlink signal (e.g., DCI, PDCCH reception) via each coreset in the first coreset group. The wireless device may receive/perform the respective downlink signal, for example, based on (e.g., in response to) the one or more configuration parameters indicating, for the first coreset group, the field with the first value that indicates the first TCI state. The one or more first downlink channels/resources may be/comprise PDCCH receptions via each coreset in the first coreset group.

The wireless device may receive the downlink signal with a first spatial domain reception/receiving filter/beam determined based on the first TCI state. At least one first DM-RS antenna port of the downlink signal may be (e.g., quasi) co-located with the first reference signal indicated by the first TCI state.

The first coreset may be associated with the first coreset pool index (e.g., CoresetPoolIndex = 0). For example, the one or more configuration parameters may indicate, for the first coreset, the first coreset pool index. For example, the one or more configuration parameters may not indicate, for the first coreset, a coreset pool index (e.g., default coreset pool index = 0). The wireless device may receive/perform, based on the first TCI state, a first PDCCH reception (e.g., DCI or comprising/carrying/with DCI) via the first coreset, for example, in response the first coreset being associated with the first coreset pool index. The one or more first downlink channels/resources may be/comprise PDCCH receptions via one or more first coresets with the first coreset pool index. The plurality of coresets may comprise the one or more first coresets. The one or more first coresets may comprise the first coreset.

The wireless device may receive the first PDCCH reception with a first spatial domain reception/receiving filter/beam determined based on the first TCI state. At least one first DM-RS antenna port of the first PDCCH reception may be quasi co-located with the first reference signal indicated by the first TCI state.

One or more first downlink channels/resources may be/comprise CSI-RS. The one or more first downlink channels/resources may be/comprise one or more first CSI-RS resources. The one or more first downlink channels/resources may be/comprise one or more first CSI-RS resource sets/groups. The one or more first downlink channels/resources may be/comprise one or more first CSI-RS receptions.

The one or more configuration parameters may indicate, for a first CSI-RS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0) indicating the first TCI state. The wireless device may receive, based on the first TCI state, a CSI-RS via the first CSI-RS resource. The wireless device may receive the CSI-RS via the first CSI-RS resource, for example, based on (e.g., in response to) the one or more configuration parameters indicating, for the first CSI-RS resource, the field with the first value that indicates the first TCI state. The one or more first downlink channels/resources may be/comprise CSI-RS receptions via the first CSI-RS resource.

The one or more configuration parameters may indicate, for a first CSI-RS resource set/group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive, based on the first TCI state, a CSI-RS via a CSI-RS resource in the first CSI-RS resource set/group. the wireless device may receive the CSI-RS via the CSI-RS resource in the first CSI-RS resource set/group, for example, based on (e.g., in response to) the one or more configuration parameters indicating, for the first CSI-RS resource set/group, the field with the first value that indicates the first TCI state. The wireless device may receive, based on the first TCI state, a respective CSI-RS via each CSI-RS resource in the first CSI-RS resource set/group. The wireless device may receive the respective CSI-RS via each CSI-RS resource in the first CSI-RS resource set/group, for example, based on (e.g., in response to) the one or more configuration parameters indicating, for the first CSI-RS resource set/group, the field with the first value that indicates the first TCI state. The one or more first downlink channels/resources may be/comprise CSI-RS receptions via each CSI-RS resource in the first CSI-RS resource set/group.

The wireless device may receive, via a first coreset, a first DCI triggering/scheduling reception of a CSI-RS. The CSI-RS may be, for example, an aperiodic CSI-RS. The CSI-RS may be, for example, a semi-persistent CSI-RS. The plurality of coresets may comprise the first coreset. The first DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 0, 00, 10, 11) indicating the first TCI state. The wireless device may receive, based on the first TCI state, the CSI-RS. The wireless device may receive the CSI-RS, for example, based on (e.g., in response to) the first DCI comprising the field with the first value indicating the first TCI state. The one or more first downlink channels/resources may be/comprise CSI-RS receptions triggered/scheduled by DCIs comprising the field with the first value.

The first coreset may be associated with the first coreset pool index (e.g., CoresetPoolIndex = 0). For example, the one or more configuration parameters may indicate, for the first coreset, the first coreset pool index. For example, the one or more configuration parameters may not indicate, for the first coreset, a coreset pool index. The wireless device may receive, based on the first TCI state, the CSI-RS. The wireless device may receive the CSI-RS, for example, based on (e.g., in response to) receiving the first DCI triggering/scheduling the reception of the CSI-RS via the first coreset with the first coreset pool index. The one or more first downlink channels/resources may be/comprise CSI-RS receptions triggered/scheduled by DCIs received via one or more first coresets with the first coreset pool index. The plurality of coresets may comprise the one or more first coresets.

The wireless device may receive and/or measure and/or assess the CSI-RS with a first spatial domain reception and/or receiving filter/beam determined based on the first TCI state. The wireless device may receive and/or measure and/or assess a radio link quality (e.g., RSRP, BLER, SINR, SNR) of the CSI-RS with the first spatial domain reception and/or receiving filter and/or beam determined based on the first TCI state.

The wireless device may apply the second TCI state to (e.g., use the second TCI state on) one or more second uplink channels/resources of the cell. Applying the first TCI state to the one or more second uplink channels/resources may comprise sending (e.g., transmitting), via the one or more second uplink channels/resources, uplink signals based on the second TCI state. The wireless device may send (e.g., transmit), via the one or more second uplink channels and/or resources, uplink signals based on the second TCI state. The wireless device may send (e.g., transmit), via each uplink channel and/or resource of the one or more second uplink channels and/or resources, a respective uplink signal of the uplink signals based on the second TCI state.

A wireless device may send (e.g., transmit), via one or more second uplink channels and/or resources, uplink signals with transmission powers determined based on a second TCI state. The wireless device may send (e.g., transmit), via each uplink channel and/or resource of the one or more second uplink channels and/or resources, an uplink signal with a respective transmission power determined based on the second TCI state. The wireless device may send (e.g., transmit), via a first uplink channel and/or resource of the one or more second uplink channels and/or resources, a first uplink signal with a first transmission power determined based on the second TCI state. The wireless device may determine the first transmission power based on one or more second power control parameters (e.g., target received power, pathloss compensation factor, closed-loop index, pathloss reference signal) associated with, mapped to, indicated by, and/or included in the second TCI state. The wireless device may send (e.g., transmit), via a second uplink channel and/or resource of the one or more second uplink channels and/or resources, a second uplink signal with a second transmission power determined based on the second TCI state. The wireless device may determine the second transmission power based on one or more second power control parameters (e.g., target received power, pathloss compensation factor, closed-loop index, pathloss reference signal) associated with, mapped to, indicated by, and/or included in the second TCI state.

A wireless device may send (e.g., transmit), via one or more second uplink channels and/or resources, uplink signals with a second spatial domain transmission filter and/or beam determined based on a second TCI state. The wireless device may send (e.g., transmit), via each uplink channel and/or resource of the one or more second uplink channels and/or resources, a respective uplink signal with the second spatial domain transmission filter and/or beam determined based on the second TCI state. The wireless device may send (e.g., transmit), via a first uplink channel and/or resource of the one or more second uplink channels and/or resources, a first uplink signal with the second spatial domain transmission filter and/or beam determined based on the second TCI state. At least one DM-RS antenna port of the first uplink signal may be quasi co-located with the second reference signal indicated by the second TCI state. The wireless device may send (e.g., transmit), via a second uplink channel and/or resource of the one or more second uplink channels and/or resources, a second uplink signal with the second spatial domain transmission filter and/or beam determined based on the second TCI state. At least one DM-RS antenna port of the second uplink signal may be quasi co-located with the second reference signal indicated by the second TCI state.

One or more second uplink channels and/or resources may comprise PUSCH. The one or more second uplink channels and/or resources may comprise one or more second PUSCH resources. The one or more second uplink channels and/or resources may comprise one or more second PUSCH transmissions.

A wireless device may receive, via a second coreset 1858, second DCI 1850 scheduling a second PUSCH transmission. A plurality of coresets may comprise the second coreset 1858. The second DCI 1850 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. The wireless device may send (e.g., transmit), based on the second TCI state, the second PUSCH transmission based on (e.g., in response to) the second DCI 1850 comprising a field with a second value indicating the second TCI state. One or more second uplink channels and/or resources may comprise PUSCH transmissions scheduled by DCIs comprising the field with the second value. Each DCI of the DCIs may schedule one or more PUSCH transmissions of the PUSCH transmissions.

A second coreset 1858 may be associated with a second coreset pool index 1845 (e.g., CoresetPoolIndex = 1). One or more configuration parameters may indicate, for the second coreset 1858, the second coreset pool index 1845. A wireless device 1805 may send (e.g., transmit), based on the second TCI state, the second PUSCH transmission, for example, based on (e.g., in response to) receiving the second DCI 1850 scheduling the second PUSCH transmission via the second coreset 1858 with the second coreset pool index 1845. One or more second uplink channels and/or resources may comprise PUSCH transmissions scheduled by DCIs received via one or more second coresets with the second coreset pool index 1845. A plurality of coresets may comprise the one or more second coresets.

The wireless device 1805 may send (e.g., transmit) the second PUSCH transmission with a second transmission power determined based on the second TCI state. The wireless device 1805 may send (e.g., transmit) the second PUSCH transmission with a second spatial domain transmission filter/beam determined based on the second TCI state.

One or more configuration parameters may indicate, for a configured uplink grant, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. A wireless device may send (e.g., transmit), based on the second TCI state, PUSCH transmissions of the configured uplink grant, for example, based on (e.g., in response to) the one or more configuration parameters indicating, for the configured uplink grant, the field with the second value that indicates the second TCI state. The configured uplink grant may be, for example, a Type 1 configured uplink grant. One or more second uplink channels and/or resources may comprise the PUSCH transmissions of the configured uplink grant.

The wireless device 1805 may send (e.g., transmit) the PUSCH transmissions of the configured uplink grant with a second transmission power determined based on the second TCI state. The wireless device 1805 may send (e.g., transmit) the PUSCH transmissions of the configured uplink grant with a second spatial domain transmission filter/beam determined based on the second TCI state.

One or more second uplink channels and/or resources may comprise PUCCH. The one or more second uplink channels and/or resources may comprise one or more second PUCCH resources. The one or more second uplink channels and/or resources may comprise one or more second PUCCH resource sets and/or groups. The one or more second uplink channels and/or resources may comprise one or more second PUCCH transmissions.

One or more configuration parameters may indicate, for a second PUCCH resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. A wireless device may send (e.g., transmit), based on the second TCI state, an uplink signal (e.g., SR, HARQ-ACK, CSI report, uplink control information) via the second PUCCH resource, for example, based on (e.g., in response to) the one or more configuration parameters indicating, for the second PUCCH resource, a field with a second value that may indicate the second TCI state. One or more second uplink channels and/or resources may comprise PUCCH transmissions via the second PUCCH resource.

The wireless device 1805 may send (e.g., transmit), via the second PUCCH resource, the uplink signal with a second transmission power determined based on the second TCI state. The wireless device 1805 may send (e.g., transmit), via the second PUCCH resource, the uplink signal with a second spatial domain transmission filter/beam determined based on the second TCI state.

One or more configuration parameters may indicate, for a second PUCCH resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) indicating a second TCI state. A wireless device may send (e.g., transmit), based on the second TCI state, an uplink signal (e.g., SR, HARQ-ACK, CSI report, uplink control information) via a PUCCH resource in the second PUCCH resource set and/or group, for example, based on (e.g., in response to) the one or more configuration parameters indicating, for the second PUCCH resource set and/or group, a field with a second value that indicates the second TCI state. The wireless device may send (e.g., transmit), based on the second TCI state, a respective uplink signal (e.g., SR, HARQ-ACK, CSI report, uplink control information) via each PUCCH resource in the second PUCCH resource set and/or group, for example, based on (e.g., in response to) the one or more configuration parameters indicating, for the second PUCCH resource set and/or group, the field with the second value that indicates the second TCI state. One or more second uplink channels and/or resources may comprise PUCCH transmissions via each PUCCH resource in the second PUCCH resource set and/or group.

The wireless device 1805 may send (e.g., transmit), via the PUCCH resource, the uplink signal with a second transmission power determined based on the second TCI state. The wireless device 1805 may send (e.g., transmit), via the PUCCH resource, the uplink signal with a second spatial domain transmission filter/beam determined based on the second TCI state.

A wireless device 1805 may receive, via a second coreset 1858, second DCI 1850 triggering and/or scheduling transmission of a second PUCCH transmission (e.g., HARQ-ACK feedback transmission). The second DCI 1850 may, for example, schedule a PDSCH reception. The second DCI 1850 may, for example, indicate SCell dormancy. The second DCI 1850 may, for example, indicate SPS PDSCH release. The second DCI 1850 may, for example, indicate activation of a unified TCI state. A plurality of coresets may comprise the second coreset 1858. The second DCI 1850 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) that may indicate the second TCI state. The wireless device may send (e.g., transmit), based on the second TCI state, the second PUCCH transmission, for example, based on (e.g., in response to) the second DCI 1850 comprising a field with a second value that indicates the second TCI state. One or more second uplink channels and/or resources may comprise PUCCH transmissions triggered and/or scheduled by DCIs comprising the field with the second value.

A second coreset 1858 may be associated with a second coreset pool index 1845 (e.g., CoresetPoolIndex = 1). One or more configuration parameters may indicate, for the second coreset 1858, the second coreset pool index 1845. A wireless device 1805 may send (e.g., transmit), based on a second TCI state, a second PUCCH transmission, for example, based on (e.g., in response to) receiving the second DCI 1850 triggering and/or scheduling the second PUCCH transmission via the second coreset 1858 with the second coreset pool index 1845. One or more second uplink channels and/or resources may comprise PUCCH transmissions triggered and/or scheduled by DCIs received via one or more second coresets with the second coreset pool index 1845. A plurality of coresets may comprise one or more second coresets.

The wireless device 1805 may send (e.g., transmit) the second PUCCH transmission with a second transmission power determined based on the second TCI state. The wireless device 1805 may send (e.g., transmit) the second PUCCH transmission with a second spatial domain transmission filter/beam determined based on the second TCI state.

One or more second uplink channels and/or resources may comprise SRS. The one or more second uplink channels and/or resources may comprise one or more second SRS resources. The one or more second uplink channels and/or resources may comprise one or more second SRS resource sets and/or groups. The one or more second uplink channels and/or resources may comprise one or more second SRS transmissions.

One or more configuration parameters may indicate, for a second SRS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1) indicating a second TCI state. A wireless device may send (e.g., transmit), based on the second TCI state, an SRS via the second SRS resource, for example, based on (e.g., in response to) the one or more configuration parameters indicating, for the second SRS resource, a field with a second value that indicates the second TCI state. One or more second uplink channels and/or resources may comprise SRS transmissions via the second SRS resource.

The wireless device 1805 may send (e.g., transmit), via the second SRS resource, the SRS with a second transmission power determined based on the second TCI state. The wireless device 1805 may send (e.g., transmit), via the second SRS resource, the SRS with a second spatial domain transmission filter/beam determined based on the second TCI state.

One or more configuration parameters may indicate, for a second SRS resource set and/or group, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1) indicating a second TCI state. The wireless device may send (e.g., transmit), based on the second TCI state, an SRS via an SRS resource in the second SRS resource set and/or group, for example, based on (e.g., in response to) the one or more configuration parameters indicating, for the second SRS resource set and/or group, the field with the second value that indicates the second TCI state. A wireless device may send (e.g., transmit), based on the second TCI state, a respective SRS via each SRS resource in the second SRS resource set and/or group, for example, based on (e.g., in response to) the one or more configuration parameters indicating, for the second SRS resource set and/or group, the field with the second value that indicates the second TCI state. One or more second uplink channels and/or resources may comprise SRS transmissions via each SRS resource in the second SRS resource set and/or group.

The wireless device 1805 may send (e.g., transmit), via the SRS resource, the SRS with a second transmission power determined based on the second TCI state. The wireless device 1805 may send (e.g., transmit), via the SRS resource, the SRS with a second spatial domain transmission filter/beam determined based on the second TCI state.

A wireless device 1805 may receive, via a second coreset 1858, second DCI 1850 triggering and/or scheduling transmission of an SRS. The SRS may be, for example, an aperiodic SRS. The SRS may be, for example, a semi-persistent SRS. A plurality of coresets may comprise the second coreset 1858. The second DCI 1850 may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, etc.) with a second value (e.g., 1, 01, 10, 11) that may indicate a second TCI state. A wireless device 1805 may send (e.g., transmit), based on the second TCI state, the SRS, for example, based on (e.g., in response to) the second DCI 1850 comprising a field with a second value indicating the second TCI state. One or more second uplink channels and/or resources may comprise SRS transmissions triggered and/or scheduled by DCIs comprising the field with the second value.

A second coreset 1858 may be associated with a second coreset pool index 1845 (e.g., CoresetPoolIndex = 1). One or more configuration parameters may indicate, for the second coreset 1858, the second coreset pool index 1845. A wireless device may send (e.g., transmit), based on the second TCI state, the SRS, for example, based on (e.g., in response to) receiving the second DCI 1850 triggering and/or scheduling the transmission of the SRS via the second coreset 1858 with the second coreset pool index 1845. One or more second uplink channels and/or resources may comprise SRS transmissions triggered and/or scheduled by DCIs received via one or more second coresets with the second coreset pool index 1845. A plurality of coresets may comprise the one or more second coresets.

The wireless device 1805 may send (e.g., transmit) the SRS with a second transmission power determined based on the second TCI state. The wireless device 1805 may send (e.g., transmit) the SRS with a second spatial domain transmission filter/beam determined based on the second TCI state.

A wireless device may apply the second TCI state to (e.g., use the second TCI state for) one or more second downlink channels/resources of the cell. Applying the second TCI state to (e.g., using the second TCI state for) the one or more second downlink channels/resources may comprise receiving, via the one or more second downlink channels/resources, downlink signals based on the second TCI state. The wireless device may receive, via the one or more second downlink channels/resources, downlink signals based on the second TCI state. The wireless device may receive, via each downlink channel/resource of the one or more second downlink channels/resources, a respective downlink signal of the downlink signals based on the second TCI state

The wireless device may receive, via the one or more second downlink channels/resources, the downlink signals with a second spatial domain reception/receiving filter/beam determined based on the second TCI state. The wireless device may receive, via each downlink channel/resource of the one or more second downlink channels/resources, a respective downlink signal with the second spatial domain reception/receiving filter/beam determined based on the second TCI state. For example, the wireless device may receive, via a first downlink channel/resource of the one or more second downlink channels/resources, a first downlink signal with the second spatial domain reception/receiving filter/beam determined based on the second TCI state. At least one DM-RS antenna port of the first downlink signal may be (e.g., quasi) co-located with the second reference signal indicated by the second TCI state. The wireless device may receive, via a second downlink channel/resource of the one or more second downlink channels/resources, a second downlink signal with the second spatial domain reception/receiving filter/beam determined based on the second TCI state. At least one DM-RS antenna port of the second downlink signal may be quasi co-located with the second reference signal indicated by the second TCI state.

The one or more second downlink channels/resources may be/comprise a PDSCH. The one or more second downlink channels/resources may be/comprise one or more second PDSCH resources. The one or more second downlink channels/resources may be/comprise one or more second PDSCH transmissions.

The wireless device may receive, via a second coreset, second DCI scheduling a second PDSCH reception. The plurality of coresets may comprise the second coreset. The second DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive/perform, based on the second TCI state, the second PDSCH reception. The second device may receive/perform the second PDSCH reception based on (e.g., in response to) the second DCI comprising the field with the second value indicating the second TCI state. The one or more second downlink channels/resources may be/comprise PDSCH receptions scheduled via (e.g., by) DCI (e.g., DCI messages) comprising the field with the second value. Each DCI message of the DCI messages may schedule one or more PDSCH receptions of the PDSCH receptions.

The second coreset may be associated with the second coreset pool index (e.g., CoresetPoolIndex = 1). For example, the one or more configuration parameters may indicate, for the second coreset, the second coreset pool index. The wireless device may receive/perform, based on the second TCI state, the second PDSCH reception. The wireless device may receive/perform the second PDSCH reception, for example, based on (e.g., in response to) receiving the second DCI scheduling the second PDSCH reception via the second coreset with the second coreset pool index. The one or more second downlink channels/resources may be/comprise the second PDSCH reception. The one or more second downlink channels/resources may be/comprise PDSCH receptions scheduled by DCIs received via one or more second coresets with the second coreset pool index. The plurality of coresets may comprise the one or more second coresets.

The wireless device may receive the second PDSCH reception via (e.g., using/via/based on) a second spatial domain reception/receiving filter/beam determined based on the second TCI state. At least one second DM-RS antenna port of the second PDSCH reception may be (e.g., quasi) co-located with the second reference signal indicated by the second TCI state.

The one or more configuration parameters may indicate, for an SPS PDSCH configuration, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive/perform, based on the second TCI state, PDSCH receptions of/for the SPS PDSCH configuration. The wireless device may receive/perform the PDSCH receptions of/for the SPS PDSCH configuration, for example, based on (e.g., in response to) the one or more configuration parameters indicating, for the SPS PDSCH configuration, the field with the second value that indicates the second TCI state. The one or more second downlink channels/resources may be/comprise the PDSCH transmissions of/for the SPS PDSCH configuration.

The wireless device may receive the PDSCH receptions with a second spatial domain reception/receiving filter/beam determined based on the second TCI state. At least one second DM-RS antenna port of the PDSCH receptions (or each PDSCH reception of the PDSCH receptions) may be (e.g., quasi) co-located with the second reference signal indicated by the second TCI state.

The one or more second downlink channels/resources may be/comprise PDCCH. The one or more second downlink channels/resources may be/comprise one or more second PDCCH resources. The one or more second downlink channels/resources may be/comprise one or more second PDCCH resource sets/groups. The one or more second downlink channels/resources may be/comprise one or more second PDCCH receptions. The one or more second downlink channels/resources may be/comprise one or more second coresets. The plurality of coresets may comprise the one or more second coresets.

The one or more configuration parameters may indicate, for a second coreset, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive/perform, based on the second TCI state, a downlink signal (e.g., DCI, PDCCH reception, PDCCH reception with/carrying DCI) via the second coreset. The wireless device may receive/perform the downlink signal via the second coreset, for example, based on (e.g., in response to) the one or more configuration parameters indicating, for the second coreset, the field with the second value that indicates the second TCI state. The one or more second downlink channels/resources may be/comprise PDCCH receptions via the second coreset. The one or more second coresets may comprise the second coreset.

The one or more configuration parameters may indicate, for a second coreset group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The second coreset group may comprise one or more second coresets of the plurality of coresets. The wireless device may receive/perform, based on the second TCI state, a downlink signal (e.g., DCI, PDCCH reception) via a second coreset in the second coreset group. The wireless device may receive/perform the downlink signal via the second coreset in the second coreset group, for example, based on (e.g., in response to) the one or more configuration parameters indicating, for the second coreset group, the field with the second value that indicates the second TCI state. The wireless device may receive/perform, based on the second TCI state, a respective downlink signal (e.g., DCI, PDCCH reception) via each coreset in the second coreset group. The wireless device may receive/perform the respective downlink signal via each coreset in the second coreset group, for example, based on (e.g., in response to) the one or more configuration parameters indicating, for the second coreset group, the field with the second value that indicates the second TCI state. The one or more second downlink channels/resources may be/comprise PDCCH receptions via each coreset in the second coreset group.

The wireless device may receive the downlink signal with a second spatial domain reception/receiving filter/beam determined based on the second TCI state. At least one second DM-RS antenna port of the downlink signal may be quasi co-located with the second reference signal indicated by the second TCI state.

The second coreset may be associated with the second coreset pool index (e.g., CoresetPoolIndex = 1). For example, the one or more configuration parameters may indicate, for the second coreset, the second coreset pool index. The wireless device may receive/perform, based on the second TCI state, a second PDCCH reception (e.g., DCI or comprising/carrying/with DCI) via the second coreset. The wireless device may receive/perform a second PDCCH reception via the second coreset, for example, in response the second coreset being associated with the second coreset pool index. The one or more second downlink channels/resources may be/comprise PDCCH receptions via one or more second coresets with the second coreset pool index. The plurality of coresets may comprise the one or more second coresets. The one or more second coresets may comprise the second coreset.

The wireless device may receive the second PDCCH reception with a second spatial domain reception/receiving filter/beam determined based on the second TCI state. At least one second DM-RS antenna port of the second PDCCH reception may be quasi co-located with the second reference signal indicated by the second TCI state.

The one or more second downlink channels/resources may be/comprise CSI-RS. The one or more second downlink channels/resources may be/comprise one or more second CSI-RS resources. The one or more second downlink channels/resources may be/comprise one or more second CSI-RS resource sets/groups. The one or more second downlink channels/resources may be/comprise one or more second CSI-RS receptions.

The one or more configuration parameters may indicate, for a second CSI-RS resource, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1) indicating the second TCI state. The wireless device may receive, based on the second TCI state, a CSI-RS via the second CSI-RS resource. The wireless device may receive the CSI-RS via the second CSI-RS resource, for example, based on (e.g., in response to) the one or more configuration parameters indicating, for the second CSI-RS resource, the field with the second value that indicates the second TCI state. The one or more second downlink channels/resources may be/comprise CSI-RS receptions via the second CSI-RS resource.

The one or more configuration parameters may indicate, for a second CSI-RS resource set/group, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a second value (e.g., 1, 01, 10, 11) indicating the second TCI state. The wireless device may receive, based on the second TCI state, a CSI-RS via a CSI-RS resource in the second CSI-RS resource set/group. The wireless device may receive the CSI-RS via a CSI-RS resource in the second CSI-RS resource set/group, for example, based on (e.g., in response to) the one or more configuration parameters indicating, for the second CSI-RS resource set/group, the field with the second value that indicates the second TCI state. The wireless device may receive, based on the second TCI state, a respective CSI-RS via each CSI-RS resource in the second CSI-RS resource set/group. The wireless device may receive the respective CSI-RS via each CSI-RS resource in the second CSI-RS resource set/group, for example, based on (e.g., in response to) the one or more configuration parameters indicating, for the second CSI-RS resource set/group, the field with the second value that indicates the second TCI state. The one or more second downlink channels/resources may be/comprise CSI-RS receptions via each CSI-RS resource in the second CSI-RS resource set/group.

The wireless device may receive, via a second coreset, a second DCI triggering/scheduling reception of a CSI-RS. The CSI-RS may be, for example, an aperiodic CSI-RS. The CSI-RS may be, for example, a semi-persistent CSI-RS. The plurality of coresets may comprise the second coreset. The second DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a first value (e.g., 1, 01, 10, 11) indicating the second TCI state. The wireless device may receive, based on the second TCI state, the CSI-RS, for example, in response to the second DCI comprising the field with the second value indicating the second TCI state. The one or more second downlink channels/resources may be/comprise CSI-RS receptions triggered/scheduled by DCIs comprising the field with the second value.

The second coreset may be associated with the second coreset pool index (e.g., CoresetPoolIndex = 1). For example, the one or more configuration parameters may indicate, for the second coreset, the second coreset pool index. The wireless device may receive, based on the second TCI state, the CSI-RS. The wireless device may receive the CSI-RS, for example, based on (e.g., in response to) receiving the second DCI triggering/scheduling the reception of the CSI-RS via the second coreset with the second coreset pool index. The one or more second downlink channels/resources may be/comprise CSI-RS receptions triggered/scheduled by DCIs received via one or more second coresets with the second coreset pool index. The plurality of coresets may comprise the one or more second coresets.

The wireless device may receive/measure/determine the CSI-RS with a second spatial domain reception/receiving filter/beam determined based on the second TCI state. The wireless device may receive/measure/determine a radio link quality (e.g., RSRP, BLER, SINR, SNR) of the CSI-RS with the second spatial domain reception/receiving filter/beam determined based on the second TCI state.

The wireless device may send (e.g., transmit) an uplink transmission (e.g., PUSCH transmission, PUCCH transmission) based on the first TCI state and the second TCI state. The wireless device may send (e.g., transmit) a first portion of the uplink transmission based on the first TCI state. The wireless device may send (e.g., transmit) a second portion of the uplink transmission based on the second TCI state.

The wireless device may send (e.g., transmit) the first portion using a first transmission power determined based on the first TCI state. The wireless device may send (e.g., transmit) the first portion using a first spatial domain transmission filter/beam determined based on the first TCI state. The wireless device may send (e.g., transmit) the second portion using a second transmission power determined based on the second TCI state. The wireless device may send (e.g., transmit) the second portion using a second spatial domain transmission filter/beam determined based on the second TCI state. The wireless device may send (e.g., transmit), via an uplink resource (e.g., PUSCH resource, PUCCH resource), the uplink transmission.

The first portion may be/comprise one or more first layers (e.g., data streams) of the uplink transmission. The second portion may be/comprise one or more second layers (e.g., data streams) of the uplink transmission. The one or more configuration parameters may indicate a spatial domain multiplexing (SDM) scheme/mode. The one or more first layers may be different from the one or more second layers.

The first portion may be one or more first repetitions of the uplink transmission. The second portion may be one or more second repetitions of the uplink transmission. The one or more configuration parameters may indicate a repetition scheme (e.g., TDM repetition, FDM repetition, SDM repetition).

The first portion may be/comprise the uplink transmission. The second portion may be/comprise the uplink transmission. The one or more configuration parameters may indicate a single-frequency-network (SFN) scheme/mode. The first portion may comprise each layer (or data stream) of the uplink transmission. The second portion may comprise each layer (or data stream) of the uplink transmission.

The wireless device may receive DCI (e.g., a DCI message) scheduling the uplink transmission. The DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may send (e.g., transmit)/perform, based on the first TCI state and the second TCI state, the uplink transmission based on (e.g., in response to) the DCI comprising the field with the value indicating the first TCI state and the second TCI state.

The one or more configuration parameters may indicate, for the uplink resource (or an uplink resource group/set comprising the uplink resource), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may send (e.g., transmit)/perform, based on the first TCI state and the second TCI state, the uplink transmission. The wireless device may send the uplink transmission, for example, based on (e.g., in response to) the one or more configuration parameters indicating, for the uplink resource (and/or the uplink resource group/set), the field with the value that indicates the first TCI state and the second TCI state.

The one or more configuration parameters may not indicate, for the uplink resource (and/or an uplink resource group/set comprising the uplink resource), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like). The wireless device may send (e.g., transmit)/perform, based on the first TCI state and the second TCI state, the uplink transmission. The wireless device may send the uplink transmission, for example, based on (e.g., in response to) the one or more configuration parameters not indicating, for the uplink resource (or the uplink resource group/set), the field.

The wireless device may receive a downlink reception (e.g., PDSCH reception, PDCCH reception, DCI) based on the first TCI state and the second TCI state. The wireless device may receive a first portion of the downlink reception based on the first TCI state. The wireless device may receive a second portion of the downlink reception based on the second TCI state.

The wireless device may receive the first portion using a first spatial domain reception/receiving filter/beam determined based on the first TCI state. At least one first DM-RS antenna port of the first portion may be (e.g., quasi) co-located with the first reference signal indicated by the first TCI state. The wireless device may receive the second portion using a second spatial domain reception/receiving filter/beam determined based on the second TCI state. At least one second DM-RS antenna port of the second portion may be (e.g., quasi) co-located with the second reference signal indicated by the second TCI state. The at least one first DM-RS antenna port and the at least one second DM-RS antenna port may be, for example, the same (e.g., SFN scheme, TDM/FDM/SDM repetition scheme). The at least one first DM-RS antenna port and the at least one second DM-RS antenna port may be, for example, different (e.g., SDM scheme).

The wireless device may receive, via a coreset, the downlink reception. The plurality of coresets may comprise the coreset. The wireless device may monitor, for the downlink reception (e.g., DCI), downlink control channels in the coreset. The wireless device may monitor, for the downlink reception (e.g., DCI), the downlink control channels in the coreset based on the first TCI state and the second TCI state.

The first portion may be/comprise one or more first layers (e.g., data streams) of the downlink reception. The second portion may be/comprise one or more second layers (e.g., data streams) of the downlink reception. The one or more configuration parameters may indicate a spatial domain multiplexing (SDM) scheme/mode. The one or more first layers may be different from the one or more second layers.

The first portion may be one or more first repetitions of the downlink reception. The second portion may be one or more second repetitions of the downlink reception. The one or more configuration parameters may indicate a repetition scheme (e.g., TDM repetition, FDM repetition, SDM repetition).

The first portion may be the downlink reception. The second portion may be the downlink reception. The one or more configuration parameters may indicate a single-frequency-network (SFN) scheme/mode. The first portion may comprise each layer (or data stream) of the downlink reception. The second portion may comprise each layer (or data stream) of the downlink reception.

The wireless device may receive a DCI scheduling the downlink reception. The DCI may comprise, for example, a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may receive/perform, based on the first TCI state and the second TCI state, the downlink reception in response to the DCI comprising the field with the value indicating the first TCI state and the second TCI state.

The one or more configuration parameters may indicate, for the coreset (and/or a coreset group/set/pool comprising the coreset), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like) with a value (e.g., 10, 11) indicating the first TCI state and the second TCI state. The wireless device may receive/perform, based on the first TCI state and the second TCI state, the downlink reception. The wireless device may receive/perform the downlink reception, for example, based on (e.g., in response to) the one or more configuration parameters indicating, for the coreset (and/or the coreset group/set/pool), the field with the value that indicates the first TCI state and the second TCI state.

The one or more configuration parameters may not indicate, for the coreset (or a coreset group/set/pool comprising the coreset), a field (e.g., SRS resource set indicator field, TRP field, coreset pool index field, additional PCI index, BFD set index, unified TCI state indicator field, joint TCI state indicator field, uplink TCI state indicator field, panel index, capability set index, and the like). The wireless device may receive/perform, based on the first TCI state and the second TCI state, the downlink reception. The wireless device may receive/perform the downlink reception, for example, based on (e.g., in response to) the one or more configuration parameters not indicating, for the coreset (or the coreset group/set/pool), the field.

FIG. 19 shows an example of beam management in multi-cell scheduling. A wireless device 1905 may receive the one or more configuration parameters (e.g., Configuration parameters 1920 sent/received at time T0 in FIG. 19). The one or more configuration parameters may indicate one or more sets of cells for multi-cell scheduling. A set of cells (e.g., each set of cells) of the one or more sets of cells may be configured for multi-cell scheduling. The one or more configuration parameters may indicate each set of cells of the one or more sets of cells for multi-cell scheduling.

The one or more configuration parameters may indicate, for the one or more sets of cells, one or more cell set indexes/identifiers/identities. The one or more configuration parameters may indicate, for each set of cells of the one or more sets of cells, a respective cell set index of the one or more cell set indexes. For example, the one or more configuration parameters may indicate, for a first set of cells, a first cell set index (e.g., 0) of the one or more cell set indexes. The one or more sets of cells may comprise the first set of cells. The one or more configuration parameters may indicate, for a second set of cells, a second cell set index (e.g., 1) of the one or more cell set indexes. The one or more sets of cells may comprise the second set of cells.

The one or more configuration parameters may indicate, for a first PUCCH group (e.g., a primary PUCCH group comprising a PCell), one or more first sets of cells of the one or more sets of cells. A number/quantity of the one or more first sets of cells may be up to a value (e.g., 4). The one or more configuration parameters may indicate, for a second PUCCH group (e.g., a secondary PUCCH group comprising a PUCCH SCell), one or more second sets of cells of the one or more sets of cells. A number/quantity of the one or more second sets of cells may be up to the value (e.g., 4). For example, the one or more sets of cells may comprise a first set of cells, a second set of cells, a third set of cells, a fourth set of cells, and a fifth set of cells. The one or more configuration parameters may indicate, for the first PUCCH group, the first set of cells and the fourth set of cells. The one or more first sets of cells may be/comprise the first set of cells and the fourth set of cells. The one or more configuration parameters may indicate, for the second PUCCH group, the second set of cells, the third set of cells, and the fifth set of cells. The one or more second sets of cells may be/comprise the second set of cells, the third set of cells, and the fifth set of cells.

The one or more sets of cells may comprise the set of cells (e.g., Cell 1, Cell 2, Cell 3, Cell 4 in FIG. 19). The one or more configuration parameters may indicate, for the first PUCCH group and/or the second PUCCH group, the set of cells. For example, the one or more configuration parameters may indicate, for the first PUCCH group, the set of cells. The one or more first sets of cells may comprise the set of cells. The one or more second sets of cells may not comprise the set of cells. For example, the one or more configuration parameters may indicate, for the second PUCCH group, the set of cells. The one or more second sets of cells may comprise the set of cells. The one or more first sets of cells may not comprise the set of cells. The one or more configuration parameters may indicate, for the set of cells, a cell set index of the one or more cell set indexes. The set of cells may be indicated/identified by the cell set index.

The one or more configuration parameters may indicate a first table (e.g., a co-scheduled cell table/list, a co-scheduled cell combinations table/list, a co-scheduled cell indicator table/list, etc., not shown in FIG. 19). The one or more configuration parameters may comprise a co-scheduled cell list parameter (e.g., *Co-ScheduledCellList, Co-ScheduledCellTable, Co-ScheduledCellCombinationsList, Co-ScheduledCellCombinationsTable, Co-ScheduledCellUplinkList, Co-ScheduledCellUplinkTable, Co-ScheduledCellCombinationsUplinkList, Co-ScheduledCellCombinationsUplinkTable, Co-ScheduledCellDownlinkList, Co-ScheduledCellDownlinkTable, Co-ScheduledCellCombinationsDown-*

*linkList, Co-ScheduledCellCombinationsDownlinkTable*) indicating the first table. The first table may comprise/be (and/or may be denoted as or may be interchangeably used with) a first list. The one or more configuration parameters may indicate the first table for the set of cells. The first table may indicate/define combinations of co-scheduled cells for/of the set of cells. The first table may comprise/indicate one or more rows. Each row of the one or more rows in the first table may indicate respective co-scheduled cell(s) of the set of cells. For example, a first row of the one or more rows in the first table may indicate one or more first co-scheduled cells of the set of cells. A second row of the one or more rows in the first table may indicate one or more second co-scheduled cells of the set of cells.

The first table may be for downlink scheduling. The one or more configuration parameters may indicate the first table for downlink scheduling. The first table may be for uplink scheduling. The one or more configuration parameters may indicate the first table for uplink scheduling. The first table for downlink scheduling may be different from the first table for uplink scheduling. The one or more configuration parameters may indicate separate tables for the downlink scheduling and the uplink scheduling.

A maximum number of cells in the set of cells may be equal to a first value (e.g., 3, 4, 8, etc.). The first value may be preconfigured/predefined/preset. The maximum number of cells may be preconfigured/predefined/preset, for example, based on agreed-upon technological standards. A larger maximum number allows for more cells to be scheduled by a single DCI message, but more cells may correspond to a larger DCI message for scheduling the cells, so a maximum number of cells may balance those trade-offs. A maximum number of the one or more rows in the first table may be equal to a first value (e.g., 16). The first value may be preconfigured/predefined/preset. The maximum number of the one or more rows may be preconfigured/predefined/preset, for example, based on agreed-upon technological standards. A larger maximum number allows for more combinations of cells to be scheduled by a single DCI message, but more rows may correspond to a larger DCI message for scheduling the cells, so a maximum number of rows may balance those trade-offs.

For example, the set of cells may be Cell 1, Cell 2, Cell 3, and Cell 4, as in the example shown in FIG. 19. The first table may comprise N rows, such as six rows. A first row (e.g., row 1) in the first table may indicate/comprise Cell 2 and Cell 3. For example, the first row may comprise indices [0, 1, 1] referring to [Cell 1, Cell 2, Cell 3] or otherwise indicating values for Cell 2 and Cell 3. Cell 2 and Cell 3 may be co-scheduled cells (e.g., based on the indication in the first row). A second row in the first table may indicate/comprise Cell 1, Cell 2, and Cell 4. Cell 1, Cell 2 and Cell 4 may be co-scheduled cells (e.g., based on the indication in the second row). A third row in the first table may indicate/comprise Cell 2. Cell 2 may be a co-scheduled cell (e.g., based on the indication in the third row; e.g., a scheduled cell). A fourth row in the first table may indicate/comprise Cell 1, Cell 2, and Cell 3. Cell 1, Cell 2, and Cell 3 may be co-scheduled cells (e.g., based on the indication in the fourth row). A fifth row in the first table may indicate/comprise Cell 3. Cell 3 may be a co-scheduled cell, for example, based on the indication of the fifth row; e.g., a scheduled cell). A sixth row in the first table may indicate/comprise Cell 1, Cell 3, and Cell 4. Cell 1, Cell 3, and Cell 4 may be co-scheduled cells (e.g., based on the indication in the sixth row).

The one or more configuration parameters may indicate a time-domain resource allocation (TDRA) table (e.g., *pdsch-TimeDomainAllocationListForSingleDCIMultiPDSCH*). The TDRA table may indicate/define one or more combinations of TDRA entries for/of the set of cells. The TDRA table may comprise one or more rows. A row (e.g., each row) of the one or more rows may comprise (e.g., respective) TDRA entries for uplink transmissions and/or downlink receptions via uplink/downlink BWPs of the set of cells. TDRA entries in a row of the one or more rows of the TDRA table may be associated with the set of cells. A TDRA entry (e.g., each TDRA entry) of the TDRA entries in the row of the one or more rows in the TDRA table may be associated with a (e.g., respective) cell of the set of cells. A TDRA entry (e.g., each TDRA entry) of the TDRA entries in the row of the one or more rows in the TDRA table may be associated with downlink/uplink BWP of a (e.g., respective) cell of the set of cells. One or more TDRA entries in a column of/in the TDRA table may be associated with a respective cell of the set of cells. A TDRA entry (e.g., each TDRA entry) in the TDRA table may indicate a start and length indicator value (SLIV) indicating a slot offset, starting symbol, and/or the number of consecutive symbols for uplink/downlink transmission/reception.

The one or more configuration parameters may indicate a second table (e.g., TCI state table/list, TCI state combinations table/list, TCI state table/list for single DCI multi-cell scheduling, TCI codepoint table/list, TCI codepoint combinations table/list, TCI codepoint table/list for single DCI multi-cell scheduling, tables 1925 and 1935 in FIG. 19 etc.). The one or more configuration parameters may comprise a TCI state list parameter (e.g., *TCI-StateListForSingleDCIMultiPDSCH, TCI-StateListForSingleDCIMultiPUSCH, TCI-StateListForSingleDCIMulti Cell, TCI-CodepointListForSingleDCIMultiPDSCH, TCI-CodepointListForSingleDCIMultiPUSCH, TCI-CodepointListForSingleDCIMultiCell,* etc.) indicating the second table. The one or more configuration parameters may indicate the second table for the set of cells.

The second table may comprise/be (and/or may be denoted as or may be interchangeably used with) a second list. The TCI state list parameter may comprise/be (and/or may be interchangeably used with) a TCI codepoint list parameter. The second table may indicate one or more TCI states for downlink scheduling (e.g., PDSCH, PDCCH, CSI-RS). The one or more configuration parameters may indicate TCI states in the second table for downlink scheduling.

The second table may indicate TCI states for uplink scheduling (e.g., PUSCH, PUCCH, SRS). The one or more configuration parameters may indicate TCI states in the second table for uplink scheduling. The second table indicating TCI states for downlink scheduling may be different from the second table indicating TCI states for uplink scheduling. The one or more configuration parameters may indicate separate tables for TCI state indication of/for the downlink scheduling and/or the uplink scheduling.

The second table may indicate TCI states for downlink scheduling and/or uplink scheduling. The one or more configuration parameters may indicate TCI states in the second table for downlink scheduling and/or uplink scheduling. The one or more configuration parameters may indicate the same table (e.g., the second table, a single second table) for TCI state indication of/for both the downlink scheduling and the uplink scheduling.

A maximum number of the one or more rows in the second table may be equal to a second value (e.g., 8, 16). The second value may be, for example, preconfigured/predefined/preset (e.g., as discussed with respect to the maximum number of rows in the first table). For example, the one or more configuration parameters may indicate the second value.

The second table may indicate/define combinations of TCI states for/of the set of cells. The second table may comprise/indicate one or more rows. A row (e.g., each row) of the one or more rows in the second table may indicate (e.g., respective) TCI states of the set of cells. For example, the set of cells may be Cell 1, Cell 2, Cell 3, and Cell 4. A first row of the one or more rows in the second table may indicate first TCI states of the set of cells. The first row in the second table may indicate the first TCI states for Cell 1, Cell 2, Cell 3, and Cell 4. A first TCI state (e.g., in the first/starting column/entry in the first row) of the first TCI states may be associated with Cell 1. A second TCI state (e.g., in the second column/entry in the first row) of the first TCI states may be associated with Cell 2. A third TCI state (e.g., in the third column/entry in the first row) of the first TCI states may be associated with Cell 3. A fourth TCI state (e.g., in the fourth column/entry in the second row) of the first TCI states may be associated with Cell 4. A second row of the one or more rows in the second table may indicate second TCI states of the set of cells. The second row in the second table may indicate the second TCI states for Cell 1, Cell 2, Cell 3, and Cell 4. A first TCI state (e.g., in the first/starting column/entry in the second row) of the second TCI states may be associated with Cell 1. A second TCI state (e.g., in the second starting column/entry in the second row) of the second TCI states may be associated with Cell 2. A third TCI state (e.g., in the third starting column/entry in the second row) of the second TCI states may be associated with Cell 3. A fourth TCI state (e.g., in the fourth column/entry in the second row) of the second TCI states may be associated with Cell 4. In general, an Nth row of the one or more rows in the second table may indicate Nth TCI states of the set of cells. The Nth row in the second table may indicate the Nth TCI states for Cell 1, Cell 2, Cell 3, and Cell 4. A first TCI state (e.g., in the first/starting column/entry in the Nth row) of the Nth TCI states may be associated with Cell 1. A second TCI state (e.g., in the second column/entry in the Nth row) of the Nth TCI states may be associated with Cell 2. A third TCI state (e.g., in the third column/entry in the Nth row) of the Nth TCI states may be associated with Cell 3. A fourth TCI state (e.g., in the fourth column/entry in the Nth row) of the Nth TCI states may be associated with Cell 4. The second table may comprise any quantity of rows, such as five rows. A first row in the second table may indicate/comprise TCI state 2 for Cell 1, TCI state 34 for Cell 2, TCI state 52 for Cell 3, and TCI state 2 for Cell 4. A second row in the second table may indicate/comprise TCI state 23 for Cell 1, TCI state 61 for Cell 2, TCI state 5 for Cell 3, and TCI state 53 for Cell 4. A third row in the second table may indicate/comprise TCI state 79 for Cell 1, TCI state 1 for Cell 2, TCI state 35 for Cell 3, and TCI state 75 for Cell 4. A fourth row in the second table may indicate/comprise TCI state 34 for Cell 1, TCI state 11 for Cell 2, TCI state 44 for Cell 3, and TCI state 95 for Cell 4. A fifth row in the second table may indicate/comprise TCI state 19 for Cell 1, TCI state 1 for Cell 2, TCI state 33 for Cell 3, and TCI state 11 for Cell 4.

The second table may indicate/define combinations of TCI state indexes/identifiers/identities for/of the set of cells. The second table may comprise/indicate one or more rows. A row, (e.g., each row) of the one or more rows in the second table may indicate (e.g., respective) TCI state indexes of/for the set of cells. The set of cells may be any quantity of cells, such as four cells. For example, the set of cells may be Cell 1, Cell 2, Cell 3, and Cell 4. A first row of the one or more rows in the second table may indicate first TCI state indexes of/for the set of cells. The first row in the second table may indicate the first TCI state indexes for Cell 1, Cell 2, Cell 3, and Cell 4, for example. A first first TCI state index (e.g., in the first/starting column/entry in the first row) of the first TCI state indexes may be associated with Cell 1. The first first TCI state index (of the first TCI state indexes) may indicate/identify a first first TCI state of one or more first TCI states of Cell 1 (e.g., one or more first TCI states defined/configured in either *tci-StatesToAddModList* or *dl-OrJointTCI-StateList* in the *PDSCH-Config* included in the BWP-Downlink of Cell 1). The one or more configuration parameters may indicate, for Cell 1, the one or more first TCI states. The one or more configuration parameters may indicate, for the first first TCI state, the first first TCI state index (of the first TCI state indexes). A second first TCI state index (e.g., in the second column/entry in the first row) of the first TCI state indexes may be associated with Cell 2. The second first TCI state index (of the first TCI state indexes) may indicate/identify a first second TCI state of one or more second TCI states of Cell 2 (e.g., one or more second TCI states defined/configured in either *tci-StatesToAddModList* or *dl-OrJointTCI-StateList* in the *PDSCH-Config* included in the BWP-Downlink of Cell 2). The one or more configuration parameters may indicate, for Cell 2, the one or more second TCI states. The one or more configuration parameters may indicate, for the first second TCI state, the second first TCI state index (of the first TCI state indexes). A third first TCI state index (e.g.,

in the third column/entry in the first row) of the first TCI state indexes may be associated with Cell 3. The third first TCI state index (of the first TCI state indexes) may indicate/identify a first third TCI state of one or more third TCI states of Cell 3 (e.g., one or more third TCI states defined/configured in either *tci-StatesToAddModList* or *dl-OrJointTCI-StateList* in the *PDSCH-Config* included in the BWP-Downlink of Cell 3). The one or more configuration parameters may indicate, for Cell 3, the one or more third TCI states. The one or more configuration parameters may indicate, for the first third TCI state, the third first TCI state index (of the first TCI state indexes). A fourth first TCI state index (e.g., in the fourth column/entry in the first row) of the first TCI state indexes may be associated with Cell 4. The fourth first TCI state index (of the first TCI state indexes) may indicate/identify a first fourth TCI state of one or more fourth TCI states of Cell 4 (e.g., one or more fourth TCI states defined/configured in either tci-StatesToAddModList or dl-OrJointTCI-StateList in the PDSCH-Config included in the BWP-Downlink of Cell 4). The one or more configuration parameters may indicate, for Cell 4, the one or more fourth TCI states. The one or more configuration parameters may indicate, for the first fourth TCI state, the fourth first TCI state index (of the first TCI state indexes).

A second row of the one or more rows in the second table may indicate second TCI state indexes of/for the set of cells. The second row in the second table may indicate the second TCI state indexes for Cell 1, Cell 2, Cell 3, and Cell 4, for example. A first second TCI state index (e.g., in the first/starting column/entry in the second row) of the second TCI state indexes may be associated with Cell 1. The first second TCI state index may indicate/identify a second first TCI state of one or more first TCI states of Cell 1 (e.g., one or more first TCI states defined/configured in either tci-StatesToAddModList or dl-OrJointTCI-StateList in the PDSCH-Config included in the BWP-Downlink of Cell 1). The one or more configuration parameters may indicate, for Cell 1, the one or more first TCI states. The one or more configuration parameters may indicate, for the second first TCI state, the first second TCI state index. A second second TCI state index (e.g., in the second column/entry in the second row) of the second TCI state indexes may be associated with Cell 2. The second second TCI state index may indicate/identify a second second TCI state of one or more second TCI states of Cell 2 (e.g., one or more second TCI states defined/configured in either tci-StatesToAddModList or dl-OrJointTCI-StateList in the PDSCH-Config included in the BWP-Downlink of Cell 2). The one or more configuration parameters may indicate, for Cell 2, the one or more second TCI states. The one or more configuration parameters may indicate, for the second second TCI state, the second second TCI state index. A third second TCI state index (e.g., in the third column/entry in the second row) of the second TCI state indexes may be associated with Cell 3. The third second TCI state index may indicate/identify a second third TCI state of one or more third TCI states of Cell 3 (e.g., one or more third TCI states defined/configured in either tci-StatesToAddModList or dl-OrJointTCI-StateList in the PDSCH-Config included in the BWP-Downlink of Cell 3). The one or more configuration parameters may indicate, for Cell 3, the one or more third TCI states. The one or more configuration parameters may indicate, for the second third TCI state, the third second TCI state index. A fourth second TCI state index (e.g., in the fourth/fourth-starting column/entry in the second row) of the second TCI state indexes may be associated with Cell 4. The fourth second TCI state index may indicate/identify a second fourth TCI state of one or more fourth TCI states of Cell 4 (e.g., one or more fourth TCI states defined/configured in either tci-StatesToAddModList or dl-OrJointTCI-StateList in the PDSCH-Config included in the BWP-Downlink of Cell 4). The one or more configuration parameters may indicate, for Cell 4, the one or more fourth TCI states. The one or more configuration parameters may indicate, for the second fourth TCI state, the fourth second TCI state index.

The second table may also, or alternatively, indicate/define combinations of TCI codepoints for/of the set of cells. For example, FIG. 19 shows an example second table 1925 indicating combinations of TCI codepoints for Cell 1, Cell 2, Cell 3, and Cell 4. The second table may comprise/indicate one or more rows (e.g., N rows, such as row 1, row 2, ..., row N-1, row N in the example second table 1925 of FIG. 19). A (e.g., each) row of the one or more rows in the second table may indicate (e.g., respective) TCI codepoints of/for the set of cells (e.g., for each cell of the set of cells).

As shown in FIG. 19, the set of cells may be Cell 1, Cell 2, Cell 3, and Cell 4. A first row (e.g., row 1 in FIG. 19) of the one or more rows in the second table may indicate first TCI codepoints (e.g., 001, 100, 000, and 010 in row 1 in FIG. 19) of/for the set of cells. The first row in the second table may indicate the first TCI codepoints for Cell 1, Cell 2, Cell 3, and Cell 4. A first TCI codepoint (e.g., in the first/starting column/entry in the first row) of the first TCI codepoints may be associated with Cell 1. The first TCI codepoint (e.g., 001 in row 1 in FIG. 19) may indicate (and/or may be mapped to) a first first TCI state of one or more first TCI states of Cell 1. A second row (e.g., row 2 in FIG. 19) of the one or more rows in the second table may indicate second TCI codepoints (e.g., 010, 111, 101, and 000 in row 2 in FIG. 19) of/for the set of cells. The second row in the second table may indicate second TCI codepoints for Cell 1, Cell 2, Cell 3, and Cell 4. A first TCI codepoint (e.g., in the first/starting column/entry in the second row) of the second TCI codepoints may be associated with Cell 1. The first TCI codepoint (e.g., 010 in row 2 in FIG. 19) may indicate (and/or may be mapped to) a second first TCI state of one or more first TCI states of Cell 1.

The wireless device 1905 may receive a first activation command (e.g., MAC-CE, DCI, RRC, downlink control command/message, control command/message, Unified TCI States Activation/Deactivation MAC CE, Activation command, etc.). The first activation command may indicate activation of the one or more first TCI states for Cell 1. The first activation command may indicate activation of the one or more first TCI states among a first plurality of TCI states of Cell 1 (e.g., a first plurality of TCI states defined/configured in either *tci-StatesToAddModList* or *dl-OrJointTCI-StateList*

in the *PDSCH-Config* included in the BWP-Downlink of Cell 1). The one or more configuration parameters may indicate, for Cell 1, the first plurality of TCI states. The first activation command may indicate mapping of the one or more first TCI states to one or more first TCI codepoints comprising the first TCI codepoint. The first activation command may indicate mapping of respective TCI state(s) of the one or more first TCI states to each TCI codepoint of the one or more first TCI codepoints. The wireless device 1905 may map the one or more first TCI states to the one or more first TCI codepoints, for example, based on (and/or after) receiving the first activation command.

A second TCI codepoint (e.g., in the second/second-starting column/entry in the first row) of the first TCI codepoints may be associated with Cell 2. The second TCI codepoint (e.g., 100 in row 1 in FIG. 19) may indicate (and/or may be mapped to) a first second TCI state of one or more second TCI states of Cell 2.

A second TCI codepoint (e.g., in the second/second-starting column/entry in the second row) of the second TCI codepoints may be associated with Cell 2. The second TCI codepoint (e.g., 111 in row 2 in FIG. 19) may indicate (and/or may be mapped to) a second second TCI state of one or more second TCI states of Cell 2.

The wireless device 1905 may receive a second activation command (e.g., MAC-CE, DCI, RRC, downlink control command/message, control command/message, Unified TCI States Activation/Deactivation MAC CE, Activation command, etc.). The second activation command may indicate activation of the one or more second TCI states for Cell 2 (e.g., Activation command 1930 sent/received at T1 in FIG. 19). The second activation command may indicate activation of the one or more second TCI states among a second plurality of TCI states of Cell 2 (e.g., a second plurality of TCI states defined/configured in either *tci-StatesToAddModList* or *dl-OrJointTCI-StateList* in the *PDSCH-Config* included in the BWP-Downlink of Cell 2). The one or more configuration parameters may indicate, for Cell 2, the second plurality of TCI states. The second activation command may indicate mapping of the one or more second TCI states to one or more second TCI codepoints comprising the first second TCI codepoint (e.g., as in table 1935 in FIG. 19). The second activation command may indicate mapping of respective TCI state(s) of the one or more second TCI states to each TCI codepoint of the one or more second TCI codepoints. The wireless device 1905 may map the one or more second TCI states to the one or more second TCI codepoints, for example, based on (e.g., after) receiving the second activation command.

A third TCI codepoint (e.g., in the third/third-starting column/entry in the first row) of the first TCI codepoints may be associated with Cell 3. The third TCI codepoint (e.g., 000 in row 1 in FIG. 19) may indicate (and/or may be mapped to) a first third TCI state of one or more third TCI states of Cell 3.

A third TCI codepoint (e.g., in the third column/entry in the second row) of the second TCI codepoints may be associated with Cell 3. The third TCI codepoint (e.g., 101 in row 2 in FIG. 19) may indicate (and/or may be mapped to) a second third TCI state of one or more third TCI states of Cell 3.

The wireless device 1905 may receive a third activation command (e.g., MAC-CE, DCI, RRC, downlink control command/message, control command/message, Unified TCI States Activation/Deactivation MAC CE, Activation command, etc.) indicating activation of the one or more third TCI states for Cell 3. The third activation command may indicate activation of the one or more third TCI states among a third plurality of TCI states of Cell 3 (e.g., a third plurality of TCI states defined/configured in either *tci-StatesToAddModList* or *dl-OrJointTCI-StateList* in the *PDSCH-Config* included in the BWP-Downlink of Cell 3). The one or more configuration parameters may indicate, for Cell 3, the third plurality of TCI states. The third activation command may indicate mapping of the one or more third TCI states to one or more third TCI codepoints comprising the first third TCI codepoint. The third activation command may indicate mapping of respective TCI state(s) of the one or more third TCI states to each TCI codepoint of the one or more third TCI codepoints. The wireless device 1905 may map the one or more third TCI states to the one or more third TCI codepoints, for example, based on (e.g., after) receiving the third activation command.

The second table may comprise one or more columns (e.g., example second table 1925 comprises column with Cell 1, column with Cell 2, column with Cell 3 in FIG. 19). Each column of the one or more columns in the second table may be associated with a cell of the set of cells. Each column of the one or more columns in the second table may indicate respective TCI state(s) for a respective cell of the set of cells. A first/starting column of the one or more columns in the second table may be associated with a first cell of the set of cells. The first/starting column may indicate/comprise at least one first TCI codepoint (and/or at least one first TCI state index) for the first cell. For example, in FIG. 19, the first/starting column in example second table 1925 is associated with Cell 1 (e.g., Cell 1 with the lowest cell index). The first/starting column may indicate/comprise the at least one first TCI codepoint (e.g., 001, 010, . , 111, 110) for Cell 1.

The one or more first TCI codepoints activated/indicated by the first activation command may comprise the at least one first TCI codepoint. The one or more first TCI codepoints mapped to the one or more first TCI states of Cell 1 may comprise the at least one first TCI codepoint.

A second column of the one or more columns in the second table may be associated with a second cell of the set of cells. The second column may indicate/comprise at least one second TCI codepoint (and/or at least one second TCI state index) for the second cell. For example, in FIG. 19, the second column in the example second table 1925 is associated with Cell 2 (e.g., Cell 2 with the second lowest cell index). The second/second-starting column may indicate/comprise the at least one second TCI codepoint (e.g., 100, 111, .., 000, 100) for Cell 2.

The one or more second TCI codepoints activated/indicated by the second activation command may comprise the at least one second TCI codepoint. The one or more second TCI codepoints mapped to the one or more second TCI states of Cell 2 may comprise the at least one second TCI codepoint.

A third column of the one or more columns in the second table may be associated with a third cell of the set of cells. The third column in the example second table 1925 may indicate/comprise at least one third TCI codepoint (and/or at least one third TCI state index) for the third cell. For example, in FIG. 19, the third column is associated with Cell 3 (e.g., Cell 3 with the third lowest cell index). The third column may indicate/comprise the at least one third TCI codepoint (e.g., 100, 111, ..., 000, 100) for Cell 3.

The one or more third TCI codepoints activated/indicated by the third activation command may comprise the at least one third TCI codepoint. The one or more third TCI codepoints mapped to the one or more third TCI states of Cell 3 may comprise the at least one third TCI codepoint.

The one or more configuration parameters may indicate a plurality of TCI states (e.g., *DLorJoint-TCIStateList*) for a cell of the set of cells. The cell may be a cell as discussed/described with respect to FIG. 17 and FIG. 18, for example. FIG. 19 shows an example in which the cell is Cell 2. For example, the one or more configuration parameters may indicate a second plurality of TCI states (e.g., *ul-TCI-StateList*) for the cell.

The wireless device 1905 may receive an activation command (e.g., MAC-CE, DCI, RRC, activation command, control command, downlink control command/message, control command/message, Unified TCI States Activation/Deactivation MAC CE, etc.). The activation command may indicate activation of a subset of TCI states of the plurality of TCI states (e.g., *DLorJoint-TCIStateList*). The activation command may indicate activation of the subset of TCI states for the cell (e.g., Cell 2 in FIG. 19). For example, the subset of TCI states are TCI states indicated/identified by TCI state IDs in the TCI state column of the table 193 5: TCI state ID 9, TCI state ID 3, TCI state ID 64, TCI state ID 46, and TCI state ID 21. The activation command may indicate activation of a subset of TCI states of the second plurality of TCI states (e.g., *ul-TCI-StateList*) (e.g., for Cell 2).

The one or more configuration parameters may indicate, for the subset of TCI states, a subset of TCI state indexes of a plurality of TCI state indexes/identifiers/identities (e.g., *TCI-StateId*) of the plurality of TCI states. The one or more configuration parameters may indicate, for each TCI state of the subset of TCI states, a respective TCI state index of the subset of TCI state indexes. The subset of TCI states may be indicated/identified by the subset of TCI state indexes. The subset of TCI state indexes may indicate/identify the subset of TCI states. Each TCI state of the subset of TCI states may be indicated/identified by a respective TCI state index of the subset of TCI state indexes. Each TCI state index of the subset of TCI state indexes may indicate/identify a respective TCI state of the subset of the TCI states.

For example, the subset of TCI state indexes are TCI state ID 9, TCI state ID 3, TCI state ID 64, TCI state ID 46, and TCI state ID 21. TCI state ID 9 may indicate/identify a first TCI state of the subset of TCI states. TCI state ID 3 may indicate/identify a second TCI state of the subset of TCI states. TCI state ID 64 may indicate/identify a third TCI state of the subset of TCI states. TCI state ID 46 may indicate/identify a fourth TCI state of the subset of TCI states. TCI state ID 21 may indicate/identify a fifth TCI state of the subset of TCI states.

The activation command may indicate/comprise the subset of TCI state indexes identifying/indicating the subset of TCI states. The wireless device 1905 may map the subset of TCI states (and/or the subset of TCI state indexes) to one or more TCI codepoints of/for the cell. The wireless device 1905 may map the subset of TCI states (and/or the subset of TCI state indexes) activated/indicated for the cell to the one or more TCI codepoints of/for the cell. The activation command may indicate mapping of the subset of TCI states (and/or the subset of TCI state indexes) to the one or more TCI codepoints. The wireless device 1905 may map respective TCI state(s) of the subset of TCI states to a respective TCI codepoint of the one or more TCI codepoints. The wireless device 1905 may map respective TCI state index(es) of the subset of TCI state indexes to a respective TCI codepoint of the one or more TCI codepoints. The one or more TCI codepoints may indicate/comprise the subset of TCI states (and/or the subset of TCI state indexes). Each TCI codepoint of the one or more TCI codepoints may indicate (and/or may be mapped to) respective TCI state(s) of the subset of TCI states. Each TCI codepoint of the one or more TCI codepoints may indicate (and/or may be mapped to) respective TCI state index(es) of the subset of TCI state indexes. Each TCI codepoint of the one or more TCI codepoints may indicate/comprise (and/or be mapped to) one or more TCI states (and/or one or more TCI state indexes).

For example, the one or more TCI codepoints may be TCI codepoint 000, TCI codepoint 001, TCI codepoint 010, TCI codepoint 011, and TCI codepoint 100. TCI codepoint 000 may indicate/comprise (and/or be mapped to) TCI state ID 9. TCI codepoint 000 may indicate/comprise (and/or be mapped to) the first TCI state indicated/identified by TCI state ID 9. TCI codepoint 001 may indicate/comprise (and/or be mapped to) TCI state ID 3. TCI codepoint 001 may indicate/comprise (and/or be mapped to) the second TCI state indicated/identified by TCI state ID 3. TCI codepoint 010 may indicate/comprise (and/or be mapped to) TCI state ID 64. TCI codepoint 010 may indicate/comprise (and/or be mapped to) the third TCI state indicated/identified by TCI state ID 64. TCI codepoint 011 may indicate/comprise (and/or be mapped to) TCI state ID 46. TCI codepoint 011 may indicate/comprise (and/or be mapped to) the fourth TCI state indicated/identified by TCI state ID 46. TCI codepoint 100 may indicate/comprise (and/or be mapped to) TCI state ID 21. TCI codepoint 100 may indicate/comprise (and/or be mapped to) the fifth TCI state indicated/identified by TCI state ID 21.

The wireless device 1905 may receive DCI (e.g., a DCI message). The DCI may comprise a field (e.g., scheduled set indicator field, scheduled cell set indicator field, etc.). The size of the field may be determined based on a number/quantity of the one or more sets of cells. For example, the size of the field may be equal to Ceil ($\log_2(N)$), where N is the number of the one or more sets of cells. Ceil(x) maps x to the least/smallest integer greater than or equal to x. For example, if N = 4, the size of the field would be Ceil($\log_2(4)$) = Ceil(2) equal to 2. If N = 5, the size of the field would be Ceil($\log_2(5)$) equal to 3. If N = 16, the size of the field would be Ceil($\log_2(16)$) = Ceil(4) equal to 4. If N = 10, the size of the field would be Ceil($\log_2(10)$) equal to 4. A value of the field may indicate the set of cells among the one or more sets of cells.

The DCI may schedule one or more cells among the set of cells. The DCI may comprise a field (e.g., co-scheduled cell indicator field, scheduled cell indicator field, etc.) indicating scheduling/co-scheduling information in the first table (e.g., indicating a row of the one or more rows in the first table). The scheduling/co-scheduling information (e.g., row) may indicate/comprise indications of the one or more cells of the set of cells. The one or more configuration parameters may indicate, for the row in the first table, the one or more cells. A value of the field of the DCI may indicate the row. For example, a value of the field being zero may indicate a first/starting row (e.g., row 1) in the first table. The row may be the first/starting row (e.g., row 1). A value of the field being 1 may indicate a second row (e.g., row 2) in the first table. The row may be the second row (e.g., row 2). A value of the field may indicate a $(n+1)^{th}$ row (e.g., row $n+1$) in the first table, and so on. The row may be the $(n+1)^{th}$ row (e.g., row $n+1$).

The one or more cells may be (and/or may be interchangeably used with) one or more co-scheduled cells. The DCI may comprise a TDRA field. The TDRA field may have a value indicating a row in the one or more rows of the TDRA table. The row may comprise TDRA entries for the set of cells. A (e.g. each) TDRA entry of the TDRA entries of the row may be associated with (e.g., be for) a (e.g., respective) cell of the set of cells. The row may comprise one or more TDRA entries of the one or more cells. The TDRA entries of the set of cells may comprise the one or more TDRA entries of the one or more cells. A (e.g., each) TDRA entry of the one or more TDRA entries may be associated with (e.g., be for) a (e.g., respective) cell of the one or more cells.

The DCI may schedule, for example, one or more uplink transmissions (e.g., PUSCH transmissions) for the one or more cells. The DCI may schedule each uplink transmission of the one or more uplink transmissions for a respective cell of the one or more cells. The DCI may indicate one or more uplink resources (e.g., PUSCH resources) for the one or more uplink transmissions. The DCI may indicate each uplink resource of the one or more uplink resources for a respective uplink transmission of the one or more uplink transmissions.

The wireless device 1905 may determine the one or more uplink resources of the one or more uplink transmissions, for example, based on the one or more TDRA entries in the row of the TDRA table. The wireless device 1905 may determine an (e.g., each) uplink resource of the one or more uplink resources based on a (e.g., respective) TDRA entry of the one or more TDRA entries. The wireless device 1905 may determine an (e.g., each) uplink resource of the one or more uplink resources based on SLIV indicated by a (e.g., respective) TDRA entry of the one or more TDRA entries.

For example, the DCI may schedule a first uplink transmission (e.g., a first PUSCH transmission) of the one or more uplink transmissions for a first cell of the one or more cells. The DCI may indicate a first uplink resource of the one or more uplink resources for the first uplink transmission. A first TDRA entry, in the one or more TDRA entries, associated with the first cell may indicate the first uplink resource. The DCI may schedule a second uplink transmission (e.g., a second PUSCH transmission) of the one or more uplink transmissions for a second cell of the one or more cells. The DCI may indicate a second uplink resource of the one or more uplink resources for the second uplink transmission. A second TDRA entry, in the one or more TDRA entries, associated with the second cell may indicate the second uplink resource.

The DCI may schedule, for example, one or more downlink receptions (e.g., PDSCH receptions) for the one or more cells. The DCI may schedule a (e.g., each) downlink reception of the one or more downlink receptions for a (e.g., respective) cell of the one or more cells. The DCI may indicate one or more downlink resources (e.g., PDSCH resource) for the one or more downlink receptions. The DCI may indicate a (e.g., each) downlink resource of the one or more downlink resources for a (e.g., respective) downlink reception of the one or more downlink receptions.

The wireless device 1905 may determine the one or more downlink resources of the one or more downlink receptions, the wireless device may determine the one or more downlink resources, for example, based on the one or more TDRA entries in the row of the TDRA table. The wireless device 1905 may determine a (e.g., each) downlink resource of the one or more downlink resources based on a (e.g., respective) TDRA entry of the one or more TDRA entries. The wireless device 1905 may determine a (e.g., each) downlink resource of the one or more downlink resources based on SLIV indicated by a (e.g., respective) TDRA entry of the one or more TDRA entries.

The DCI may schedule a first downlink reception (e.g., a first PDSCH reception) of the one or more downlink receptions for a first cell of the one or more cells. The DCI may indicate a first downlink resource of the one or more downlink resources for the first downlink reception. A first TDRA entry, of the one or more TDRA entries, may be associated with the first cell. The first TDRA entry may indicate the first downlink resource. The DCI may schedule a second downlink reception (e.g., a second PDSCH reception) of the one or more downlink receptions for a second cell of the one or more cells. The DCI may indicate a second downlink resource of the one or more downlink resources for the second downlink reception. A second TDRA entry, in the one or more TDRA entries, may be associated with the second cell. The second TDRA entry may indicate the second downlink resource.

The one or more configuration parameters may comprise one or more first configuration parameters of a first cell. The one or more first configuration parameters of the first cell may comprise/indicate the TDRA table. The set of cells may comprise the first cell. The one or more cells may comprise the first cell. The wireless device may receive, via the first cell, the DCI. The wireless device may use the TDRA table, for the one or more uplink/downlink transmissions/receptions via the one or more cells, indicated by the one or more first configuration parameters of the first cell. The TDRA table may be used, for example, based on receiving the DCI via the first cell. For example, in FIG. 19, the one or more cells (e.g., one or more co-scheduled cells) may be Cell 2 and Cell 3. The one or more cells (e.g., one or more co-scheduled cells) may comprise the cell (e.g., Cell 2).

The base station 1910 may send the DCI in a DCI format for multi-cell scheduling. The DCI may schedule a first uplink transmission (e.g., a first PUSCH transmission) of the one or more uplink transmissions for the cell of the one or more cells. The DCI may schedule a first downlink reception (e.g., a first PDSCH reception) of the one or more downlink receptions for the cell of the one or more cells. The DCI may be and/or be sent with, for example, DCI format 0_X. The base station 1910 may send (e.g., transmit) the DCI format 0_X for multi-cell scheduling (e.g., PUSCH transmissions via one or more cells). The DCI format 0_X may be DCI format 0_3, DCI format 0_4, or DCI format 0_5, etc. The DCI may be a DCI format 0_1, for example. The DCI may be a DCI format 0_2, for example. The base station may transmit the DCI format 0_1 and/or DCI format 0_2 for a single-cell scheduling (e.g., PUSCH transmissions via one cell).

The DCI may be and/or may be sent with, for example, DCI format 1_X. The DCI may be, for example, with a DCI format 1_X. The base station 1910 may send (e.g., transmit) the DCI format 1_X for multi-cell scheduling (e.g., PDSCH transmissions via one or more cells). The DCI format 1_X may be DCI format 1_3, DCI format 1_4, or DCI format 1_5, etc. The DCI may be a DCI format 1_1, for example. The DCI may be a DCI format 1_2, for example. The base station may transmit the DCI format 1_1 and/or DCI format 1_2 for a single-cell scheduling (e.g., PDSCH transmissions via one cell).

The one or more cells may be the cell. The DCI may not schedule a second cell different from the cell. The one or more cells may be a plurality of cells comprising the cell. The DCI may schedule a second cell different from the cell. The plurality of cells may comprise the second cell.

The wireless device 1905 may receive the DCI. the wireless device 1905 may receive the DCI via a first coreset. The wireless device 1905 may receive, via a PDCCH monitoring occasion of a search space set associated with the first coreset, the DCI. The one or more configuration parameters may indicate, for the search space set, a first coreset index (e.g., by *controlResourceSetId* in IE *SearchSpace*) indicating/identifying the first coreset. The one or more configuration parameters may indicate, for the first coreset, the first coreset index. The one or more configuration parameters may indicate, for the search space set, a DCI format (e.g., *dci-Format0-X, dci-Format1-X*). The DCI format may indicate to monitor, via/in the search space set, DCI (e.g., DCI 0_X, DCI 1_X) indicated/identified by the DCI format. The wireless device 1905 may receive, via the first coreset, the DCI based on (e.g., while) monitoring and/or searching for PDCCH candidate(s) of/for the search space set. The wireless device 1905 may receive, via the first coreset, the DCI based on (e.g., while) monitoring and/or searching for PDCCH candidate(s) of/for the search space set based on (e.g., in/during) the PDCCH monitoring occasion. The one or more configuration parameters may indicate/configure the search space set for multi-cell (and/or multi-carrier) scheduling. The one or more configuration parameters may indicate/configure the search space set for multi-cell (and/or multi-carrier) scheduling by a single DCI (e.g., DCI format 1_X, DCI format 0_X).

A first downlink BWP of a first cell may comprise the coreset. The one or more configuration parameters may indicate, for the first downlink BWP of the first cell, the coreset. The set of cells may comprise the first cell. The set of cells may not comprise the first cell. The one or more cells (e.g., one or more co-scheduled cells) may comprise the first cell. The one or more cells may not comprise the first cell.

A size/length of the field (e.g., of the DCI, such as a co-scheduled cell indicator field, scheduled cell indicator field, etc.) may be determined based on a number/quantity of the one or more rows in the first table. The size of the field may be equal to Ceil ($\log_2(N)$), for example, where N is the number of the one or more rows in the first table and Ceil(x) maps x to the least/smallest integer greater than or equal to x. For example, if N = 4, the size of the field is equal to 2. If N = 5, the size of the field is equal to 3. If N = 16, the size of the field is equal to 4. If N = 10, the size of the field is equal to 4.

The row indicated by the field (e.g., of the DCI, such as a co-scheduled cell indicator field, scheduled cell indicator field, etc.) may have/comprise first column(s)/entry(ies) with value(s) equal to one, for example. The first table may comprise the first column(s)/entry(ies). The row indicated by the field may have second column(s)/entry(ies) with value(s) equal to zero. The first table may comprise the second column(s)/entry(ies). The one or more cells may be associated with the first column(s)/entry(ies) with value equal to one (e.g., a value of 1 in a column/entry may indicate a corresponding cell is scheduled). The DCI may schedule the one or more cells among the set of cells, for example, based on the first column(s)/entry(ies) associated with the one or more cells being with value(s) equal to one. The DCI may schedule the one or more cells among the set of cells, for example, based on the second column(s)/entry(ies) not associated with the one or more cells being with value(s) equal to zero.

The one or more configuration parameters may indicate, for each cell of the set of cells, a respective cell index of the cell indexes (e.g., *ServCellIndex*). The columns (and/or the entries) may be ordered in an ascending and/or descending order of cell indexes of the set of cells. For example, the first/starting column in the first table may be associated with a first cell among the set of cells (e.g., a cell having a lowest/smallest cell index among the cell indexes of the set of cells). The second column in the first table may be associated with a second cell among the set of cells (e.g., a cell having a second lowest/smallest cell index among the cell indexes of the set of cells). In general, the nth column in the first table may be associated with a nth cell among the set of cells (e.g., a cell having the nth lowest/smallest cell index among the cell indexes of the set of cells). Any other correspondence between cell indexes and column order may be used.

For example, the set of cells may be Cell 1, Cell 2, Cell 3, and Cell 4, as shown in FIG. 19. A row in the first table may be, for example, [0, 1, 1, 0]. The one or more cells (indicated by the row) may be Cell 2 and Cell 3. The row may be, for example, [1, 1, 1, 1]. The one or more cells may be Cell 1, Cell 2, Cell 3, and Cell 4. The row may be, for example, [1, 0, 1, 1]. The one or more cells may be Cell 1, Cell 3 and Cell 4. The row may be, for example, [0, 0, 1, 0]. The one or more cells may be Cell 3. The row may be, for example, [0, 1, 0, 0]. The one or more cells may be Cell 2. The cell indexes may comprise the first cell index of Cell 1, the second cell index of Cell 2, the third cell index of Cell 3, and the fourth cell index of Cell 4. A first cell index of Cell 1 may be lower/smaller than a second cell index of Cell 2, a third cell index of Cell 3, and a fourth cell index of Cell 4. The second cell index of Cell 2 may be lower/smaller than the third cell index of Cell 3 and the fourth cell index of Cell 4. the third cell index of Cell 3 may be lower/smaller than the fourth cell index of Cell 4.

The row indicated by the field (e.g., of the DCI, such as a co-scheduled cell indicator field, scheduled cell indicator field, etc.) may have/comprise/indicate one or more cell indexes of the one or more cells. The row indicated by the field may have/comprise a respective cell index, of the one or more cell indexes, of each cell of the one or more cells. The one or more configuration parameters may indicate, for the one or more cells, the one or more cell indexes. Each cell of the one or more cells may be indicated/identified by a respective cell index of the one or more cell indexes. The DCI may schedule the one or more cells among the set of cells, for example, based on (e.g., by) the row having/comprising the one or more cell indexes of/identifying/indicating the one or more cells.

The DCI may comprise a TCI field (e.g., TCI state field, joint TCI field, joint TCI state field, multipleCellTCI field, multiCellTCI field, TCI field in FIG. 19, etc.). The TCI field may indicate a row (e.g., row 2 in FIG. 19) of the one or more rows in the second table. A value of the TCI field may indicate the row in the second table. The value of the TCI field may indicate a first/starting row (e.g., row 1) in the second table, if the value is equal to zero, for example. The value of the TCI field may indicate a second/second-starting row (e.g., row 2) in the second table, if the value is equal to one, for example. The value of the field may indicate the $(m+1)^{th}$ row (e.g., row m+1) in the second table, if the value is equal to $m$, and so on.

The row in the second table may indicate/comprise, for example, TCI states for/of the set of cells. The row may indicate/comprise, for example, a respective TCI state, of the TCI states, for/of each cell of the set of cells. The one or more configuration parameters may indicate, for the row in the second table, the TCI states.

The row in the second table may indicate/comprise, for example, TCI state indexes for/of the set of cells. The row may indicate/comprise, for example, a respective TCI state index, of the TCI state indexes, for/of each cell of the set of cells. The one or more configuration parameters may indicate, for the row in the second table, the TCI state indexes.

The row in the second table may indicate/comprise, for example, TCI codepoints for/of the set of cells. The row may indicate/comprise, for example, a respective TCI codepoint, of the TCI codepoints, for/of each cell of the set of cells. The one or more configuration parameters may indicate, for the row in the second table, the TCI codepoints. In the example second table 1925 of FIG. 19, if the row in the second table is row 2, the TCI codepoints are TCI codepoint 010 for Cell 1, TCI codepoint 111 for Cell 2, TCI codepoint 101 for Cell 3, and TCI codepoint 000 for Cell 4. If the row in the second table is row N, the TCI codepoints are TCI codepoint 110 for Cell 1, TCI codepoint 010 for Cell 2, TCI codepoint 011 for Cell 3, and TCI codepoint 100 for Cell 4.

Each entry and/or column in the row in the second table may be associated with a respective cell of the set of cells. The columns and/or the entries in the row of/in the second table may be ordered in an ascending and/or descending order of the cell indexes of the set of cells. For example, a first/starting column/entry in the row of/in the second table may be associated with a first cell, among the set of cells, with a lowest/smallest cell index among the cell indexes. A first TCI codepoint, of the TCI codepoints, in (e.g., occurring and/or configured in) the first/starting column/entry in the row of/in the second table may be associated with the first cell. A second column/entry in the row of/in the second table may be associated with a second cell, among the set of cells, with a second lowest/smallest cell index among the cell indexes. A second TCI codepoint, of the TCI codepoints, in( e.g., occurring and/or configured in) the second column/entry in the row of/in the second table may be associated with the second cell. A third column/entry in the row of/in the second table may be associated with a third cell, among the set of cells, with a third lowest/smallest cell index among the cell indexes. A third TCI codepoint, of the TCI codepoints, in (e.g., occurring and/or configured in) the third column/entry in the row of/in the second table is associated with the third cell. A fourth column/entry in the row of/in the second table is associated with a fourth cell, among the set of cells, with a fourth lowest/smallest cell index among the cell indexes. A fourth TCI codepoint, of the TCI codepoints, in/occurring (and/or configured in) the fourth column/entry in the row of/in the second table is associated with the fourth cell. For example, in FIG. 19, if the row in the second table is row 2, TCI codepoint 010 is associated with Cell 1, TCI codepoint 111 is associated with Cell 2, and TCI codepoint 101 is associated with Cell 3. For example, in FIG. 19, if the row in the second table is row N, TCI codepoint 110 is associated with Cell 1, TCI codepoint 010 is associated with Cell 2, TCI codepoint 011 is associated with Cell 3, and TCI codepoint 100 is associated with Cell 4.

The TCI codepoints in the row (e.g., indicated by the DCI) in/of the second table may comprise a first TCI codepoint of (and/or associated with) the cell (e.g., Cell 2). For example, in FIG. 19, the first TCI codepoint is TCI codepoint is 111 for Cell 2 if the row in the second table is row 2. For example, in FIG. 19, the first TCI codepoint is TCI codepoint is 010 for Cell 2 if the row in the second table is row N. For example, in FIG. 19, the first TCI codepoint is TCI codepoint is 010 for Cell 1 if the row in the second table is row 2. For example, in FIG. 19, the first TCI codepoint is TCI codepoint is 001 for Cell 4 if the row in the second table is row (N-1).

A column of the one or more columns in the second table may be associated with the cell. The column associated with the cell may indicate/comprise at least one TCI codepoint of/for the cell. The one or more rows in the second table may comprise/indicate the at least one TCI codepoint. A (e.g., each) row of the one or more rows in the second table may comprise/indicate a (e.g., respective) TCI codepoint of the at least one TCI codepoint. A (e.g., each) TCI codepoint of the at least one TCI codepoint may occur (and/or may be located) in a (e.g., respective) row of the one or more rows in the second table.

For example, in FIG. 19, the column associated with Cell 1 is the first column (e.g., with header Cell 1). The at least one TCI codepoint is TCI codepoint 001 in row 1, TCI codepoint 010 in row 2, ..., TCI codepoint 111 in row (N-1), and TCI codepoint 110 in row N. The column associated with Cell 2 is the second column (e.g., with header Cell 2). The at least one TCI codepoint is TCI codepoint 100 in row 1, TCI codepoint 111 in row 2, ..., TCI codepoint 000 in row (N-1), and TCI codepoint 010 in row N. The column associated with Cell 3 is the third column (e.g., with header Cell 3). The at least one TCI codepoint is TCI codepoint 000 in row 1, TCI codepoint 101 in row 2, ..., TCI codepoint 110 in row (N-1), and TCI codepoint 011 in row N. The column associated with Cell 4 is the fourth column (e.g., with heard Cell 4). The at least one TCI codepoint is TCI codepoint 010 in row 1, TCI codepoint 000 in row 2, ..., TCI codepoint 001 in row (N-1), and TCI codepoint 100 in row N.

The at least one TCI codepoint in the column may comprise the first TCI codepoint associated with the cell. The row of the one or more rows in the second table may comprise/indicate the first TCI codepoint. The column of the one or more columns in the second table may comprise/indicate the first TCI codepoint. The first TCI codepoint of the cell may occur (and/or may be located) in the row of the one or more rows in the second table. The first TCI codepoint of the cell may occur (and/or may be located) in the column of the one or more columns in the second table.

For example, in the example second table 1925 of FIG. 19, the first TCI codepoint is TCI codepoint 111 if the row is row 2 and the column is the second column (e.g., with Cell 2). For example, the first TCI codepoint is TCI codepoint 010 if the row is row 2 and the column is the first column (e.g., with Cell 1). For example, the first TCI codepoint is TCI codepoint 001 if the row is row (N-1) and the column is the fourth column (e.g., with Cell 4),. For example, the first TCI codepoint is TCI codepoint 010 if the row is row N and the column is the second column (e.g., with Cell 2). For example, the first TCI codepoint is TCI codepoint 110 if the row is row (N-1) and the column is the third column (e.g., with Cell 3). For example, the first TCI codepoint is TCI codepoint 100 if the row is row N and the column is the fourth column (e.g., with Cell 4).

The one or more TCI codepoints activated/indicated for the cell (e.g., by the activation command) may comprise/have the first TCI codepoint for/of the cell. The one or more TCI codepoints may comprise the first TCI codepoint, of the cell, in the row in/of the second table. A maximum TCI codepoint of the one or more TCI codepoints may be equal to or greater/higher than the first TCI codepoint (of the cell in the row of the second table).

For example, in the example of FIG. 19, the one or more TCI codepoints indicated by the activation command for the cell may be TCI codepoint 000, TCI codepoint 001, TCI codepoint 010, TCI codepoint 011, TCI codepoint 100, and TCI codepoint 111. If the cell is Cell 2 and the row in the second table is row N, the TCI codepoint in the row of/in the second table is TCI codepoint is 010, which is among the one or more TCI codepoints of Cell 2 (and/or an active downlink/uplink BWP of Cell 2). The maximum TCI codepoint of the one or more TCI codepoints is TCI codepoint 111, which is greater than TCI codepoint is 010 in row N. For example, if the cell is Cell 2 and the row in the second table is row 2, the first TCI codepoint in the row of/in the second table is TCI codepoint is 111, which is among the one or more TCI codepoints of Cell 2 (and/or an active downlink/uplink BWP of Cell 2). The maximum TCI codepoint of the one or more TCI codepoints is TCI codepoint 111, which is equal to the TCI codepoint 111 in the row 2.

For example, the TCI codepoint in the row of/in the second table is TCI codepoint is 101 if the cell is Cell 3 and the row in the second table is row 2. The TCI codepoint 101 may be among TCI codepoint(s) of (and/or activated/indicated for) Cell 3.

The first TCI codepoint may comprise/have/correspond to/map to a first TCI state index indicating/identifying a first TCI state. The activation command may indicate mapping of the first TCI state index to the first TCI codepoint. The subset of TCI states may comprise the first TCI state in/indicated by the first TCI codepoint. The subset of TCI state indexes may comprise the first TCI state index of the first TCI state.

The first TCI state may comprise/indicate/have a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD). The one or more configuration parameters may indicate, a first reference signal index indicating/identifying the first reference signal, for the first TCI state. The one or more configuration parameters may indicate, for the first TCI state, the first reference signal. The one or more configuration parameters may indicate, for the first TCI state, the first quasi co-location type.

The wireless device may apply the first TCI state indicated by (and/or mapped to or in) the first TCI codepoint to the first uplink transmission of/via the cell. The wireless device may apply the first TCI state indicated by (and/or mapped to or in) the first TCI codepoint to the first uplink transmission of/via the uplink BWP of the cell. Applying the first TCI state to the first uplink transmission may comprise sending (e.g., transmitting)/performing the first uplink transmission based on the first TCI state.

The wireless device may apply the first TCI state indicated by (and/or mapped to or in) the first TCI codepoint to the first uplink transmission, for example, based on the one or more TCI codepoints comprising the first TCI codepoint in the row in/of the second table. The wireless device may apply the first TCI state to the first uplink transmission, for example, based on the maximum TCI codepoint of the one or more TCI codepoints being equal to or greater than the first TCI codepoint.

The first uplink transmission may comprise/be, for example, a first PUSCH transmission. The first uplink transmission may comprise/be, for example, a first PUCCH transmission. The first uplink transmission may comprise/be, for example, a first SRS transmission. The first uplink transmission may comprise/be transmission of a first uplink signal/channel (e.g., PUSCH, PUCCH, SRS).

The wireless device may send (e.g., transmit) the first uplink transmission based on the first TCI state. The wireless device may send (e.g., transmit) the first uplink transmission based on the first TCI state, for example, based on (e.g., in response to) applying the first TCI state to the first uplink transmission. The wireless device may send (e.g., transmit) the first uplink transmission with/using a first transmission power determined based on the first TCI state. The wireless device may determine/calculate/compute the first transmission power based on the first TCI state. The wireless device may determine/calculate/compute the first transmission power based on one or more first power control parameters (e.g., target received power, pathloss compensation factor, closed-loop index, pathloss reference signal) associated with (and/or mapped to or indicated by or included in) the first TCI state. For example, the one or more configuration parameters may indicate, for the first TCI state, the one or more first power control parameters. The wireless device may send (e.g., transmit) the first uplink transmission with/using a first spatial domain transmission/transmit filter/beam determined based on the first TCI state. The wireless device may determine the first spatial domain transmission/transmit filter/beam based on the first TCI state.

The wireless device may send (e.g., transmit) the first uplink transmission with the first spatial domain transmission/transmit filter/beam determined based on the first reference signal indicated by (and/or in or associated with) the first TCI state. The wireless device may transmit the first uplink transmission with the first spatial domain transmission/transmit filter/beam that is the same (and/or substantially same) as a first spatial domain receiving/receive/reception filter/beam used for reception/measurement of the first reference signal indicated by (and/or in and/or associated with) the first TCI state. The wireless device may receive/measure the first reference signal with (and/or using) the first spatial domain receiving/receive/reception filter/beam. The wireless device may determine the first spatial domain transmission/transmit filter/beam of the first uplink transmission based on the first spatial domain receiving/receive/reception filter/beam of the first reference signal. The first spatial domain transmission/transmit filter/beam and the first spatial domain receiving/receive/reception filter/beam may be, for example, the same. The first spatial domain transmission/transmit filter/beam and the first spatial domain receiving/receive/reception filter/beam may be, for example, substantially the same (e.g., 1 degree apart, 2 degrees apart, 5 degrees apart, and the like, for example, due to imperfect channel estimation and/or imperfect beam correspondence). At least one DM-RS antenna port of the first uplink transmission may be quasi co-located with the first reference signal indicated by the first TCI state.

The wireless device may apply the first TCI state indicated by (and/or mapped to or in) the first TCI codepoint to the first downlink reception of/via the cell. The wireless device may apply the first TCI state indicated by (and/or mapped to or in) the first TCI codepoint to the first downlink reception of/via the active downlink BWP of the cell. Applying the first TCI state to the first downlink reception may comprise receiving/performing the first downlink reception based on the first TCI state. Applying the first TCI state to the first downlink reception may comprise receiving/performing each downlink reception of the first downlink reception based on the first TCI state.

The wireless device may apply the first TCI state indicated by (and/or mapped to or in) the first TCI codepoint to the first downlink reception, for example, based on the one or more TCI codepoints comprising the first TCI codepoint in the row in/of the second table. The wireless device may apply the first TCI state to the first downlink reception, for example, based on the maximum TCI codepoint of the one or more TCI codepoints being equal to or greater than the first TCI codepoint. The first downlink reception may comprise/be, for example, a first PDSCH reception. The first downlink reception may comprise/be, for example, a first PDCCH reception. The first downlink reception may comprise/be, for example, a first CSI-RS reception. The first downlink reception may comprise/be reception of a first downlink signal/channel (e.g., PDSCH, PDCCH, CSI-RS).

The wireless device may receive the first downlink reception based on the first TCI state. The wireless device may receive the first downlink reception based on the first TCI state, for example, based on (e.g., in response to, by) applying the first TCI state to the first downlink reception. The wireless device may receive the first downlink reception with/using a first spatial domain receiving/receive/reception filter/beam determined based on the first TCI state. The wireless device may determine the first spatial domain receiving/receive/reception filter/beam based on the first TCI state.

The wireless device may receive the first downlink reception with the first spatial domain receiving/receive/reception filter/beam determined based on the first reference signal indicated by (and/or in or associated with) the first TCI state. The wireless device may receive the first downlink reception with the first spatial domain receiving/receive/reception filter/beam that is the same (and/or substantially same) as a spatial domain receiving/receive/reception filter/beam used for reception/measurement of the first reference signal indicated by (and/or in and/or associated with) the first TCI state. The wireless device may receive/measure the first reference signal with (and/or using) the spatial domain receiving/receive/reception filter/beam. The wireless device may determine the first spatial domain receiving/receive/reception filter/beam of the first downlink reception based on the spatial domain receiving/receive/reception filter/beam of the first reference signal. The first spatial domain receiving/receive/reception filter/beam and the spatial domain receiving/receive/reception filter/beam may be, for example, the same. The first spatial domain receiving/receive/reception filter/beam and the spatial domain receiving/receive/reception filter/beam may be, for example, substantially the same (e.g., 1 degree apart, 2 degrees apart, 5 degrees apart, and the like, for example, due to imperfect channel estimation and/or imperfect beam correspondence).

At least one DM-RS antenna port of the first downlink reception may be quasi co-located with the first reference signal indicated by the first TCI state. The at least one DM-RS antenna port of the first downlink reception may be quasi co-located with the first reference signal with respect to the first quasi co-location type indicated by the first TCI state.

The wireless device may receive a control command (e.g., control command 1930 at time T1 in FIG. 19). The control command may be, for example, a MAC-CE (e.g., TCI table activation MAC-CE, TCI table update MAC-CE, TCI codepoint table activation MAC-CE, TCI codepoint table update MAC-CE, and the like). The control command may be, for example, a first DCI.

The control command may indicate an update (e.g., modification and/or replacement) of the first TCI codepoint in the second table. The control command may indicate the update of the first TCI codepoint with/to a second TCI codepoint (e.g., underlined codepoints in updated example second table 1935 in FIG. 19). The control command may indicate update of the first TCI codepoint of the cell with/to the second TCI codepoint The control command may indicate update of the first TCI codepoint (e.g., occurring and/or located in the row of the second table) with/to the second TCI codepoint. The control command may indicate update of the first TCI codepoint (e.g., occurring and/or located in the column of the second table) with/to the second TCI codepoint. The control command may indicate update of the first TCI codepoint (e.g., occurring and/or located in the row and the column of the second table) with/to the second TCI codepoint. The control command may indicate a replacement/override/overwrite of the first TCI codepoint with the second TCI codepoint.

The wireless device may update the first TCI codepoint in the second table with/to the second TCI codepoint, for example, based on receiving the control command. The wireless device may replace/override/overwrite the first TCI codepoint in the second table with the second TCI codepoint, for example, based on receiving the control command.

The second TCI codepoint may occur and/or may be located in the row of the one or more rows in the second table. The second TCI codepoint may occur and/or be located in the row, for example, based on updating the first TCI codepoint in the second table with/to the second TCI codepoint. The second TCI codepoint may occur and/or may be located in the column of the one or more columns in the second table. The second TCI codepoint may occur and/or be located in the column, for example, based on updating the first TCI codepoint in the second table with/to the second TCI codepoint. The second TCI codepoint may occur and/or may be located in the row and the column of the second table. The second TCI codepoint may occur and/or may be located in the row and the column of the second table, for example, based on updating the first TCI codepoint in the second table with/to the second TCI codepoint. The first TCI codepoint may not occur and/or be located) in the row and/or the column of the second table, for example, based on (e.g., after) updating the first TCI codepoint in the second table with/to the second TCI codepoint.

For example, in FIG. 19, the first TCI codepoint is TCI codepoint 111 at row 2, second column (e.g., with Cell 2), before updating in the original example second TCI state table 1925. The second TCI codepoint is TCI codepoint 001 at row 2, second column (e.g., with Cell 2) in the updated example second TCI state table 1935 (e.g., underlined in the updated example second TCI state table 1935). For example, the first TCI codepoint is TCI codepoint 010 at row 2, first column (e.g., with Cell 1), before updating in the original example second TCI state table 1925. The second TCI codepoint is TCI codepoint 111 at row 2, first column (e.g., with Cell 1) in the updated example second TCI state table 1935 (e.g., underlined in the updated example second TCI state table 1935). For example, the first TCI codepoint is TCI codepoint 001 at row N-1, fourth column (e.g., with Cell 4) before updating in the original example second TCI state table 1925. The second TCI codepoint is TCI codepoint 101 at row N-1, fourth column (e.g., with Cell 4) in the updated example second TCI state table 1935 (e.g., underlined in the updated example second TCI state table 1935). For example, the first TCI codepoint is TCI codepoint 010 at row N, second column (e.g., with Cell 2) before updating in the original example second TCI state table 1925. The second TCI codepoint is TCI codepoint 110 at row N, second column (e.g., with Cell 2) in the updated example second TCI state table 1935 (e.g., underlined in the updated example second TCI state table 1935).

The one or more TCI codepoints activated/indicated for the cell (e.g., by the activation command) may comprise the second TCI codepoint of the cell. The one or more TCI codepoints may comprise the second TCI codepoint, of the cell, in the row in/of the second table (e.g., in the updated second table, such as updated examples second table 1935). A maximum TCI codepoint of the one or more TCI codepoints may be equal to or greater/higher than the second TCI codepoint.

The second TCI codepoint may comprise a second TCI state index indicating/identifying a second TCI state. The activation command may indicate mapping of the second TCI state index to the second TCI codepoint. The subset of TCI states may comprise the second TCI state in the second TCI codepoint. The subset of TCI state indexes may comprise the second TCI state index of the second TCI state.

The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD). The one or more configuration parameters may indicate a second reference signal index indicating/identifying the second reference signal for the second TCI state. The one or more configuration parameters may indicate, for the second TCI state, the second reference signal. The one or more configuration parameters may indicate, for the second TCI state, the second quasi co-location type.

The wireless device may receive the DCI (e.g., DCI format 1_X or DCI format 0_X) scheduling the one or more cells, for example, before (and/or prior to and/or without) receiving the control command (e.g., indicating update of the first TCI codepoint to/with the second TCI codepoint). The wireless device may apply the first TCI state indicated by (and/or mapped to or in) the first TCI codepoint to the first uplink transmission of/via the cell. The wireless device may apply the first TCI state to the first uplink transmission, for example, before (and/or prior to and/or without) receiving the control command indicating update of the first TCI codepoint to/with the second TCI codepoint. The wireless device may apply the first TCI state indicated by (and/or mapped to or in) the first TCI codepoint to the first downlink reception of/via the cell, for example, before (and/or prior to and/or without) receiving the control command indicating update of the first TCI codepoint to/with the second TCI codepoint. The wireless device may send (e.g., transmit), based on the first TCI state indicated by (and/or mapped to or in) the first TCI codepoint, the first uplink transmission of/via the cell, for example, before (and/or prior to and/or without) receiving the control command indicating update of the first TCI codepoint to/with the second TCI codepoint. The wireless device may receive, based on the first TCI state indicated by (and/or mapped to or in) the first TCI codepoint, the first downlink reception of/via the cell, for example, before (and/or prior to and/or without) receiving the control command indicating update of the first TCI codepoint to/with the second TCI codepoint.

The wireless device may apply the first TCI state indicated by (and/or mapped to or in) the first TCI codepoint to the first uplink transmission of/via the cell, for example, before (and/or prior to) an application time (e.g., beam application time, MAC-CE application time) of the control command (e.g., indicating update of the first TCI codepoint to/with the second TCI codepoint). The wireless device may apply the first TCI state indicated by (and/or mapped to or in) the first TCI codepoint to the first downlink reception of/via the cell, for example, before (and/or prior to) an application time (e.g., beam application time, MAC-CE application time) of the control command indicating update of the first TCI codepoint to/with the second TCI codepoint.

The wireless device may send (e.g., transmit) the first uplink transmission of/via the cell, for example, before (and/or prior to) an application time (e.g., beam application time, MAC-CE application time) of the control command indicating update of the first TCI codepoint to/with the second TCI codepoint. The first uplink transmission may be sent before (and/or prior to) the application time based on the first TCI state indicated by (and/or mapped to or in) the first TCI codepoint. The wireless device may receive the first downlink reception of/via the cell, for example, before (and/or prior to) an application time (e.g., beam application time, MAC-CE application time) of the control command indicating update of the first TCI codepoint to/with the second TCI codepoint. The first downlink reception may be received before (and/or prior to) the application time based on the first TCI state indicated by (and/or mapped to or in) the first TCI codepoint. The application time may be and/or occur over a time duration/period after transmission of the control command (e.g., HARQ-ACK, such as ACK/NACK).

The DCI may schedule a second uplink transmission (e.g., a second PUSCH transmission) of the one or more uplink transmissions for the cell of the one or more cells. The DCI may schedule a second downlink reception (e.g., a second PDSCH reception) of the one or more downlink receptions for the cell of the one or more cells. The wireless device may apply the second TCI state indicated by (and/or mapped to or in) the second TCI codepoint to the second uplink transmission of/via the cell. The wireless device may apply the second TCI state indicated by (and/or mapped to or in) the second TCI codepoint to second uplink transmission of/via the uplink BWP of the cell. Applying the second TCI state to the second uplink transmission may comprise sending (e.g., transmitting)/performing the second uplink transmission based on the second TCI state.

The wireless device may apply the second TCI state indicated by (and/or mapped to or in) the second TCI codepoint to the second uplink transmission, for example, based on the one or more TCI codepoints comprising the second TCI codepoint in the row in/of the second table. The wireless device may apply the second TCI state to the second uplink transmission, for example, based on the maximum TCI codepoint of the one or more TCI codepoints being equal to or greater than the second TCI codepoint. The second uplink transmission may comprise/be, for example, a second PUSCH transmission. The second uplink transmission may comprise/be, for example, a second PUCCH transmission. The second uplink transmission may comprise/be, for example, a second SRS transmission. The second uplink transmission may comprise/be transmission of a second uplink signal/channel (e.g., PUSCH, PUCCH, SRS).

The wireless device may send (e.g., transmit) the second uplink transmission based on the second TCI state. The wireless device may send (e.g., transmit) the second uplink transmission based on the second TCI state, for example, based on (e.g., in response to, by) applying the second TCI state to the second uplink transmission. The wireless device may send (e.g., transmit) the second uplink transmission with/using a second transmission power determined based on the second TCI state. The wireless device may determine/calculate/compute the second transmission power based on the second TCI state. The wireless device may determine/calculate/compute the second transmission power based on one or more second power control parameters (e.g., target received power, pathloss compensation factor, closed-loop index, pathloss reference signal) associated with (e.g., mapped to, indicated by, included in) the second TCI state. For example, the one or more configuration parameters may indicate, for the second TCI state, the one or more second power control parameters. The wireless device may send (e.g., transmit) the second uplink transmission with/using a second spatial domain transmission/transmit filter/beam determined based on the second TCI state. The wireless device may determine the second spatial domain transmission/transmit filter/beam based on the second TCI state.

The wireless device may send (e.g., transmit) the second uplink transmission with the second spatial domain transmission/transmit filter/beam determined based on the second reference signal indicated by (and/or in and/or associated with) the second TCI state. The wireless device may send (e.g., transmit) the second uplink transmission with the second spatial domain transmission/transmit filter/beam, which may be the same (and/or substantially same) as a second spatial domain receiving/receive/reception filter/beam used for reception/measurement of the second reference signal indicated by (and/or in or associated with) the second TCI state. The wireless device may receive/measure the second reference signal with (and/or using) the second spatial domain receiving/receive/reception filter/beam. The wireless device may determine the second spatial domain transmission/transmit filter/beam of the second uplink transmission based on the second spatial domain receiving/receive/reception filter/beam of the second reference signal. The second spatial domain transmission/transmit filter/beam and the second spatial domain receiving/receive/reception filter/beam may be, for example, the same. The second spatial domain transmission/transmit filter/beam and the second spatial domain receiving/receive/reception filter/beam may be, for example, substantially the same (e.g., 1 degree apart, 2 degrees apart, 5 degrees apart, and the like, for example, due to imperfect channel estimation and/or imperfect beam correspondence). At least one DM-RS antenna port of the second uplink transmission may be quasi co-located with the second reference signal indicated by the second TCI state.

The wireless device may apply the second TCI state indicated by (and/or mapped to or in) the second TCI codepoint to the second downlink reception of/via the cell. The wireless device may apply the second TCI state indicated by (and/or mapped to or in) the second TCI codepoint to the second downlink reception of/via the active downlink BWP of the cell. Applying the second TCI state to the second downlink reception may comprise receiving/performing the second downlink reception based on the second TCI state.

The wireless device may apply the second TCI state indicated by (and/or mapped to or in) the second TCI codepoint to the second downlink reception. The wireless device may apply the second TCI state to the second downlink reception, for example, based on the one or more TCI codepoints comprising the second TCI codepoint in the row in/of the second table. The wireless device may apply the second TCI state to the second downlink reception, for example, based on the maximum TCI codepoint of the one or more TCI codepoints being equal to or greater than the second TCI codepoint. The second downlink reception may comprise/be, for example, a second PDSCH reception. The second downlink reception may comprise/be, for example, a second PDCCH reception. The second downlink reception may comprise/be, for example, a second CSI-RS receptions. The second downlink reception may comprise/be reception of a second downlink signal/channel (e.g., PDSCH, PDCCH, CSI-RS).

The wireless device may receive the second downlink reception based on the second TCI state. The wireless device may receive the second downlink reception based on the second TCI state, for example, based on (e.g., in response to, by) applying the second TCI state to the second downlink reception. The wireless device may receive the second downlink reception with/using a second spatial domain receiving/receive/reception filter/beam determined based on the second TCI state. The wireless device may determine the second spatial domain receiving/receive/reception filter/beam based on the second TCI state.

The wireless device may receive the second downlink reception with the second spatial domain receiving/receive/reception filter/beam determined based on the second reference signal indicated by (and/or in or associated with) the second TCI state. The wireless device may receive the second downlink reception with the second spatial domain receiving/receive/reception filter/beam that is the same (and/or substantially same) as a spatial domain receiving/receive/reception filter/beam used for reception/measurement of the second reference signal indicated by (and/or in or associated with) the second TCI state. The wireless device may receive/measure the second reference signal with (and/or using) the spatial domain receiving/receive/reception filter/beam. The wireless device may determine the second spatial domain receiving/receive/reception filter/beam of the second downlink reception based on the spatial domain receiving/receive/reception filter/beam of the second reference signal. The second spatial domain receiving/receive/reception filter/beam and the spatial domain receiving/receive/reception filter/beam may be, for example, the same. The second spatial domain receiving/receive/reception filter/beam and the spatial domain receiving/receive/reception filter/beam may be, for example, substantially the same (e.g., 1 degree apart, 2 degrees apart, 5 degrees apart, and the like, for example, due to imperfect channel estimation and/or imperfect beam correspondence).

At least one DMRS antenna port of the second downlink reception may be quasi co-located with the second reference signal indicated by the second TCI state. The at least one DMRS antenna port of the second downlink reception may be quasi co-located with the second reference signal with respect to the second quasi co-location type indicated by the second TCI state.

The wireless device may receive the DCI (e.g., DCI format 1_X or DCI format 0_X) scheduling the one or more cells, for example, after (e.g., based on) receiving the control command indicating update of the first TCI codepoint to/with the second TCI codepoint. The wireless device may apply the second TCI state indicated by (and/or mapped to or in) the second TCI codepoint to the second uplink transmission of/via the cell, for example, after (e.g., based on) receiving the control command indicating update of the first TCI codepoint to/with the second TCI codepoint. The wireless device may apply the second TCI state indicated by (and/or mapped to or in) the second TCI codepoint to the second downlink reception of/via the cell, for example, after (e.g., based on) receiving the control command indicating update of the first TCI codepoint to/with the second TCI codepoint. The wireless device may send (e.g., transmit), based on the second TCI state indicated by (and/or mapped to or in) the second TCI codepoint, the second uplink transmission of/via the cell, for example, after (e.g., based on) receiving the control command indicating update of the first TCI codepoint to/with the second TCI codepoint. The wireless device may receive, based on the second TCI state indicated by (and/or mapped to or in) the second TCI codepoint, the second downlink reception of/via the cell, for example, after (e.g., based on) receiving the control command indicating update of the first TCI codepoint to/with the second TCI codepoint.

The wireless device may apply the second TCI state indicated by (and/or mapped to or in) the second TCI codepoint to the second uplink transmission of/via the cell, for example, after (e.g., based on) an application time (e.g., beam application time, MAC-CE application time) of the control command indicating update of the first TCI codepoint to/with the second TCI codepoint. The wireless device may apply the second TCI state indicated by (and/or mapped to or in) the second TCI codepoint to the second downlink reception of/via the cell, for example, after (e.g., based on) an application time (e.g., beam application time, MAC-CE application time) of the control command indicating update of the first TCI codepoint to/with the second TCI codepoint.

The wireless device may send (e.g., transmit), based on the second TCI state indicated by (and/or mapped to or in) the second TCI codepoint, the second uplink transmission of/via the cell, for example, after an application time (e.g., beam application time, MAC-CE application time) of the control command indicating update of the first TCI codepoint to/with the second TCI codepoint. The wireless device may receive, based on the second TCI state indicated by (and/or mapped to or in) the second TCI codepoint, the second downlink reception of/via the cell, for example, after an application time (e.g., beam application time, MAC-CE application time) of the control command indicating update of the first TCI codepoint to/with the second TCI codepoint. The application time may be and/or occur over a time duration/period after transmission of the control command (e.g., HARQ-ACK, such as ACK/NACK).

FIG. 20A, FIG. 20B, FIG. 21, and FIG. 22 show examples of control command(s) (e.g., TCI update command(s)) in multi-cell scheduling. The control command(s) may be TCI update command(s) for updating a TCI state/codepoint, as described herein. The control command (e.g. control command 1930 received at time T1 in FIG. 19) may comprise a plurality of fields.

A first field of the plurality of fields of the control command may comprise the cell set index indicating/identifying the set of cells (e.g., Cell Set ID in FIG. 20A, FIG. 20B, FIG. 21, and FIG. 22). For example, the control command may indicate (and/or may be applicable for) the first set of cells if the first field is set/equal to the first cell set index (e.g., 0). The control command may indicate (and/or may be applicable for) the second set of cells if the first field is set/equal to the second cell set index (e.g., 1).

A second field of the plurality of fields of the control command may comprise/indicate a PUCCH group among the first PUCCH group and the second PUCCH group (e.g., PUCCH group ID in FIG. 20A, FIG. 20B, FIG. 21, and FIG. 22). The second field may comprise/indicate the PUCCH group that the set of cells indicated by the first field is associated with (and/or belongs to). For example, a first value (e.g., 0) of the second field may indicate the first PUCCH group. A second value (e.g., 1) of the second field may indicate the second PUCCH group. The length of the second field may be 1 bit.

The length of the first field may be a first length (e.g., 2 bits). The length of the first field may be the first length (e.g., 2 bits), for example, based on the control command comprising the second field. The control command may not comprise the second field. The second field may be absent in/from the control command. The length of the first field a second length (e.g., 3 bits). The length of the first field the second length (e.g., 3 bits), for example, based on the control command not comprising the second field.

The length of the first field may be based on a number of the one or more sets of cells. The length of the first field may be Ceil (log2(N)), where N is the number of the one or more sets of cells. The length of the first field may be based on a maximum of the number of the one or more first sets of cells in the first PUCCH group and the number of the one or more second sets of cells in the second PUCCH group. The length of the first field may be max {Ceil (log2(N1), Ceil (log2(N2)), where N1 is the number of the one or more first sets of cells and N2 is the number of the one or more second sets of cells.

FIG. 20A shows an example control command for multi-cell scheduling, as described herein. The control command may comprise a plurality of fields. A third field (e.g., Column $ID_1$ in FIG. 20A) of the plurality of fields of the control command may comprise/indicate a column index. The column index may indicate/identify the column in the second table. The column index may indicate the cell, among the set of cells, with the lowest (n+1)-th cell index if the column index is set/equal to n (e.g., where n = 0, 1, 2,...). For example, the column may be the first column (e.g., with Cell 1 in FIG. 19) if the column index is set/equal to a first value (e.g., 00). The column index set/equal to the first value may be associated with Cell 1 (e.g., the cell with the lowest cell index). The column may be the second column (e.g., with Cell 2 in FIG. 19) if the column index is set/equal to a second value (e.g., 01). The column index set/equal to the second value may be associated with Cell 2 (e.g., the cell with the second lowest cell index). The column may be the third column (e.g., with Cell 3 in FIG. 19) if the column index is set/equal to a third value (e.g., 10). The column index set/equal to the third value may be associated with Cell 3 with the third lowest cell index. The column may be the fourth column (e.g., with Cell 4 in FIG. 19) if the column index is set/equal to a fourth value (e.g., 11). The column index set/equal to the fourth value may be associated with Cell 4 with the fourth lowest cell index.

The length of the third field may be a third length (e.g., 2 bits). The length of the third field may be based on a number cells in the set of cells. The length of the third field may be Ceil (log2(N)), where N is the number cells in the set of cells. The length of the third field may be based on a maximum number cells in the one or more sets of cells. The length of the third field may be max{Ceil (log2(N1), Ceil (log2(N2), (log2(N3), ...), where N1 is the number of cells in the first set of cells, N2 is the number of cells in the second set of cells, and N3 is the number of cells in a third set of cells of the one or more sets of cells, and so on.

A fourth field of the plurality of fields of the control command may comprise/indicate a row index indicating/identifying the row in the second table (e.g., Row ID1 in FIG. 20A). The row index may indicate a (n+1)-th row in the second table if the row index is set/equal to n (e.g.,,, where n = 0, 1,2,...). The row may be the first row (e.g., row 1 in FIG. 19) in the second table, for example, if the row index is set/equal to a first value (e.g., 0000). The row may be the second row (e.g., row 2 in FIG. 19) in the second table, for example, if the row index is set/equal to a second value (e.g., 0001), and so on.

The length of the fourth field may be a fourth length (e.g., 4 bits). The length of the fourth field may be based on a number of the one or more rows in the second table. The length of the third field may be Ceil (log2(N)), where N is the number of the one or more rows in the second table.

The column indicated by the third field of the control command and the row indicated by the fourth field of the control command may comprise the first TCI codepoint. The column indicated by the third field of the control command and the row indicated by the fourth field of the control command may comprise the first TCI codepoint of the cell of/among the set of cells indicated by the first field of the control command.

A fifth field of the plurality of fields of the control command may comprise/indicate the second TCI codepoint (e.g., TCI Codepoint $ID_1$ in FIG. 20A). The second TCI codepoint may be TCI codepoint 111, for example, if the fifth field is set/equal to 111. The second TCI codepoint may be TCI codepoint 110, for example, if the fifth field is set/equal to 110. The second TCI codepoint may be TCI codepoint 001, for example, if the fifth field is set/equal to 001. The second TCI codepoint may be TCI codepoint 101, for example, if the fifth field is set/equal to 101.

The control command (e.g., as in FIG. 20A) may be configured to update a first TCI codepoint that occurs and/or is located in the column indicated by the third field and the row indicated by the fourth field of the control command. The control command may be configured to update (e.g., modify, replace, override, overwrite) the first TCI code point with/to the second TCI codepoint indicated by the fifth field.

A sixth field of the plurality of fields of the control command may comprise/indicate presence or absence of a third TCI codepoint (e.g., the A field in FIG. 20A may indicate the presence or absence of a third codepoint TCI Codepoint $ID_2$ - not shown in FIG. 20A) in the control command. The sixth field may indicate presence or absence of a second row index (e.g., Row $ID_2$ - not shown in FIG. 20A) in the control command.

The sixth field may indicate presence or absence of a second column index (e.g., Column $ID_2$) in the control command. The sixth field may be set/equal to a first value (e.g., 0). The first value of the sixth field may indicate absence of a third TCI codepoint in the control command. The control command may not comprise a third TCI codepoint based on the sixth field being set/equal to the first value and/or if the sixth field is set/equal to the first value. The first value of the sixth field may indicate absence of a second row index in the control command. The control command may not comprise a second row index based on the sixth field being set/equal to the first value. The first value of the sixth field may indicate absence of a second column index in the control command. The control command may not comprise a second column index based on the sixth field being set/equal to the first value and/or if the sixth field is set/equal to the first value.

The sixth field may be set/equal to a second value (e.g., 1). The second value of the sixth field may indicate a presence of the third TCI codepoint in the control command. The control command may comprise the third TCI codepoint based on the sixth field being set/equal to the second value and/or if the sixth field is set/equal to the second value. The second value of the sixth field may indicate presence of the second row index in the control command. The control command may comprise the second row index based on the sixth field being set/equal to the second value and/or if the sixth field is set/equal to the second value. The second value of the sixth field may indicate presence of the second column index in the control command. The control command may comprise the second column index based on the sixth field being set/equal to the second value and/or if the sixth field is set/equal to the second value.

The wireless device may update a fourth TCI codepoint with/to the third TCI codepoint. The fourth TCI codepoint may occur (and/or be located located) in a second column indicated by the second column index and a second row indicated by the second row index. The second table may comprise the fourth TCI codepoint. The second column and the second row of the second table may comprise the fourth TCI codepoint. The wireless device may update the fourth TCI codepoint with/to the third TCI codepoint, for example, based on the sixth field of the control command being set/equal to the second value.

The control command may be identified by a MAC subheader. The MAC subheader may comprise a LCID. The control command may have a fixed size. The control command may have a variable size.

The length of a field, in the control command, for the TCI state indexes may be based on whether the control command comprises TCI state indexes. The control command may not comprise TCI state indexes. The length of the field, in the control command, for the TCI state indexes may be 7 bits (e.g., if 128 TCI states indicated by the one or more configuration parameters). The wireless device may be activated/indicated with 8 TCI codepoints. The length of a field, in the control command, for the TCI codepoints may be 3 bits. Using TCI codepoints (e.g., instead of TCI states) in the control command may reduce a size of the control command. Reducing a size of the control command may lead to less overhead and/or more robustness. A seventh field of the plurality of fields of the control command may comprise/indicate/be one or more reserved bits (e.g., R in FIG. 20A).

FIG. 20B shows an shows an example control command for multi-cell scheduling, as described herein. The control command may comprise/indicate a plurality of TCI codepoints (e.g., TCI Codepoint $ID_1$, TCI Codepoint $ID_2$, ..., TCI Codepoint $ID_{M-1}$, TCI Codepoint $ID_M$ in FIG. 20B). A number/quantity of TCI codepoints in the plurality of TCI codepoints (e.g., M in FIG. 20B) may be equal to/based on a number/quantity of the one or more rows in the second table and/or (e.g., multiplied by) a number/quantity of the one or more columns in the second table (e.g., M = N*4 for/in FIG. 19).

A (e.g., each) TCI codepoint of the plurality of TCI codepoints may be associated with (and/or correspond to) a (e.g., respective) row and column in the second table. The plurality of TCI codepoints may comprise the second TCI codepoint. The second TCI codepoint may be associated with the row and the column that comprise the first TCI codepoint. The wireless device may update the first TCI codepoint (e.g., that occurs and/or is located in the column and the row) with/to the second TCI codepoint. The first TCI codepoint may be updated to the second TCI codepoint, for example, based on the control command comprising the second TCI codepoint associated with the row and the column comprising the first TCI codepoint.

The control command may comprise/include the plurality of TCI codepoints in an order based on cell indexes of the set of cells. For example, the TCI codepoints may be in an ascending order based on the cell indexes of the set of cells. The control command may comprise/include, in an ascending order based on cell/column indexes of the set of cells in/for each row of the second table, respective TCI codepoints of the plurality of TCI codepoints (e.g., first cell/column index then row index).

For example, FIG. 19 shows an example the second table comprise N rows. In an example (e.g., for ease of discussion), N may be 4. The second table may comprise a first row (e.g., row 1), a second row (e.g., row 2), a third row (e.g., row 3), and a fourth row (e.g., row 4). The second table may comprise a first column (e.g., column with Cell 1), a second column (e.g., column with Cell 2), a third column (e.g., column with Cell 3), and a fourth column (e.g., column with Cell 4).

TCI Codepoint $ID_1$ in FIG. 20B may be associated with the first row (e.g., row 1) and the first column (e.g., column with Cell 1). TCI Codepoint $ID_2$ in FIG. 20B may be associated with the first row (e.g., row 1) and the second column (e.g., column with Cell 2). TCI Codepoint $ID_{M-1}$ in FIG. 20B may be associated with the fourth row (e.g., row 4) and the third column (e.g., column with Cell 3). TCI Codepoint IDM in FIG. 20B may be associated with the fourth row (e.g., row 4) and the fourth column (e.g., column with Cell 4).

The control command may comprise/include the plurality of TCI codepoints in an order based on row indexes and/or column indexes in the second table. The plurality of TCI codepoints may be in an ascending order based on row indexes in the second table. The control command may comprise/include, for each column of the second table, TCI codepoints in the column in an ascending order based on row indexes of the one or more rows in the second table (e.g., first row index then cell/column index).

TCI Codepoint $ID_1$ in FIG. 20B may be associated with the first row (e.g., row 1) and the first column (e.g., column with Cell 1). TCI Codepoint $ID_2$ in FIG. 20B may be associated with the second row (e.g., row 2) and the first column (e.g., column with Cell 1). TCI Codepoint $ID_{M-1}$ in FIG. 20B may be associated with the third row (e.g., row 3) and the fourth column (e.g., column with Cell 4). TCI Codepoint $ID_M$ in FIG. 20B may be associated with the fourth row (e.g., row 4) and the fourth column (e.g., column with Cell 4).

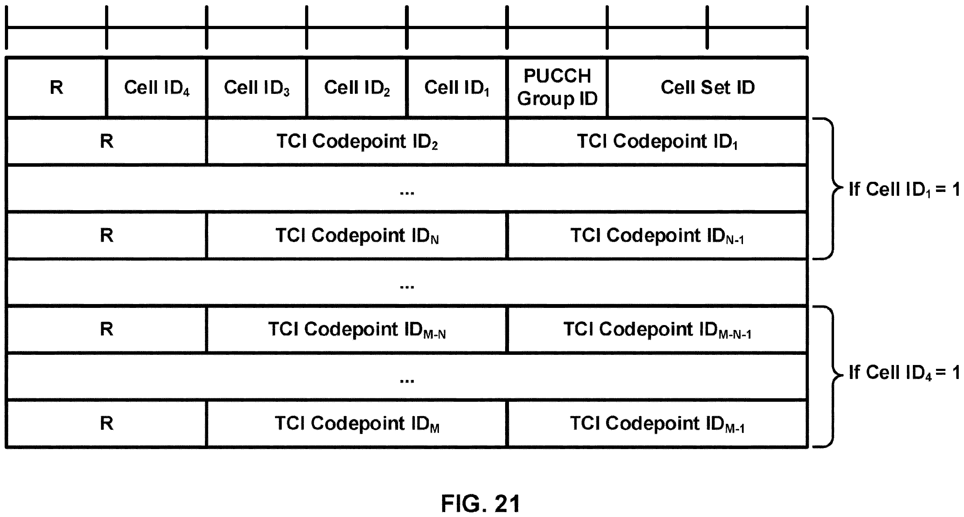

FIG. 21 shows an example control command for multi-cell scheduling, as described herein. In FIG. 21, the control command may comprise a bitmap. The cell(s) with at least one updated (and/or to be updated) TCI codepoint may be indicated by the bitmap. The bitmap may indicate the set of cells in an order based on the cell indexes of the set of cells (e.g., in an ascending order). A (e.g., each) bit in the bitmap may indicate, for a (e.g., respective) cell of the set of cells, a presence of TCI codepoint(s) in the control command. For example, a bit, in the bitmap, set to a first value (e.g., 1) may indicate presence of TCI codepoint(s) in the control command. A (e.g., each) TCI codepoint of the TCI codepoint(s) may be associated with a (e.g., respective) row of the one or more rows in the second table. A bit, in the bitmap, set to a second value (e.g., 0) may indicate absence of TCI codepoint(s) in the control command.

A bit, in the bitmap, associated with the cell may be set to the first value (e.g., 1) indicating a presence of TCI codepoint(s), in the control command, for the cell. The TCI codepoint(s) may comprise the second TCI codepoint. A (e.g., each TCI codepoint of the TCI codepoint(s) may be associated with a (e.g., respective) row of the one or more rows. A number/quantity of the TCI codepoint(s) may be equal to the number/quantity of the one or more rows. The second TCI codepoint may be associated with the row in the second table. The second TCI codepoint may be associated with the row in the second table. The wireless device may update the first TCI codepoint that occurs (and/or is located) in the row with/to the second TCI codepoint. The first TCI codepoint may be updated with/to the second TCI codepoint, for example, based on the bit, in the bitmap, associated with the cell being set to the first value. The wireless device may update the first TCI codepoint that occurs (and/or is located) in the row with/to the second TCI codepoint, for example, based on the TCI codepoint(s) comprising the second TCI codepoint that is associated with the row comprising the first TCI codepoint.

The first TCI codepoint and the second TCI codepoint may be different. The wireless device may update the first TCI codepoint with/to the second TCI codepoint, for example, based on the first TCI codepoint and the second TCI codepoint being different.

For example, Cell $ID_1$ in FIG. 21 may indicate presence of TCI codepoint(s) for a first cell, among the set of cells, with the lowest cell index (e.g., Cell 1). Cell $ID_1$ may correspond to Cell 1 based on Cell 1 having the lowest cell index among Cell 1, Cell 2, Cell 3, and Cell 4. Cell $ID_1$ in FIG. 21 may indicate a presence of TCI codepoint(s) for Cell 1 (e.g., TCI Codepoint $ID_1$, TCI Codepoint $ID_2$, TCI Codepoint $ID_{N-1}$, and TCI Codepoint $ID_N$ in FIG. 21). Cell $ID_1$ may indicate the presence of TCI codepoint(s), in the control command, for Cell 1 if Cell $ID_1$ is set to a first value (e.g., 1),.The control command may comprise the TCI codepoint(s) for Cell 1 if Cell $ID_1$ is set to the first value (e.g., 1). Cell ID1 may indicate an absence of TCI codepoint(s), in the control command, for Cell 1 if Cell $ID_1$ is set to a second value (e.g., 0). The control command may not comprise TCI codepoint(s) for Cell 1 if Cell $ID_1$ is set to the second value (e.g., 0). A number/quantity of the TCI codepoint(s) may be equal to the number of the rows in the second table (e.g., N in FIG. 19) if the TCI codepoint(s) are present in the control command.

A (e.g., each) TCI codepoint of the TCI codepoint(s) for the first cell (e.g., Cell 1) may be associated with a (e.g., respective) row of the one or more rows in the second table. A (e.g., each) TCI codepoint of the TCI codepoint(s) may be associated with a (e.g., respective) row of the one or more rows in the second table. For example, TCI Codepoint $ID_1$ may be associated with the first row (e.g., row 1 in FIG. 19) and the first column (e.g., with Cell 1 in FIG. 19). TCI Codepoint $ID_2$ may be associated with the second row (e.g., row 2 in FIG. 19) and the first column (e.g., with Cell 1 in FIG. 19). TCI Codepoint $ID_{N-1}$ may be associated with the (N-1)-th row (e.g., row N-1 in FIG. 19) and the first column (e.g., with Cell 1 in FIG. 19). TCI Codepoint $ID_N$ may be associated with the N-th row (e.g., row N in FIG. 19) and the first column (e.g., with Cell 1 in FIG. 19).

For example, Cell $ID_2$ in FIG. 21 may indicate a presence of TCI codepoint(s) for a second cell, among the set of cells, with the second lowest cell index (e.g., Cell 2). Cell $ID_2$ may correspond to Cell 2 based on Cell 2 having the second lowest cell index among Cell 1, Cell 2, Cell 3, and Cell 4. Cell $ID_2$ in FIG. 21 may indicate a presence of TCI codepoint(s) for Cell 2. Cell $ID_2$ set to a first value (e.g., 1) may indicate a presence of TCI codepoint(s), in the control command, for Cell 2. the control command may comprise the TCI codepoint(s) for Cell 2 if Cell ID2 is set to the first value (e.g., 1). Cell $ID_2$ set to a second value (e.g., 0) may indicate an absence of TCI codepoint(s), in the control command, for Cell 2. The control command may not comprise TCI codepoint(s) for Cell 2 if Cell $ID_2$ is set to the second value (e.g., 0). A number/quantity of the TCI codepoint(s) may be equal to the number of the rows in the second table (e.g., N in FIG. 19). The number/quantity of the TCI codepoint(s) may be equal to the number of rows in the second table if the TCI codepoints are present in the control command.

For example, Cell $ID_3$ in FIG. 21 may indicate a presence of TCI codepoint(s) for a third cell, among the set of cells, with the third lowest cell index (e.g., Cell 3). Cell $ID_3$ may correspond to Cell 3 based on Cell 3 having the third lowest cell index among Cell 1, Cell 2, Cell 3, and Cell 4. Cell ID3 in FIG. 21 may indicate presence of TCI codepoint(s) for Cell 3. Cell $ID_3$ set to a first value (e.g., 1) may indicate a presence of TCI codepoint(s), in the control command, for Cell 3. The control command may comprise the TCI codepoint(s) for Cell 3 if Cell $ID_3$ is set to the first value (e.g., 1). Cell $ID_3$ set to a second value (e.g., 0) may indicate an absence of TCI codepoint(s), in the control command, for Cell 3. The control command may not comprise TCI codepoint(s) for Cell 3 if Cell $ID_3$ is set to the second value (e.g., 0). A number/quantity of the TCI codepoint(s) may be equal to the number of the rows in the second table (e.g., N in FIG. 19). The number/quantity of the TCI codepoint(s) may be equal to the number of rows in the second table if the TCI codepoints are present in the control command.

For example, Cell $ID_4$ in FIG. 21 may indicate presence of TCI codepoint(s) for a fourth cell, among the set of cells, with the fourth lowest cell index (e.g., Cell 4). Cell $ID_4$ may correspond to Cell 4 based on Cell 4 having the fourth lowest cell index among Cell 1, Cell 2, Cell 3, and Cell 4. Cell ID4 in FIG. 21 may indicate a presence of TCI codepoint(s) for Cell 4 (e.g., TCI Codepoint $ID_{M-N-1}$, TCI Codepoint $ID_{M-N}$, TCI Codepoint $ID_{M-1}$, and TCI Codepoint $ID_M$ in FIG. 21). Cell $ID_4$ set to a first value (e.g., 1) may indicate presence of TCI codepoint(s), in the control command, for Cell 4. The control command may comprise the TCI codepoint(s) for Cell 4 if Cell $ID_4$ is set to the first value (e.g., 1). Cell $ID_4$ set to a second value (e.g., 0) may indicate an absence of TCI codepoint(s), in the control command, for Cell 4. The control command may not comprise TCI codepoint(s) for Cell 4 if Cell $ID_4$ is set to the second value (e.g., 0). A number/quantity of the TCI codepoint(s) may be equal to the number/quantity of the rows in the second table (e.g., N in FIG. 19). The number/quantity of the TCI codepoint(s) may be equal to the number of rows in the second table if the TCI codepoints are present in the control command.

A (e.g., each) TCI codepoint of the TCI codepoint(s) for the fourth cell (e.g., Cell 4) may be associated with a (e.g., respective) row of the one or more rows in the second table. A (e.g., each) TCI codepoint of the TCI codepoint(s) may be associated with a (e.g., respective) row of the one or more rows in the second table. For example, TCI Codepoint $ID_{M-N-1}$ may be associated with the first row (e.g., row 1 in FIG. 19) and the fourth column (e.g., with Cell 4 in FIG. 19). TCI Codepoint $ID_{M-N}$ may be associated with the second row (e.g., row 2 in FIG. 19) and the fourth column (e.g., with Cell 4 in FIG. 19). TCI Codepoint $ID_{M-1}$ may be associated with the (N-1)-th row (e.g., row N-1 in FIG. 19) and the fourth column (e.g., with Cell 4 in FIG. 19). TCI Codepoint $ID_M$ may be associated with the N-th row (e.g., row N in FIG. 19) and the fourth column (e.g., with Cell 4 in FIG. 19).

FIG. 22 shows an example control command for multi-cell scheduling, as described herein. The control command may comprise a bitmap (e.g., as shown in FIG. 22). The row(s) in the one or more rows of the second table may be indicated by the bitmap. The row(s) may comprise at least one updated (and/or to be updated) TCI codepoint. The bitmap may indicate the one or more rows in an order based on the row indexes of the one or more rows in the second table (e.g., an ascending order based on the row indexes). A (e.g., each) bit in the bitmap may indicate, for a (e.g., respective) row of the one or more rows, a presence of TCI codepoint(s) in the control command. For example, a bit, in the bitmap, set to a first value (e.g., 1) may indicate presence of TCI codepoint(s) in the control command. A (e.g., each) TCI codepoint of the TCI codepoint(s) may be associated with a (e.g., respective) cell of the set of cells in the second table. A bit, in the bitmap, set to a second value (e.g., 0) may indicate an absence of TCI codepoint(s) in the control command.

A bit, in the bitmap, associated with the row may be set to the first value (e.g., 1). The bit set to the first value may indicating a presence of TCI codepoint(s), in the control command, for the row. The TCI codepoint(s) may comprise the second TCI codepoint. A (e.g., each) TCI codepoint of the TCI codepoint(s) may be associated with a (e.g., respective) cell of the set of cells. The second TCI codepoint may be associated with the cell. A number of the TCI codepoint(s) may be equal to the number of cells in the set of cells.

The wireless device may update the first TCI codepoint that occurs and/or is located in the row with/to the second TCI codepoint. The first TCI codepoint may be updated with/to the second TCI codepoint, for example, based on the bit, in the bitmap and associated with the cell, being set to the first value. The wireless device may update the first TCI codepoint with/to the second TCI codepoint associated with the row comprising the first TCI codepoint, for example, based on the TCI codepoint(s) comprising the second TCI codepoint.

The wireless device may update the first TCI codepoint of the cell and/or associated with the column with/to the second TCI codepoint. The first TCI codepoint may be updated with/to the second TCI codepoint, for example, based on the bit, in the bitmap, associated with the cell being set to the first value. The wireless device may update the first TCI codepoint of the cell with/to the second TCI codepoint associated with the cell, for example, based on the TCI codepoint(s) comprising the second TCI codepoint.

For example, Row ID$_1$ in FIG. 22 may indicate a presence of TCI codepoint(s) for a first row, among the one or more rows in the second table, with the lowest row index (e.g., row 1 in FIG. 19). Row ID$_1$ in FIG. 22 may indicate the presence of TCI codepoint(s) for/of row 1. Row ID$_1$ set to a first value (e.g., 1) may indicate the presence of TCI codepoint(s), in the control command, for row 1. The control command may comprise the TCI codepoint(s) for row 1 (e.g., TCI Codepoint ID$_1$, TCI Codepoint ID$_2$, TCI Codepoint ID$_3$, and TCI Codepoint ID$_4$ in FIG. 22) if Row ID$_1$ is set to the first value (e.g., 1). Row ID$_1$ set to a second value (e.g., 0) may indicate absence of TCI codepoint(s), in the control command, for row 1. The control command may not comprise TCI codepoint(s) for row 1 if Row ID$_1$ is set to the second value (e.g., 0). A number/quantity of the TCI codepoint(s) may be equal to the number of cells in the set of cells (e.g., 4 in FIG. 19) if the TCI codepoint(s) are present in the control command.

A (e.g., each) TCI codepoint of the TCI codepoint(s) for the first row (e.g., row 1) may be associated with a (e.g., respective) cell of the set of cells. A (e.g., each) TCI codepoint of the TCI codepoint(s) may be associated with a (e.g., respective) cell of the set of cells. For example, TCI Codepoint ID$_1$ may be associated with the first row (e.g., row 1 in FIG. 19) and the first column (e.g., with Cell 1 in FIG. 19). TCI Codepoint ID$_2$ may be associated with the first row (e.g., row 1 in FIG. 19) and the second column (e.g., with Cell 2 in FIG. 19). TCI Codepoint ID$_3$ may be associated with the first row (e.g., row 1 in FIG. 19) and the third column (e.g., with Cell 3 in FIG. 19). TCI Codepoint ID$_4$ may be associated with the first row (e.g., row 1 in FIG. 19) and the fourth column (e.g., with Cell 4 in FIG. 19).

For example, Row ID$_2$ in FIG. 22 may indicate a presence of TCI codepoint(s) for a second row, among the one or more rows in the second table, with the second lowest row index (e.g., row 2 in FIG. 19). Row ID$_2$ in FIG. 22 may indicate the presence of TCI codepoint(s) for row 2. Row ID$_2$ set to a first value (e.g., 1) may indicate the presence of TCI codepoint(s), in the control command, for row 2. The control command may comprise the TCI codepoint(s) for row 2 if Row ID$_2$ is set to the first value (e.g., 1). Row ID$_2$ set to a second value (e.g., 0) may indicate an absence of TCI codepoint(s), in the control command, for row 2. The control command may not comprise TCI codepoint(s) for row 2 if Row ID$_2$ is set to the second value (e.g., 0). A number/quantity of the TCI codepoint(s) may be equal to the number of cells in the set of cells (e.g., 4 in FIG. 19) if the TCI codepoint(s) are present in the control command.

For example, Row ID$_{N-1}$ in FIG. 22 may indicate a presence of TCI codepoint(s) for a third row, among the one or more rows in the second table, with the (N-1)-th lowest row index (e.g., row N-1 in FIG. 19). Row ID$_{N-1}$ in FIG. 22 may indicate the presence of TCI codepoint(s) for row N-1. Row ID$_{N-1}$ set to a first value (e.g., 1) may indicate the presence of TCI codepoint(s), in the control command, for row N-1. The control command may comprise the TCI codepoint(s) for row (N-1) if Row ID$_{N-1}$ is set to the first value (e.g., 1). Row ID$_{N-1}$ set to a second value (e.g., 0) may indicate the absence of TCI codepoint(s), in the control command, for row N-1. The control command may not comprise TCI codepoint(s) for row N-1. A number/quantity of the TCI codepoint(s) may be equal to the number of cells in the set of cells (e.g., 4 in FIG. 19) if the TCI codepoint(s) are present in the control command.

For example, Row ID$_N$ in FIG. 22 may indicate a presence of TCI codepoint(s) for a fourth row, among the one or more rows in the second table, with the N-th lowest row index (e.g., row N in FIG. 19). Row ID$_N$ in FIG. 22 may indicate the presence of TCI codepoint(s) for row N. Row ID$_N$ set to a first value (e.g., 1) may indicate presence of TCI codepoint(s), in the control command, for row N. The control command may comprise the TCI codepoint(s) for row N (e.g., TCI codepoint M-3, TCI codepoint M-2, TCI codepoint M-1, and TCI codepoint M) if the TCI codepoint(s) are present in the control command. Row ID$_N$ set to a second value (e.g., 0) may indicate an absence of TCI codepoint(s), in the control command, for row N. The control command may not comprise TCI codepoint(s) for row N if Row ID$_N$ is set to the second value (e.g., 0). A number/quantity of the TCI codepoint(s) may be equal to the number of cells in the set of cells (e.g., 4 in FIG. 19) if the TCI codepoint(s) are present in the control command.

A (e.g., each) TCI codepoint of the TCI codepoint(s) may be associated with a respective cell of the set of cells. For example, a (e.g., each) TCI codepoint of the TCI codepoint(s) for the fourth row (e.g., row N) may be associated with a (e.g., respective) cell of the set of cells. For example, TCI Codepoint ID$_{M-3}$ may be associated with the fourth row (e.g., row N in FIG. 19) and the first column (e.g., with Cell 1 in FIG. 19). TCI Codepoint ID$_{M-2}$ may be associated with the fourth row (e.g., row N in FIG. 19) and the second column (e.g., with Cell 2 in FIG. 19). TCI Codepoint ID$_{M-1}$ may be associated with the fourth row (e.g., row N in FIG. 19) and the third column (e.g., with Cell 3 in FIG. 19). TCI Codepoint ID$_M$ may be associated with the fourth row (e.g., row N in FIG. 19) and the fourth column (e.g., with Cell 4 in FIG. 19).

A wireless device may receive one or more messages comprising one or more configuration parameters. A base station may transmit the one or more messages to the wireless device. The one or more configuration parameters may indicate a second table (e.g., TCI state table/list, TCI state combinations table/list, TCI state table/list for single DCI multi-cell scheduling, TCI codepoint table/list, TCI codepoint combinations table/list, TCI codepoint table/list for single DCI multi-cell scheduling, the second table discussed with respect to FIG. 19) for a set of cells. The second table may indicate/define one or more combinations of TCI codepoints (and/or TCI states) for/of the set of cells. The second table may comprise/indicate one or more rows. Each row of the one or more rows in the second table may indicate a respective of the one or more combinations of TCI codepoints of/for the set of cells. The TCI codepoints may be for uplink transmissions of/for/via the set of cells. The TCI codepoints may be for downlink receptions of/for/via the set of cells. The TCI codepoints may be for both uplink transmissions and downlink receptions of/for/via the set of cells.

The wireless device may receive first downlink control information (DCI). The base station may transmit the first DCI (e.g., DCI format 0_X, DCI format 1_X). The first DCI may comprise a field (e.g., a co-scheduled cell indicator field, scheduled cell indicator field, etc.) indicating/scheduling one or more first cells among the set of cells. The one or more first cells may be active cells. Each cell of the one or more first cells may be active. The one or more first cells may not be deactivated cells. Each cell of the one or more first cells may not be deactivated. The one or more first cells may not be in a dormant state (e.g., dormant BWP(s) may not be active in the one or more cells). Each cell of the one or more first cells may not be in dormant state.

The first DCI may schedule, for example, first uplink transmissions (e.g., PUSCH/PUCCH/SRS transmissions) via/for the one or more first cells. The first DCI may schedule each uplink transmission, of the first uplink transmissions, via/for a respective cell of the one or more first cells. An uplink transmission, of the first uplink transmissions, associated with a cell, of the one or more first, cells may comprise a transmission of an uplink signal (e.g., PUSCH, PUCCH, SRS) via the cell.

The first DCI may schedule, for example, first downlink receptions (e.g., PDSCH/PDCCH/CSI-RS receptions) via/for the one or more first cells. The first DCI may schedule each downlink reception, of the first downlink receptions, via/for a respective cell of the one or more first cells. A downlink reception, of the first downlink receptions, associated with a cell, of the one or more first cells, may comprise reception of a downlink signal (e.g., PDSCH, PDCCH,CSI-RS) via the cell.

The first DCI may comprise a TCI field (e.g., TCI state field, joint TCI field, joint TCI state field, multipleCellTCI field, multiCellTCI field, etc.) indicating a row (and/or an indexed row and/or a row index) in/of the one or more rows of/in the second table. The TCI state field may comprise a value indicating the row (and/or the indexed row and/or the row index) among the one or more rows of/in the second table.

The row may indicate/comprise TCI codepoints (e.g., TCI states or TCI state indexes) for the set of cells. The row may indicate/comprise the TCI codepoints, which may be configured/indicated to be applied to a plurality of uplink transmissions via/for the set of cells. A (e.g., each) uplink transmission of the plurality of uplink transmissions may be associated with a (e.g., respective) cell of the set of cells. The row may indicate/comprise each TCI codepoint, of the TCI codepoints, configured/indicated to be applied, by the wireless device and/or the base station, to a respective uplink transmission of the plurality of uplink transmissions. The row may indicate/comprise each TCI codepoint, of the TCI codepoints, configured/indicated to be applied to an uplink transmission, of the plurality of uplink transmissions, via a respective cell of the set of cells. The row may indicate/comprise the TCI codepoints configured/indicated to be applied to a plurality of downlink receptions via/for the set of cells. A (e.g., each) downlink reception of the plurality of downlink receptions may be associated with a (e.g., respective) cell of the set of cells. The row may indicate/comprise each TCI codepoint, of the TCI codepoints, configured/indicated to be applied, by the wireless device and/or the base station, to a respective downlink reception of the plurality of downlink receptions. The row may indicate/comprise each TCI codepoint, of the TCI codepoints, configured/indicated to be applied to a downlink reception, of the plurality of downlink receptions, via a respective cell of the set of cells.

The TCI codepoints, of the set of cells, in the row may comprise at least one TCI codepoint of the one or more first cells. A (e.g., each) TCI codepoint of the at least one TCI codepoint may be associated with a (e.g., respective) cell of the one or more first cells. The TCI codepoints of the set of cells may comprise the at least one TCI codepoint configured/indicated to be applied to the first uplink transmissions via the one or more first cells. A (e.g., each) TCI codepoint of the at least one TCI codepoint may be configured/indicated to be applied (e.g., by the wireless device and/or the base station) to a (e.g., respective) uplink transmission of the first uplink transmissions. A (e.g., each) TCI codepoint of the at least one TCI codepoint may be configured/indicated to be applied (e.g., by the wireless device and/or the base station) to an uplink transmission, of the first uplink transmissions, via a (e.g., respective) cell of the one or more first cells.

The TCI codepoints of the set of cells may comprise the at least one TCI codepoint configured/indicated to be applied to the first downlink receptions via the one or more first cells. A (e.g., each) TCI codepoint of the at least one TCI codepoint may be configured/indicated to be applied (e.g., by the wireless device and/or the base station) to a (e.g., respective) downlink reception of the first downlink receptions. Each TCI codepoint of the at least one TCI codepoint may be configured/indicated to be applied (e.g., by the wireless device and/or the base station) to a downlink reception, of the first downlink receptions, via a respective cell of the one or more first cells.

The one or more first cells of the set of cells may comprise a cell. The TCI codepoints in the row may comprise a first TCI codepoint of/for the cell. The at least one TCI codepoint of the one or more first cells may comprise the first TCI codepoint of/for the cell.

The first TCI codepoint may be configured/indicated to be applied to a first downlink reception, of the first downlink receptions, via the cell. The first TCI codepoint may be configured/indicated to be applied, by the wireless device and/or the base station, to the first downlink reception via the cell.

The first TCI codepoint may be configured/indicated to be applied to a first uplink transmission, of the first uplink transmissions, via the cell. The first TCI codepoint may be configured/indicated to be applied, by the wireless device and/or the base station, to the first uplink transmission via the cell.

The first TCI codepoint may indicate/comprise a first TCI state. The first TCI codepoint may be mapped to the first TCI state. The first TCI codepoint may comprise a first TCI state index indicating/identifying the first TCI state. The one or more configuration parameters may indicate, for the first TCI state, the first TCI state index.

The wireless device may communicate with the base station based on the first TCI state indicated by (and/or mapped to or in) the first TCI codepoint. The base station may communicate with the wireless device based on the first TCI state indicated by (and/or mapped to or in) the first TCI codepoint.

Communicating (e.g., with the base station) based on the first TCI state may comprise sending (e.g., transmitting), via the cell, the first uplink transmission (e.g., PUSCH transmission, PUCCH transmission, SRS) based on the first TCI state. The wireless device may send (e.g., transmit) the first uplink transmission with a first spatial domain transmission/transmit filter that is determined based on the first TCI state. The wireless device may send (e.g., transmit) the first uplink transmission with a first transmission power that is determined based on the first TCI state. The base station may receive the first uplink transmission with a first spatial domain reception/receive filter that is determined based on the first TCI state. The base station may receive the first uplink transmission with a first spatial domain reception/receive filter that is determined based on the first spatial domain transmission/transmit filter used at/by the wireless device. The base station may receive the first uplink transmission sent (e.g., transmitted) with the first transmission power that is determined based on the first TCI state.

Communicating (e.g., with the base station) based on the first TCI state may comprise receiving, via the cell, the first downlink reception (e.g., PDSCH reception, PDCCH reception, CSI-RS reception/measurement) (e.g., from the base station) based on the first TCI state. The wireless device may receive the first downlink reception with a first spatial domain reception/receive filter that is determined based on the first TCI state. The base station may send (e.g., transmit) the first downlink reception with a first spatial domain transmission/transmit filter that is determined based on the first TCI state. The base station may send (e.g., transmit) the first downlink reception with a first spatial domain transmission/transmit filter that is determined based on the first spatial domain reception/receive filter used at/by the wireless device. At least one DM-RS antenna port of the first downlink reception may be quasi co-located with a first reference signal indicated by the first TCI state. The at least one DM-RS antenna port of the first downlink reception may be quasi co-located with the first reference signal with respect to a first quasi co-location type indicated by the first TCI state.

The wireless device may receive a control command (e.g., MAC-CE, DCI, Control Command 1930 at time T1 in FIG. 19). The example field(s)/detail(s) of the control command may be as discussed with respect to FIG. 20A, FIG. 20B, FIG. 21, and FIG. 22. The base station may send (e.g., transmit) the control command.

The control command may indicate the update of the first TCI codepoint in the second table with/to a second TCI codepoint. The control command may indicate the update of the first TCI codepoint, of the cell, that occurs in the row of the second table with/to the second TCI codepoint. The control command may indicate the update of the first TCI codepoint, that occurs in the row of the second table and that is associated with the cell, with/to the second TCI codepoint. Updating the first TCI codepoint with/to the second TCI codepoint may comprise replacing/overriding/overwriting/changing the first TCI codepoint with/to the second TCI codepoint in the second table (e.g., converting/replacing original example second table 1925 with updated example second table 1935).

The wireless device may receive a second downlink control information (DCI). The base station may transmit the second DCI (e.g., DCI format 0_X, DCI format 1_X). The second DCI may comprise a field (e.g., a co-scheduled cell indicator field, scheduled cell indicator field, and the like) indicating/scheduling one or more second cells among the set of cells. The one or more second cells may be active cells. Each cell of the one or more second cells may be active. The one or more second cells may not be deactivated cells. Each cell of the one or more second cells may not be deactivated. The one or more second cells may not be in dormant state (e.g., dormant BWP(s) may not be active in the one or more cells). Each cell of the one or more second cells may not be in dormant state.

The second DCI may schedule, for example, second uplink transmissions (e.g., PUSCH/PUCCH/SRS transmissions) via/for the one or more second cells. The second DCI may schedule a (e.g., each) uplink transmission of the second uplink transmissions via/for a (e.g., respective) cell of the one or more second cells. An uplink transmission, of the second uplink transmissions, associated with a cell, of the one or more second cells, may comprise transmission of an uplink signal (e.g., PUSCH, PUCCH, SRS) via the cell.

The second DCI may schedule, for example, second downlink receptions (e.g., PDSCH/PDCCH/CSI-RS receptions) via/for the one or more second cells. The second DCI may schedule a (e.g., each) downlink reception of the second downlink receptions via/for a (e.g., respective) cell of the one or more second cells. A downlink reception, of the second downlink receptions, associated with a cell of the one or more second cells may comprise reception of a downlink signal (e.g., PDSCH, PDCCH, CSI-RS) via the cell.

The second DCI may comprise a TCI field (e.g., TCI state field, joint TCI field, joint TCI state field, multipleCellTCI field, multiCellTCI field, and the like) indicating the row (and/or an indexed row and/or a row index) in the one or more rows of/in the second table. The TCI state field may comprise a value indicating the row (and/or the indexed row and/or a row index) among the one or more rows of/in the second table.

The row may indicate/comprise second TCI codepoints (and/or TCI states and/or TCI state indexes) for the set of cells. The row may indicate/comprise the second TCI codepoints configured/indicated to be applied to a plurality of uplink transmissions via/for the set of cells. A (e.g., each) uplink transmission of the plurality of uplink transmissions may be associated with a (e.g., respective) cell of the set of cells. The row may indicate/comprise each TCI codepoint, of the second TCI codepoints, configured/indicated to be applied, by the wireless device and/or the base station, to a respective uplink transmission of the plurality of uplink transmissions. The row may indicate/comprise each TCI codepoint, of the second TCI codepoints, configured/indicated to be applied to an uplink transmission, of the plurality of uplink transmissions, via a respective cell of the set of cells.

The row may indicate/comprise the second TCI codepoints configured/indicated to be applied to a plurality of downlink receptions via/for the set of cells. A (e.g., each) downlink reception of the plurality of downlink receptions may be associated with a respective cell of the set of cells. The row may indicate/comprise each TCI codepoint, of the second TCI codepoints, configured/indicated to be applied, by the wireless device and/or the base station, to a respective downlink reception of the plurality of downlink receptions. The row may indicate/comprise each TCI codepoint, of the second TCI codepoints, configured/indicated to be applied to a downlink reception, of the plurality of downlink receptions, via a respective cell of the set of cells.

The second TCI codepoints of the set of cells in the row may comprise at least one second TCI codepoint of the one or more second cells. A (e.g., each) TCI codepoint of the at least one second TCI codepoint may be associated with a (e.g., respective) cell of the one or more second cells. The second TCI codepoints of the set of cells may comprise the at least one second TCI codepoint configured/indicated to be applied to the second uplink transmissions via the one or more second cells. Each TCI codepoint of the at least one second TCI codepoint may be configured/indicated to be applied, by the wireless device and/or the base station, to a respective uplink transmission of the second uplink transmissions. Each TCI codepoint of the at least one second TCI codepoint may be configured/indicated to be applied, by the wireless device and/or the base station, to an uplink transmission, of the second uplink transmissions, via a respective cell of the one or more second cells. The second TCI codepoints of the set of cells may comprise the at least one second TCI codepoint configured/indicated to be applied to the second downlink receptions via the one or more second cells. Each TCI codepoint of the at least one second TCI codepoint may be configured/indicated to be applied, by the wireless device and/or the base station, to a respective downlink reception of the second downlink receptions. Each TCI codepoint of the at least one second TCI codepoint may be configured/indicated to be applied, by the wireless device and/or the base station, to a downlink reception, of the second downlink receptions, via a respective cell of the one or more second cells.

The one or more second cells of the set of cells may comprise the cell. The second TCI codepoints in the row may comprise the second TCI codepoint of/for the cell. The second TCI codepoints in the row may comprise the second TCI codepoint updated/indicated by/based on the control command. The at least one second TCI codepoint of the one or more second cells may comprise the second TCI codepoint of/for the cell. The second TCI codepoint may be configured/indicated to be applied to a second downlink reception, of the second downlink receptions, via the cell. The second TCI codepoint may be configured/indicated to be applied, by the wireless device and/or the base station, to the second downlink reception via the cell. The second TCI codepoint may be configured/indicated to be applied to a second uplink transmission, of the second uplink transmissions, via the cell. The second TCI codepoint may be configured/indicated to be applied, by the wireless device and/or the base station, to the second uplink transmission via the cell.

The second TCI codepoint may indicate/comprise a second TCI state. The second TCI codepoint may be mapped to the second TCI state. The second TCI codepoint may comprise a second TCI state index indicating/identifying the second TCI state. The one or more configuration parameters may indicate, for the second TCI state, the second TCI state index.

Communications via the cell may be based on the second TCI state indicated by and/or mapped to and/or in the second TCI codepoint. The wireless device may communicate with the base station based on the second TCI state indicated by (and/or mapped to or in) the second TCI codepoint. The base station may communicate with the wireless device based on the second TCI state indicated by (and/or mapped to or in) the second TCI codepoint.

Communicating with the base station based on the second TCI state may comprise sending (e.g., transmitting), via the cell, the second uplink transmission (e.g., PUSCH transmission, PUCCH transmission, SRS) to the base station based on the second TCI state. The wireless device may send (e.g., transmit) the second uplink transmission with/via/using a second spatial domain transmission/transmit filter that is determined based on the second TCI state. The wireless device may send (e.g., transmit) the second uplink transmission with/via/using a second transmission power that is determined based on the second TCI state. The base station may receive the second uplink transmission with/via/using a second spatial domain reception/receive filter that is determined based on the second TCI state. The base station may receive the second uplink transmission with/via/using a second spatial domain reception/receive filter that is determined based on the second spatial domain transmission/transmit filter used at/by the wireless device. The base station may receive the second uplink transmission sent (e.g., transmitted) with/via/using the second transmission power that is determined based on the second TCI state.

The wireless device may send (e.g., transmit) the second uplink transmission, for example, after (e.g., based on) receiving the control command. The base station may receive the second uplink transmission, for example, after (e.g., based on) sending (e.g., transmitting) the control command. The wireless device may send (e.g., transmit) the second uplink transmission, for example, after (e.g., based on) an application time of the control command. The base station may receive the second uplink transmission, for example, after (e.g., based on) the application time of the control command. For example, the wireless device may receive the second DCI after (e.g., based on) receiving the control command. The base station may send (e.g., transmit) the second DCI after sending (e.g., transmitting) the control command. For example, the wireless device may receive the second DCI after the application time of the control command. The base station may send (e.g., transmit) the second DCI after the application time of the control command. The wireless device may send (e.g., transmit) the first uplink transmission, for example, before (and/or prior to) receiving the control command. The base station may receive the first uplink transmission, for example, before (and/or prior to) sending (e.g., transmitting) the control command. The wireless device may send (e.g., transmit) the first uplink transmission, for example, before (and/or prior to) an application time of the control command. The base station may receive the first uplink transmission, for example, before (and/or prior to) the application time of the control command. The wireless device may receive the first DCI before (and/or prior to) receiving the control command. The base station may send (e.g., transmit) the first DCI before (and/or prior to) sending (e.g., transmitting) the control command. The wireless device may receive the first DCI before (and/or prior to) the application time of the control command. The base station may send (e.g., transmit) the first DCI before (and/or prior to) the application time of the control command.

Communicating (e.g., with the base station) based on the second TCI state may comprise receiving, via the cell, the second downlink reception (e.g., PDSCH reception, PDCCH reception, CSI-RS reception/measurement) based on the second TCI state. The wireless device may receive the second downlink reception with/via/using a second spatial domain reception/receive filter that is determined based on the second TCI state. The base station may transmit the second downlink reception with/via/using a second spatial domain transmission/transmit filter that is determined based on the second TCI state. The base station may transmit the second downlink reception with/via/using a second spatial domain transmission/transmit filter that is determined based on the second spatial domain reception/receive filter used at/by the wireless device. At least one DM-RS antenna port of the second downlink reception may be quasi co-located with/via/using a second reference signal indicated by the second TCI state. The at least one DM-RS antenna port of the second downlink reception may be quasi co-located with/via/using the second reference signal with respect to a second quasi co-location type indicated by the second TCI state.

The wireless device may receive the second downlink reception, for example, after (e.g., based on) receiving the control command. The base station may send (e.g., transmit) the second downlink reception, for example, after sending (e.g., transmitting) the control command. The wireless device may receive the second downlink reception, for example, after an application time of the control command. The base station may send (e.g., transmit) the second downlink reception, for example, after the application time of the control command. The wireless device may receive the first downlink reception, for example, before (and/or prior to) receiving the control command. The base station may send (e.g., transmit) the first downlink reception, for example, before (and/or prior to) sending (e.g., transmitting) the control command. The wireless device may receive the first downlink reception, for example, before (and/or prior to) an application time of the control command. The base station may send (e.g., transmit) the first downlink reception, for example, before (and/or prior to) the application time of the control command.

FIG. 23 shows an example of beam management in multi-cell scheduling. The DCI (e.g., scheduling the one or more cells, such as discussed with respect to FIG. 19) may comprise an SRS resource set indicator field. The one or more configuration parameters may indicate one or more SRS resource sets (e.g., for the uplink BWP of the cell). The one or more configuration parameters may indicate a first SRS resource set (e.g., of the one or more SRS resource sets). The one or more configuration parameters may indicate (e.g., for the uplink BWP of the cell) a single SRS resource set (e.g., SRS resource set 1 in Case 1 in FIG. 23).

The one or more configuration parameters may comprise/indicate a usage parameter for the first SRS resource set. For example, the usage parameter may be set to 'codebook'. The one or more configuration parameters may indicate 'codebook', for example, for the first SRS resource set. The one or more configuration parameters may indicate, for the uplink BWP of the cell, a single SRS resource set with the usage parameter set to 'codebook'. The first SRS resource set may be the single SRS resource set, in the uplink BWP, with the usage parameter set to 'codebook'.

The usage parameter may be set to 'non-codebook'. The one or more configuration parameters may indicate 'non-codebook', for example, for the first SRS resource set. The one or more configuration parameters may indicate, for the uplink BWP of the cell, a single SRS resource set with the usage parameter set to 'non-codebook'. The first SRS resource set may be the single SRS resource set, in the uplink BWP, with the usage parameter set to 'non-codebook'.

One or more TCI states may be indicated/activated for the cell. For example, a single TCI state (e.g., Unified TCI state 1 in Case 1 and Case 2 in FIG. 23 and/or as discussed with respect to FIG. 17) may be indicated/activated for the cell. The TCI codepoint (e.g., TCI codepoint 111 in FIG. 17), of the one or more TCI codepoints of/for the cell, may comprise/indicate/be mapped to the first TCI state (e.g., TCI state 26 in FIG. 17). The first TCI state (e.g., TCI state 26 in FIG. 17) indicated by and/or mapped to the TCI codepoint (e.g., TCI codepoint 111 in FIG. 17) may be the single TCI state indicated/activated for the cell. The first TCI state indicated for the cell may be, for example, a first uplink TCI state. The first uplink TCI state may be a single uplink TCI state indicated for the cell. The first TCI state indicated for the cell may be, for example, a first downlink TCI state. The first downlink TCI state may be a single downlink TCI state indicated for the cell. The first TCI state indicated for the cell may be, for example, a first joint TCI state. The first joint TCI state may be a single joint TCI state indicated for the cell. The first TCI state indicated for the cell may be, for example, a first unified TCI state. The first unified TCI state may be a single unified TCI state indicated for the cell.

A single TCI state (e.g., TCI state 26 in FIG 17 and Unified TCI state 1 in FIG. 23) may be indicated/activated for the cell. One or more SRS resource sets may be indicated/configured for the cell (e.g., for an uplink BWP of the cell) (Case 1 and Case 2 in FIG. 23). A single SRS resource set (e.g., SRS resource set 1) may be indicated/configured for the cell (e.g., for the uplink BWP of the cell) (e.g., Case 1 in FIG. 23).

The wireless device may ignore the SRS resource set indicator field in the DCI. The SRS resource set indicator field may be ignored, for example, based on the one or more configuration parameters indicating, for the uplink BWP of the cell, a single SRS resource set with the usage parameter set to 'non-codebook'. The SRS resource set indicator field may be ignored, for example, based on the one or more configuration parameters indicating, for the uplink BWP of the cell, a single SRS resource set with the usage parameter set to 'codebook'.

The wireless device may ignore the SRS resource set indicator field in the DCI, for example, based on a single TCI state being indicated for the cell. The wireless device may ignore the SRS resource set indicator field in the DCI, for example, based on the DCI (e.g., DCI 1 1740 at time T2 in FIG. 17) indicating the TCI codepoint (e.g., TCI codepoint 111) comprising/indicating/being mapped to the first TCI state (e.g., TCI state 26) for the cell. The wireless device may ignore the SRS resource set indicator field in the DCI, for example, based on the DCI (e.g., DCI 1 1740 at time T2 in FIG. 17) indicating, for the cell, the TCI codepoint comprising/indicating/being mapped to a single TCI state (e.g., TCI state 26).

The wireless device may not apply/use the SRS resource set indicator field to/in the first uplink transmission via the uplink BWP of the cell, for example, based on/by ignoring the SRS resource set indicator field in the DCI. The wireless device may not apply/use a value of the SRS resource set indicator field to/in the first uplink transmission via the uplink BWP of the cell, for example, based on/by ignoring the SRS resource set indicator field in the DCI.

The wireless device may send (e.g., transmit), via the uplink BWP of the cell, the first uplink transmission, for example, based on the first TCI state (e.g., TCI state 26 in FIG. 17 and Unified TCI state 1 in Case 1 and in Case 2 in FIG. 23). The wireless device may transmit, via the uplink BWP of the cell, the first uplink transmission based on the first TCI state (e.g., in Case 1 and in Case 2 in FIG. 23).

The wireless device may send (e.g., transmit) the first uplink transmission with the first spatial domain transmitting/transmission filter/beam that is determined based on the first reference signal indicated by the first TCI state. The wireless device may send (e.g., transmit) the first uplink transmission with the first transmission power that is determined based on the one or more first power control parameters (e.g., target received power, closed-loop index, pathloss compensation factor, alpha, pathloss reference signal, etc.) indicated by (and/or included in and/or associated with and/or mapped to) the first TCI state.

The wireless device may send (e.g., transmit) the first uplink transmission based on the first SRS resource set (e.g., SRS resource set 1 in Case 1 in FIG. 23). The wireless device may send (e.g., transmit) the first uplink transmission based on the first SRS resource set, for example, based on (e.g., in response to) ignoring the SRS resource set indicator field in the DCI. The wireless device may send (e.g., transmit) the first uplink transmission based on the first SRS resource set, for example, based on (e.g., in response to) the one or more configuration parameters indicating, for the uplink BWP of the cell, a single SRS resource set with the usage parameter set to ''codebook' or 'non-codebook'.

The wireless device may send (e.g., transmit) the first uplink transmission based on a first SRS resource in the first SRS resource set. The one or more configuration parameters may indicate, for the first SRS resource, a first number/quantity of SRS ports (e.g., nrofSRS-Ports). The wireless device may send (e.g., transmit) the first uplink transmission, for example, based on the first number/quantity of SRS ports of the first SRS resource in the first SRS resource set. The wireless device may send (e.g., transmit) the first uplink transmission with/using (and/or based on) a first transmission precoder that is determined based on the first number of SRS ports.

The first uplink transmission may comprise/be repetitions of the first uplink transmission (e.g., repetitions of a PUSCH transmission, repetitions of a PUCCH transmission). The first uplink transmission may comprise/be different uplink transmissions (e.g., PUSCH transmissions, PUCCH transmissions, SRS transmissions). The first uplink transmission may comprise/be a first portion (and/or first layer(s)/data-stream(s)) of the first uplink transmission (e.g., a PUSCH transmission, a PUCCH transmission) and a second portion (and/or second layer(s)/data-stream(s)) of the first uplink transmission.

Each repetition, of the repetitions of the first uplink transmission, may be sent (e.g., transmitted) based on the first TCI state (e.g., by the wireless device). The wireless device may send (e.g., transmit) each repetition of the repetitions of the first uplink transmission based on the first SRS resource set. The wireless device may send (e.g., transmit) each layer (and/or data stream), of the first uplink transmission, based on the first TCI state. The wireless device may send (e.g., transmit) each layer (and/or data stream), of the first uplink transmission, based on the first SRS resource set.

The one or more configuration parameters may indicate, for the uplink BWP of the cell, at least two SRS resource sets (e.g., Case 2 and Case 3 in FIG. 23). The at least two SRS resource sets may comprise a first SRS resource set (e.g., SRS resource set 1 in Case 2 and Case 3 in FIG. 23) and a second SRS resource set (e.g., SRS resource set 2 in Case 2 and Case 3 in FIG. 23).

The one or more configuration parameters may comprise, for a (e.g., each) SRS resource set of the at least two SRS resource sets, a (e.g., respective) usage parameter. For example, the usage parameter may be set to 'codebook'. The usage parameter of the (e.g., each) SRS resource set, of the at least two SRS resource sets, may be set to 'codebook'. The one or more configuration parameters may indicate codebook, for example, for each SRS resource set of the at least two SRS resource sets. The one or more configuration parameters may indicate, for the first SRS resource set, 'codebook' (and/or a usage parameter set to 'codebook'). The one or more configuration parameters may indicate, for the second SRS resource set, 'codebook' (and/or a usage parameter set to 'codebook'). Also, or alternatively, the usage parameter for one or both of the at least two SRS resource sets may be set to 'non-codebook'. The usage parameter of a (e.g., each) SRS resource set, of the at least two SRS resource sets, may be set to 'non-codebook'. The one or more configuration parameters may indicate 'non-codebook', for example, for each SRS resource set of the at least two SRS resource sets. The one or more configuration parameters may indicate, for the first SRS resource set, 'non-codebook' (and/or a usage parameter set to 'non-codebook'). The one or more configuration parameters may indicate, for the second SRS resource set, 'non-codebook' (and/or a usage parameter set to 'non-codebook').

The one or more configuration parameters may indicate, for the at least two SRS resource sets, at least two SRS resource set indexes. The one or more configuration parameters may indicate, for each SRS resource set, of the at least two SRS resource sets, a respective SRS resource set index of the at least two SRS resource set indexes. A (e.g., each) SRS resource set, of the at least two SRS resource sets, may be identified/indicated by a (e.g., respective) SRS resource set index of the at least two SRS resource set indexes. The first SRS resource set of the at least two SRS resource sets may be identified/indicated by a first SRS resource set index of the at least two SRS resource set indexes. The second SRS resource set of the at least two SRS resource sets may be identified/indicated by a second SRS resource set index of the at least two SRS resource set indexes. The first SRS resource set index of the first SRS resource set may be lower/less than the second SRS resource set index of the second SRS resource set.

A single TCI state (e.g., TCI state 26 in FIG 17 and/or Unified TCI state 1 in FIG. 23) may be indicated/activated for the cell and the at least two SRS resource sets (e.g., SRS resource set 1 and SRS resource set 2) may be indicated/configured for the uplink BWP of the cell (e.g., Case 2 in FIG. 23). The SRS resource set indicator field of the DCI may be equal/set to a first value (e.g., 0, 00). The first value of the SRS resource set indicator field may indicate a first SRS resource set of the at least two SRS resource sets. The first value of the SRS resource set indicator field may be (and/or may be interchangeably used with) a first codepoint (e.g., codepoint 00) for/of the SRS resource set indicator field.

In the examples of Case 2 and Case 3 in FIG. 23, the first value of the SRS resource set indicator field may indicate the first SRS resource set of the at least two SRS resource sets (e.g., SRS resource set 1). The wireless device may send (e.g., transmit), via the uplink BWP of the cell, the first uplink transmission based on the first SRS resource set of the at least two SRS resource sets. The first uplink transmission may be sent (e.g., transmitted) based on the first SRS resource set, for example, based on (e.g., in response to) the SRS resource set indicator field being set/equal to the first value. The first uplink transmission may be sent (e.g., transmitted) based on the first SRS resource set of the at least two SRS resource sets, for example, based on (e.g., in response to) the one or more configuration parameters may indicating, for the uplink BWP of the cell, the at least two SRS resource sets both with 'codebook' or both with 'non-codebook'. The wireless device may not send (e.g., transmit) the first uplink transmission based on the second SRS resource set of the at least two SRS resource sets, for example, based on (e.g., in response to) the SRS resource set indicator field being set/equal to the first value.

The wireless device may send (e.g., transmit) a (e.g., each) repetition of the repetitions of the first uplink transmission based on the first SRS resource set. The repetition, of the repetitions, may be sent based on the first SRS resource set, for example, based on (e.g., in response to) the SRS resource set indicator field being set/equal to the first value. The wireless device may transmit a (e.g., each) layer (and/or data stream) of the first uplink transmission based on the first SRS resource set, for example, based on (e.g., in response to) the SRS resource set indicator field being set/equal to the first value.

A first SRS resource in the first SRS resource set may be used to send (e.g., transmit) the first uplink transmission. The wireless device may send (e.g., transmit) the first uplink transmission based on the first SRS resource in the first SRS resource set of the at least two SRS resource sets. The one or more configuration parameters may indicate, for the first SRS resource, a first number of SRS ports (e.g., nrofSRS-Ports). The wireless device may send (e.g., transmit) the first uplink transmission, for example, based on the first number of SRS ports of the first SRS resource in the first SRS resource set. For example, the wireless device may send (e.g., transmit) the first uplink transmission with/using (and/or based on) a first transmission precoder that is determined based on the first number of SRS ports.

The SRS resource set indicator field of the DCI may be equal/set to a second value (e.g., 1, 01). The second value of the SRS resource set indicator field may indicate a second SRS resource set of the at least two SRS resource sets (e.g., SRS resource set 2 in Case 2 and Case 3 in FIG. 23). The second value of the SRS resource set indicator field may be (and/or may be interchangeably used with) a second codepoint (e.g., codepoint 01) for/of the SRS resource set indicator field. In the examples of Case 2 and Case 3 in FIG. 23, the second value of the SRS resource set indicator field may indicate the second SRS resource set of the at least two SRS resource sets (e.g., SRS resource set 2).

The wireless device may send (e.g., transmit) the first uplink transmission based on the second SRS resource set of the at least two SRS resource sets. The first plink transmission may be sent (e.g., transmitted) based on the second SRS resource set, for example, based on (e.g., in response to) the SRS resource set indicator field being set/equal to the second value. The wireless device may send (e.g., transmit) the first uplink transmission based on the second SRS resource set of the at least two SRS resource sets, for example, based on (e.g., in response to) the one or more configuration parameters indicating, for the uplink BWP of the cell, the at least two SRS resource sets all with 'codebook' or all with 'non-codebook'. The wireless device may not send (e.g., transmit) the first uplink transmission based on the first SRS resource set of the at least two SRS resource sets, for example, based on (e.g., in response to) the SRS resource set indicator field being set/equal to the second value.

The wireless device may send (e.g., transmit) a (e.g., each) repetition of the repetitions of the first uplink transmission based on the second SRS resource set. The (e.g., each) repetition may be sent (e.g., transmitted) based on the second SRS resource set, for example, based on (e.g., in response to) the SRS resource set indicator field being set/equal to the second value. The wireless device may send (e.g., transmit) each layer (and/or data stream) of the first uplink transmission based on the second SRS resource set, for example, based on (e.g., in response to) the SRS resource set indicator field being set/equal to the second value.

The wireless device may send (e.g., transmit) the first uplink transmission based on a second SRS resource in the second SRS resource set of the at least two SRS resource sets. The one or more configuration parameters may indicate, for the second SRS resource, a second number of SRS ports (e.g., nrofSRS-Ports). The wireless device may send (e.g., transmit) the first uplink transmission, for example, based on the second number of SRS ports of the second SRS resource in the second SRS resource set. For example, the wireless device may send (e.g., transmit) the first uplink transmission with/using (and/or based on) a second transmission precoder that is determined based on the second number of SRS ports.

The SRS resource set indicator field of the DCI may be, for example, equal/set to a third value (e.g., 2, 10). The third value of the SRS resource set indicator field may be (and/or may be interchangeably used with) a third codepoint (e.g., codepoint 10) for/of the SRS resource set indicator field.

The wireless device may send (e.g., transmit) the first uplink transmission based on an SRS resource set among the at least two SRS resource sets, for example, based on (e.g., in response to) the SRS resource set indicator field being set/equal to the third value.

The SRS resource set indicator field of the DCI may be, for example, equal/set to a fourth value (e.g., 3, 11). The fourth value of the SRS resource set indicator field may be (and/or may be interchangeably used with) a fourth codepoint (e.g., codepoint 11) for/of the SRS resource set indicator field.

The wireless device may send (e.g., transmit) the first uplink transmission based on an SRS resource set among/from the at least two SRS resource sets, for example, based on (e.g., in response to) the SRS resource set indicator field being set/equal to the fourth value.

The wireless device may send (e.g., transmit) the first uplink transmission based on an SRS resource set. The wireless device may send (e.g., transmit the first uplink transmission based on the SRS resource set based on (e.g., in response to) the SRS resource set indicator field indicating a multi-communication point (e.g., multi-TRP) operation/mode (e.g., being set/equal to the third or fourth value). The SRS resource set may be a default SRS resource set based on (e.g., in response to) the SRS resource set indicator field indicating the multi-communication point (e.g., multi-TRP) operation/mode. The SRS resource set may be a default SRS set selected among/from the at least two SRS resource sets, for example, based on (e.g., in response to) the SRS resource set indicator field indicating a multi-communication point (e.g., multi-TRP) operation/mode.

The wireless device may send (e.g., transmit) the first uplink transmission based on the SRS resource set of the at least two SRS resource sets, for example, based on (e.g., in response to) the one or more configuration parameters may indicating, for the uplink BWP of the cell, the at least two SRS resource sets both with 'codebook' or both with 'non-codebook'. The wireless device may send (e.g., transmit) the first uplink transmission based on the SRS resource set among the at least two SRS resource sets, for example, based on (e.g., in response to) a single TCI state being indicated for the cell. The wireless device may send (e.g., transmit) the first uplink transmission based on the SRS resource set among the at least two SRS resource sets, for example, based on (e.g., in response to) the DCI (e.g., DCI 1 1740 at time T2 in FIG. 17) indicating the TCI codepoint (e.g., TCI codepoint 111) comprising/indicating (and/or mapped to) the first TCI state (e.g., TCI state 26) for the cell. The wireless device may send (e.g., transmit) the first uplink transmission based on the SRS resource set among the at least two SRS resource sets, for example, based on (e.g., in response to) the DCI (e.g., DCI 1 at time T2 in FIG. 17) indicating, for the cell, the TCI codepoint comprising/indicating (and/or mapped to) a single TCI state (e.g., TCI state 26).

The wireless device may determine the SRS resource set among the at least two SRS resource sets, for example, based on (e.g., in response to) the SRS resource set indicator field being set/equal to the third value. The wireless device may determine the SRS resource set among the at least two SRS resource sets, for example, based on (e.g., in response to) the SRS resource set indicator field being set/equal to the fourth value.

The wireless device may determine, for the first uplink transmission, the SRS resource set among the at least two SRS resource sets. The SRS resource set may be determined for the first uplink transmission, for example, based on (e.g., in response to) a single TCI state being indicated for the cell. The wireless device may determine the SRS resource set among the at least two SRS resource sets, for example, based on (e.g., in response to) the DCI (e.g., DCI 1 1740 at time T2 in FIG. 17) indicating, for the cell, the TCI codepoint comprising/indicating (and/or mapped to) a single TCI state (e.g., TCI state 26).

The SRS resource set may be the first SRS resource set of the at least two SRS resource sets. The wireless device may determine the first SRS resource set among the at least two SRS resource sets. The wireless device may send (e.g., transmit) the first uplink transmission based on the first SRS resource set. The wireless device may not send (e.g., transmit) the first uplink transmission based on the second SRS resource set of the at least two SRS resource sets.

The SRS resource set may be the second SRS resource set of the at least two SRS resource sets. The wireless device may determine the second SRS resource set among the at least two SRS resource sets. The wireless device may send (e.g., transmit) the first uplink transmission based on the second SRS resource set. The wireless device may not send (e.g., transmit) the first uplink transmission based on the first SRS resource set of the at least two SRS resource sets.

The SRS resource set may be the first SRS resource set. The SRS resource set may be the first SRS resource set, for example, based on the first SRS resource set index of the first SRS resource set being lower/less than the second SRS resource set index of the second SRS resource set. The wireless device may determine the first SRS resource set as the SRS resource set, for example, based on the first SRS resource set index of the first SRS resource set being lower/less than the second SRS resource set index of the second SRS resource set.

The wireless device may determine the SRS resource set based on a least significant bit (LSB) of the SRS resource set indicator field. The SRS resource set may be the first SRS resource set, for example, based on the LSB of the SRS resource set indicator field being equal to a first value (e.g., 0). The wireless device may determine the first SRS resource set as the SRS resource set, for example, based on the LSB of the SRS resource set indicator field being equal to the first value. The LSB of the SRS resource set indicator field may be equal to zero, for example, if the SRS resource set indicator field is set/equal to '10'. The SRS resource set may be the first SRS resource set, for example, based on the LSB of the SRS resource set indicator field being equal to zero.

The SRS resource set may be the second SRS resource set, for example, based on the LSB of the SRS resource set indicator field being equal to a second value (e.g., 1). The wireless device may determine the second SRS resource set as the SRS resource set, for example, based on the LSB of the SRS resource set indicator field being equal to the second value. The LSB of the SRS resource set indicator field may be equal to one for example, if the SRS resource set indicator field is set/equal to '11'. The SRS resource set may be the second SRS resource set, for example, based on the LSB of the SRS resource set indicator field being equal to one.

The one or more configuration parameters may indicate the SRS resource set among the at least two SRS resource sets. The one or more configuration parameters may indicate/comprise a field (e.g., SRS resource set indicator field, SRS resource set selection field, and the like). The one or more configuration parameters may comprise one or more PUSCH configuration parameters, of the cell, that indicate/comprise the field. For example, the field may be a 1-bit field. The SRS resource set may be the first SRS resource set if the field is set/equal to a first value (e.g., 0). The SRS resource set may be the first SRS resource set, for example, based on the one or more configuration parameters indicating, for the field, the first value. The SRS resource set may be the second SRS resource set if the field is set/equal to a second value (e.g., 1). The SRS resource set may be the second SRS resource set, for example, based on the one or more configuration parameters indicating, for the field, the second value.

The SRS resource set may be the most recent SRS resource set, among the at least two SRS resource sets, used for an uplink transmission via the uplink BWP of cell that occurs before (and/or prior to) the first uplink transmission. The wireless device may transmit, via the uplink BWP of the cell, the uplink transmission based on the SRS resource set. The uplink transmission may be the most recent (and/or the last) uplink transmission that occurs prior to (and/or before) the first uplink transmission. The uplink transmission may be the most recent (and/or the last) uplink transmission, via the uplink BWP of the cell, that occurs prior to (and/or before) the first uplink transmission via the uplink BWP of the cell.

In an example, the wireless device may not expect a first SRS resource set indicator field in a first DCI format (e.g., DCI format 0_1 or DCI format 0_2) of the cell to be set/equal to the third value (e.g., 10 or codepoint 10) or to the fourth value (e.g., 11 or codepoint 11). The wireless device may not expect the first SRS resource set indicator field in the first DCI format to be set/equal to the third value or the fourth value, for example, based on (and/or when/if) a single TCI state being (and/or is) indicated for the cell. The wireless device may not expect the first SRS resource set indicator field in the first DCI format to be set/equal to the third value or the fourth value, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26). The wireless device may not receive (and/or may not expect to receive) a first DCI, with the first DCI format, scheduling a first uplink transmission via the uplink BWP of the cell and comprising the first SRS resource set indicator field set/equal to the third value or the fourth value, for example, based on (and/or when/if) a single TCI state being (and/or is) indicated for the cell. The base station may not send (e.g., transmit) (and/or may not expect to send/transmit) a first DCI, with the first DCI format, scheduling a first uplink transmission via the uplink BWP of the cell and comprising the first SRS resource set indicator field set/equal to the third value or the fourth value, for example, based on (and/or when/if) a single TCI state being (and/or is) indicated for the cell.

The wireless device may expect the first SRS resource set indicator field in the first DCI format to be set/equal to the third value or the fourth value, for example, based on (and/or when/if) the at least two TCI states (e.g., TCI state 26 and TCI state 61) being (and/or are) indicated for the cell. The wireless device may receive (and/or may expect to receive) a first DCI, with the first DCI format, scheduling a first uplink transmission via the uplink BWP of the cell and comprising the first SRS resource set indicator field set/equal to the third value or the fourth value, for example, based on (and/or when/if) the at least two TCI states (e.g., TCI state 26 and TCI state 61) being (and/or are) indicated for the cell. The base station may send (e.g., transmit) (and/or may expect to send/transmit) a first DCI, with the first DCI format, scheduling a first uplink transmission via the uplink BWP of the cell and comprising the first SRS resource set indicator field set/equal to the third value or the fourth value, for example, based on (and/or when/if) the at least two TCI states (e.g., TCI state 26 and TCI state 61) being (and/or are) indicated for the cell.

The wireless device may expect the first SRS resource set indicator field in the first DCI format (e.g., DCI format 0_1 or DCI format 0_2) of the cell to be set/equal to the first value (e.g., 00 or codepoint 00) or to the second value (e.g., 01 or codepoint 01). The wireless device may expect the first SRS resource set indicator field in the first DCI format to be set/equal to the first value or the second value, for example, based on (and/or when/if) a single TCI state being (and/or is) indicated for the cell. The wireless device may expect the first SRS resource set indicator field in the first DCI format to be set/equal to the first value or the second value, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26). The wireless device may receive (and/or may expect to receive) a first DCI, with the first DCI format, scheduling a first uplink transmission via the uplink BWP of the cell and comprising the first SRS resource set indicator field set/equal to the first value or the second value, for example, based on (and/or when/if) a single TCI state being (and/or is) indicated for the cell. The base station may send (e.g., transmit) (and/or may expect to send/transmit) a first DCI, with the first DCI format, scheduling a first uplink transmission via the uplink BWP of the cell and comprising the first SRS resource set indicator field set/equal to the first value or the second value, for example, based on (and/or when/if) a single TCI state being (and/or is) indicated for the cell.

The wireless device may expect the first SRS resource set indicator field in the first DCI format to be set/equal to the first value or the second value, for example, regardless of a single TCI state (e.g., TCI state 26) or the at least two TCI states (e.g., TCI state 26 and TCI state 61) are indicated for the cell. The wireless device may receive (and/or may expect to receive) a first DCI, with the first DCI format, scheduling a first uplink transmission via the uplink BWP of the cell and comprising the first SRS resource set indicator field set/equal to the first value or the second value, for example, regardless of a single TCI state (e.g., TCI state 26) or the at least two TCI states (e.g., TCI state 26 and TCI state 61) are indicated for the cell. The base station may send (e.g., transmit) (and/or may expect to send/transmit) a first DCI, with the first DCI format, scheduling a first uplink transmission via the uplink BWP of the cell and comprising the first SRS resource set indicator field set/equal to the first value or the second value, for example, regardless of a single TCI state (e.g., TCI state 26) or the at least two TCI states (e.g., TCI state 26 and TCI state 61) are indicated for the cell.

The wireless device may expect a second SRS resource set indicator field in a second DCI format (e.g., DCI format 0_X or the DCI scheduling the one or more cells discussed with respect to FIG. 19) of the cell to be set/equal to the third value (e.g., 10 or codepoint 10) or to the fourth value (e.g., 11 or codepoint 11). The wireless device may expect the second SRS resource set indicator field in the second DCI format to be set/equal to the third value or the fourth value, for example, if a single TCI state is indicated for the cell. The wireless device may expect the second SRS resource set indicator field in the second DCI format to be set/equal to the third value or the fourth value, for example, if the DCI (e.g., DCI 1 1740 at time T2 in FIG. 17) indicates, for the cell, the TCI codepoint comprising/indicating (and/or mapped to) a single TCI state (e.g., TCI state 26). The wireless device may receive (and/or may expect to receive) a second DCI, with the second DCI format, scheduling a second uplink transmission via the uplink BWP of the cell and comprising the second SRS resource set indicator field set/equal to the third value or the fourth value, for example, if a single TCI state is indicated for the cell. The base station may send (e.g., transmit) (and/or may expect to send/transmit) a second DCI, with the second DCI format, scheduling a second uplink transmission via the uplink BWP of the cell and comprising the second SRS resource set indicator field set/equal to the third value or the fourth value, for example, if a single TCI state is indicated for the cell. The wireless device may expect the second SRS resource set indicator field in the second DCI format to be set/equal to the third value or the fourth value, for example, regardless of a single TCI state (e.g., TCI state 26) or the at least two TCI states (e.g., TCI state 26 and TCI state 61) are indicated for the cell. The wireless device may receive (and/or may expect to receive) a second DCI, with the second DCI format, scheduling a second uplink transmission via the uplink BWP of the cell and comprising the second SRS resource set indicator field set/equal to the third value or the fourth value, for example, regardless of a single TCI state (e.g., TCI state 26) or the at least two TCI states (e.g., TCI state 26 and TCI state 61) are indicated for the cell. The base station may send (e.g., transmit) (and/or may expect to send/transmit) a second DCI, with the second DCI format, scheduling a second uplink transmission via the uplink BWP of the cell and comprising the second SRS resource set indicator field set/equal to the third value or the fourth value, for example, regardless of a single TCI state (e.g., TCI state 26) or the at least two TCI states (e.g., TCI state 26 and TCI state 61) are indicated for the cell.

The wireless device may expect a second SRS resource set indicator field in a second DCI format (e.g., DCI format 0_X or the DCI scheduling the one or more cells discussed with respect to FIG. 19) of the cell to be set/equal to the first value (e.g., 00 or codepoint 00), the second value (e.g., 01 or codepoint 01), the third value (e.g., 10 or codepoint 10), or to the fourth value (e.g., 11 or codepoint 11). The wireless device may expect the second SRS resource set indicator field in the second DCI format to be set/equal to the first value, the second value, the third value or the fourth value, for example, if a single TCI state is indicated for the cell. The wireless device may expect the second SRS resource set indicator field in the second DCI format to be set/equal to the first value, the second value, the third value or the fourth value, for example, if the DCI (e.g., DCI 1 1740 at time T2 in FIG. 17) indicates, for the cell, the TCI codepoint comprising/indicating (and/or mapped to) a single TCI state (e.g., TCI state 26). The wireless device may receive (and/or may expect to receive) a second DCI, with the second DCI format, scheduling a second uplink transmission via the uplink BWP of the cell and comprising the second SRS resource set indicator field set/equal to the first value, the second value, the third value or the fourth value, for example, if a single TCI state is indicated for the cell. The base station may send (e.g., transmit) (and/or may expect to send/transmit) a second DCI, with the second DCI format, scheduling a second uplink transmission via the uplink BWP of the cell and comprising the second SRS resource set indicator field set/equal to the first value, the second value, the third value or the fourth value, for example, if a single TCI state is indicated for the cell. The wireless device may expect the second SRS resource set indicator field in the second DCI format to be set/equal to the first value, the second value, the third value or the fourth value, for example, regardless of a single TCI state (e.g., TCI state 26) or the at least two TCI states (e.g., TCI state 26 and TCI state 61) are indicated for the cell. The wireless device may receive (and/or may expect to receive) a second DCI, with the second DCI format, scheduling a second uplink transmission via the uplink BWP of the cell and comprising the second SRS resource set indicator field set/equal to the first value, the second value, the third value or the fourth value, for example, regardless of a single TCI state (e.g., TCI state 26) or the at least two TCI states (e.g., TCI state 26 and TCI state 61) are indicated for the cell. The base station may send (e.g., transmit) (and/or may expect to send/transmit) a second DCI, with the second DCI format, scheduling a second uplink transmission via the uplink BWP of the cell and comprising the second SRS resource set indicator field set/equal to the first value, the second value, the third value or the fourth value, for example, regardless of a single TCI state (e.g., TCI state 26) or the at least two TCI states (e.g., TCI state 26 and TCI state 61) are indicated for the cell.

The at least two TCI states (e.g., Unified TCI state 1 and Unified TCI state 2 in Case 3 FIG. 23, and/or as discussed with respect to FIG. 17) may be indicated/activated for the cell. The TCI codepoint (e.g., TCI codepoint 110 in FIG. 17), of the one or more TCI codepoints of the cell, may comprise the at least two TCI states. The at least two TCI states may comprise the first TCI state (e.g., TCI state 26 in FIG. 17) and the second TCI state (e.g., TCI state 61 in FIG. 17). The first TCI state and the second TCI state indicated by (and/or mapped to) the TCI codepoint (e.g., TCI codepoint 110 in FIG. 17) may be the at least two TCI states indicated/activated for the cell.

The first TCI state indicated for the cell may be, for example, a first uplink TCI state. The second TCI state indicated for the cell may be, for example, a second uplink TCI state. The first TCI state indicated for the cell may be, for example, a first downlink TCI state. The second TCI state indicated for the cell may be, for example, a second downlink TCI state. The first TCI state indicated for the cell may be, for example, a first joint TCI state. The second TCI state indicated for the cell may be, for example, a second joint TCI state. The first TCI state indicated for the cell may be, for example, a first unified TCI state. The second TCI state indicated for the cell may be, for example, a second unified TCI state.

The at least two TCI states (e.g., TCI state 26 and TCI state 61 in FIG 17, Unified TCI state 1 and Unified TCI state 2 in FIG. 23) may be indicated/activated for the cell. The at least two SRS resource sets (e.g., SRS resource set 1 and SRS resource set 2 in FIG. 23) may be indicated/configured for the uplink BWP of the cell (e.g., Case 3 in FIG. 23).

The SRS resource set indicator field of the DCI may be, for example, equal/set to a third value (e.g., 2, 10). The third value of the SRS resource set indicator field may be (and/or may be interchangeably used with) a third codepoint (e.g., codepoint 10) for/of the SRS resource set indicator field. The third value of the SRS resource set indicator field may indicate the at least two SRS resource set, for example, based on (and/or when/if) the one or more configuration parameters indicating (and/or indicate), for the uplink BWP of the cell, the at least two SRS resource sets both with 'codebook' or both with 'non-codebook'.

The SRS resource set indicator field of the DCI may be, for example, equal/set to a fourth value (e.g., 3, 11). The fourth value of the SRS resource set indicator field may be (and/or may be interchangeably used with) a fourth codepoint (e.g., codepoint 11) for/of the SRS resource set indicator field. The fourth value of the SRS resource set indicator field may indicate the at least two SRS resource set, for example, based on (and/or when/if) the one or more configuration parameters indicating (and/or indicate), for the uplink BWP of the cell, the at least two SRS resource sets both with 'codebook' or both with 'non-codebook'.

The wireless device may send (e.g., transmit), via the uplink BWP of the cell, the first uplink transmission. The first uplink transmission may be sent, for example, based on the first TCI state (e.g., TCI state 26 in FIG. 17 and/or Unified TCI state 1 in Case 3 in in FIG. 23) and the second TCI state (e.g., TCI state 61 in FIG. 17 and/or Unified TCI state 2 in Case 3 in in FIG. 23). The wireless device may send (e.g., transmit) the first uplink transmission based on the first TCI state and the second TCI state, for example, based on (e.g., in response to) the SRS resource set indicator field of the DCI being equal/set to the third value. The wireless device may send (e.g., transmit) the first uplink transmission based on the first TCI state and the second TCI state, for example, based on (e.g., in response to) the SRS resource set indicator field of the DCI being equal/set to the fourth value.

The wireless device may send (e.g., transmit) the first uplink transmission based on the first TCI state and the second TCI state, for example, based on (e.g., in response to) the at least two TCI states being indicated/activated for the cell. The wireless device may send (e.g., transmit) the first uplink transmission based on the first TCI state and the second TCI state, for example, based on (e.g., in response to) the DCI (e.g., DCI 1 1740 at time T2 in FIG. 17) indicating, for the cell, the TCI codepoint comprising/indicating (and/or mapped to) the at least two TCI states.

The wireless device may send (e.g., transmit) the first uplink transmission based on the first TCI state and the second TCI state, for example, based on (e.g., in response to) the one or more configuration parameters indicating, for the uplink BWP of the cell, the at least two SRS resource sets all with 'codebook' or all with 'non-codebook'.

The wireless device may send (e.g., transmit), via the uplink BWP of the cell, the first uplink transmission, for example, based on the first SRS resource set (e.g., SRS resource set 1 in Case 3 in in FIG. 23) and the second SRS resource set (e.g., SRS resource set 2 in Case 3 in in FIG. 23). The wireless device may send (e.g., transmit) the first uplink transmission based on the first SRS resource set and the second SRS resource set, for example, based on (e.g., in response to) the SRS resource set indicator field of the DCI being equal/set to the third value. The wireless device may send (e.g., transmit) the first uplink transmission based on the first SRS resource set and the second SRS resource set, for example, based on (e.g., in response to) the SRS resource set indicator field of the DCI being equal/set to the fourth value.

The wireless device may send (e.g., transmit) the first uplink transmission based on the first SRS resource set and the second SRS resource set, for example, based on (e.g., in response to) the at least two TCI states being indicated/activated for the cell. The wireless device may send (e.g., transmit) the first uplink transmission based on the first SRS resource set and the second SRS resource set, for example, based on (e.g., in response to) the DCI (e.g., DCI 1 1740 at time T2 in FIG. 17) indicating, for the cell, the TCI codepoint comprising/indicating (and/or mapped to) the at least two TCI states.

The wireless device may send (e.g., transmit) the first uplink transmission based on the first SRS resource set and the second SRS resource set, for example, based on (e.g., in response to) the one or more configuration parameters may indicating, for the uplink BWP of the cell, the at least two SRS resource sets both with 'codebook' or both with 'non-codebook'.

The wireless device may send (e.g., transmit), via the uplink BWP of the cell, one or more first repetitions of the first uplink transmission based on the first TCI state and send (e.g., transmit) one or more second repetitions of the first uplink transmission based on the second TCI state. The repetitions of the first uplink transmission may comprise the one or more first repetitions of the first uplink transmission and the one or more second repetitions of the first uplink transmission. The repetitions of the first uplink transmission may be, for example, time-domain repetitions of the first uplink transmission. The repetitions of the first uplink transmission may be, for example, frequency-domain repetitions of the first uplink transmission.

The wireless device may send (e.g., transmit) the one or more first repetitions of the first uplink transmission with the first spatial domain transmitting/transmission filter/beam that is determined based on the first reference signal indicated by the first TCI state. The wireless device may send (e.g., transmit) the one or more first repetitions of the first uplink transmission with the first transmission power that is determined based on the one or more first power control parameters (e.g., target received power, closed-loop index, pathloss compensation factor, alpha, pathloss reference signal, and the like) indicated by (and/or included in or associated with or mapped to) the first TCI state.

The wireless device may send (e.g., transmit) the one or more first repetitions of the first uplink transmission based on the first SRS resource set (e.g., SRS resource set 1 in Case 3 in FIG. 23). The wireless device may send (e.g., transmit) the one or more first repetitions of the first uplink transmission based on a first SRS resource in the first SRS resource set. The one or more configuration parameters may indicate, for the first SRS resource, a first number of SRS ports (e.g., nrofSRS-Ports). The wireless device may send (e.g., transmit) the one or more first repetitions of the first uplink transmission, for example, based on the first number of SRS ports of the first SRS resource in the first SRS resource set. For example, the wireless device may send (e.g., transmit) the one or more first repetitions of the first uplink transmission with/using (and/or based on) a first transmission precoder that is determined based on the first number of SRS ports.

The wireless device may send (e.g., transmit) the one or more second repetitions of the first uplink transmission with the second spatial domain transmitting/transmission filter/beam that is determined based on the second reference signal indicated by the second TCI state. The wireless device may send (e.g., transmit) the one or more second repetitions of the first uplink transmission with the second transmission power that is determined based on the one or more second power control parameters (e.g., target received power, closed-loop index, pathloss compensation factor, alpha, pathloss reference signal, and the like) indicated by (and/or included in or associated with or mapped to) the second TCI state.

The wireless device may send (e.g., transmit) the one or more second repetitions of the first uplink transmission based on the second SRS resource set (e.g., SRS resource set 2 in Case 3 in FIG. 23). The wireless device may send (e.g., transmit) the one or more second repetitions of the first uplink transmission based on a second SRS resource in the second SRS resource set. The one or more configuration parameters may indicate, for the second SRS resource, a second number of SRS ports (e.g., nrofSRS-Ports). The wireless device may send (e.g., transmit) the one or more second repetitions of the first uplink transmission, for example, based on the second number of SRS ports of the second SRS resource in the second SRS resource set. For example, the wireless device may send (e.g., transmit) the one or more second repetitions of the first uplink transmission with/using (and/or based on) a second transmission precoder that is determined based on the second number of SRS ports.

The wireless device may send (e.g., transmit) a first/starting/initial/earliest repetition of the repetitions of the first uplink transmission based on the first TCI state, for example, based on (e.g., in response to) the SRS resource set indicator field being set/equal to the third value. The wireless device may send (e.g., transmit) a first/starting/initial/earliest repetition of the repetitions of the first uplink transmission based on the first SRS resource set, for example, based on (e.g., in response to) the SRS resource set indicator field being set/equal to the third value.

The wireless device may send (e.g., transmit) a first/starting/initial/earliest repetition of the repetitions of the first uplink transmission based on the second TCI state, for example, based on (e.g., in response to) the SRS resource set indicator field being set/equal to the fourth value. The wireless device may send (e.g., transmit) a first/starting/initial/earliest repetition of the repetitions of the first uplink transmission based on the second SRS resource set, for example, based on (e.g., in response to) the SRS resource set indicator field being set/equal to the fourth value.

The one or more configuration parameters may indicate a single-frequency network (SFN) scheme/mode. The SFN scheme may be, for example, an SFN scheme for PUSCH transmissions (e.g., sfn-PUSCH). The SFN scheme may be, for example, an SFN scheme for PUCCH transmissions (e.g., sfn-PUCCH).

The wireless device may send (e.g., transmit) the first uplink transmission based on both the first TCI state and the second TCI state. The wireless device may send (e.g., transmit) the first uplink transmission based on both the first TCI state and the second TCI state, for example, based on (e.g., in response to) the one or more configuration parameters indicating the SFN scheme. The wireless device may send (e.g., transmit) each layer (and/or data stream) of the first uplink transmission based on both the first TCI state and the second TCI state.

The wireless device may send (e.g., transmit) the first uplink transmission (and/or each layer of the first uplink transmission) with the first spatial domain transmitting/transmission filter/beam that is determined based on the first reference signal indicated by the first TCI state. The wireless device may send (e.g., transmit) the first uplink transmission (and/or each layer of the first uplink transmission) with the first transmission power that is determined based on the one or more first power control parameters (e.g., target received power, closed-loop index, pathloss compensation factor, alpha, pathloss reference signal, and the like) indicated by (and/or included in or associated with or mapped to) the first TCI state.

The wireless device may send (e.g., transmit) the first uplink transmission (and/or each layer of the first uplink transmission) based on the first SRS resource set (e.g., SRS resource set 1 in Case 3 in FIG. 23). The wireless device may send (e.g., transmit) the first uplink transmission (and/or each layer of the first uplink transmission) based on a first SRS resource in the first SRS resource set. The one or more configuration parameters may indicate, for the first SRS resource, a first number of SRS ports (e.g., nrofSRS-Ports). The wireless device may send (e.g., transmit) the first uplink transmission (and/or each layer of the first uplink transmission), for example, based on the first number of SRS ports of the first SRS resource in the first SRS resource set. For example, the wireless device may send (e.g., transmit) the first uplink transmission with/using (and/or based on) a first transmission precoder that is determined based on the first number of SRS ports.

The wireless device may send (e.g., transmit) the first uplink transmission (and/or each layer of the first uplink transmission) with the second spatial domain transmitting/transmission filter/beam that is determined based on the second reference signal indicated by the second TCI state. The wireless device may send (e.g., transmit) the first uplink transmission (and/or each layer of the first uplink transmission) with the second transmission power that is determined based on the one or more second power control parameters (e.g., target received power, closed-loop index, pathloss compensation factor, alpha, pathloss reference signal, and the like) indicated by (and/or included in or associated with or mapped to) the second TCI state.

The wireless device may send (e.g., transmit) the first uplink transmission (and/or each layer of the first uplink transmission) based on the second SRS resource set (e.g., SRS resource set 2 in Case 3 in FIG. 23). The wireless device may send (e.g., transmit) the first uplink transmission (and/or each layer of the first uplink transmission) based on a second SRS resource in the second SRS resource set. The one or more configuration parameters may indicate, for the second SRS resource, a second number of SRS ports (e.g., nrofSRS-Ports). The wireless device may send (e.g., transmit) the first uplink transmission, for example, based on the second number of SRS ports of the second SRS resource in the second SRS resource set. For example, the wireless device may send (e.g., transmit) the first uplink transmission with/using (and/or based on) a second transmission precoder that is determined based on the second number of SRS ports.

The one or more configuration parameters may indicate a spatial domain multiplexing (SDM) scheme/mode. The SDM scheme may be, for example, an SDM scheme for PUSCH transmissions (e.g., sdm-PUSCH). The SDM scheme may be, for example, an SDM scheme for PUCCH transmissions (e.g., sdm-PUCCH).

The wireless device may send (e.g., transmit), via the uplink BWP of the cell, the first portion (and/or first layer(s)/data-stream(s)) of the first uplink transmission based on the first TCI state and send (e.g., transmit) the second portion (and/or second layer(s)/data-stream(s)) of the second uplink transmission based on the second TCI state.

The wireless device may send (e.g., transmit) the first portion (and/or first layer(s)/data-stream(s)) of the first uplink transmission with the first spatial domain transmitting/transmission filter/beam that is determined based on the first reference signal indicated by the first TCI state. The wireless device may send (e.g., transmit) the first portion (and/or first layer(s)/data-stream(s)) of the first uplink transmission with the first transmission power that is determined based on the one or more first power control parameters (e.g., target received power, closed-loop index, pathloss compensation factor, alpha, pathloss reference signal, and the like) indicated by (and/or included in or associated with or mapped to) the first TCI state.

The wireless device may send (e.g., transmit) the first portion (and/or first layer(s)/data-stream(s)) of the first uplink transmission based on the first SRS resource set (e.g., SRS resource set 1 in Case 3 in FIG. 23). The wireless device may send (e.g., transmit) the first portion (and/or first layer(s)/data-stream(s)) of the first uplink transmission based on a first SRS resource in the first SRS resource set. The one or more configuration parameters may indicate, for the first SRS resource, a first number of SRS ports (e.g., nrofSRS-Ports). The wireless device may send (e.g., transmit) the first portion (and/or first layer(s)/datastream(s)) of the first uplink transmission, for example, based on the first number of SRS ports of the first SRS resource in the first SRS resource set. For example, the wireless device may send (e.g., transmit) the first portion (and/or first layer(s)/data-stream(s)) of the first uplink transmission with/using (and/or based on) a first transmission precoder that is determined based on the first number of SRS ports.

The wireless device may send (e.g., transmit) the second portion (and/or second layer(s)/data-stream(s)) of the first uplink transmission with the second spatial domain transmitting/transmission filter/beam that is determined based on the second reference signal indicated by the second TCI state. The wireless device may send (e.g., transmit) the second portion (and/or second layer(s)/data-stream(s)) of the first uplink transmission with the second transmission power that is determined based on the one or more second power control parameters (e.g., target received power, closed-loop index, pathloss compensation factor, alpha, pathloss reference signal, and the like) indicated by (and/or included in or associated with or mapped to) the second TCI state.

The wireless device may send (e.g., transmit) the second portion (and/or second layer(s)/data-stream(s)) of the first uplink transmission based on the second SRS resource set (e.g., SRS resource set 2 in Case 3 in FIG. 23). The wireless device may send (e.g., transmit) the second portion (and/or second layer(s)/data-stream(s)) of the first uplink transmission based on a second SRS resource in the second SRS resource set. The one or more configuration parameters may indicate, for the second SRS resource, a second number of SRS ports (e.g., nrofSRS-Ports). The wireless device may send (e.g., transmit) the second portion (and/or second layer(s)/data-stream(s)) of the first uplink transmission, for example, based on the second number of SRS ports of the second SRS resource in the second SRS resource set. For example, the wireless device may send (e.g., transmit) the second portion (and/or second layer(s)/data-stream(s)) of the first uplink transmission with/using (and/or based on) a second transmission precoder that is determined based on the second number of SRS ports.

The at least two TCI states (e.g., Unified TCI state 1 and Unified TCI state 2 in Case 3 FIG. 23, and as discussed with respect to FIG. 17) may be indicated/activated for the cell. The TCI codepoint (e.g., TCI codepoint 110 in FIG. 17), of the one or more TCI codepoints of the cell, may comprise the at least two TCI states. The at least two TCI states may comprise the first TCI state (e.g., TCI state 26 in FIG. 17) and the second TCI state (e.g., TCI state 61 in FIG. 17). The first TCI state and the second TCI state indicated by (and/or mapped to) the TCI codepoint (e.g., TCI codepoint 110 in FIG. 17) may be the at least two TCI states indicated/activated for the cell.

The DCI (e.g., scheduling the one or more cells discussed with respect to FIG. 19) may comprise a TCI state selection field (and/or TCI selection field, TCI state indicator field, TCI indicator field, etc.). The TCI state selection field of the DCI may be equal/set to a first value (e.g., 0, 00). The first value of the TCI state selection field may indicate the first TCI state of the at least two TCI states. The first value of the TCI state selection field may be (and/or may be interchangeably used with) a first codepoint (e.g., TCI codepoint 00) for/of the TCI state selection field.

The wireless device may receive, via the downlink BWP of the cell, the first downlink reception based on the first TCI state of the at least two TCI states, for example, based on (e.g., in response to) the TCI state selection field being set/equal to the first value. The wireless device may not receive, via the downlink BWP of the cell, the first downlink reception based on the second TCI state of the at least two TCI states, for example, based on (e.g., in response to) the TCI state selection field being set/equal to the first value.

The wireless device may receive, via the downlink BWP of the cell, the first downlink reception based on the first TCI state indicated by the first value of the TCI state selection field, for example, based on (e.g., in response to) the at least two TCI states being indicated/activated for the cell. The wireless device may receive, via the downlink BWP of the cell, the first downlink reception based on the first TCI state of the at least two TCI states, for example, based on (e.g., in response to) the DCI (e.g., DCI 1 1740 at time T2 in FIG. 17) indicating, for the cell, the TCI codepoint comprising/indicating (and/or mapped to) the at least two TCI states. The wireless device may receive each layer (and/or data stream) of the first downlink reception based on the first TCI state.

At least one DM-RS antenna port of the first downlink reception may be quasi co-located with the first reference signal indicated by the first TCI state. The at least one DM-RS antenna port of the first downlink reception may be quasi co-located with the first reference signal with respect to the first quasi co-location type indicated by the first TCI state. Each DM-RS antenna port of the first downlink reception may be quasi co-located with the first reference signal indicated by the first TCI state. Each DM-RS antenna port of the first downlink reception may be quasi co-located with the first reference signal with respect to the first quasi co-location type indicated by the first TCI state.

The first downlink reception may be/comprise repetitions of a first downlink reception (e.g., repetitions of a PDSCH reception). The wireless device may receive the repetitions of the first downlink reception based on the first TCI state, for example, based on (e.g., in response to) the TCI state selection field being set/equal to the first value. The wireless device may receive the repetitions of the first downlink reception based on the first TCI state indicated by the first value of the TCI state selection field, for example, based on (e.g., in response to) the at least two TCI states being indicated/activated for the cell. The wireless device may receive each repetition of the repetitions of the first downlink reception based on the first TCI state.

The TCI state selection field of the DCI may be equal/set to a second value (e.g., 1, 01). The second value of the TCI state selection field may indicate the second TCI state of the at least two TCI states. The second value of the TCI state selection field may be (and/or may be interchangeably used with) a second codepoint (e.g., TCI codepoint 01) for/of the TCI state selection field.

The wireless device may receive, via the downlink BWP of the cell, the first downlink reception based on the second TCI state of the at least two TCI states, for example, based on (e.g., in response to) the TCI state selection field being set/equal to the second value. The wireless device may not receive, via the downlink BWP of the cell, the first downlink reception based on the first TCI state of the at least two TCI states, for example, based on (e.g., in response to) the TCI state selection field being set/equal to the second value.

The wireless device may receive, via the downlink BWP of the cell, the first downlink reception based on the second TCI state indicated by the second value of the TCI state selection field, for example, based on (e.g., in response to) the at least two TCI states being indicated/activated for the cell. The wireless device may receive, via the downlink BWP of the cell, the first downlink reception based on the second TCI state of the at least two TCI states, for example, based on (e.g., in response to) the DCI (e.g., DCI 1 1740 at time T2 in FIG. 17) indicating, for the cell, the TCI codepoint comprising/indicating (and/or mapped to) the at least two TCI states. The wireless device may receive each layer (and/or data stream) of the first downlink reception based on the second TCI state.

At least one DM-RS antenna port of the first downlink reception may be quasi co-located with the second reference signal indicated by the second TCI state. The at least one DM-RS antenna port of the first downlink reception may be quasi co-located with the second reference signal with respect to the second quasi co-location type indicated by the second TCI state. Each DM-RS antenna port of the first downlink reception may be quasi co-located with the second reference signal indicated by the second TCI state. Each DM-RS antenna port of the first downlink reception may be quasi co-located with the second reference signal with respect to the second quasi co-location type indicated by the second TCI state.

The first downlink reception may be/comprise repetitions of a first downlink reception (e.g., repetitions of a PDSCH reception). The wireless device may receive the repetitions of the first downlink reception based on the second TCI state, for example, based on (e.g., in response to) the TCI state selection field being set/equal to the second value. The wireless device may receive the repetitions of the first downlink reception based on the second TCI state indicated by the second value of the TCI state selection field, for example, based on (e.g., in response to) the at least two TCI states being indicated/activated for the cell. The wireless device may receive each repetition of the repetitions of the first downlink reception based on the second TCI state.

The TCI state selection field of the DCI may be equal/set to a third value (e.g., 2, 10). The third value of the TCI state selection field may indicate the at least two TCI states. The third value of the TCI state selection field may be (and/or may be interchangeably used with) a third codepoint (e.g., TCI codepoint 10) for/of the TCI state selection field. The third value of the TCI state selection field may indicate the at least two TCI states, for example, if the at least two TCI states are indicated/activated for the cell.

The wireless device may receive, via the downlink BWP of the cell, the first downlink reception based on the first TCI state (e.g., TCI state 26 in FIG. 17 and Unified TCI state 1 in Case 3 in in FIG. 23) and the second TCI state (e.g., TCI state 61 in FIG. 17 and Unified TCI state 2 in Case 3 in in FIG. 23), for example, based on (e.g., in response to) the TCI state selection field being set/equal to the third value.

The TCI state selection field of the DCI may be equal/set to a fourth value (e.g., 3, 11). The fourth value of the TCI state selection field may indicate the at least two TCI states. The fourth value of the TCI state selection field may be (and/or may be interchangeably used with) a fourth codepoint (e.g., TCI codepoint 11) for/of the TCI state selection field. The fourth value of the TCI state selection field may indicate the at least two TCI states, for example, if the at least two TCI states are indicated/activated for the cell.

The wireless device may receive, via the downlink BWP of the cell, the first downlink reception based on the first TCI state (e.g., TCI state 26 in FIG. 17 and Unified TCI state 1 in Case 3 in in FIG. 23) and the second TCI state (e.g., TCI state 61 in FIG. 17 and Unified TCI state 2 in Case 3 in in FIG. 23), for example, based on (e.g., in response to) the TCI state selection field being set/equal to the fourth value. The wireless device may receive the first downlink reception based on the first TCI state and the second TCI state, for example, based on (e.g., in response to) the at least two TCI states being indicated/activated for the cell. The wireless device may receive the first downlink reception based on the first TCI state and the second TCI state, for example, based on (e.g., in response to) the DCI (e.g., DCI 1 1740 at time T2 in FIG. 17) indicating, for the cell, the TCI codepoint comprising/indicating (and/or mapped to) the at least two TCI states.

The wireless device may receive, via the downlink BWP of the cell, one or more first repetitions of the first downlink reception based on the first TCI state and receive one or more second repetitions of the first downlink reception based on the second TCI state. The repetitions of the first downlink reception may comprise the one or more first repetitions of the first downlink reception and the one or more second repetitions of the first downlink reception. The repetitions of the first downlink reception may be, for example, time-domain repetitions of the first downlink reception. The repetitions of the first downlink reception may be, for example, frequency-domain repetitions of the first downlink reception.

At least one first DM-RS antenna port of the one or more first repetitions of the first downlink reception may be quasi co-located with the first reference signal indicated by the first TCI state. The at least one first DM-RS antenna port of a (e.g., each) repetition of the one or more first repetitions of the first downlink reception may be quasi co-located with the first reference signal indicated by the first TCI state. The at least one first DM-RS antenna port of the one or more first repetitions of the first downlink reception may be quasi co-located with the first reference signal with respect to the first quasi co-location type indicated by the first TCI state.

At least one second DM-RS antenna port of the one or more second repetitions of the first downlink reception may be quasi co-located with the second reference signal indicated by the second TCI state. The at least one second DM-RS antenna port of each repetition of the one or more second repetitions of the first downlink reception may be quasi co-located with the second reference signal indicated by the second TCI state. The at least one second DM-RS antenna port of the one or more second repetitions of the first downlink reception may be quasi co-located with the second reference signal with respect to the second quasi co-location type indicated by the second TCI state. The at least one first DM-RS antenna port and the at least one second DM-RS antenna port may be, for example, the same.

The wireless device may receive a first/starting/initial/earliest repetition of the repetitions of the first downlink reception based on the first TCI state. The first/starting/initial/earliest repetition may be received based on the first TCI state, for example, based on (e.g., in response to) the TCI state selection field being set/equal to the third value. The first/starting/initial/earliest repetition may be received based on the second TCI state, for example, based on (e.g., in response to) the TCI state selection field being set/equal to the fourth value.

The one or more configuration parameters may indicate a single-frequency network (SFN) scheme/mode. The SFN scheme may be, for example, an SFN scheme for PDSCH receptions (e.g., sfn-PDSCH). The wireless device may receive the first downlink reception based on the first TCI state and the second TCI state, for example, based on (e.g.,

in response to) the one or more configuration parameters indicating the SFN scheme.

The wireless device may receive a (e.g., each) layer (and/or data stream) of the first downlink reception based on both the first TCI state and the second TCI state. The wireless device may receive a (e.g., each) layer (and/or data stream) of the first downlink reception based on the first TCI state. The wireless device may receive a (e.g., each) layer (and/or data stream) of the first downlink reception based on the second TCI state.

At least one DM-RS antenna port of the first downlink reception may be quasi co-located with both the first reference signal indicated by the first TCI state and the second reference signal indicated by the second TCI state. At least one DM-RS antenna port of each layer (and/or data stream) of the first downlink reception may be quasi co-located with both the first reference signal indicated by the first TCI state and the second reference signal indicated by the second TCI state. The at least one DM-RS antenna port of the first downlink reception may be quasi co-located with both the first reference signal with respect to the first quasi co-location type indicated by the first TCI state and the second reference signal with respect to the second quasi co-location type indicated by the second TCI state.

The one or more configuration parameters may indicate a spatial domain multiplexing (SDM) scheme/mode. The SDM scheme may be, for example, an SDM scheme for PDSCH receptions (e.g., sdm-PDSCH). The wireless device may receive, via the downlink BWP of the cell, a first portion (and/or first layer(s)/data-stream(s)) of the first downlink reception based on the first TCI state and receive a second portion (and/or second layer(s)/data-stream(s)) of the second downlink reception based on the second TCI state.

At least one first DM-RS antenna port of the first portion (and/or first layer(s)/data-stream(s)) of the first downlink reception may be quasi co-located with the first reference signal indicated by the first TCI state. The at least one first DM-RS antenna port of the first portion (and/or first layer(s)/data-stream(s)) of the first downlink reception may be quasi co-located with the first reference signal with respect to the first quasi co-location type indicated by the first TCI state.

At least one second DM-RS antenna port of the second portion (and/or second layer(s)/data-stream(s)) of the first downlink reception may be quasi co-located with the second reference signal indicated by the second TCI state. The at least one second DM-RS antenna port of the second portion (and/or second layer(s)/data-stream(s)) of the first downlink reception may be quasi co-located with the second reference signal with respect to the second quasi co-location type indicated by the second TCI state. The at least one first DM-RS antenna port and the at least one second DM-RS antenna port may be, for example, different.

A single TCI state (e.g., Unified TCI state 1 in Case 1 and Case 2 in FIG. 23, as discussed with respect to FIG. 17) may be indicated/activated for the cell. The TCI codepoint (e.g., TCI codepoint 111 in FIG. 17), of the one or more TCI codepoints of the cell, may comprise the first TCI state (e.g., TCI state 26 in FIG. 17). The first TCI state (e.g., TCI state 26 in FIG. 17) indicated by (and/or mapped to) the TCI codepoint (e.g., TCI codepoint 111 in FIG. 17) may be the single TCI state indicated/activated for the cell. The first TCI state indicated for the cell may be, for example, a first uplink TCI state. The first uplink TCI state may be a single uplink TCI state indicated for the cell. The first TCI state indicated for the cell may be, for example, a first downlink TCI state. The first downlink TCI state may be a single downlink TCI state indicated for the cell. The first TCI state indicated for the cell may be, for example, a first joint TCI state. The first joint TCI state may be a single joint TCI state indicated for the cell. The first TCI state indicated for the cell may be, for example, a first unified TCI state. The first unified TCI state may be a single unified TCI state indicated for the cell.

The wireless device may ignore the TCI state selection field in the DCI, for example, based on a single TCI state being indicated for the cell. The wireless device may ignore the TCI state selection field in the DCI, for example, based on the DCI (e.g., DCI at time 1 1740 T2 in FIG. 17) indicating the TCI codepoint (e.g., TCI codepoint 111) comprising/indicating (and/or mapped to) the first TCI state (e.g., TCI state 26) for the cell. The wireless device may ignore the TCI state selection field in the DCI, for example, based on the DCI (e.g., DCI 1 1740 at time T2 in FIG. 17) indicating, for the cell, the TCI codepoint comprising/indicating (and/or mapped to) a single TCI state (e.g., TCI state 26).

The wireless device may not apply/use the TCI state selection field to/in the first downlink reception via the downlink BWP of the cell, for example, based on/by ignoring the TCI state selection field in the DCI. The wireless device may not apply/use a value of the TCI state selection field to/in the first downlink reception via the downlink BWP of the cell, for example, based on/by ignoring the TCI state selection field in the DCI.

The wireless device may receive, via the downlink BWP of the cell, the first downlink reception based on the first TCI state, for example, based on (e.g., in response to/by) ignoring the TCI state selection field in the DCI. The wireless device may receive, via the downlink BWP of the cell, the first downlink reception based on the first TCI state, for example, based on (e.g., in response to) a single TCI state being indicated for the cell. The wireless device may receive, via the downlink BWP of the cell, the first downlink reception based on the first TCI state, for example, based on (e.g., in response to) the first TCI state being the single TCI state indicated for the cell. The wireless device may receive, via the downlink BWP of the cell, the first downlink reception based on the first TCI state, for example, regardless of the value of the TCI state selection field.

The wireless device may receive each layer (and/or data stream) of the first downlink reception based on the first TCI state. At least one DM-RS antenna port of the first downlink reception may be quasi co-located with the first reference signal indicated by the first TCI state. The at least one DM-RS antenna port of the first downlink reception may be quasi co-located with the first reference signal with respect to the first quasi co-location type indicated by the first TCI state. A (e.g., each) DM-RS antenna port of the first downlink reception may be quasi co-located with the first reference signal indicated by the first TCI state. A (e.g., each) DM-RS antenna port of the first downlink reception may be quasi co-located with the first reference signal with respect to the first quasi co-location type indicated by the first TCI state.

The first downlink reception may be/comprise repetitions of a first downlink reception (e.g., repetitions of a PDSCH reception). The wireless device may receive the repetitions of the first downlink reception based on the first TCI state, for example, based on (e.g., in response to/by) ignoring the TCI state selection field. The wireless device may receive the repetitions of the first downlink reception based on the first TCI state, for example, based on (e.g., in response to) a single TCI state being indicated/activated for the cell. The wireless device may receive each repetition of the repetitions of the first downlink reception based on the first TCI state.

The wireless device may not expect a first TCI state selection field in a first DCI format (e.g., DCI format 1_1 or DCI format 1_2) of the cell to be set/equal to a value. The wireless device may not expect a first TCI state selection field in a first DCI format to be set/equal to the value, for example, based on (and/or when/if) a single TCI state being (and/or is) indicated for the cell. The wireless device may not expect a first TCI state selection field in a first DCI format to be set/equal to the value, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26).

The wireless device may not receive (and/or may not expect to receive) a first DCI, with the first DCI format, scheduling a first downlink reception via the downlink BWP of the cell and comprising the first TCI state selection field set/equal to the value, for example, based on (and/or when/if) a single TCI state being (and/or is) indicated for the cell. The base station may not send (e.g., transmit) (and/or may not expect to transmit) a first DCI, with the first DCI format, scheduling a first downlink reception via the downlink BWP of the cell and comprising the first TCI state selection field set/equal to the value, for example, based on (and/or when/if) a single TCI state being (and/or is) indicated for the cell.

The value may be, for example, the third value (e.g., 10 or TCI codepoint 10). The value may be, for example, the fourth value (e.g., 11 or TCI codepoint 11). The value may be, for example, the second value (e.g., 01 or TCI codepoint 01). The wireless device may not expect the first TCI state selection field, in the first DCI format, to be set/equal to the third value or the fourth value, for example, based on (and/or when/if) a single TCI state being (and/or is) indicated for the cell. The wireless device may not expect the first TCI state selection field, in the first DCI format, to be set/equal to the second value, the third value or the fourth value, for example, based on (and/or when/if) a single TCI state being (and/or is) indicated for the cell.

The wireless device may expect the first TCI state selection field in the first DCI format to be set/equal to the value, for example, based on (and/or when/if) the at least two TCI states (e.g., TCI state 26 and TCI state 61) being (and/or are) indicated for the cell. The wireless device may receive (and/or may expect to receive) a first DCI, with the first DCI format, scheduling a first downlink reception via the downlink BWP of the cell and comprising the first TCI state selection field set/equal to the value, for example, based on (and/or when/if) the at least two TCI states (e.g., TCI state 26 and TCI state 61) being (and/or are) indicated for the cell. The base station may send (e.g., transmit) (and/or may expect to send/transmit) a first DCI, with the first DCI format, scheduling a first downlink reception via the downlink BWP of the cell and comprising the first TCI state selection field set/equal to the value, for example, based on (and/or when/if) the at least two TCI states (e.g., TCI state 26 and TCI state 61) being (and/or are) indicated for the cell.

The wireless device may expect the first TCI state selection field in the first DCI format to be set/equal to the first value (e.g., 00 or TCI codepoint 00). The wireless device may expect the first TCI state selection field in the first DCI format to be set/equal to the first value, for example, based on (and/or when/if) a single TCI state being (and/or is) indicated for the cell. The wireless device may expect the first SRS resource set indicator field in the first DCI format to be set/equal to the first value, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26). The wireless device may receive (and/or may expect to receive) a first DCI, with the first DCI format, scheduling a first downlink reception via the downlink BWP of the cell and comprising the first TCI state selection field set/equal to the first value, for example, based on (and/or when/if) a single TCI state being (and/or is) indicated for the cell. The base station may send (e.g., transmit) (and/or may expect to send/transmit) a first DCI, with the first DCI format, scheduling a first downlink reception via the downlink BWP of the cell and comprising the first TCI state selection field set/equal to the first value, for example, based on (and/or when/if) a single TCI state being (and/or is) indicated for the cell.

The wireless device may expect the first TCI state selection field in the first DCI format to be set/equal to the second value (e.g., 01 or TCI codepoint 01). The wireless device may expect the first TCI state selection field in the first DCI format to be set/equal to the second value, for example, based on (and/or when/if) a single TCI state being (and/or is) indicated for the cell. The wireless device may expect the first SRS resource set indicator field in the first DCI format to be set/equal to the second value, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26). The wireless device may receive (and/or may expect to receive) a first DCI, with the first DCI format, scheduling a first downlink reception via the downlink BWP of the cell and comprising the first TCI state selection field set/equal to the second value, for example, based on (and/or when/if) a single TCI state being (and/or is) indicated for the cell. The base station may send (e.g., transmit) (and/or may expect to send/transmit) a first DCI, with the first DCI format, scheduling a first downlink reception via the downlink BWP of the cell and comprising the first TCI state selection field set/equal to the second value, for example, based on (and/or when/if) a single TCI state being (and/or is) indicated for the cell.

The wireless device may expect a second TCI state selection field in a second DCI format (e.g., DCI format 1_X or the DCI scheduling the one or more cells discussed with respect to FIG. 19) of the cell to be set/equal to the value (e.g., TCI codepoint 01, TCI codepoint 10, TCI codepoint 11). The wireless device may expect the second TCI state selection field in the second DCI format to be set/equal to the value, for example, if a single TCI state is indicated for the cell. The wireless device may expect the second TCI state selection field in the second DCI format to be set/equal to the value, for example, if the DCI (e.g., DCI 1 1740 at time T2 in FIG. 17) indicates, for the cell, the TCI codepoint comprising/indicating (and/or mapped to) a single TCI state (e.g., TCI state 26). The wireless device may receive (and/or may expect to receive) a second DCI, with the second DCI format, scheduling a second downlink reception via the downlink BWP of the cell and comprising the second TCI state selection field set/equal to the value, for example, if a single TCI state is indicated for the cell. The base station may send (e.g., transmit) (and/or may expect to send/transmit) a second DCI, with the second DCI format, scheduling a second downlink reception via the downlink BWP of the cell and comprising the second TCI state selection field set/equal to the value, for example, if a single TCI state is indicated for the cell. The wireless device may expect the second TCI state selection field in the second DCI format to be set/equal to the value, for example, regardless of a single TCI state (e.g., TCI state 26) or the at least two TCI states (e.g., TCI state 26 and TCI state 61) are indicated for the cell. The wireless device may receive (and/or may expect to receive) a second DCI, with the second DCI format, scheduling a second downlink reception via the downlink BWP of the cell and comprising the second TCI state selection field set/equal to the value, for example, regardless of a single TCI state (e.g., TCI state 26) or the at least two TCI states (e.g., TCI state 26 and TCI state 61) are indicated for the cell. The base station may send (e.g., transmit) (and/or may expect to send/transmit) a second DCI, with the second DCI format, scheduling a second downlink reception via the downlink BWP of the cell and comprising the second TCI state selection field set/equal to the value, for example, regardless of a single TCI state (e.g., TCI state 26) or the at least two TCI states (e.g., TCI state 26 and TCI state 61) are indicated for the cell.

The wireless device may expect a second TCI state selection field in a second DCI format (e.g., DCI format 1_X or the DCI scheduling the one or more cells discussed with respect to FIG. 19) of the cell to be set/equal to the first value (e.g., 00 or TCI codepoint 00), the second value (e.g., 01 or TCI codepoint 01), the third value (e.g., 10 or TCI codepoint 10), or to the fourth value (e.g., 11 or TCI codepoint 11). The wireless device may expect the second TCI state selection field in the second DCI format to be set/equal to the first value, the second value, the third value or the fourth value, for example, if a single TCI state is indicated for the cell. The wireless device may expect the second TCI state selection field in the second DCI format to be set/equal to the first value, the second value, the third value or the fourth value, for example, if the DCI (e.g., DCI 1 1740 at time T2 in FIG. 17) indicates, for the cell, the TCI codepoint comprising/indicating (and/or mapped to) a single TCI state (e.g., TCI state 26). The wireless device may receive (and/or may expect to receive) a second DCI, with the second DCI format, scheduling a second downlink reception via the downlink BWP of the cell and comprising the second TCI state selection field set/equal to the first value, the second value, the third value or the fourth value, for example, if a single TCI state is indicated for the cell. The base station may send (e.g., transmit) (and/or may expect to send/transmit) a second DCI, with the second DCI format, scheduling a second downlink reception via the downlink BWP of the cell and comprising the second TCI state selection field set/equal to the first value, the second value, the third value or the fourth value, for example, if a single TCI state is indicated for the cell. The wireless device may expect the second TCI state selection field in the second DCI format to be set/equal to the first value, the second value, the third value or the fourth value, for example, regardless of a single TCI state (e.g., TCI state 26) or the at least two TCI states (e.g., TCI state 26 and TCI state 61) are indicated for the cell. The wireless device may receive (and/or may expect to receive) a second DCI, with the second DCI format, scheduling a second downlink reception via the downlink BWP of the cell and comprising the second TCI state selection field set/equal to the first value, the second value, the third value or the fourth value, for example, regardless of a single TCI state (e.g., TCI state 26) or the at least two TCI states (e.g., TCI state 26 and TCI state 61) are indicated for the cell. The base station may send (e.g., transmit) (and/or may expect to send/transmit) a second DCI, with the second DCI format, scheduling a second downlink reception via the downlink BWP of the cell and comprising the second TCI state selection field set/equal to the first value, the second value, the third value or the fourth value, for example, regardless of a single TCI state (e.g., TCI state 26) or the at least two TCI states (e.g., TCI state 26 and TCI state 61) are indicated for the cell.

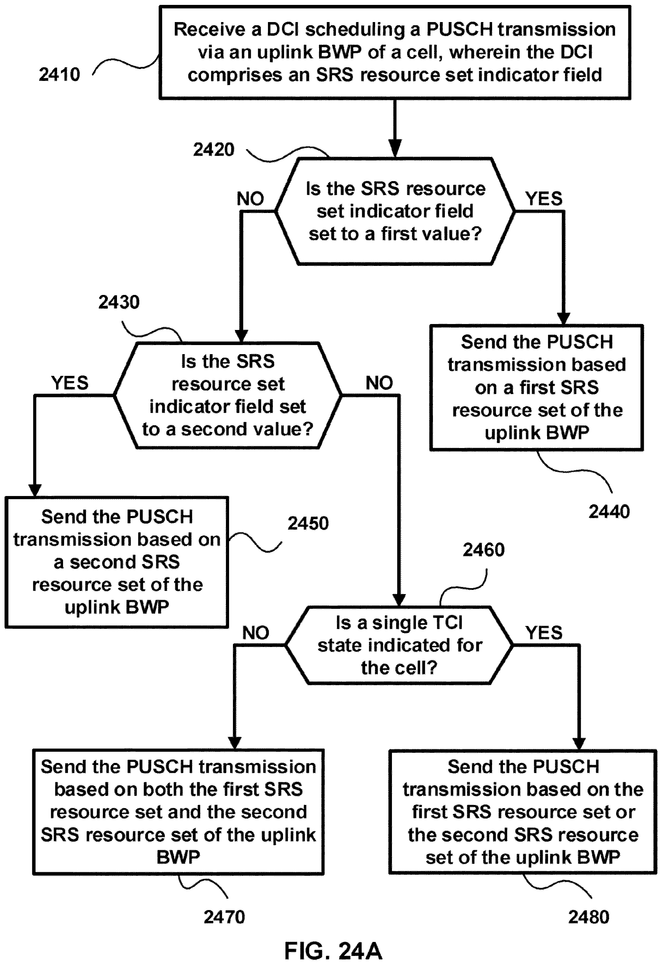

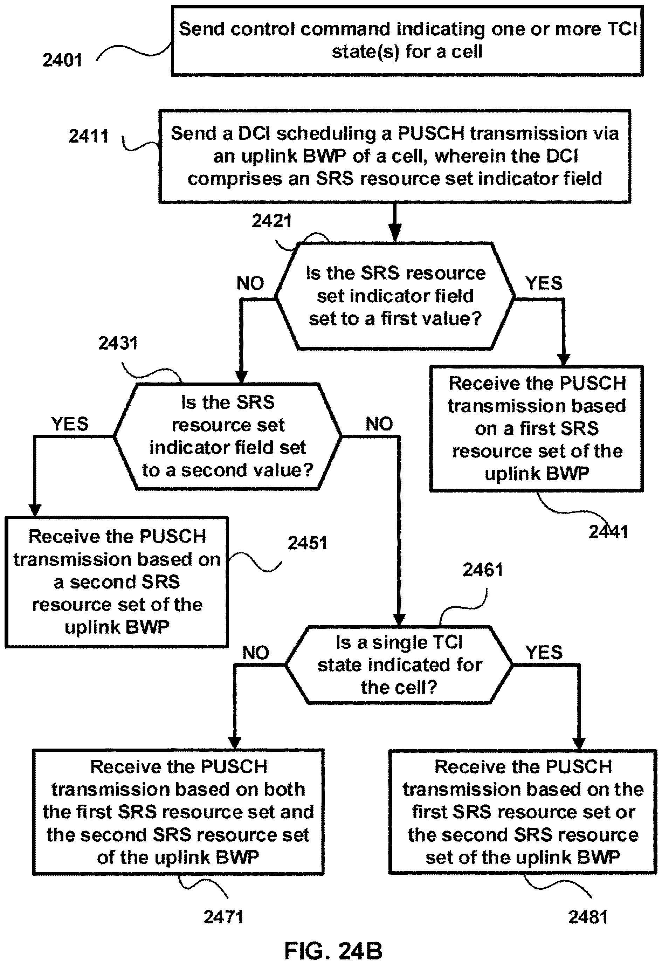

FIG. 24A and FIG. 24B show example methods of beam management in multi-cell scheduling. A wireless device may receive one or more messages comprising one or more configuration parameters. A base station may send (e.g., transmit) the one or more messages. The one or more configuration parameters may indicate at least two SRS resource sets for an uplink BWP of a cell. The at least two SRS resource sets may comprise a first SRS resource set and a second SRS resource set. The uplink BWP may comprise the first SRS resource set and the second SRS resource set.

The wireless device may receive a DCI scheduling a PUSCH transmission via the uplink BWP of the cell (2410). The base station may send (e.g., transmit) the DCI (2411). The DCI may comprise an SRS resource set indicator field. A determination may be made as to whether the SRS resource set indicator field is set to a first value (e.g., 00) (2420/2421). The SRS resource set indicator field may be (and/or determined to be) set/equal to a first value (2420/2421-Yes). The wireless device may send (e.g., transmit) (e.g., via the uplink BWP of the cell) the PUSCH transmission based on the first SRS resource set (2440). The PUSCH transmission may be sent (e.g., transmitted), for example, based on (e.g., in response to) the SRS resource set indicator field being (e.g., determined to be) set/equal to the first value (e.g., 2420-Yes). The wireless device may not send (e.g., transmit), via the uplink BWP of the cell, the PUSCH transmission based on the second SRS resource set, for example, based on (e.g., in response to) the SRS resource set indicator field being set/equal to the first value (e.g., the PUSCH transmission may be sent based on the first SRS resource set instead of the second SRS resource set based on the SRS resource set indicator field being set/equal to the first value). The wireless device may send (e.g., transmit) each repetition of the PUSCH transmission based on the first SRS resource set. The base station may receive, via the uplink BWP of the cell, the PUSCH transmission based on the first SRS resource set (2441). The PUSCH transmission may be received based on the first SRS resource set, for example, based on (e.g., in response to) the SRS resource set indicator field being set/equal to the first value (e.g., 2421-Yes). The base station may receive each repetition of the PUSCH transmission based on the first SRS resource set.

The SRS resource set may not be (and/or may be determined not to be) set/equal to first value (2420/2421-No) A determination may be made as to whether the SRS resource set indicator field is set to a second value (e.g., 01) (2430/2421). The SRS resource set indicator field may be (and/or determined to be) set/equal to a second value (2430/2431-Yes). The wireless device may send (e.g., transmit), via the uplink BWP of the cell, the PUSCH transmission based on the second SRS resource set (2450). The PUSCH transmission may be sent (e.g., transmitted) based on the second SRS resource set (2450), for example, based on (e.g., in response to) the SRS resource set indicator field being set/equal (and/or determined to be set/equal) to the second value (2430-Yes). The wireless device may not send (e.g., transmit), via the uplink BWP of the cell, the PUSCH transmission based on the first SRS resource set, for example, based on (e.g., in response to) the SRS resource set indicator field being set/equal to the second value. The wireless device may send (e.g., transmit) each repetition of the PUSCH transmission based on the second SRS resource set. The base station may receive, via the uplink BWP of the cell, the PUSCH transmission based on the second SRS resource set (2451). The PUSCH transmission may be received based on the second SRS resource set (2451), for example, based on (e.g., in response to) the SRS resource set indicator field being set/equal (and/or being determined to be set/equal) to the second value (2431-Yes). The base station may receive each repetition of the PUSCH transmission based on the second SRS resource set.

A determination may be made that the SRS resource set indicator field is not set to a second value (2430/2431-No). The SRS resource set indicator field may not be set/equal (and/or determined not to be set/equal) to the second value (2430/2431-No). The SRS resource set indicator field may be set/equal to a third value (e.g., 10). The SRS resource set indicator field may be set/equal to a fourth value (e.g., 11).

The wireless device may receive a control command (e.g., MAC-CE, DCI) indicating one or more TCI states for the cell. The base station may send (e.g., transmit) the control command. A determination may be made as to whether the control command indicates a single TCI state for the cell (e.g., 2460/2461). The control command may indicate (e.g., may be determined to indicate) at least two TCI states for the cell (2460/2461-No). The control command may indicate (e.g., may be determined to indicate) a single TCI state for the cell (2460/2461-Yes).

The control command may indicate at least two TCI states (2460/2461-No). The at least to TCI states may comprise a first TCI state and a second TCI state. The wireless device may send (e.g., transmit), via the uplink BWP of the cell, the PUSCH transmission based on the at least two SRS resource sets (2470). The PUSCH transmission may be sent based on the at least two SRS resource sets (2470), for example, based on (e.g., in response to) the SRS resource set indicator field being set/equal (and/or determined to be set/equal) to the third value or the fourth value (2460-No). The wireless device may send (e.g., transmit), via the uplink BWP of the cell, the PUSCH transmission based on both the first SRS resource set and the second SRS resource set. The PUSCH transmission may be sent based on both the first SRS resource set and the second SRS resource set, for example, based on (e.g., in response to) the SRS resource set indicator field being set/equal to the third value or the fourth value. The wireless device may send (e.g., transmit), via the uplink BWP of the cell, the PUSCH transmission based on the at least two SRS resource sets (and/or both the first SRS resource set and the second SRS resource set), for example, based on (e.g., in response to) receiving the control command indicating the at least two TCI states for the cell. The wireless device may send (e.g., transmit), via the uplink BWP of the cell, the PUSCH transmission based on the at least two SRS resource sets (and/or both the first SRS resource set and the second SRS resource set), for example, based on (e.g., in response to) the at least two TCI states being indicated for the cell. The base station may receive, via the uplink BWP of the cell, the PUSCH transmission based on the at least two SRS resource sets (2471). The PUSCH transmission may be received based on the at least two SRS resource sets (2471), for example, based on (e.g., in response to) the SRS resource set indicator field being set/equal (and/or determined to be set/equal) to the third value or the fourth value (2461-No).

The wireless device may send (e.g., transmit) one or more first repetitions of the PUSCH transmission based on the first SRS resource set. The wireless device may send (e.g., transmit) the one or more first repetitions of the PUSCH transmission based on the first TCI state of the at least two TCI states. The wireless device may send (e.g., transmit) one or more second repetitions of the PUSCH transmission based on the second SRS resource set. The wireless device may send (e.g., transmit) the one or more second repetitions of the PUSCH transmission based on the second TCI state of the at least two TCI states.

The wireless device may send (e.g., transmit) a first portion (e.g., first layer(s)/data-stream(s)) of the PUSCH transmission based on the first SRS resource set. The wireless device may send (e.g., transmit) the first portion of the PUSCH transmission based on the first TCI state of the at least two TCI states. The wireless device may send (e.g., transmit) a second portion (e.g., second layer(s)/data-stream(s)) of the PUSCH transmission based on the second SRS resource set. The wireless device may send (e.g., transmit) the second portion of the PUSCH transmission based on the second TCI state of the at least two TCI states.

The wireless device may send (e.g., transmit) each layer/data-stream of the PUSCH transmission based on the first SRS resource set. The wireless device may send (e.g., transmit) each layer/data-stream of the PUSCH transmission based on the first TCI state of the at least two TCI states. The wireless device may send (e.g., transmit) each layer/data-stream of the PUSCH transmission based on the second SRS resource set. The wireless device may send (e.g., transmit) each layer/data-stream of the PUSCH transmission based on the second TCI state of the at least two TCI states.

The base station may receive, via the uplink BWP of the cell, the PUSCH transmission based on the at least two SRS resource sets (2471). The PUSCH transmission may be received based on the at least two SRS resource sets (2471), for example, based on (e.g., in response to) the SRS resource set indicator field being set/equal to the third value or the fourth value (e.g., not the first value or the second value; 2431-No). The base station may receive, via the uplink BWP of the cell, the PUSCH transmission based on both the first SRS resource set and the second SRS resource set, for example, based on (e.g., in response to) the SRS resource set indicator field being set/equal to the third value or the fourth value. The base station may receive, via the uplink BWP of the cell, the PUSCH transmission based on the at least two SRS resource sets (and/or both the first SRS resource set and the second SRS resource set) (2471), for example, based on (e.g., in response to) sending (e.g., transmitting) the control command indicating (and/or being determined to indicate) the at least two TCI states for the cell (2461-No). The base station may receive, via the uplink BWP of the cell, the PUSCH transmission based on the at least two SRS resource sets (and/or both the first SRS resource set and the second SRS resource set) (2471), for example, based on (e.g., in response to) the at least two TCI states being indicated (and/or being determined to be indicated) for the cell (2461-No).

The base station may receive one or more first repetitions of the PUSCH transmission based on the first SRS resource set. The base station may receive the one or more first repetitions of the PUSCH transmission based on the first TCI state of the at least two TCI states. The base station may receive one or more second repetitions of the PUSCH transmission based on the second SRS resource set. The base station may receive the one or more second repetitions of the PUSCH transmission based on the second TCI state of the at least two TCI states.

The base station may receive a first portion (e.g., first layer(s)/data-stream(s)) of the PUSCH transmission based on the first SRS resource set. The base station may receive the first portion of the PUSCH transmission based on the first TCI state of the at least two TCI states. The base station may receive a second portion (e.g., second layer(s)/data-stream(s)) of the PUSCH transmission based on the second SRS resource set. The base station may receive the second portion of the PUSCH transmission based on the second TCI state of the at least two TCI states.

The base station may receive each layer/data-stream of the PUSCH transmission based on the first SRS resource set. The base station may receive each layer/data-stream of the PUSCH transmission based on the first TCI state of the at least two TCI states. The base station may receive each layer/data-stream of the PUSCH transmission based on the second SRS resource set. The base station may receive each layer/data-stream of the PUSCH transmission based on the second TCI state of the at least two TCI states.

The wireless device may receive a control command (e.g., MAC-CE, DCI) indicating one or more TCI states for the cell. The base station may send (e.g., transmit) the control command (e.g., 2401). The control command may indicate a first TCI state for the cell. The first TCI state may be the single TCI state indicated/activated for the cell. A determination may be made that the first TCI state is a single TCI state for the cell (e.g., 2460/2461-Yes).

The wireless device may send (e.g., transmit), via the uplink BWP of the cell, the PUSCH transmission based on an SRS resource set among the at least two SRS resource sets (2480) based on the determination that the first TCI state is a single TCI state for the cell (2460-Yes). The PUSCH transmission may be sent based on the SRS resource set among the at least two SRS resource sets, for example, based on (e.g., in response to) the SRS resource set indicator field being set/equal to the third value or the fourth value (and/or not based on the first value or the second value - 2430-No). The wireless device may send (e.g., transmit), via the uplink BWP of the cell, the PUSCH transmission based on the SRS resource set among the at least two SRS resource sets, for example, based on (e.g., in response to) receiving the control command indicating a single TCI state for the cell. The wireless device may send (e.g., transmit), via the uplink BWP of the cell, the PUSCH transmission based on the SRS resource set among the at least two SRS resource sets, for example, based on (e.g., in response to) a single TCI state being indicated for the cell (2460-Yes).

The base station may receive, via the uplink BWP of the cell, the PUSCH transmission based on an SRS resource set among the at least two SRS resource sets (2481). The base station may receive the PUSCH transmission based on the SRS resource set (2481), for example, based on (e.g., in response to) the SRS resource set indicator field being set/equal to the third value or the fourth value (2461-Yes). The base station may receive, via the uplink BWP of the cell, the PUSCH transmission based on the SRS resource set among the at least two SRS resource sets, for example, based on (e.g., in response to) sending (e.g., transmitting) the control command indicating a single TCI state for the cell. The base station may receive, via the uplink BWP of the cell, the PUSCH transmission based on the SRS resource set among the at least two SRS resource sets, for example, based on (e.g., in response to) a single TCI state being indicated for the cell.

The wireless device may send (e.g., transmit), via the uplink BWP of the cell, the PUSCH transmission based on the first TCI state. The base station may receive, via the uplink BWP of the cell, the PUSCH transmission based on the first TCI state. The wireless device may send (e.g., transmit) each repetition of the PUSCH transmission based on the SRS resource set. The wireless device may send (e.g., transmit) each repetition of the PUSCH transmission based on the first TCI state. The base station may receive each repetition of the PUSCH transmission based on the SRS resource set. The base station may receive each repetition of the PUSCH transmission based on the first TCI state.

The wireless device may send (e.g., transmit), via the uplink BWP of the cell, the PUSCH transmission based on the first SRS resource set, for example, if the SRS resource set is the first SRS resource set of the at least two SRS resource sets. The wireless device may not send (e.g., transmit), via the uplink BWP of the cell, the PUSCH transmission based on the second SRS resource set.

The wireless device may send (e.g., transmit), via the uplink BWP of the cell, the PUSCH transmission based on the second SRS resource set, for example, if the SRS resource set is the second SRS resource set of the at least two SRS resource sets. The wireless device may not send (e.g., transmit), via the uplink BWP of the cell, the PUSCH transmission based on the first SRS resource set.

The wireless device may determine the SRS resource set among the at least two SRS resource sets, for example, based on one or more criteria (e.g., as discussed with respect to FIG. 23, such as, based on the most recent SRS transmission, based on an LSB of the SRS resource set indicator field, based on SRS resource set index(es) of the at least two SRS resource sets, based on the value indicated by the one or more configuration parameters, etc.).

The wireless device may determine a size of the DCI (e.g., DCI format 1_1, DCI format 1_2, DCI format 0_1, DCI format 0_2, DCI format 1_X or DCI format 0_X, and the like). The wireless device may determine the size of the DCI, for example, before (and/or prior to) decoding/receiving the DCI. The wireless device may decode/receive the DCI successfully, for example, based on determining the size of the DCI. The wireless device may decode/receive the DCI successfully, for example, after (e.g., based on) determining the size of the DCI. Determining the size of the DCI before decoding/receiving the DCI may reduce blind decoding complexity (e.g., less hypothesis used in the decoding of the DCI). The wireless device may decode/receive (and/or attempt to decode/receive) the DCI based on information/knowledge on the size of the DCI.

The base station may determine a size of the DCI (e.g., DCI format 1_1, DCI format 1_2, DCI format 0_1, DCI format 0_2, DCI format 1_X or DCI format 0 X, and the like). The base station may determine the size of the DCI, for example, before (and/or prior to) sending (e.g., transmitting) the DCI. The base station may send (e.g., transmit) the DCI, for example, after (e.g., based on) determining the size of the DCI. The size of the DCI may be a first value, for example, based on (and/or when/if) a single TCI state being (and/or is) indicated for the cell. The size of the DCI may be the first value, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26). The wireless device may determine the size of the DCI as the first value, for example, based on (and/or when/if) a single TCI state being (and/or is) indicated for the cell. The base station may determine the size of the DCI as the first value, for example, based on (and/or when/if) a single TCI state being (and/or is) indicated for the cell.

The size of the DCI may be a second value, for example, based on (and/or when/if) the at least two TCI states being (and/or are) indicated for the cell. The size of the DCI may be the second value, for example, based on (and/or when/if) the DCI (e.g., DCI 1 1740 at time T2 in FIG. 17) indicating (and/or indicates), for the cell, the TCI codepoint comprising/indicating (and/or mapped to) the at least two TCI states (e.g., TCI state 26 and TCI state 61). The wireless device may determine the size of the DCI as the second value, for example, based on (and/or when/if) the at least two TCI states being (and/or are) indicated for the cell. The base station may determine the size of the DCI as the second value, for example, based on (and/or when/if) the at least two TCI states being (and/or are) indicated for the cell.

The first value of the size of the DCI and the second value of the size of the DCI may be, for example, different.

The first value may be smaller/less than the second value. The size of the DCI may be reduced, for example, based on (and/or when/if) a single TCI state being (and/or is) indicated for the cell.

The DCI may comprise a first SRI field. The DCI may comprise a second SRI field, for example, based on (and/or when/if) the at least two TCI states being (and/or are) indicated for the cell. The DCI may comprise the first SRI field and the second SRI field for the first uplink transmission via the uplink BWP of the cell. The DCI may comprise a second SRI field, for example, based on (and/or when/if) the DCI (e.g., DCI 1 1740 at time T2 in FIG. 17) indicating (and/or indicates), for the cell, the TCI codepoint comprising/indicating (and/or mapped to) the at least two TCI states (e.g., TCI state 26 and TCI state 61). The second SRI field may be different from the first SRI field. The first SRI field may indicate a first SRS resource in a first SRS resource set. The wireless device may determine a first transmission precoder based on the first SRS resource (e.g., a first number of SRS ports of the first SRS resource). The second SRI field may indicate a second SRS resource in a second SRS resource set. The wireless device may determine a second transmission precoder based on the second SRS resource (e.g., a second number of SRS ports of the second SRS resource).

The DCI may comprise a first SRI field. The DCI may not comprise a second SRI field, for example, based on (and/or when/if) a single TCI state being (and/or is) indicated for the cell. The DCI may not comprise a second SRI field, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26).

The DCI may comprise a first transmit precoding matrix indicator (TPMI) field. The DCI may comprise a second TPMI field, for example, based on (and/or when/if) the at least two TCI states being (and/or are) indicated for the cell. The DCI may comprise the first TPMI field and the second TPMI field for the first uplink transmission via the uplink BWP of the cell. The DCI may comprise a second TPMI field, for example, based on (and/or when/if) the DCI (e.g., DCI 1 1740 at time T2 in FIG. 17) indicating (and/or indicates), for the cell, the TCI codepoint comprising/indicating (and/or mapped to) the at least two TCI states (e.g., TCI state 26 and TCI state 61). The second TPMI field may be different from the first TPMI field. The first TPMI field may indicate a first TPMI index and a first number of layers (and/or a first transmission rank). The second TPMI field may indicate a second TPMI index and a second number of layers (and/or a first transmission rank).

The DCI may comprise a first TPMI field as a single TPMI field (e.g., only one TPMI field), for example. The DCI may not comprise a second TPMI field, for example, based on (and/or when/if) a single TCI state being (and/or is) indicated for the cell. The DCI may not comprise a second TPMI field, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26).

The DCI may comprise an SRS resource set indicator field. A size of the SRS resource set indicator field may be, for example, two bits. The size of the SRS resource set indicator field may be two bits, for example, based on (and/or when/if) the at least two TCI states being (and/or are) indicated for the cell. The DCI may comprise the SRS resource set indicator field for the first uplink transmission via the uplink BWP of the cell. The size of the SRS resource set indicator field may be two bits, for example, based on (and/or when/if) the DCI (e.g., DCI 1 1740 at time T2 in FIG. 17) indicating (and/or indicates), for the cell, the TCI codepoint comprising/indicating (and/or mapped to) the at least two TCI states (e.g., TCI state 26 and TCI state 61). A first value (e.g., 00) of the SRS resource set indicator field may indicate, for the first uplink transmission, the first SRS resource set of the at least two SRS resource sets. A second value (e.g., 01) of the SRS resource set indicator field may indicate, for the first uplink transmission, the second SRS resource set of the at least two SRS resource sets. A third value (e.g., 10) of the SRS resource set indicator field may indicate, for the first uplink transmission, both the first SRS resource set and the second SRS resource set of the at least two SRS resource sets. A fourth value (e.g., 11) of the SRS resource set indicator field may indicate, for the first uplink transmission, both the first SRS resource set and the second SRS resource set of the at least two SRS resource sets.

The DCI may comprise an SRS resource set indicator field. A size of the SRS resource set indicator field may be, for example, one bit. The size of the SRS resource set indicator field may be one bit, for example, based on (and/or when/if) a single TCI state being (and/or is) indicated for the cell. The DCI may comprise the SRS resource set indicator field for the first uplink transmission via the uplink BWP of the cell. The size of the SRS resource set indicator field may be one bit, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26). A first value (e.g., 0) of the SRS resource set indicator field may indicate, for the first uplink transmission, the first SRS resource set of the at least two SRS resource sets. A second value (e.g., 1) of the SRS resource set indicator field may indicate, for the first uplink transmission, the second SRS resource set of the at least two SRS resource sets. The SRS resource set indicator field with the one bit may not be set/equal to a third value (e.g., 10) or a fourth value (e.g., 11).

The DCI may not comprise an SRS resource set indicator field, for example, based on (and/or when/if) a single TCI state being (and/or is) indicated for the cell. The DCI may not comprise an SRS resource set indicator field, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26).

The DCI may comprise a TCI state selection field. A size of the TCI state selection field may be, for example, two bits. The size of the TCI state selection field may be two bits, for example, based on (and/or when/if) the at least two TCI states being (and/or are) indicated for the cell. The DCI may comprise the TCI state selection field for the first downlink reception via the uplink BWP of the cell. The size of the TCI state selection field may be two bits, for example, based on (and/or when/if) the DCI (e.g., DCI 1 1740 at time T2 in FIG. 17) indicating (and/or indicates), for the cell, the TCI codepoint comprising/indicating (and/or mapped to) the at least two TCI states (e.g., TCI state 26 and TCI state 61). A first value (e.g., 00) of the TCI state selection field may indicate, for the first downlink reception, the first TCI state of the at least two TCI states. A second value (e.g., 01) of the TCI state selection field may indicate, for the first downlink reception, the second TCI state of the at least two TCI states. A third value (e.g., 10) of the TCI state selection field may indicate, for the first downlink reception, both the first TCI state and the second TCI state of the at least two TCI states. A fourth value (e.g., 11) of the TCI state selection field may indicate, for the first downlink reception, both the first TCI state and the second TCI state of the at least two TCI states.

The DCI may not comprise a TCI state selection field, for example, based on (and/or when/if) a single TCI state being (and/or is) indicated for the cell. The DCI may not comprise a TCI state selection field, for example, based on (and/or when/if) the DCI (e.g., DCI 1 1740 at time T2 in FIG. 17) indicating (and/or indicates), for the cell, the TCI codepoint comprising/indicating (and/or mapped to) a single TCI state (e.g., TCI state 26).

A size of the DCI may be determined. The size of the DCI may be determined as the first value. The size of the DCI may be determined as the first value associated with a single TCI state and/or single-communication point (e.g., single-TRP) operation/mode being indicated for a cell (e.g., being scheduled for the cell). The wireless device may determine the size of the DCI as the first value. The base station may determine the size of the DCI as the first value. The size of the DCI may be determined (e.g., by the wireless device and/or the base station) to be the first value, for example, based on the information/knowledge that the DCI does not comprise the second SRI field. The size of the DCI may be determined (e.g., by the wireless device and/or the base station) to be the first value, for example, based on the information/knowledge that the DCI does not comprise the second TPMI field. The wireless device may determine the size of the DCI as the first value, for example, based on the information/knowledge that the DCI does not comprise the second TPMI field. The base station may determine the size of the DCI as the first value, for example, based on the information/knowledge that the DCI does not comprise the second TPMI field. The size of the DCI may be determined (e.g., by the wireless device and/or the base station) to be the first value, for example, based on the information/knowledge that the DCI does not comprise the SRS resource set indicator field. The wireless device may determine the size of the DCI as the first value, for example, based on the information/knowledge that the DCI does not comprise the SRS resource set indicator field. The base station may determine the size of the DCI as the first value, for example, based on the information/knowledge that the DCI does not comprise the SRS resource set indicator field. The size of the DCI may be determined (e.g., by the wireless device and/or the base station) to be the first value, for example, based on the information/knowledge that the DCI comprises the SRS resource set indicator field with one bit. The size of the DCI may be determined (e.g., by the wireless device and/or the base station) to be the first value, for example, based on the information/knowledge that the DCI comprises the SRS resource set indicator field with a size equal to one bit. The wireless device may determine the size of the DCI as the first value, for example, based on the information/knowledge that the DCI comprises the SRS resource set indicator field with one bit. The wireless device may determine the size of the DCI as the first value, for example, based on the information/knowledge that the DCI comprises the SRS resource set indicator field with a size equal to one bit. The base station may determine the size of the DCI as the first value, for example, based on the information/knowledge that the DCI comprises the SRS resource set indicator field with one bit. The base station may determine the size of the DCI as the first value, for example, based on the information/knowledge that the DCI comprises the SRS resource set indicator field with a size equal to one bit. The size of the DCI may be determined (e.g., by the wireless device and/or the base station) to be the first value, for example, , based on the information/knowledge that the DCI does not comprise the TCI state selection field. The wireless device may determine the size of the DCI as the first value, for example, based on the information/knowledge that the DCI does not comprise the TCI state selection field. The base station may determine the size of the DCI as the first value, for example, based on the information/knowledge that the DCI does not comprise the TCI state selection field.

The size of the DCI may be determined (e.g., by the wireless device and/or the base station) to be the second value. The size of the DCI may be determined as the second value associated with multiple TCI states and/or a multi-communication point (e.g., multi-TRP) operation/mode being indicated for a cell (e.g., being scheduled for the cell). The size of the DCI may be determined to be the second value, for example, based on the information/knowledge that the DCI comprises the second SRI field. The wireless device may determine the size of the DCI as the second value, for example, based on the information/knowledge that the DCI comprises the second SRI field. The base station may determine the size of the DCI as the second value, for example, based on the information/knowledge that the DCI comprises the second SRI field. The size of the DCI may be determined to be the second value, for example, based on the information/knowledge that the DCI comprises the second TPMI field. The wireless device may determine the size of the DCI as the second value, for example, based on the information/knowledge that the DCI comprises the second TPMI field. The base station may determine the size of the DCI as the second value, for example, based on the information/knowledge that the DCI comprises the second TPMI field. The size of the DCI may be determined to be the second value, for example, based on the information/knowledge that the DCI comprises the SRS resource set indicator field. The wireless device may determine the size of the DCI as the second value, for example, based on the information/knowledge that the DCI comprises the SRS resource set indicator field. The base station may determine the size of the DCI as the second value, for example, based on the information/knowledge that the DCI comprises the SRS resource set indicator field. The size of the DCI may be determined to be the second value, for example, based on the information/knowledge that the DCI comprises the SRS resource set indicator field with two bits. The size of the DCI may be determined to be the second value, for example, based on the information/knowledge that the DCI comprises the SRS resource set indicator field is equal to two bits. The wireless device may determine the size of the DCI as the second value, for example, based on the information/knowledge that the DCI comprises the SRS resource set indicator field with two bits. The wireless device may determine the size of the DCI as the second value, for example, based on the information/knowledge that the DCI comprises the SRS resource set indicator field with a size equal to two bits. The base station may determine the size of the DCI as the second value, for example, based on the information/knowledge that the DCI comprises the SRS resource set indicator field with two bits. The base station may determine the size of the DCI as the second value, for example, based on the information/knowledge that the DCI comprises the SRS resource set indicator field with a size equal to two bits. The size of the DCI may be determined to be the second value, for example, based on the information/knowledge that the DCI comprises the TCI state selection field. The wireless device may determine the size of the DCI as the second value, for example, based on the information/knowledge that the DCI comprises the TCI state selection field. The base station may determine the size of the DCI as the second value, for example, based on the information/knowledge that the DCI comprises the TCI state selection field. A size of the TCI state selection field may be, for example, two bits.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device, one or more messages indicating two or more reference signal resource sets for a cell.

Clause 2. The method of clause 1, further comprising receiving a control command indicating a single transmission configuration indicator (TCI) state for the cell.

Clause 3. The method of any one of clauses 1-2, further comprising receiving downlink control information (DCI), configured to schedule a communication via the cell, comprising a reference signal set resource set indicator field having a value.

Clause 4. The method of any one of clauses 1-3, further comprising, based on the control command indicating the single TCI state for the cell, determining a default reference signal resource set from the two or more reference signal resource sets.

Clause 5. The method of any one of clauses 1-4, further comprising sending, based on the default reference signal resource set, the communication via the cell.

Clause 6. The method of any one of clauses 1-5, wherein the two or more reference signal resource sets comprise a first reference signal resource set and a second reference signal resource set..

Clause 7. The method of any one of clauses 1-6, wherein the determining the default reference signal resource set comprises determining the default reference signal resource set based on the value.

Clause 8. The method of any one of clauses 1-7, wherein the determining the default reference signal resource set comprises determining the default reference signal resource set based on the one or more messages indicating the two or more reference signal resource sets.

Clause 9. The method of any one of clauses 1-8, wherein the control command indicating the single TCI state for the cell indicates a single-communication point mode for the cell.

Clause 10. The method of any one of clauses 1-9, wherein the value indicates a multi-communication point mode.

Clause 11. The method of any one of clauses 1-10, wherein the determining the default reference signal resource set comprises determining the default reference signal resource set based on a least significant bit of the value.

Clause 12. The method of any one of clauses 1-11, wherein the determining the default reference signal resource set comprises determining the reference signal resource set based on a previous reference signal resource set used for a previous communication via the cell.

Clause 13. The method of any one of clauses 1-12, wherein the determining the default reference signal resource set comprises determining the default reference signal resource set based on a default index of two or more indexes corresponding to the two or more reference signal resource sets.

Clause 14. The method of clause 13, wherein the default index is a lower and/or lowest of the two or more indexes.

Clause 15. The method of any one of clauses 1-44, further comprising receiving a second control command indicating two TCI states for a second cell, wherein the DCI is further configured to schedule a second communication via the second cell.

Clause 16. The method of any one of clauses 1-15, further comprising sending, based on the resource signal resource set indicator field, the second communication via the second cell.

Clause 17. The method of any one of clauses 1-16, wherein the one or more configuration parameters indicate a first reference signal resource set index for a first reference signal resource set of the two or more reference signal resource sets.

Clause 18. The method of any one of clauses 1-17, wherein the one or more configuration parameters indicate a second reference signal resource set index for a second reference signal resource set of the two or more reference signal resource sets.

Clause 19. The method of any one of clauses 1-18, wherein the first reference signal resource set index is lower than the second reference signal resource set index.

Clause 20. The method of any one of clauses 1-19, wherein the value is equal to one of a first value that indicates a first reference signal resource set, a second value that indicates a second reference signal resource set, a third value that indicates the first reference signal resource set and the second reference signal resource set, or a fourth value that indicates the first reference signal resource set and the second reference signal resource set.

Clause 21. The method of clause 20, wherein the value equaling the first value indicates to apply the first reference signal resource set to the communication, wherein the value equaling the second value indicates to apply the second reference signal resource set to the communication, wherein the value equaling the third value indicates to apply the first reference signal resource set and the second reference signal resource set to the communication, and wherein the value equaling the fourth value indicates to apply the first reference signal resource set and the second reference signal resource set to the communication.

Clause 22. The method of any one of clauses 20-21, wherein the first value is '00', the second value is '01', the third value is '10' and the fourth value is '11'

Clause 23. The method of any one of clauses 1-22, further comprising receiving a second control command indicating two TCI states for the cell.

Clause 24. The method of clause 23, further comprising receiving second DCI, configured to schedule a second communication via the cell, comprising a second reference signal resource set indicator field.

Clause 25. The method of any one of clauses 23-24, wherein the second reference signal resource set indicator field has a value indicating to use one or more of reference signal resource sets, of the at least two reference signal resource sets, to send the second communication via the cell.

Clause 26. The method of clause 25, wherein the value of the second reference signal resource set indicator field indicates, based on the second control command indicating the two TCI states for the cell, to use a first reference signal resource set of the two or more reference signal resource sets, a second reference signal resource set of the two or more reference signal resource sets, or both the first and second reference signal resource sets to send the communication.

Clause 27. The method of any one of clauses 23-26, further comprising sending, based on the second reference signal resource set indicator field, the second communication via the cell.

Clause 28. The method of any one of clauses 1-27, wherein the default reference signal resource is a first reference signal resource set, of the two or more reference signal resource sets, based on a least significant bit (LSB) of the value being equal to zero.

Clause 29. The method of any one of clauses 1-28, wherein the default reference signal resource set is a second reference signal resource set, of the two or more reference signal resource sets, based on the LSB of the value being equal to one.

Clause 30. The method of any one of clauses 1-29, wherein the determining is further based on the one or more configuration parameters indicating the two reference signal resource sets.

Clause 31. The method of any one of clauses 1-30, wherein the DCI schedules (e.g., is configured to schedule) a plurality of cells comprising the cell and a second cell.

Clause 32. The method of clause 31, wherein the one or more configuration parameters indicate a single reference signal resource set for the second cell.

Clause 33. The method of any one of clauses 31-32, further comprising ignoring/not applying the reference signal resource set indicator field to the second cell based on the one or more configuration parameters indicating a single reference signal resource set for the second cell.

Clause 34. The method of any one of clauses 31-33, further comprising sending, via the second cell, a second communication scheduled by the DCI using the single reference signal resource set of the second cell.

Clause 35. The method of any one of clauses 1-34, further comprising, wherein the two or more reference signal resource sets are two or more sounding reference signal (SRS) resource sets.

Clause 36. The method of any one of clauses 1-35, wherein the communication comprises a physical uplink shared channel (PUSCH) transmission.

Clause 37. The method of any one of clauses 1-36, further comprising determining a transmission precoder based on an reference signal resource in the default reference signal resource set.

Clause 38. The method of clause 37, wherein the sending the communication uses the transmission precoder.

Clause 39. A wireless device comprising one or more processors and memory storing instructions that, when executed by the one or more processors, cause the wireless device to perform the method of any one of clauses 1-38.

Clause 40. A system comprising a wireless device configured to perform the method of any one of clauses 1-38; and a base station configured to receive the communication.

Clause 41. A system comprising a wireless device configured to perform the method of any one of clauses 1-38; and a base station configured to send the one or more messages.

Clause 42. A system comprising a wireless device configured to perform the method of any one of clauses 1-38; and a base station configured to send the control command.

Clause 43. A computer-readable medium storing instructions that, when executed, cause performance of the method of any one of clauses 1-38.

Clause 44. A method comprising receiving, by a wireless device, a control command indicating a single transmission configuration indicator (TCI) state for a cell.

Clause 45. The method of clause 44, further comprising receiving downlink control information (DCI), configured to schedule a communication via the cell, comprising a reference signal resource set indicator field having a value.

Clause 46. the method of any one of clauses 44-45, further comprising, based on the control command indicating the single TCI state for the cell, determining a default reference signal resource set based on the value.

Clause 47. the method of any one of clauses 44-46, further comprising sending, based on the default reference signal resource set, the communication via the cell.

Clause 48. the method of any one of clauses 44-47, further comprising receiving, by the wireless device, one or more messages indicating two or more reference signal resource sets for the cell.

Clause 49. the method of any one of clauses 44-48, wherein the determining the default reference signal resource set comprises determining, from the two or more reference signal resource sets, the default reference signal resource set.

Clause 50. The method of any one of clauses 44-49, wherein the determining is further based on the value indicating a multi-transmission-and-reception-point (multi-TRP) mode.

Clause 51. The method of any one of clauses 44-50, wherein the default reference signal resource set is based on a least significant bit of the value.

Clause 52. The method of any one of clauses 44-50, wherein the value is one of: a first value that indicates the communication is associated with a first reference signal resource set of the two or more reference signal resource sets; a second value that indicates the communication is associated with a second reference signal resource set of the two or more reference signal resource sets; a third value that indicates the communication is associated with the first reference signal resource set and the second reference signal resource set; or a fourth value that indicates the communication is associated with the first reference signal resource set and the second reference signal resource set.

Clause 53. The method of clause 52, wherein the first value is '00', the second value is '01', the third value is '10', and the fourth value is '11'.

Clause 54. A wireless device comprising one or more processors and memory storing instructions that, when executed by the one or more processors, cause the wireless device to perform the method of any one of clauses 44-53.

Clause 55. A system comprising a wireless device configured to perform the method of any one of clauses 44-53; and a base station configured to receive the communication.

Clause 56. A system comprising a wireless device configured to perform the method of any one of clauses 44-53; and a base station configured to send the one or more messages.

Clause 57. A system comprising a wireless device configured to perform the method of any one of clauses 44-53; and a base station configured to send the control command.

Clause 58. A computer-readable medium storing instructions that, when executed, cause performance of the method of any one of clauses 44-53.

Clause 59. A method comprising receiving, by a wireless device, one or more messages indicating two or more reference signal resource sets for a cell.

Clause 60. The method of clause 59, further comprising receiving a control command indicating a single-communication point mode for the cell.

Clause 61. The method of any one of clauses 59-60, further comprising receiving downlink control information (DCI), configured to schedule a communication via the cell, comprising a reference set resource set indicator field having a value.

Clause 62. The method of any one of clauses 59-61, further comprising, based on the one or more messages indicating the two or more reference signal resource sets, determining a default reference signal resource set.

Clause 63. The method of any one of clauses 59-62, further comprising sending, based on the default reference signal resource set, the communication via the cell.

Clause 64. The method of any one of clauses 59-63, wherein the control command indicates the single-communication point mode for the cell by indicating a single transmission configuration indicator (TCI) state for the cell.

Clause 65. The method of any one of clauses 59-64, wherein the determining the default reference signal resource set is further based on the control command indicating the single-communication point mode for the cell.

Clause 66. The method of any one of clauses 59-65, wherein the determining comprises, based on the value indicating two reference signal resource sets, of the two or more reference signal resource sets for the cell, determining, based on the value, the default reference signal resource set to be one of the two reference signal resources sets.

Clause 67. A wireless device comprising one or more processors and memory storing instructions that, when executed by the one or more processors, cause the wireless device to perform the method of any one of clauses 59-66.

Clause 68. A system comprising a wireless device configured to perform the method of any one of clauses 59-66; and a base station configured to receive the communication.

Clause 69. A system comprising a wireless device configured to perform the method of any one of clauses 59-66; and a base station configured to send the one or more messages.

Clause 70. A system comprising a wireless device configured to perform the method of any one of clauses 59-66; and a base station configured to send the control command.

Clause 71. A computer-readable medium storing instructions that, when executed, cause performance of the method of any one of clauses 59-66.

Clause 72. A method comprising receiving, by a wireless device, one or more messages comprising one or more configuration parameters, wherein the one or more configuration parameters indicate two sounding reference signal (SRS) resource sets for a cell.

Clause 73. The method of claim 72, further comprising receiving a control command indicating a single transmission configuration indicator (TCI) state for the cell.

Clause 74. The method of one or more of claims 72-73, further comprising receiving downlink control information (DCI), configured to schedule a physical uplink shared channel (PUSCH) transmission via the cell, comprising an SRS resource set indicator field with a value.

Clause 75. The method of one or more of claims 72-74, further comprising, based on the control command indicating a single TCI state for the cell, determining, based on a least significant bit (LSB) of the value, an SRS resource set among the two SRS resource sets.

Clause 76. The method of one or more of claims 72-75, further comprising sending, via the cell, the PUSCH transmission based on the SRS resource set.

Clause 77. The method of one or more of claims 72-76, wherein the two SRS resource sets comprise a first SRS resource set and a second SRS resource set.

Clause 78. The method of clause 77, wherein the one or more configuration parameters indicate a first SRS resource set index for the first SRS resource set; and a second SRS resource set index for the second SRS resource set, wherein the first SRS resource set index is lower than the second SRS resource set index.

Clause 79. The method of any one of clauses 72-78, wherein the value is equal to a third value set to '10'.

Clause 80. The method of any one of clauses 72-79, wherein the SRS resource set is the first SRS resource set based on the LSB of the value being equal to zero.

Clause 81. The method of any one of clauses 72-78, wherein the value is equal to a fourth value set to '11'.

Clause 82. The method of any one of clauses 72-78, wherein the SRS resource set is the second SRS resource set based on the LSB of the value being equal to one.

Clause 83. The method of any one of clauses 72-82, wherein a first value, different from the value, of the SRS resource set indicator field indicates to apply the first SRS resource set to the PUSCH transmission.

Clause 84. The method of any one of clauses 72-83, wherein a second value, different from the value, of the SRS resource set indicator field indicates to apply the second SRS resource set to the PUSCH transmission.

Clause 85. The method of any one of clauses 83-84, the first value is '00' and the second value is '01'.

Clause 86. The method of any one of clauses 72-85, wherein the value is equal to one or more of a first value that indicates that the PUSCH transmission is associated with the first SRS resource set; a second value that indicates that the PUSCH transmission is associated with the second SRS resource set; a third value that indicates that the PUSCH transmission is associated with the first SRS resource set based on the control command indicating a single TCI state for the cell or the first SRS resource set and the second resource set based on a second control command indicating a plurality of TCI states for the cell; and a fourth value that indicates that the PUSCH transmission is associated with the second SRS resource set based on the control command indicating a single TCI state for the cell or the first SRS resource set and the second resource set based on a second control command indicating a plurality of TCI states for the cell.

Clause 87. The method of any one of clauses 72-86, further comprising receiving a second control command indicating two TCI states for the cell.

Clause 88. The method of any one of clauses 72-87, further comprising receiving second DCI, configured to schedule a second PUSCH transmission via the cell, comprising a second SRS resource set indicator field.

Clause 89. The method of any one of clauses 72-88, wherein the value of the second SRS resource set indicator field is one of a first value that indicates that the second PUSCH transmission is associated with the first SRS resource set; a second value that indicates that the second PUSCH transmission is associated with the second SRS resource set; a third value that indicates that the second PUSCH transmission is associated with both the first SRS resource set and the second SRS resource set; or a fourth value that indicates that the second PUSCH transmission is associated with both the first SRS resource set and the second SRS resource set.

Clause 90. The method of any one of clauses 72-89, further comprising sending, via the cell, the second PUSCH transmission based on the second SRS resource set indicator field.

Clause 91. The method of any one of clauses 89-90, wherein the third value and the fourth value each indicate that the second PUSCH transmission is associated with both the first SRS resource set and the second SRS resource set based on the second control command indicating the two TCI states for the cell.

Clause 92. The method of any one of clauses 72-91, wherein the determining is further based on the one or more configuration parameters indicating the two SRS resource sets.

Clause 93. The method of any one of clauses 72-92, wherein the DCI schedules (e.g. is configured to schedule) a plurality of cells comprising the cell and a second cell.

Clause 94. The method of clause 93, wherein the one or more configuration parameters indicate a single SRS resource set for the second cell.

Clause 95. The method of any one of clauses 93-94, further comprising: ignoring/not applying the SRS resource set indicator field to the second cell based on the one or more configuration parameters indicating a single SRS resource set for the second cell.

Clause 96. The method of any one of clauses 93-95, further comprising sending, via the second cell, a second PUSCH transmission scheduled by the DCI using the single SRS resource set of the second cell.

Clause 97. The method of any one of clauses 72-96, further comprising determining a transmission precoder based on an SRS resource in the SRS resource set.

Clause 98. The method of any one of clauses 72-97, wherein the sending the PUSCH transmission is using the transmission precoder.

Clause 99. A wireless device comprising one or more processors and memory storing instructions that, when executed by the one or more processors, cause the wireless device to perform the method of any one of clauses 72-98.

Clause 100. A system comprising a wireless device configured to perform the method of any one of clauses 72-98; and a base station configured to receive the PUSCH transmission.

Clause 101. A system comprising a wireless device configured to perform the method of any one of clauses 72-98; and a base station configured to send the one or more messages.

Clause 102. A system comprising a wireless device configured to perform the method of any one of clauses 72-98; and a base station configured to send the control command.

Clause 103. A computer-readable medium storing instructions that, when executed, cause performance of the method of any one of clauses 72-98.

Clause 104. A method comprising: receiving, by a wireless device, a control command indicating a single transmission configuration indicator (TCI) state for a cell.

Clause 105. The method of clause 104, further comprising receiving downlink control information (DCI), configured to schedule a physical downlink shared channel (PDSCH) reception via the cell, comprising a transmission configuration indicator (TCI) selection field.

Clause 106. The method of any one of clauses 104-105, further comprising, based on the control command indicating a single TCI state for the cell, ignoring the TCI selection field by not applying the TCI selection field to the PDSCH reception via the cell.

Clause 107. The method of any one of clauses 104-108, wherein the receiving the PDSCH reception via the cell is based on the single TCI state.

Clause 108. The method of any one of clauses 104-107, wherein the PDSCH reception comprises a plurality of repetitions of a downlink reception.

Clause 109. The method of any one of clauses 104-108, wherein receiving the PDSCH reception based on the single TCI state comprises receiving the PDSCH reception via a downlink bandwidth part (BWP) of the cell based on the single TCI state.

Clause 110. A wireless device comprising one or more processors and memory storing instructions that, when executed by the one or more processors, cause the wireless device to perform the method of any one of clauses 104-109.

Clause 111. A system comprising a wireless device configured to perform the method of any one of clauses 104-109; and a base station configured to send the PDSCH reception.

Clause 112. A system comprising a wireless device configured to perform the method of any one of clauses 104-109; and a base station configured to send the control command.

Clause 113. A computer-readable medium storing instructions that, when executed, cause performance of the method of any one of clauses 104-109.

Clause 114. A method comprising sending, by a base station to a wireless device, a control command indicating a single transmission configuration indicator (TCI) state for a cell.

Clause 115. The method of clause 114, further comprising setting, based on the cell being indicated with the single TCI state (and/or based on the single TCI state being indicated for the cell), a value of a TCI selection field in downlink control information (DCI).

Clause 116. The method of any one of clauses 114-115, wherein the DCI is configured to schedule a downlink transmission via the cell.

Clause 117. The method of any one of clauses 114-116, wherein the downlink transmission comprises one or more PDSCH transmissions.

Clause 118. The method of any one of clauses 114-117, further comprising sending the DCI comprising the TCI selection field with the value.

Clause 119. The method of any one of clauses 114-118, further comprising sending the downlink transmission based on the single TCI state.

Clause 120. The method of any one of clauses 114-119, wherein the setting the value comprising setting the value to a value that indicates using a single (e.g., one) TCI state for sending/receiving the downlink transmission.

Clause 121. The method of any one of clauses 114-120, wherein the setting the value does not comprise setting the value to a value that indicates using a plurality of TCI states for sending/receiving the downlink transmission.

Clause 122. The method of any one of clauses 114-121, wherein the value of the TCI selection field is '00' or '01'.

Clause 123. The method of any one of clauses 114-122, wherein the value of the TCI selection field is not '10' or '11'.

Clause 124. A wireless device comprising one or more processors and memory storing instructions that, when executed by the one or more processors, cause the wireless device to perform the method of any one of clauses 114-123.

Clause 125. A system comprising a base station configured to perform the method of any one of clauses 114-123; and a wireless configured to receive the downlink transmission.

Clause 126. A computer-readable medium storing instructions that, when executed, cause performance of the method of any one of clauses 114-123.

Clause 127. A method comprising receiving, by a wireless device and from a base station, one or more messages comprising one or more configuration parameters indicating a plurality of sets of cells.

Clause 128. The method of clause 127, wherein the one or more configuration parameters indicate the plurality of sets of cells for two or more physical uplink control channel (PUCCH) groups.

Clause 129. The method of any one of clauses 127-128, further comprising receiving a control command indicating a set of cells, of the plurality of sets of cells, and TCI codepoints for the set of cells.

Clause 130. The method of clause 127, wherein the control command is a medium-access control (MAC) control element (CE).

Clause 131. The method of any one of clauses 127-130, wherein the control command comprises a PUCCH group identifier indicating a PUCCH group among the two or more PUCCH groups, and when the set of cells is in the PUCCH group.

Clause 132. The method of any one of clauses 127-131, further comprising, based on the receiving the control command, updating a row in a TCI table for the set of cells.

Clause 133. The method of 132, wherein the updating the row comprises updating the row using/with the TCI codepoints indicated by the control command.

Clause 134. The method of any one of clauses 127-133, wherein the TCI codepoints indicated by the control command are associated with TCI states activated for the set of cells.

Clause 135. The method of clause 134, wherein the TCI codepoints are indicated in the control command based on the TCI codepoints being associated with TCI states activated for the set of cells.

Clause 136. The method of any one of clauses 127-135, wherein the TCI table indicates one or more TCI states that are not activated for the set of cells.

Clause 137. The method of any one of clauses 127-135, further comprising activating one or more TCI states corresponding to the TCI codepoints indicated by the control command.

Clause 138. The method of any one of clause 127-137, further comprising receiving downlink control information (DCI).

Clause 139. The method of clause 138, wherein the DCI comprises a scheduled set indicator field indicating the set of cells.

Clause 140. The method of any one of clauses 138-139, wherein the DCI comprises a scheduled cell indicator field configured to schedule one or more cells of the set of cells.

Clause 141. The method of any one of clauses 13 8-140, wherein the DCI comprises a TCI field indicating the row in the updated TCI table.

Clause 142. The method of any one of clause 127-141, further comprising receiving, based on/using one or more TCI codepoints of the TCI codepoints, a downlink transmission (e.g., PDSCH transmission/reception) via the one or more cells.

Clause 143. A wireless device comprising one or more processors and memory storing instructions that, when executed by the one or more processors, cause the wireless device to perform the method of any one of clauses 127-142.

Clause 144. A system comprising a wireless device configured to perform the method of any one of clauses 127-142; and a base station to send the downlink transmission.

Clause 145. A computer-readable medium storing instructions that, when executed, cause performance of the method of any one of clauses 127-142.

Clause 146. A method comprising sending, by a base station to a wireless device, one or more messages comprising one or more configuration parameters indicating a plurality of sets of cells.

Clause 147. The method of clause 146, wherein the one or more configuration parameters indicate the plurality of sets of cells for two or more physical uplink control channel (PUCCH) groups.

Clause 148. The method of any one of clauses 146-147, further comprising sending a control command indicating a set of cells, of the plurality of sets of cells, and TCI codepoints for the set of cells.

Clause 149. The method of clause 148, wherein the control command is a medium-access control (MAC) control element (CE).

Clause 149. The method of any one of clauses 148-149, wherein the control command comprises a PUCCH group identifier indicating a PUCCH group among the two or more PUCCH groups, and when the set of cells is in the PUCCH group.

Clause 150. The method of any one of clauses 146-149, wherein the control command is configured to cause updating of a row in a TCI table for the set of cells.

Clause 151. The method of 150, wherein the updating the row comprises updating the row using the TCI codepoints indicated by the control command.

Clause 153. The method of any one of clauses 146-151, wherein the TCI codepoints indicated by the control command are associated with TCI states activated for the set of cells.

Clause 154. The method of clause 153, further comprising generating the control command to indicate the TCI codepoints based on the TCI codepoints being associated with TCI states activated for the set of cells.

Clause 155. The method of any one of clauses 146-154, wherein the TCI table indicates one or more TCI states that are not activated for the set of cells.

Clause 156. The method of any one of clauses 146-155, further comprising sending an activation command configured to activate one or more TCI states corresponding to the TCI codepoints indicated by the control command.

Clause 157. The method of any one of clause 146-156, further comprising sending downlink control information (DCI).

Clause 158. The method of clause 157, wherein the DCI comprises a scheduled set indicator field indicating the set of cells.

Clause 159. The method of any one of clauses 157-158, wherein the DCI comprises a scheduled cell indicator field configured to schedule one or more cells of the set of cells.

Clause 160. The method of any one of clauses 157-159, wherein the DCI comprises a TCI field indicating the row in the updated TCI table.

Clause 161. The method of any one of clause 146-160, further comprising sending, based on/using one or more TCI codepoints of the TCI codepoints, a downlink transmission (e.g., PDSCH transmission/reception) via the one or more cells.

Clause 162. A wireless device comprising one or more processors and memory storing instructions that, when executed by the one or more processors, cause the wireless device to perform the method of any one of clauses 146-161.

Clause 163. A system comprising a base station configured to perform the method of any one of clauses 146-161; and a wireless configured to receive the downlink transmission.

Clause 164. A computer-readable medium storing instructions that, when executed, cause performance of the method of any one of clauses 146-161.

A wireless device may perform a method comprising multiple operations. The wireless device may receive one or more messages indicating two or more reference signal resource sets for a cell. The wireless device may receive a control command indicating a single transmission configuration indicator (TCI) state for the cell. The wireless device may receive downlink control information (DCI), configured to schedule a communication via the cell, comprising a reference signal set resource set indicator field having a value. The wireless device may, based on the control command indicating the single TCI state for the cell, determine a default reference signal resource set from the two or more reference signal resource sets. The wireless device may send, based on the default reference signal resource set, the communication via the cell. The two or more reference signal resource sets may comprise a first reference signal resource set and a second reference signal resource set.. The determining the default reference signal resource set may comprise determine the default reference signal resource set based on the value. The determining the default reference signal resource set may comprise determining the default reference signal resource set based on the one or more messages indicating the two or more reference signal resource sets. The control command indicating the single TCI state for the cell may indicate a single-communication point mode for the cell. The value may indicate a multi-communication point mode. The determining the default reference signal resource set may comprise determining the default reference signal resource set based on a least significant bit of the value. The determining the default reference signal resource set may comprise determining the reference signal resource set based on a previous reference signal resource set used for a previous communication via the cell. The determining the default reference signal resource set may comprise determining the default reference signal resource set based on a default index of two or more indexes corresponding to the two or more reference signal resource sets. The default index may be a lower and/or lowest of the two or more indexes. The wireless device may receive a second control command indicating two TCI states for a second cell, wherein the DCI is further configured to schedule a second communication via the second cell. The wireless device may send, based on the resource signal resource set indicator field, the second communication via the second cell. The one or more configuration parameters may indicate a first reference signal resource set index for a first reference signal resource set of the two or more reference signal resource sets. The one or more configuration parameters may indicate second reference signal resource set index for a second reference signal resource set of the two or more reference signal resource sets. The first reference signal resource set index may be lower than the second reference signal resource set index. The value may be equal to one of a first value that indicates a first reference signal resource set, a second value that indicates a second reference signal resource set, a third value that indicates the first reference signal resource set and the second reference signal resource set, or a fourth value that indicates the first reference signal resource set and the second reference signal resource set. The value equaling the first value may indicate to apply the first reference signal resource set to the communication. The value equaling the second value may indicate to apply the second reference signal resource set to the communication. The value equaling the third value may indicate to apply the first reference signal resource set and the second reference signal resource set to the communication. The value equaling the fourth value may indicate to apply the first reference signal resource set and the second reference signal resource set to the communication. The first value may be '00', the second value may be '01', the third value may be '10' and the fourth value may be '11'. The wireless device may receive a second control command indicating two TCI states for the cell. The wireless device may receive second DCI, configured to schedule a second communication via the cell, comprising a second reference signal resource set indicator field. The second reference signal resource set indicator field may have a value indicating to use one or more of reference signal resource sets, of the at least two reference signal resource sets, to send the second communication via the cell. The value of the second reference signal resource set indicator field may indicate, based on the second control command indicating the two TCI states for the cell, to use a first reference signal resource set of the two or more reference signal resource sets, a second reference signal resource set of the two or more reference signal resource sets, or both the first and second reference signal resource sets to send the communication. The wireless device may send, based on the second reference signal resource set indicator field, the second communication via the cell. The default reference signal resource may be a first reference signal resource set, of the two or more reference signal resource sets, based on a least significant bit (LSB) of the value being equal to zero. The default reference signal resource set may be a second reference signal resource set, of the two or more reference signal resource sets, based on the LSB of the value being equal to one. The determining may be further based on the one or more configuration parameters indicating the two reference signal resource sets. The DCI may schedule/be configured to schedule a plurality of cells comprising the cell and a second cell. The one or more configuration parameters may indicate a single reference signal resource set for the second cell. The wireless device may ignore/not apply the reference signal resource set indicator field to the second cell based on the one or more configuration parameters indicating a single reference signal resource set for the second cell. The wireless device may send, via the second cell, a second communication scheduled by the DCI using the single reference signal resource set of the second cell. The two or more reference signal resource sets may be two or more sounding reference signal (SRS) resource sets. The communication may comprise a physical uplink shared channel (PUSCH) transmission. The wireless device may determine a transmission precoder based on an reference signal resource in the default reference signal resource set. The sending the communication may use the transmission precoder. A wireless device may comprise one or more processors and memory storing instructions that, when executed by the one or more processors, cause the wireless device to perform the described method, additional operations, and/or include additional elements. A system may comprise the wireless device configured to perform the described method, additional operations, and/or include the additional elements; and a base station configured to one or more of: receive the communication, send the one or more messages, or send the control command. A computer-readable medium may store instructions that, when executed, cause performance of the described method, additional operations, and/or include additional elements. A base station may perform a corresponding method comprising multiple operations. The base station may perform a corresponding method, for example, by receiving the communication, sending the one or more messages, or sending the control command.

A wireless device may perform a method comprising multiple operations. The wireless device may receive a control command indicating a single transmission configuration indicator (TCI) state for a cell. The wireless device may receive downlink control information (DCI), configured to schedule a communication via the cell, comprising a reference signal resource set indicator field having a value. The wireless device may, based on the control command indicating the single TCI state for the cell, determine a default reference signal resource set based on the value. The wireless device may send, based on the default reference signal resource set, the communication via the cell. The wireless device may receive, by the wireless device, one or more messages indicating two or more reference signal resource sets for the cell. The determining the default reference signal resource set may comprise determine, from the two or more reference signal resource sets, the default reference signal resource set. The determining may be further based on the value indicating a multi-transmission-and-reception-point (multi-TRP) mode. The default reference signal resource set may be based on a least significant bit of the value. The value may be one of: a first value that indicates the communication is associated with a first reference signal resource set of the two or more reference signal resource sets; a second value that indicates the communication is associated with a second reference signal resource set of the two or more reference signal resource sets; a third value that indicates the communication is associated with the first reference signal resource set and the second reference signal resource set; or a fourth value that indicates the communication is associated with the first reference signal resource set and the second reference signal resource set. The first value may be '00', the second value may be '01', the third value may be '10', and/or the fourth value may be '11'. A wireless device may comprise one or more processors and memory storing instructions that, when executed by the one or more processors, cause the wireless device to perform the described method, additional operations, and/or include additional elements. A system may comprise the wireless device configured to perform the described method, additional operations, and/or include the additional elements; and a base station configured to one or more of: receive the communication, send the one or more messages, or send the control command. A computer-readable medium may store instructions that, when executed, cause performance of the described method, additional operations, and/or include additional elements. A base station may perform a corresponding method comprising multiple operations. The base station may perform a corresponding method, for example, by receiving the communication, sending the one or more messages, or sending the control command.

A wireless device may perform a method comprising multiple operations. The wireless device may receive one or more messages indicating two or more reference signal resource sets for a cell. The wireless device may receive a control command indicating a single-communication point mode for the cell. The wireless device may receive downlink control information (DCI), configured to schedule a communication via the cell, comprising a reference set resource set indicator field having a value. The wireless device may, based on the one or more messages indicating the two or more reference signal resource sets, determine a default reference signal resource set. The wireless device may send, based on the default reference signal resource set, the communication via the cell. The control command may indicate the single-communication point mode for the cell by indicating a single transmission configuration indicator (TCI) state for the cell. The determining the default reference signal resource set may be further based on the control command indicating the single-communication point mode for the cell. The determining may comprise, based on the value indicating two reference signal resource sets, of the two or more reference signal resource sets for the cell, determining, based on the value, the default reference signal resource set to be one of the two reference signal resources sets. A wireless device may comprise one or more processors and memory storing instructions that, when executed by the one or more processors, cause the wireless device to perform the described method, additional operations, and/or include additional elements. A system may comprise the wireless device configured to perform the described method, additional operations, and/or include the additional elements; and a base station configured to one or more of: receive the communication, send the one or more messages, or send the control command. A computer-readable medium may store instructions that, when executed, cause performance of the described method, additional operations, and/or include additional elements. A base station may perform a corresponding method comprising multiple operations. The base station may perform a corresponding method, for example, by receiving the communication, sending the one or more messages, or sending the control command.

A wireless device may perform a method comprising multiple operations. The wireless device may receive one or more messages comprising one or more configuration parameters, wherein the one or more configuration parameters indicate two sounding reference signal (SRS) resource sets for a cell. The wireless device may receive a control command indicating a single transmission configuration indicator (TCI) state for the cell. The wireless device may receive downlink control information (DCI), configured to schedule a physical uplink shared channel (PUSCH) transmission via the cell, comprising an SRS resource set indicator field with a value. The wireless device may, based on the control command indicating a single TCI state for the cell, determine, based on a least significant bit (LSB) of the value, an SRS resource set among the two SRS resource sets. The wireless device may send, via the cell, the PUSCH transmission based on the SRS resource set. The two SRS resource sets may comprise a first SRS resource set and a second SRS resource set. The one or more configuration parameters may indicate a first SRS resource set index for the first SRS resource set; and/or a second SRS resource set index for the second SRS resource set, wherein the first SRS resource set index is lower than the second SRS resource set index. The value may be equal to a third value set to '10'. The SRS resource set is the first SRS resource set based on the LSB of the value being equal to zero. The value may be equal to a fourth value set to '11'. The SRS resource set may be the second SRS resource set based on the LSB of the value being equal to one. A first value, different from the value, of the SRS resource set indicator field may indicate to apply the first SRS resource set to the PUSCH transmission. A second value, different from the value, of the SRS resource set indicator field may indicate to apply the second SRS resource set to the PUSCH transmission. The first value may be '00' and the second value may be '01'. The value may be equal to one or more of a first value that indicates that the PUSCH transmission is associated with the first SRS resource set; a second value that indicates that the PUSCH transmission is associated with the second SRS resource set; a third value that indicates that the PUSCH transmission is associated with the first SRS resource set based on the control command indicating a single TCI state for the cell or the first SRS resource set and the second resource set based on a second control command indicating a plurality of TCI states for the cell; and a fourth value that indicates that the PUSCH transmission is associated with the second SRS resource set based on the control command indicating a single TCI state for the cell or the first SRS resource set and the second resource set based on a second control command indicating a plurality of TCI states for the cell. The wireless device may receive a second control command indicating two TCI states for the cell. The wireless device may receive second DCI, configured to schedule a second PUSCH transmission via the cell, comprising a second SRS resource set indicator field. The value of the second SRS resource set indicator field is one of a first value that indicates that the second PUSCH transmission is associated with the first SRS resource set; a second value that indicates that the second PUSCH transmission is associated with the second SRS resource set; a third value that indicates that the second PUSCH transmission is associated with both the first SRS resource set and the second SRS resource set; or a fourth value that indicates that the second PUSCH transmission is associated with both the first SRS resource set and the second SRS resource set. The wireless device may send, via the cell, the second PUSCH transmission based on the second SRS resource set indicator field. The third value and the fourth value each may indicate that the second PUSCH transmission is associated with both the first SRS resource set and the second SRS resource set based on the second control command indicating the two TCI states for the cell. The determining may be further based on the one or more configuration parameters indicating the two SRS resource sets. The DCI may schedule a plurality of cells comprising the cell and a second cell. The one or more configuration parameters may indicate a single SRS resource set for the second cell. The wireless device may ignore/not apply the SRS resource set indicator field to the second cell based on the one or more configuration parameters indicating a single SRS resource set for the second cell. The wireless device may send, via the second cell, a second PUSCH transmission scheduled by the DCI using the single SRS resource set of the second cell. The wireless device may determine a transmission precoder based on an SRS resource in the SRS resource set. The sending the PUSCH transmission may be using the transmission precoder.

A wireless device may comprise one or more processors and memory storing instructions that, when executed by the one or more processors, cause the wireless device to perform the described method, additional operations, and/or include additional elements. A system may comprise the wireless device configured to perform the described method, additional operations, and/or include the additional elements; and a base station configured to one or more of: receive the PUSCH transmission, send the one or more messages, or send the control command. A computer-readable medium may store instructions that, when executed, cause performance of the described method, additional operations, and/or include additional elements. A base station may perform a corresponding method comprising multiple operations. The base station may perform a corresponding method, for example, by receiving the PUSCH transmission, sending the one or more messages, or sending the control command.

A wireless device may perform a method comprising multiple operations. The wireless device may receive a control command indicating a single transmission configuration indicator (TCI) state for a cell. The wireless device may receive downlink control information (DCI), configured to schedule a physical downlink shared channel (PDSCH) reception via the cell, comprising a transmission configuration indicator (TCI) selection field. The wireless device may, based on the control command indicating a single TCI state for the cell, ignoring the TCI selection field by not applying the TCI selection field to the PDSCH reception via the cell. The receiving the PDSCH reception via the cell may be based on the single TCI state. The PDSCH reception may comprise a plurality of repetitions of a downlink reception. The wireless device may receive the PDSCH reception based on the single TCI state may comprise receive the PDSCH reception via a downlink bandwidth part (BWP) of the cell based on the single TCI state. A wireless device may comprise one or more processors and memory storing instructions that, when executed by the one or more processors, cause the wireless device to perform the described method, additional operations, and/or include additional elements. A system may comprise the wireless device configured to perform the described method, additional operations, and/or include the additional elements; and a base station configured to one or more of: send the PDSCH reception or send the control command. A computer-readable medium may store instructions that, when executed, cause performance of the described method, additional operations, and/or include additional elements. A base station may perform a corresponding method comprising multiple operations. The base station may perform a corresponding method, for example, by sending the PDSCH reception or sending the control command.

A base station may perform a method comprising multiple operations. The base station may send, to a wireless device, a control command indicating a single transmission configuration indicator (TCI) state for a cell. The base station may set, based on the cell being indicated with the single TCI state (and/or based on the single TCI state being indicated for the cell), a value of a TCI selection field in downlink control information (DCI). The DCI may be configured to schedule a downlink transmission via the cell. The downlink transmission may comprise one or more PDSCH transmissions. The base station may send the DCI comprising the TCI selection field with the value. The base station may send the downlink transmission based on the single TCI state. The setting the value may comprise setting the value to a value that indicates using a single (e.g., one) TCI state for send/receive the downlink transmission. The setting the value may not comprise setting the value to a value that indicates using a plurality of TCI states for send/receive the downlink transmission. The value of the TCI selection field may be '00' or '01'. The value of the TCI selection field may not be '10' or '11'. A base station may comprise one or more processors and memory storing instructions that, when executed by the one or more processors, cause the base station to perform the described method, additional operations, and/or include additional elements. A system may comprise the base station configured to perform the described method, additional operations, and/or include the additional elements; and a wireless device configured to one or more of: receive the downlink transmission and/or the DCI. A computer-readable medium may store instructions that, when executed, cause performance of the described method, additional operations, and/or include additional elements. A wireless device may perform a corresponding method comprising multiple operations. The wireless device may perform a corresponding method, for example, by receiving the downlink transmission and/or the DCI.

A wireless device may perform a method comprising multiple operations. The wireless device may receive, from a base station, one or more messages comprising one or more configuration parameters indicating a plurality of sets of cells. The one or more configuration parameters may indicate the plurality of sets of cells for two or more physical uplink control channel (PUCCH) groups. The wireless device may receive a control command indicating a set of cells, of the plurality of sets of cells, and TCI codepoints for the set of cells. The control command may be a medium-access control (MAC) control element (CE). The control command may comprise a PUCCH group identifier indicating a PUCCH group among the two or more PUCCH groups, and when the set of cells is in the PUCCH group. The wireless device may, based on the receiving the control command, update a row in a TCI table for the set of cells. The updating the row may comprise updating the row using the TCI codepoints indicated by the control command. The TCI codepoints indicated by the control command may be associated with TCI states activated for the set of cells. The TCI codepoints may be indicated in the control command based on the TCI codepoints being associated with TCI states activated for the set of cells. The TCI table indicates one or more TCI states that are not activated for the set of cells. The wireless device may activate one or more TCI states corresponding to the TCI codepoints indicated by the control command. The wireless device may receive downlink control information (DCI). The DCI may comprise a scheduled set indicator field indicating the set of cells. The DCI may comprise a scheduled cell indicator field configured to schedule one or more cells of the set of cells. The DCI may comprise a TCI field indicating the row in the updated TCI table. The wireless device may receive, based on/using one or more TCI codepoints of the TCI codepoints, a downlink transmission (e.g., PDSCH transmission/reception) via the one or more cells.

A wireless device may comprise one or more processors and memory storing instructions that, when executed by the one or more processors, cause the wireless device to perform the described method, additional operations, and/or include additional elements. A system may comprise the wireless device configured to perform the described method, additional operations, and/or include the additional elements; and a base station configured to send one or more of the control command, the DCI, or the downlink transmission. A computer-readable medium may store instructions that, when executed, cause performance of the described method, additional operations, and/or include additional elements. A base station may perform a corresponding method comprising multiple operations. The base station may perform a corresponding method, for example, by sending one or more of the control command, the DCI, or the downlink transmission.

A base station may perform a method comprising multiple operations. The base station may send, to a wireless device, one or more messages comprising one or more configuration parameters indicating a plurality of sets of cells. The one or more configuration parameters may indicate the plurality of sets of cells for two or more physical uplink control channel (PUCCH) groups. The base station may send a control command indicating a set of cells, of the plurality of sets of cells, and TCI codepoints for the set of cells. The control command may be a medium-access control (MAC) control element (CE). The control command may comprise a PUCCH group identifier indicating a PUCCH group among the two or more PUCCH groups, and when the set of cells is in the PUCCH group. The control command may be configured to cause updating of a row in a TCI table for the set of cells. The updating the row may comprise updating the row using/with the TCI codepoints indicated by the control command. The TCI codepoints indicated by the control command may be associated with TCI states activated for the set of cells. The base station may generate the control command to indicate the TCI codepoints based on the TCI codepoints being associated with TCI states activated for the set of cells. The TCI table may indicate one or more TCI states that are not activated for the set of cells. The base station may send an activation command configured to activate one or more TCI states corresponding to the TCI codepoints indicated by the control command. The base station may send downlink control information (DCI). The DCI may comprise a scheduled set indicator field indicating the set of cells. The DCI may comprise a scheduled cell indicator field configured to schedule one or more cells of the set of cells. The DCI may comprise a TCI field indicating the row in the updated TCI table. The base station may send, based on/using one or more TCI codepoints of the TCI codepoints, a downlink transmission (e.g., PDSCH transmission/reception) via the one or more cells. A base station may comprise one or more processors and memory storing instructions that, when executed by the one or more processors, cause the base station to perform the described method, additional operations, and/or include additional elements. A system may comprise the base station configured to perform the described method, additional operations, and/or include the additional elements; and a wireless device configured to receive one or more of the downlink transmission, the DCI, or the control command. A computer-readable medium may store instructions that, when executed, cause performance of the described method, additional operations, and/or include additional elements. A wireless device may perform a corresponding method comprising multiple operations. The wireless device may perform a corresponding method, for example, by receiving one or more of the downlink transmission, the DCI, or the control command.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3 GPP or non-3 GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, abase station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1.  A method comprising:

    receiving, by a wireless device, one or more messages indicating two or more reference signal resource sets for a cell;
    receiving a control command indicating a single transmission configuration indicator (TCI) state for the cell;
    receiving downlink control information (DCI), configured to schedule a communication via the cell, and comprising a reference set resource set indicator field having a value;
    based on the control command indicating the single TCI state for the cell, determining a default reference signal resource set from the two or more reference signal resource sets; and
    sending, based on the default reference signal resource set, the communication via the cell.

2.  The method of claim 1, wherein the determining the default reference signal resource set comprises determining the default reference signal resource set based on the value.

3.  The method of any one of claims 1-2, wherein the determining the default reference signal resource set comprises determining the default reference signal resource set based on the one or more messages indicating the two or more reference signal resource sets.

4.  The method of any one of claims 1-3, wherein the control command indicating the single TCI state for the cell indicates a single-communication point mode for the cell.

5.  The method of any one of claims 1-4, wherein the value indicates a multi-communication point mode.

6.  The method of any one of claims 1-5, wherein the determining the default reference signal resource set comprises determining the default reference signal resource set based on a least significant bit of the value.

7.  The method of any one of claims 1-6, wherein the determining the default reference signal resource set comprises determining the reference signal resource set based on a previous reference signal resource set used for a previous communication via the cell.

8. The method of any one of claims 1-7, wherein the determining the default reference signal resource set comprises determining the default reference signal resource set based on a default index of two or more indexes corresponding to the two or more reference signal resource sets.

9. The method of any one of claims 1-8, further comprising:

   receiving a second control command indicating two TCI states for a second cell of the plurality of cells, wherein the DCI is further configured to schedule a second communication via the second cell; and
   sending, based on the second resource signal resource set indicator field, the second communication via the second cell.

10. The method of any one of claims 1-9, wherein the two or more reference signal resource sets are two or more sounding reference signal (SRS) resource sets.

11. The method of any one of claims 1-10, wherein the communication comprises a physical uplink shared channel (PUSCH) transmission.

12. The method of any one of claims 1-11, wherein the one or more messages further indicate a single reference signal resource set for a second cell, wherein the DCI further schedules a second communication via the second cell and comprises a second reference signal resource set indicator field for the second cell, and wherein the method further comprises:

   based on the one or more second messages indicating the single reference signal resource set for the second cell, not applying the second reference signal resource set indicator field to the second cell; and
   communicating, via the second cell, based on the single reference signal resource set of the second cell.

13. A wireless device comprising:

   one or more processors; and
   memory storing instructions that, when executed by the one or more processors, cause the wireless device to perform the method of any one of claims 1-12.

14. A system comprising:

   a wireless device configured to perform the method of any one of claims 1-12; and
   a base station configured to send the one or more messages.

15. A computer-readable medium storing instructions that, when executed, cause performance of the method of any one of claims 1-12.

**FIG. 1A**

**FIG. 1B**

EP 4 443 801 A1

Wireless Device
210

| SDAP 215 | ↔ | SDAP 225 |
| PDCP 214 | ↔ | PDCP 224 |
| RLC 213 | ↔ | RLC 223 |
| MAC 212 | ↔ | MAC 222 |
| PHY 211 | ↔ | PHY 221 |

Base Station
220

FIG. 2A

Wireless Device
210

Base Station
220

AMF
230

| NAS 217 | | ↔ | | NAS 237 |
| RRC 216 | ↔ | RRC 226 | | |
| PDCP 214 | ↔ | PDCP 224 | | |
| RLC 213 | ↔ | RLC 223 | | |
| MAC 212 | ↔ | MAC 222 | | |
| PHY 211 | ↔ | PHY 221 | | |

FIG. 2B

**IP Packets**

**FIG. 3**

**FIG. 4A**

**FIG. 4B**

SDAP 225 · PDCP 224 · RLC 223 · MAC 222 · PHY 221

IP Packet *n* · IP Packet *n+1* · IP Packet *m*

SDAP SDU · PDCP SDU · RLC SDU · MAC SDU · PHY SDU (Transport Block)

radio bearer 402 · radio bearer 404

SDAP PDU · SDU Seg.

MAC PDU · MAC CE · MAC SDU · R F LCID SDU Length

120

**FIG. 5A**

**FIG. 5B**

Downlink

Uplink

Logical Channels: PCCH BCCH CCCH DCCH DTCH

Transport Channels: PCH BCH DL-SCH

Physical Channels: PBCH PDSCH PDCCH

DCI

Physical Signals: PSS/SSS CSI-RS DM-RS PT-RS

Logical Channels: CCCH DCCH DTCH

Transport Channels: UL-SCH RACH

Physical Channels: PUSCH PUCCH PRACH

UCI

Physical Signals: DM-RS PT-RS SRS

EP 4 443 801 A1

121

**FIG. 6**

FIG. 7

EP 4 443 801 A1

FIG. 8

**FIG. 9**

EP 4 443 801 A1

**FIG. 10A**

**FIG. 10B**

**FIG. 11A**

**FIG. 11B**

FIG. 12A

FIG. 12B

**Wireless Device**     **Base Station**

Configuration 1310

Msg 1 1311

Msg 2 1312

Msg 3 1313

Msg 4 1314

**FIG. 13A**

**Wireless Device**     **Base Station**

Configuration 1320

Msg 1 1321

Msg 2 1322

**FIG. 13B**

**Wireless Device**     **Base Station**

Configuration 1330

Msg A 1331

Preamble 1341

1342 Transport block

Msg B 1332

**FIG. 13C**

EP 4 443 801 A1

CORESET
1404

CORESET
1403

CORESET
1402

CORESET
1401

Bandwidth

One slot

**FIG. 14A**

CORESET → CCE-to-REG mapping → Search Space → PDCCH candidate
PDCCH candidate
PDCCH candidate

**FIG. 14B**

FIG. 15A

FIG. 15B

**FIG. 16A**

**FIG. 16B**

**FIG. 16C**

**FIG. 16D**

FIG. 17

FIG. 18

Base Station — 1810

1805 — Wireless Device

1820 — Activation command 1 (Coreset pool index 0)
1825

1830 — DCI 1 (TCI field = 110)
1835
1838 — Coreset 1 (Coreset pool index 0)

1840 — Activation command 2 (Coreset pool index 1)
1845

1850 — DCI 2 (TCI field = 001)
1855
1858 — Coreset 2 (Coreset pool index 1)

T₁        T₂        T₃        T₄

TCI state 26 is activated

TCI state 61 is activated

| TCI codepoint | TCI state(s) |
|---|---|
| 000 | TCI state 4 |
| 001 | TCI state 5 |
| ... | ... |
| 110 | TCI state 26 |
| 111 | TCI state 42 |

1870b        1870a

| TCI codepoint | TCI state(s) |
|---|---|
| 000 | TCI state 8 |
| 001 | TCI state 61 |
| ... | ... |
| 110 | TCI state 21 |

1880b        1880a

EP 4 443 801 A1

Base
Station

1910

1920

Configuration
parameters

1930

Control
command

1905

Wireless
Device

$T_0$

$T_1$

time

| TCI codepoint | Cell 1 | Cell 2 | Cell 3 | Cell 4 |
|---|---|---|---|---|
| row 1 | 001 | 100 | 000 | 010 |
| row 2 | 010 | 111 | 101 | 000 |
| ... | ... | ... | ... | ... |
| row N-1 | 111 | 000 | 110 | 001 |
| row N | 110 | 010 | 011 | 100 |

1925

| TCI codepoint | Cell 1 | Cell 2 | Cell 3 | Cell 4 |
|---|---|---|---|---|
| row 1 | 001 | 100 | 000 | 010 |
| row 2 | 111 | 001 | 101 | 000 |
| ... | ... | ... | ... | ... |
| row N-1 | 111 | 000 | 110 | 101 |
| row N | 110 | 110 | 011 | 100 |

1935

FIG. 19

EP 4 443 801 A1

| Column ID$_1$ | TCI Codepoint ID$_1$ | PUCCH Group ID | Cell Set ID |
|---|---|---|---|
| R | A | Row ID$_1$ | |

**FIG. 20A**

| R | | PUCCH Group ID | Cell Set ID |
|---|---|---|---|
| R | TCI Codepoint ID$_2$ | TCI Codepoint ID$_1$ | |
| ... | | | |
| R | TCI Codepoint ID$_M$ | TCI Codepoint ID$_{M-1}$ | |

**FIG. 20B**

| R | Cell ID$_4$ | Cell ID$_3$ | Cell ID$_2$ | Cell ID$_1$ | PUCCH Group ID | Cell Set ID |
|---|---|---|---|---|---|---|
| R | | TCI Codepoint ID$_2$ | | | TCI Codepoint ID$_1$ | |
| ... | | | | | | |
| R | | TCI Codepoint ID$_N$ | | | TCI Codepoint ID$_{N-1}$ | |
| ... | | | | | | |
| R | | TCI Codepoint ID$_{M-N}$ | | | TCI Codepoint ID$_{M-N-1}$ | |
| ... | | | | | | |
| R | | TCI Codepoint ID$_M$ | | | TCI Codepoint ID$_{M-1}$ | |

If Cell ID$_1$ = 1

If Cell ID$_4$ = 1

EP 4 443 801 A1

**FIG. 21**

| R | | | | | | PUCCH Group ID | Cell Set ID | |
|---|---|---|---|---|---|---|---|---|
| Row ID$_8$ | Row ID$_7$ | Row ID$_6$ | Row ID$_5$ | Row ID$_4$ | Row ID$_3$ | Row ID$_2$ | Row ID$_1$ | |
| Row ID$_N$ | Row ID$_{N-1}$ | ... | | | | | Row ID$_9$ | |
| R | | TCI Codepoint ID$_2$ | | TCI Codepoint ID$_1$ | | | | If Row ID$_1$ = 1 |
| R | | TCI Codepoint ID$_4$ | | TCI Codepoint ID$_3$ | | | | |
| ... | | | | | | | | |
| R | | TCI Codepoint ID$_{M-2}$ | | TCI Codepoint ID$_{M-3}$ | | | | If Row ID$_N$ = 1 |
| R | | TCI Codepoint ID$_M$ | | TCI Codepoint ID$_{M-1}$ | | | | |

**FIG. 22**

EP 4 443 801 A1

Case 1

| SRS resource set 1 |
| --- |

| Unified TCI state 1 |
| --- |

Case 2

| SRS resource set 1<br>SRS resource set 2 |
| --- |

| Unified TCI state 1 |
| --- |

Case 3

| SRS resource set 1<br>SRS resource set 2 |
| --- |

| Unified TCI state 1<br>Unified TCI state 2 |
| --- |

**FIG. 23**

EP 4 443 801 A1

Receive a DCI scheduling a PUSCH transmission via an uplink BWP of a cell, wherein the DCI comprises an SRS resource set indicator field

2410

2420

Is the SRS resource set indicator field set to a first value?

NO

YES

2430

Is the SRS resource set indicator field set to a second value?

YES

NO

Send the PUSCH transmission based on a first SRS resource set of the uplink BWP

2440

Send the PUSCH transmission based on a second SRS resource set of the uplink BWP

2450

2460

Is a single TCI state indicated for the cell?

NO

YES

Send the PUSCH transmission based on both the first SRS resource set and the second SRS resource set of the uplink BWP

2470

Send the PUSCH transmission based on the first SRS resource set or the second SRS resource set of the uplink BWP

2480

FIG. 24A

2401 — Send control command indicating one or more TCI state(s) for a cell

2411 — Send a DCI scheduling a PUSCH transmission via an uplink BWP of a cell, wherein the DCI comprises an SRS resource set indicator field

2421 — Is the SRS resource set indicator field set to a first value?

NO — 2431 — Is the SRS resource set indicator field set to a second value?

YES — 2441 — Receive the PUSCH transmission based on a first SRS resource set of the uplink BWP

YES — 2451 — Receive the PUSCH transmission based on a second SRS resource set of the uplink BWP

NO — 2461 — Is a single TCI state indicated for the cell?

NO — 2471 — Receive the PUSCH transmission based on both the first SRS resource set and the second SRS resource set of the uplink BWP

YES — 2481 — Receive the PUSCH transmission based on the first SRS resource set or the second SRS resource set of the uplink BWP

FIG. 24B

Europäisches
Patentamt

European
Patent Office

Office européen
des brevets

# EUROPEAN SEARCH REPORT

Application Number

EP 24 16 5628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/272711 A1 (QUALCOMM INC [US]; YUAN FANG [CN]; ZHOU YAN [US]; LUO TAO [US]) 5 January 2023 (2023-01-05) * page 26, paragraph [73] - page 29, paragraph [81]; claims 6, 24, 25 * ----- | 1-15 | INV. H04L5/00 |
| X | WO 2021/209979 A1 (ERICSSON TELEFON AB L M [SE]) 21 October 2021 (2021-10-21) * page 13, paragraph [45] - page 45, paragraph [180]; claims 1, 2, 7 * ----- | 1-15 | |
| X | WO 2022/216656 A1 (OFINNO LLC [US]) 13 October 2022 (2022-10-13) * page 33, paragraph [139] - page 75, paragraph [311] * ----- | 1-15 | |

TECHNICAL FIELDS SEARCHED (IPC)

H04L

The present search report has been drawn up for all claims

| Place of search | Date of completion of the search | Examiner |
|---|---|---|
| The Hague | 29 July 2024 | Gökceli, Selahattin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 24 16 5628

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2024

| Patent document cited in search report | | Publication date | Patent family member(s) | | Publication date |
|---|---|---|---|---|---|
| WO 2023272711 | A1 | 05-01-2023 | CN | 117581608 A | 20-02-2024 |
| | | | EP | 4364495 A1 | 08-05-2024 |
| | | | TW | 202306416 A | 01-02-2023 |
| | | | US | 2024224236 A1 | 04-07-2024 |
| | | | WO | 2023272711 A1 | 05-01-2023 |
| WO 2021209979 | A1 | 21-10-2021 | CN | 115668852 A | 31-01-2023 |
| | | | CO | 2022015093 A2 | 16-02-2023 |
| | | | EP | 4136797 A1 | 22-02-2023 |
| | | | JP | 2023523178 A | 02-06-2023 |
| | | | US | 2023171763 A1 | 01-06-2023 |
| | | | WO | 2021209979 A1 | 21-10-2021 |
| WO 2022216656 | A1 | 13-10-2022 | CN | 117501787 A | 02-02-2024 |
| | | | EP | 4309456 A1 | 24-01-2024 |
| | | | US | 2024040564 A1 | 01-02-2024 |
| | | | WO | 2022216656 A1 | 13-10-2022 |

EPO FORM P0459

For more details about this annex : see Official Journal of the European Patent Office, No. 12/82

**REFERENCES CITED IN THE DESCRIPTION**

**Patent documents cited in the description**

- US 63453823